# EUROPEAN PATENT SPECIFICATION

(11) **EP 4 514 919 B1**
(45) Date of publication and mention of the grant of the patent: **12.08.2026**
(21) Application number: 23721870.6
(22) Date of filing: 24.04.2023
(51) Int. Cl.: C09K 19/06, C09K 19/30, C09K 19/34, C09K 19/04, C09K 19/12

(54) **LIQUID-CRYSTAL MEDIUM COMPRISING POLYMERIZABLE COMPOUNDS**
FLÜSSIGKRISTALLINES MEDIUM MIT POLYMERISIERBAREN VERBINDUNGEN
MILIEU À CRISTAUX LIQUIDES COMPRENANT DES COMPOSÉS POLYMÉRISABLES

(30) Priority: 27.04.2022 EP 22170170
(43) Date of publication of application: 05.03.2025
(73) Proprietor: Merck Patent GmbH, 64293 Darmstadt (DE)
(72) Inventor: HUANG, I-Hua, TAIPEI, 114 (TW); HSIEH, Chia-Sheng, TAIPEI, 114 (TW); CHEN, Jer-Lin, TAIPEI, 114 (TW); CHOU, Kuang-Ting, TAIPEI, 114 (TW); HIRSCHMANN, Harald, 64293 DARMSTADT (DE); FORTTE, Rocco, 64293 DARMSTADT (DE)
(74) Representative: Merck Patent Association
(86) International application number: PCT/EP2023/060569
(87) International publication number: WO 2023/208801

(56) References cited:
- WO-A1-2017/008884
- WO-A1-2017/097401
- US-A1- 2013 287 970
- US-A1- 2014 085 594
- RENBUTSU ET AL: "Synthesis of UV-curable chitosan derivatives and palladium (II) adsorption behavior on their UV-exposed films", CARBOHYDRATE POLYMERS, APPLIED SCIENCE PUBLISHERS , LTD BARKING, GB, vol. 69, no. 4, 23 May 2007 (2007-05-23), pages 697 - 706, XP022093493, ISSN: 0144-8617, DOI: 10.1016/J.CARBPOL.2007.02.018

## Description

The present invention relates to an LC medium comprising two or more polymerizable compounds one of which has a monocyclic group, to its use for optical, electro-optical and electronic purposes, in particular in LC displays, especially in LC displays of the PSA (polymer sustained alignment) or SA (self-aligning) mode, to an LC display of the PSA or SA mode comprising the LC medium, and to a process of manufacturing the LC display using the LC medium, especially an energy-saving LC display and energy-saving LC display production process. LC media comprising two or more polymerizable compounds are known from US 2013/287970 A1 and US 2014/085594 A1, for instance.

The popularity of 8K and gaming monitors leads to an increased need for LC display (LCD) panels having higher refresh rates and thus for LC media having faster response times. Many of these LCD panels are using polymer stabilized (PS) or polymer sustained alignment (PSA) modes, like the PS-VA (vertically aligned), PS-IPS (in-plane switching) or PS-FFS (fringe-field switching) mode or modes derived therefrom, or self-aligned (SA) modes like SA-VA which are polymer stabilized.

In the PS or PSA mode a small amount, typically from 0.1 to 1% of one or more polymerizable mesogenic compounds, also known as RMs (reactive mesogens), is added to the LC medium. After filling the LC medium into the display the RMs are then polymerized in situ by UV photopolymerization, while a voltage is applied to the electrodes of the display. Thereby a small tilt angle is generated in the LC molecules of the LC medium, which is stabilized by the polymerized RMs. The UV polymerization process, also referred to as "PSA process", is usually carried out in two steps, a first UV exposure step ("UV1 step"), with application of a voltage, to generate the tilt angle, and a second UV exposure step ("UV2 step"), without application of a voltage, to complete polymerization of the RMs.

In the SA-VA mode the alignment layers are omitted in the display. Instead, a small amount, typically 0.1 to 2.5 %, of a self alignment (SA) additive is added to the LC medium, which induces the desired alignment, for example homeotropic or planar alignment, *in situ* by a self assembling mechanism. The SA additive usually contains an organic, mesogenic core group and attached thereto one or more polar anchor groups, for example hydroxy, carboxy, amino or thiol groups, which are capable of interacting with the substrate surface, causing the additives on the substrate surface to align and induce the desired alignment also in the LC molecules. The SA additive may also contain one or more polymerizable groups that can be polymerized under similar conditions as the RMs used in the PSA process. The LC medium may in addition to the SA additive also contain one or more RMs.

In the display manufacturing process of PSA mode displays, as radiation source for the UV1 step and/or UV2 step typically a UV C-type and/or a UV B-type lamp is used. A UV C-type lamp typically has an emission spectrum wherein the shortest UV wavelength is ~300nm, while a A UV B-type lamp typically has an emission spectrum wherein the shortest UV wavelengths is ~320nm.

On the other hand, in order to achieve a low viscosity and fast response times, the LC host mixtures of polymerizable LC media used in PSA mode displays often contain one or more compounds with an alkenyl group. However, this may lead to a decrease of the reliability of the mixture, and to a large drop of its voltage holding ratio (VHR), when being exposed to the UV light needed to polymerize the RMs. Thus is especially problematic when using shorter UV wavelengths of less than 320nm. This could be overcome by using a radiation source longer UV wavelengths for the PSA process. However, a change of the radiation source in a running display mass production process is costly and time consuming. Also, this would then pose the problem to find RMs which have an absorption at longer wavelengths that is high enough to enable quick and complete photopolymerization.

UV-LED lamps have also been proposed for use in the PSA process, as they show less energy consumption, longer lifetime and more effective optical energy transfer to the LC medium due to the narrower emission peak, which allows to reduce the UV intensity and/or UV irradiation time. This enables a reduced tact time and savings in energy and production costs.

Therefore, there is a need for polymerizable LC media, especially those based on LC host mixtures containing alkenyl compounds, which contain RMs that can be effectively polymerized both at UV wavelengths emitted by a UV C-type lamp, wherein the shortest wavelength is ~300nm and UV wavelengths emitted by a UV B-type lamp, wherein the shortest wavelength is ~320nm. Also there is a need for polymerizable LC media, especially those based on LC host mixtures containing alkenyl compounds, which show high reliability and only a small decrease of the VHR value after UV stress, and at the same time show fast response times.

In addition, there is a great demand for PSA or SA displays, and LC media and polymerizable compounds for use in such PSA or SA displays, which enable a high specific resistance at the same time as a large working-temperature range, short response times, even at low temperatures, and a low threshold voltage, a low tilt angle, a high tilt stability, a multiplicity of grey shades, high contrast and a broad viewing angle, have high reliability and high values for the VHR after UV exposure, and, in case of the polymerizable compounds, have low melting points and a high solubility in the LC host mixtures. In displays for mobile applications, it is especially desired to have available LC media that show low threshold voltage and high birefringence.

The present invention is based on the object of providing novel suitable materials, in particular RMs and LC media comprising the same, for use in PSA or SA displays, which do not have the disadvantages indicated above or do so to a reduced extent.

In particular, the invention is based on the object of LC media comprising RMs for use in PSA or SA displays, which enable very high specific resistance values, high VHR values, high reliability, low threshold voltages, short response times, high birefringence, show good UV absorption especially at UV wavelengths in the range from 300 to 360 nm, enable quick and complete polymerization of the RMs, allow the generation of a low tilt angle, preferably as quickly as possible, enable a high stability of the tilt angle even after longer time and/or after UV exposure, reduce or prevent the occurrence of "image sticking" and "ODF mura" in the display, and in case of the RMs polymerize as rapidly and completely as possible and show a high solubility in the LC media which are typically used as host mixtures in PSA or SA displays.

A further object of the invention is to provide LC media for use in PSA displays wherein the RMs exhibit both fast polymerization speed and good reliability parameters, like high VHR or good tilt stability.

A further object of the invention is the provision of novel LC media containing RMs, in particular for optical, electro-optical and electronic applications, and of suitable processes and intermediates for the preparation thereof.

A further object of the invention is to provide LC media containing RMs which show one or more of the following advantageous effects:
- they generate a tilt angle to a desired degree after exposure to UV-light,
- they lead to good tilt stability,
- they lead to high and stable VHR and only small decrease of the CHR after UV stress, especially in case of LC media based on LC host mixtures which contain alkenyl compounds,
- they are suitable for use in PSA displays prepared by a polymerization process using a UV C-type lamp and/or a UV B-type lamp,
- they are suitable for use in PSA displays prepared by a polymerization process using a UV-LED lamp,
- they enable good control of the the time range of the first UV-step in which the tilt angle is generated during UV-processing,
- they enable to keep the time range of the second UV-step, in which any residual RM is polymerized and the tilt angle is stabilized, as short as possible to minimize energy consumption and production cost,
- after the first and second UV-exposure step, the residual RMs have less or no negative effects on the LC-mixture performance parameters, such as VHR, tilt stability, etc.

It was found that one or more of these objects could be achieved by providing LC media comprising polymerizable compounds as disclosed and claimed hereinafter, one of which is a monocyclic compound.

The invention thus relates to an LC medium comprising one or more polymerizable compounds of formula IA-1, as in claim 1 and defined below, and one or more polymerizable compounds of formula IB

P-Sp-M²-Sp-P IB

wherein the individual radicals, independently of each other and on each occurrence identically or differently, have the following meanings
- P: a methacrylate group,
- Sp: a spacer group or a single bond,
- M¹: a benzene ring which is optionally substituted by one or more groups L or P-Sp-,
- M²: a group selected from the following formulae 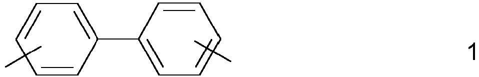 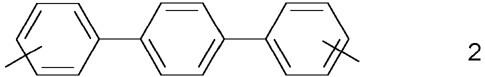 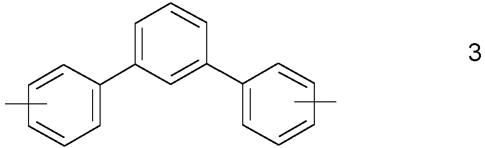 wherein the benzene rings are optionally substituted by one or more groups L or P-Sp-,
- L: F, Cl, -CN or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O-in such a manner that O- and/or S-atoms are not directly connected with each other, and wherein one or more H atoms are each optionally replaced by F or Cl.

The invention further relates to novel compounds of formula IA4, IA5 and IA7, as in claim 21 and defined below.

The invention further relates to an LC medium having negative dielectric anisotropy and comprising one or more polymerizable compounds selected from formula IA, one or more polymerizable compounds selected from formulae IB and IC, and further comprising one or more compounds of formula II 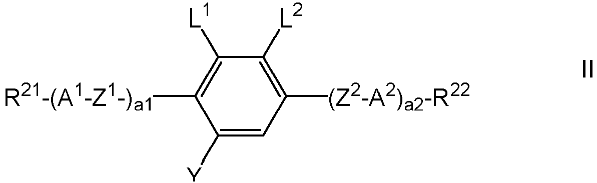 wherein the individual radicals, independently of each other and on each occurrence identically or differently, have the following meanings
- R²¹, R²²: H, straight chain, branched or cyclic alkyl or alkoxy having 1 to 20 C atoms, wherein one or more non-adjacent CH₂-groups are optionally replaced by -O-, -S-, -CO-, -CO-O-, -O-CO-, -O-CO-O-, CR⁰=CR⁰⁰-, -C≡C-, 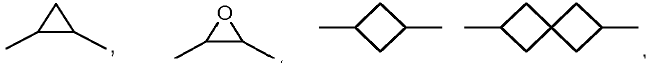 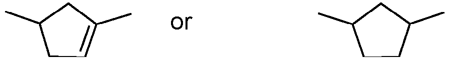 in such a manner that O- and/or S-atoms are not directly connected with each other, and wherein one or more H atoms are each optionally replaced by F, Cl, CN or CF₃, preferably alkyl or alkoxy having 1 to 6 C atoms,
- R⁰, R⁰⁰: H or alkyl having 1 to 12 C atoms,
- A¹, A²: a group selected from the following formulae 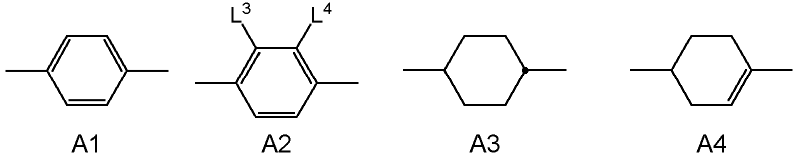 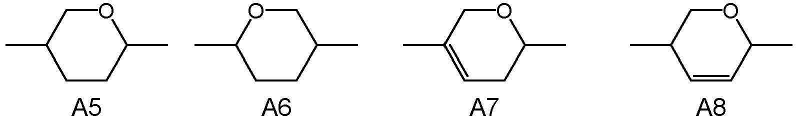 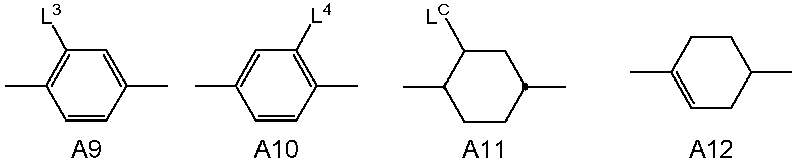 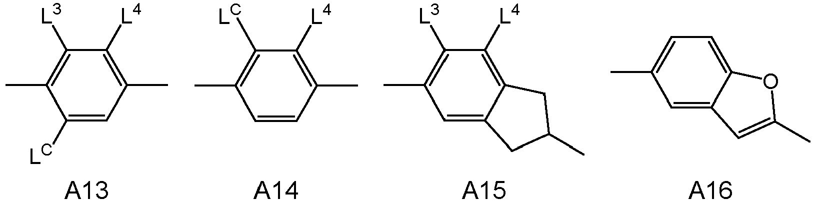 preferably from formulae A1, A2, A3, A4, A5, A6, A9 and A10, very preferably from formulae A1, A2, A3, A4, A5, A9 and A10,
- Z¹, Z²: -CH₂CH₂-, -CH=CH-, -CF₂O-, -OCF₂-, -CH₂O-, -OCH₂-, -CO-O-, - O-CO-, -C₂F₄-, -CF=CF-, -CH=CH-CH₂O- or a single bond, preferably a single bond,
- L¹, L², L³, L⁴: F, Cl, OCF₃, CF₃, CH₃, CH₂F or CHF₂, preferably F or Cl, very preferably F,
- Y: H, F, Cl, CF₃, CHF₂ or CH₃, preferably H or CH₃, very preferably H,
- L^{C}: CH₃ or OCH₃, preferably CH₃,
- a1: 0, 1 or 2,
- a2: 0 or 1 .

The invention further relates to the use of the LC medium as described above and below in LC displays of the PSA or SA mode.

The invention furthermore relates to a process for preparing an LC medium as described above and below, comprising the steps of mixing one or more polymerizable compounds of formula IA-1 and one or more polymerizable compounds of formula IB with one or more compounds of formula II and optionally with further LC compounds and/or additives.

The invention furthermore relates to an LC display comprising an LC medium according to the invention as described above and below, which is a PSA or SA display, preferably a PS-VA, PS-IPS, PS-FFS or SA-VA display.

The invention furthermore relates to an LC display comprising an LC medium as described above and below wherein the polymerizable compounds are present in ed form, which is preferably a PSA or SA display, very preferably a PS-VA, PS-IPS, PS-FFS or SA-VA display.

The invention furthermore relates to an LC display of the PSA type comprising two substrates, at least one which is transparent to light, an electrode provided on each substrate or two electrodes provided on only one of the substrates, and located between the substrates a layer of an LC medium as described above and below, wherein the polymerizable compounds are polymerized between the substrates of the display by UV photopolymerization.

The invention furthermore relates to a process for manufacturing an LC display as described above and below, comprising the steps of filling or otherwise providing an LC medium as described above and below between the substrates of the display, and polymerizing the polymerizable compounds, preferably by irradiation with UV light, preferably having a wavelength >300 nm, more preferably in the range from 300 to 380 nm, very preferably in the range from 300 to 360 nm, and preferably while a voltage is applied to the electrodes of the display.

The invention furthermore relates to a process for manufacturing an LC display as described above and below, wherein irradiation of the polymerizable compounds is carried out using a UV C-type and/or a UV B-type lamp.

The LC media according to the present invention show the following advantageous properties when used in PSA displays:
- a suitable tilt generation which is inside a certain process window,
- fast polymerization leading to minimal residues of RM after the UV-process,
- a high voltage-holding-ratio after the UV-process,
- good tilt stability,
- good VHR,
- sufficient stability against heat,
- sufficient solubility in organic solvents typically used in display manufacture.

In addition the LC media according to the present invention show one or more of the following advantageous properties:
- they generate a tilt angle to a desired degree after exposure to UV-light,
- they provide a high tilt stability,
- they show good UV absorption especially at longer UV wavelengths, preferably in the range preferably having a wavelength >300 nm, more preferably in the range from 300 to 380 nm, very preferably in the range from 300 to 360 nm, and enable quick and complete polymerization of the RMs at these wavelengths,
- they are suitable for use in PSA displays prepared by a polymerization process using a UV C-type or UV B-type lamp,
- they enable to control the time range of the first UV-step in which the tilt angle is generated during UV-processing,
- they keep the time range of the second UV-step as short as possible to minimize production cost,
- after the first and second UV-exposure step, they reduce or avoid any negative effects of the residual RM on the LC mixture performance parameters, such as VHR, tilt stability, etc.

An alkenyl group in the compounds of formula II or other components of the LC medium as disclosed below is not considered to be within the meaning of the term "polymerizable group" as used herein. The conditions for the polymerization of the polymerizable compounds of the LC medium are preferably selected such that alkenyl substituents do not participate in the polymerization reaction. Preferably the LC media disclosed and claimed in the present application do not contain an additive that initiates or enhances the participation of the alkenyl group in a polymerization reaction.

Unless stated otherwise, the polymerizable compounds and the compounds of formula II are preferably selected from achiral compounds.

As used herein, the expression "UV light having a wavelength of" followed by a given range of wavelengths (in nm), or by a given lower or upper wavelength limit (in nm), means that the UV emission spectrum of the respective radiation source has an emission peak, which is preferably the highest peak in the respective spectrum, in the given wavelength range or above the given lower wavelength limit or below the given upper wavelength limit and/or that the UV absorption spectrum of the respective chemical compound has a long or short wavelength tail that extends into the given wavelength range or above the given lower wavelength limit or below the given upper wavelength limit.

As used herein, the term "full width half maximum" or "FWHM" means the width of a spectrum curve measured between those points on the y-axis which are half the maximum amplitude.

As used herein, the term "substantially transmissive" means that the filter transmits a substantial part, preferably at least 50% of the intensity, of incident light of the desired wavelength(s). As used herein, the term "substantially blocking" means that the filter does not transmit a substantial part, preferably at least 50% of the intensity, of incident light of the undesired wavelengths. As used herein, the term "desired (undesired) wavelength" e.g. in case of a band pass filter means the wavelengths inside (outside) the given range of λ, and in case of a cut-off filter means the wavelengths above (below) the given value of λ.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "tilt" and "tilt angle" will be understood to mean a tilted alignment of the LC molecules of an LC medium relative to the surfaces of the cell in an LC display (here preferably a PSA display), and will be understood to be inclusive of "pretilt" and "pretilt angle". The tilt angle here denotes the average angle (< 90°) between the longitudinal molecular axes of the LC molecules (LC director) and the surface of the plane-parallel outer plates which form the LC cell. A low absolute value for the tilt angle (i.e. a large deviation from the 90° angle) corresponds to a large tilt here. A suitable method for measurement of the tilt angle is given in the examples. Unless indicated otherwise, tilt angle values disclosed above and below relate to this measurement method.

As used herein, the terms "reactive mesogen" and "RM" will be understood to mean a compound containing a mesogenic or liquid crystalline skeleton, and one or more functional groups attached thereto which are suitable for polymerization and are also referred to as "polymerizable group" or "P".

Unless stated otherwise, the term "polymerizable compound" as used herein will be understood to mean a polymerizable monomeric compound.

An SA-VA display according to the present invention will be of the polymer stabilised mode as it contains, or is manufactured by use of, an LC medium containing RMs of formula I and II. Consequently as used herein, the term "SA-VA display" when referring to a display according to the present invention will be understood to refer to a polymer stabilised SA-VA display even if not explicitly mentioned.

As used herein, the term "low-molecular-weight compound" will be understood to mean to a compound that is monomeric and/or is not prepared by a polymerization reaction, as opposed to a "polymeric compound" or a "polymer".

As used herein, the term "unpolymerizable compound" will be understood to mean a compound that does not contain a functional group that is suitable for polymerization under the conditions usually applied for the polymerization of the RMs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerization. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerizable group(s) in a polymerizable mesogenic compound.

Above and below, 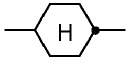 denotes a trans-1,4-cyclohexylene ring, and 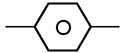 denotes a 1,4-phenylene ring.

In a group 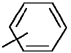 the single bond shown between the two ring atoms can be attached to any free position of the benzene ring.

If in the formulae shown above and below a terminal group like R^{1A, 2A}, R¹, R², R R^{31, 32}, R^{41,42}, R^{51,52} , R^{61,62}, R^{71,72} , R^{81,82,83}, R^{Q}, R⁰, R, R^{M}, R^{S}, R^{S1.,S2,S3,S4} or L denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

If one of the aforementioned terminal groups denotes an alkyl radical wherein one or more CH₂ groups are replaced by S, this may be straight-chain or branched. It is preferably straight-chain, has 1, 2, 3, 4, 5, 6 or 7 C atoms and accordingly preferably denotes thiomethyl, thioethyl, thiopropyl, thiobutyl, thiopentyl, thiohexyl or thioheptyl.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxa-decyl.

If one of the aforementioned terminal groups denotes an alkoxy or oxaalkyl group it may also contain one or more additional oxygen atoms, provided that oxygen atoms are not linked directly to one another.

If one of the aforementioned terminal groups denotes an alkyl radical in which one CH₂ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, - 2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

If one of the aforementioned terminal groups denotes an alkyl or alkenyl radical which is at least monosubstituted by halogen, this radical is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

In another preferred embodiment, one or more of the aforementioned terminal groups, like R^{1A}, ^{2A,} R¹, R², R^{11,12,13}, R^{31,32}, R^{41,42}, R^{51,52}, R^{61,62} R^{71,72}, R^{81,82,83}, R^{Q}, R⁰, R, R^{M}, R^{S}, R^{S1,S2,S3,S4} or L are selected from the group consisting of 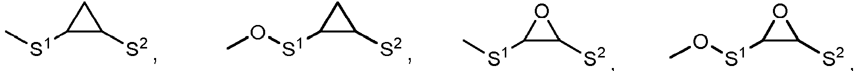 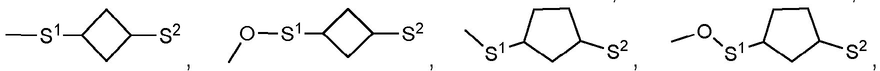 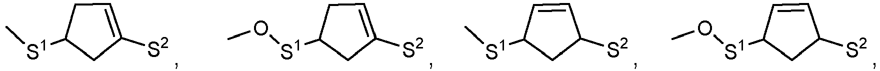 -S¹-F, -O-S'-F, -O-S₁-O-S₂, wherein S¹ is C₁₋₁₂-alkylene or C₂₋₁₂-alkenylene and S² is H, C₁₋₁₂-alkyl or C₂₋₁₂-alkenyl, and very preferably are selected from the group consisting of 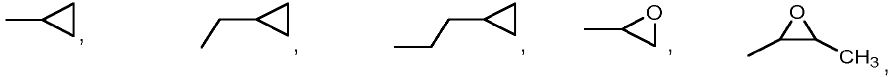 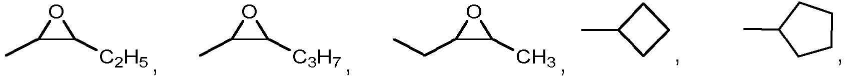 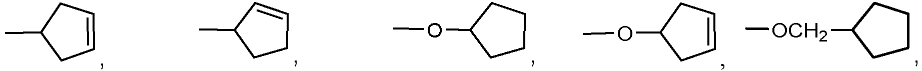 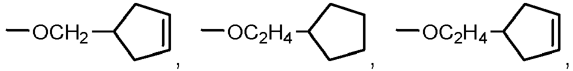 -OCH₂OCH₃, -O(CH₂)₂OCH₃, -OCH₂OCH₃, -O(CH₂)₂OCH₃, -O(CH₂)₃OCH₃, -O(CH₂)₄OCH₃, -O(CH₂)₂F, - O(CH₂)₃F, -O(CH₂)₄F.

If in the formulae shown above and below a group R¹⁻¹³, R⁵¹, R⁵², R^{Q}, R, R^{2A}, R^{2B}, R^{IIIA}, R^{1N}, R^{2N}, R^{B1}, R^{B2}, R^{CR1}, R^{CR2}, R or L denotes an alkyl radical in which one CH₂ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, - 2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

If in the formulae shown above and below a group R¹⁻¹³, R⁵¹, R⁵², R^{Q}, R, R^{2A}, R^{2B}, R^{IIIA}, R^{1N}, R^{2N}, R^{B1}, R^{B2}, R^{CR1}, R^{CR2}, R or L denotes an alkyl or alkenyl radical which is at least monosubstituted by halogen, this radical is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

Halogen is preferably F or Cl, very preferably F.

The group -CR⁰=CR⁰⁰- is preferably -CH=CH-.

-CO-, -C(=O)- and -C(O)- denote a carbonyl group, i.e.

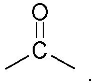

Preferred substituents L, are, for example, F, Cl, Br, I, -CN, -NO₂, -NCO, - NCS, -OCN, -SCN, -C(=O)N(R^{x})₂, -C(=O)Y¹, -C(=O)R^{x}, -N(R^{x})₂, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or Cl, optionally substituted silyl having 1 to 20 Si atoms, straight-chain or branched alkenyl having 2 to 12 C atoms, or optionally substituted aryl having 6 to 25, preferably 6 to 15, C atoms,
wherein R^{x} denotes H, F, Cl, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl, P- or P-Sp-, and
Y¹ denotes halogen.

Particularly preferred substituents L are, for example, F, Cl, CN, NO₂, CH₃, C₂H₅, OCH₃, OC₂H₅, SCH₃, SC₂H₅, COCH₃, COC₂H₅, COOCH₃, COOC₂H₅, CF₃, OCF₃, OCHF₂, OC₂F₅, -CH=CH₂, -CH₂-CH=CH₂, -CH=CH-CH₃, - CH=CH-CH=CH₂ or -C(CH₃)=CH₂. 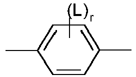 is preferably 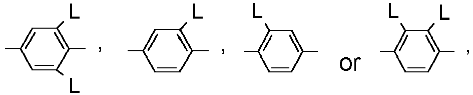 in which L has one of the meanings indicated above.

The polymerizable group P is a group which is suitable for a polymerization reaction, such as, for example, free-radical or ionic chain polymerization, polyaddition or polycondensation, or for a polymer-analogous reaction, for example addition or condensation onto a main polymer chain. Particular preference is given to groups for chain polymerization, in particular those containing a C=C double bond or -C≡C- triple bond, and groups which are suitable for polymerization with ring opening, such as, for example, oxetane or epoxide groups.

Preferred groups P are selected from the group consisting of CH₂=CW¹-CO-O-, CH₂=CW¹-CO-, 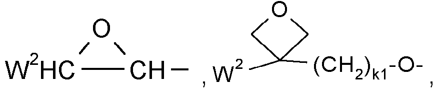 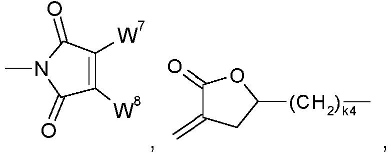 CH₂=CW²-(O)ₖ₃-, CW=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CQ²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above which are other than P-Sp-, k₁, k₂ and k₃ each, independently of one another, denote 0 or 1, k₃ preferably denotes 1, and k₄ denotes an integer from 1 to 10.

Very preferred groups P are selected from the group consisting of CH₂=CW¹-CO-O-, CH₂=CW¹-CO-, 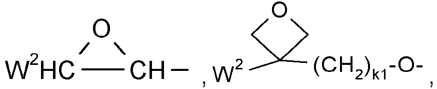 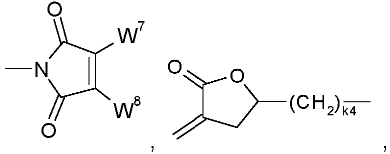 CH₂=CW²-O-, CH₂=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, (CH₂=CH)₂CH-O-,

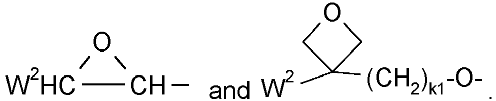

Further preferred polymerizable groups P are selected from the group consisting of vinyloxy, acrylate, methacrylate, fluoroacrylate, chloroacrylate, oxetane and epoxide, most preferably from acrylate and methacrylate.

Very preferably all polymerizable groups in the polymerizable compounds as used in the present invention have the same meaning.

If the spacer group Sp is different from a single bond, it is preferably of the formula Sp"-X", so that the respective radical P-Sp- conforms to the formula P-Sp"-X"-, wherein
- Sp": denotes linear or branched alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-, -NH-, -N(R⁰)-, -Si(R⁰R⁰⁰)-, -CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C-in such a way that O and/or S atoms are not linked directly to one another,
- X": denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂0-, -SCH₂-, -CH₂S-, -CF₂O-, - OCF₂-, -CF₂S-, -SCF₂-, -CF₂CH₂-, -CH₂CF₂-, -CF₂CF₂-, -CH=N-, - N=CH-, -N=N-, -CH=CR⁰-, -CY²=CY³-, -C≡C-, -CH=CH-CO-O-, -O-CO-CH=CH- or a single bond,
- R⁰ and R⁰⁰: each, independently of one another, denote H or alkyl having 1 to 20 C atoms, and
- Y² and Y³: each, independently of one another, denote H, F, Cl or CN.
- X": is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp and -Sp"-X"- are, for example, -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, -(CH₂CH₂O)_{q1}-CH₂CH₂-, - CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the meanings indicated above.

Particularly preferred groups Sp and -Sp"-X"- are -(CH₂)ₚ₁-, -(CH₂)ₚ₁-O-, - (CH₂)ₚ₁-O-CO-, -(CH₂)ₚ₁-CO-O-, -(CH₂)ₚ₁-O-CO-O-, in which p1 has one of the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methylimino-ethylene, 1-methylalkylene, ethenylene, propenylene and butenylene.

In a preferred embodiment of the invention the compounds of formula IA-1 and/or IB and their subformulae contain a spacer group Sp that is substituted by one or more polymerizable groups P, so that the group Sp-P corresponds to Sp(P)ₛ, with s being ≥2 (branched polymerizable groups).

Preferred compounds of formula IA-1 and IB according to this preferred embodiment are those wherein s is 2, i.e. compounds which contain a group Sp(P)₂. Very preferred compounds of formula IA-1 and IB according to this preferred embodiment contain a group selected from the following formulae:

-X-alkyl-CHPP S1

-X-alkyl-CH((CH₂)ₐₐP)((CH₂)_{bb}P) S2

-X-N((CH₂)ₐₐP)((CH₂)_{bb}P) S3

-X-alkyl-CHP-CH₂-CH₂P S4

-X-alkyl-C(CH₂P)(CH₂P)-CₐₐH₂ₐₐ₊₁ S5

-X-alkyl-CHP-CH₂P S6

-X-alkyl-CPP-CₐₐH₂ₐₐ₊₁ S7

-X-alkyl-CHPCHP-CₐₐH₂ₐₐ₊₁ S8

in which P is as defined in formula I,
- alkyl: denotes a single bond or straight-chain or branched alkylene having 1 to 12 C atoms which is unsubstituted or mono- or polysubstituted by F, Cl or CN and in which one or more non-adjacent CH₂ groups may each, independently of one another, be replaced by -C(R⁰)=C(R⁰)-, -C≡C-, -N(R⁰)-, -O-, -S-, -CO-, -CO-O-, -O-CO-, -O-CO-O- in such a way that O and/or S atoms are not linked directly to one another, where R⁰ has the meaning indicated above,
- aa and bb: each, independently of one another, denote 0, 1, 2, 3, 4, 5 or 6,
- X: has one of the meanings indicated for X", and is preferably O, CO, SO₂, O-CO-, CO-O or a single bond.

Preferred spacer groups Sp(P)₂ are selected from formulae S1, S2 and S3.

Very peferred spacer groups Sp(P)₂ are selected from the following subformulae:

-CHPP S1a

-O-CHPP S1b

-CH₂-CHPP S1c

-OCH₂-CHPP S1d

-CH(CH₂-P)(CH₂-P) S2a

-OCH(CH₂-P)(CH₂-P) S2b

-CH₂-CH(CH₂-P)(CH₂-P) S2c

-OCH₂-CH(CH₂-P)(CH₂-P) S2d

-CO-NH((CH₂)₂P)((CH₂)₂P) S3a

P is preferably selected from the group consisting of vinyloxy, acrylate, methacrylate, fluoroacrylate, chloroacrylate, oxetane and epoxide, very preferably from acrylate and methacrylate, most preferably from methacrylate.

Further preferably all polymerizable groups P that are present in the same compound have the same meaning, and very preferably denote acrylate or methacrylate, most preferably methacrylate.

Sp preferably denotes a single bond or -(CH₂)ₚ₁-, -(CH₂)ₚ₂-CH=CH-(CH₂)ₚ₃-, - O-(CH₂)ₚ₁-, -O-CO-(CH₂)ₚ₁, or -CO-O-(CH₂)ₚ₁, wherein p1 is 2, 3, 4, 5 or 6, preferably 2 or 3, p2 and p3 are independently of each other 0, 1, 2 or 3 and, if Sp is -O-(CH₂)ₚ₁-, -O-CO-(CH₂)ₚ₁ or -CO-O-(CH₂)ₚ₁ the O-atom or CO-group, respectively, is linked to the benzene ring.

In a preferred embodiment in the compounds of formula IA and/or IB at least one group Sp is a single bond.

In a very preferred embodiment in the compounds of formula IA and/or IB all groups Sp are a single bond.

In another preferred embodiment in the compounds of formula IA and/or IB at least one group Sp is a single bond and at least one group Sp is different from a single bond.

If a group Sp is different from a single bond, it is preferably selected from - (CH₂)ₚ₁-, -(CH₂)ₚ₂-CH=CH-(CH₂)ₚ₃-, -O-(CH₂)ₚ₁-, -O-CO-(CH₂)ₚ₁, or -CO-O-(CH₂)ₚ₁, wherein p1 is 2, 3, 4, 5 or 6, preferably 2 or 3, p2 and p3 are independently of each other 0, 1, 2 or 3 and, if Sp is -O-(CH₂)ₚ₁-, -O-CO-(CH₂)ₚ₁ or -CO-O-(CH₂)ₚ₁ the O-atom or CO-group, respectively, is linked to the benzene ring. Very preferably, if Sp is different from a single bond it is selected from -(CH₂)₂-, -(CH₂)₃-, -(CH₂)₄-, -O-(CH₂)₂-, -O-(CH₂)₃-, -O-CO-(CH₂)₂ and -CO-O-(CH)₂-, wherein the O atom or the CO group is attached to the benzene ring.

According to the invention in the componds of formula IA all polymerizable groups P have the same meaning, and denote methacrylate.

According to the invention compounds of formula IA are selected from the following formula: 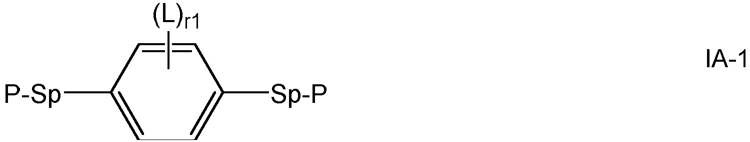 wherein P, Sp and L have the meanings given in formula IA or one of the preferred meanings as given above and below, r1 is 0, 1, 2, 3 or 4 and r2 is 0, 1, 2 or 3.

Especially preferred are the compounds of formula IA-1.

Very preferred compounds of formula IA are selected from the following subformulae: 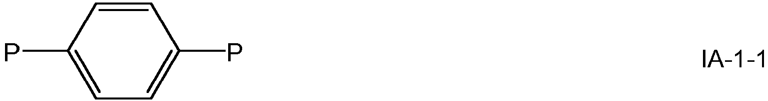 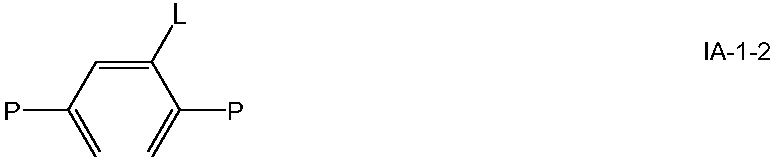 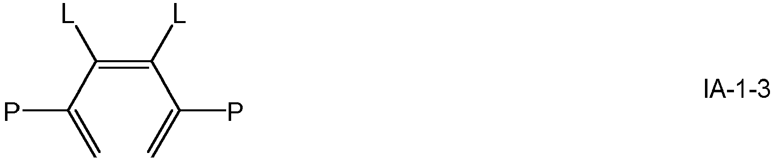 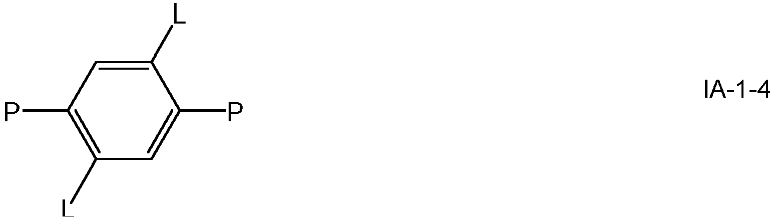 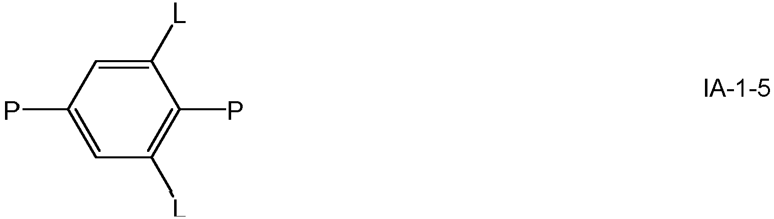 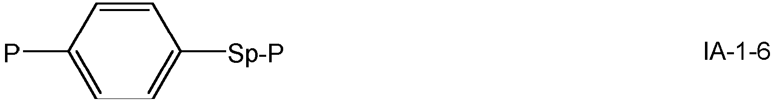 wherein P, Sp and L have the meanings given in formula IA-1 or one of their preferred meanings as given above or below, and Sp is different from a single bond.

Especially preferred are the compounds of formula IA-1-1 to IA-1-5, very preferred the compounds of formula IA-1-1 and IA-1-2, most preferred the compounds of formula IA-1-1.

Further preferred compounds of formula IA-1 and its subformulae are selected from the following preferred embodiments, including any combination thereof:
- all groups Sp denote single bonds,
- at least one group Sp is different from a single bond,
- Sp, when being different from a single bond, is -(CH₂)ₚ₂-, -(CH₂)ₚ₂-O-, -(CH₂)ₚ₂-CO-O-, -(CH₂)ₚ₂-O-CO-, wherein p2 is 2, 3, 4, 5 or 6, and the O-atom or the CO-group, respectively, is connected to the benzene ring,
- L denotes F, Cl, CH₃, C₂H₅, OCH₃, OC₂H₅, SCH₃, SC₂H₅, -C(=O)H, - C(=O)CH₃ or -C(=O)C₂H₅, very preferably F, OCH₃, SCH₃, -C(=O)H, - C(=O)CH₃ or -C(=O)C₂H₅, most preferably -C(=O)H, -C(=O)CH₃ or - C(=O)C₂H₅,
- r is 0,
- r is 1 or 2.

Very preferred compounds of formula IA and its subformulae are those of the following formula:

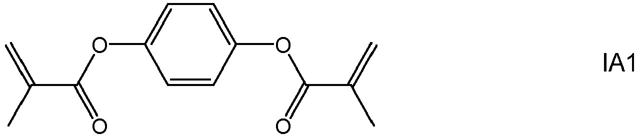

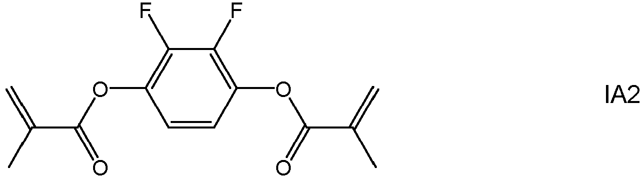

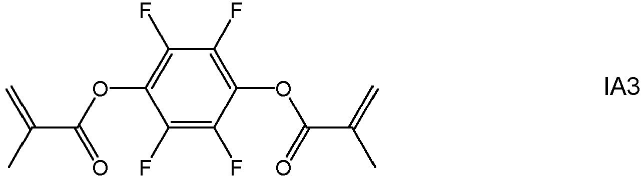

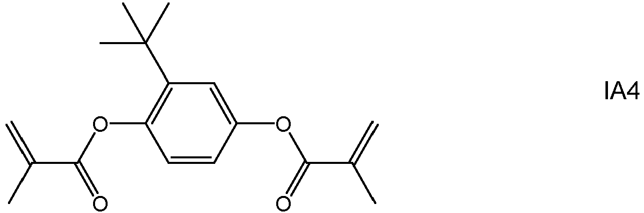

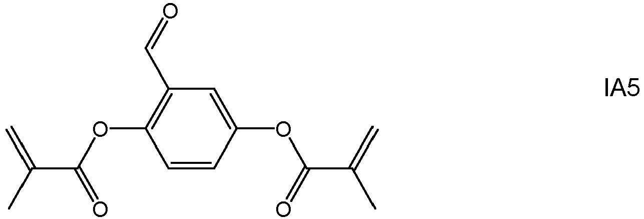

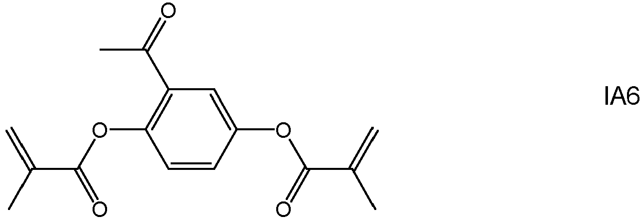

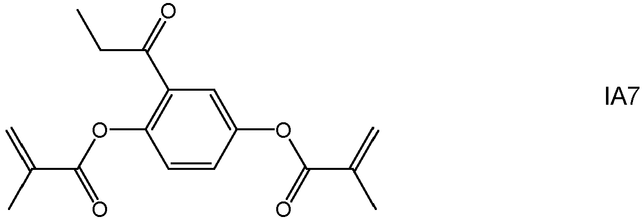

The invention further relates to novel compounds of formula IA, in particular those selected from formulae IA4, IA5 and IA7.

Preferred compounds of formula IB are selected from the following subformulae: 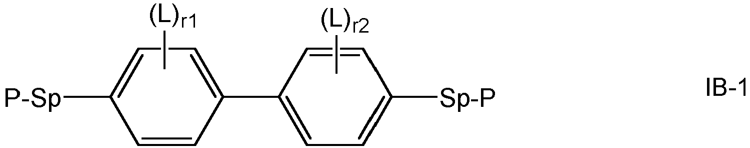 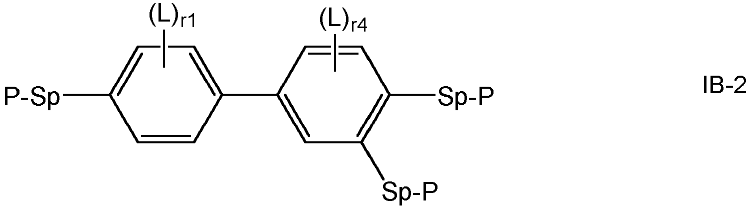 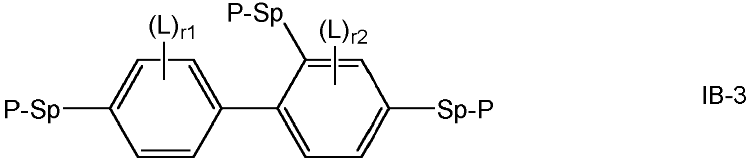 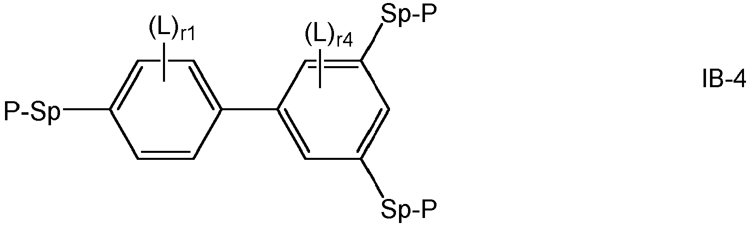 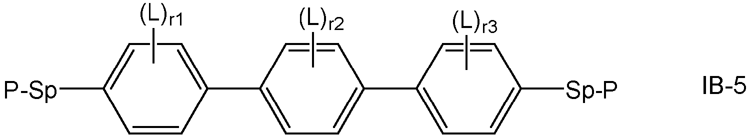 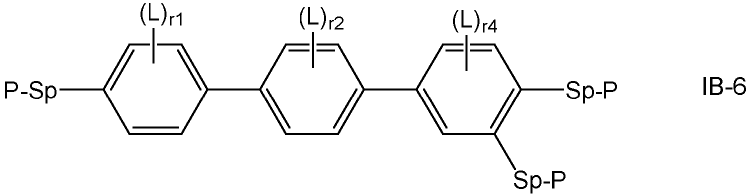 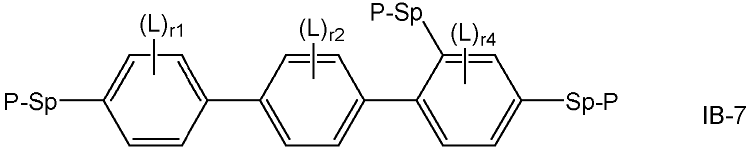 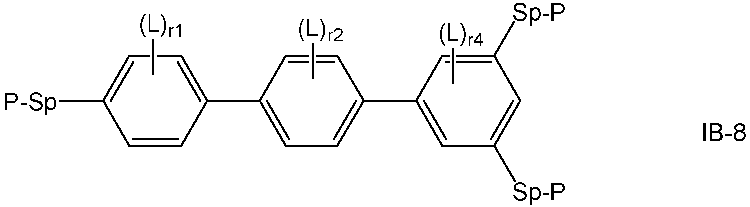 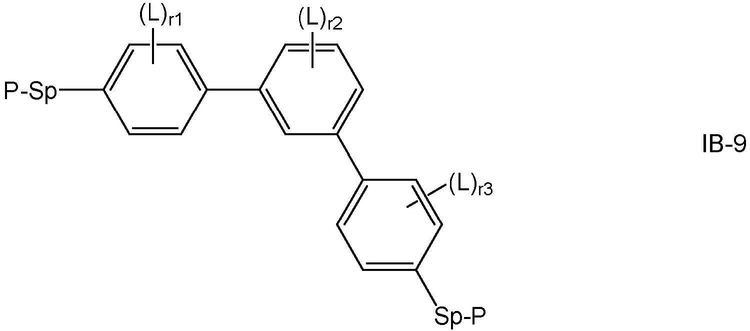 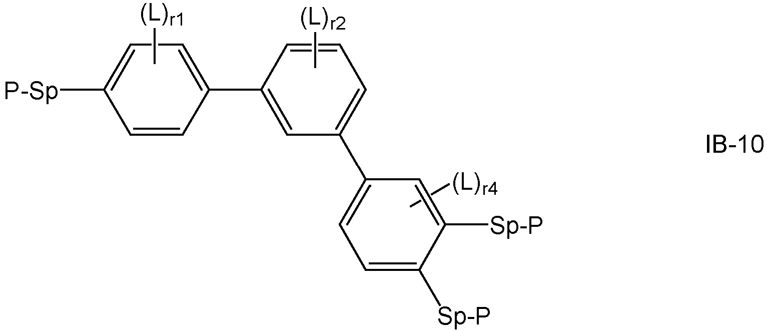 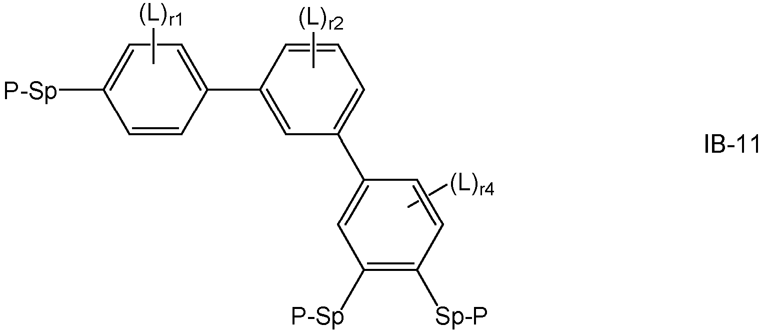 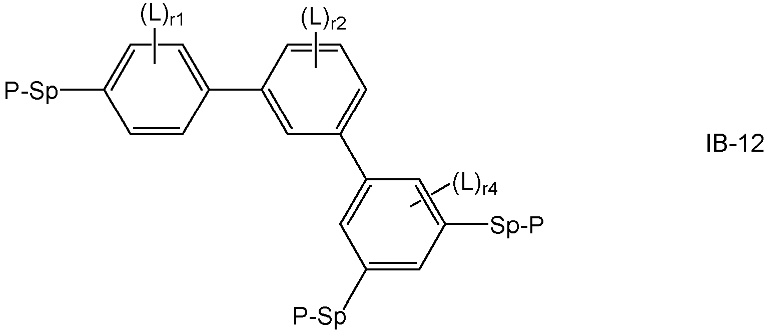 wherein P, Sp and L have the meanings given in formula IB or one of the preferred meanings as given above and below,
- r1, r2, r3: are independently of each other 0, 1, 2, 3 or 4, and
- r4: is 0, 1, 2 or 3.

Preferred compounds of formula IB are selected from the group consisting of formula IB-1, IB-2, IB-3, IB-5, IB-6, IB-7 and IB-9, especially from the group consisting of formulae IB-1, IB-2, IB-5, IB-6 and IB-9, more preferably of formulae IB-1, IB-5 and IB-9, most preferably of formula IB-1.

Very preferred are compounds of formulae IB-1 to IB-12 wherein r1, r2 and r3 are 0. Further preferred are compounds of formulae IB-1 to IB-12 wherein at least one of r1, r2 and r3 is not 0, more preferably wherein r1+r2+r3 is 1 or 2.

Further preferred are compounds of formulae IB-1 to IB-12 wherein all groups P have the same meaning and denote acrylate or methacrylate, very preferably methacrylate.

Further preferred are compounds of formulae IB-1 to IB-12 wherein all groups Sp denote a single bond.

Further preferred are compounds of formulae IB-1 to IB-12 wherein one or two groups Sp are different from a single bond, and are preferably selected from -(CH₂)₂-, -(CH₂)₃-, -(CH₂)₄-, -O-(CH₂)₂-, -O-(CH₂)₃-, -O-CO-(CH₂)₂ and - CO-O-(CH)₂-, wherein the O atom or the CO group is attached to the benzene ring.

Further preferred are compounds of formulae IB-1 to IB-12 containing one or more, preferably exactly one, group Sp that is substituted by a group - C(R^{aa})(R^{bb})OH, wherein R^{aa} and R^{bb} denote independently of each other straight-chain alkyl with 1 to 6 C atoms, or R^{aa} and R^{bb} together with the C atom to which they are attached form a cyclic alkyl group with 3 to 12 C atoms, very preferably cyclopropyl, cyclobutyl, cyclopentyl or cyclohexyl, said one or more group(s) Sp being very preferably substituted by from -C(CH₃)₂-OH, -C(C₂H₅)₂-OH or -C(CH₃)(C₂H₅)OH, very preferably -C(CH₃)₂-OH.

Further preferred are compounds of formulae IB-1 to IB-12 wherein L is selected from F, Cl, CH₃, C₂H₅, OCH₃, OC₂H₅, SCH₃, SC₂H₅, -CH=CH₂, - CH₂-CH=CH₂, -CH=CH-CH₃, -CH=CH-CH=CH₂ or -C(CH₃)=CH₂, -C(CH₃)₂-OH, -C(C₂H₅)₂-OH or -C(CH₃)(C₂H₅)OH, very preferably F, OCH₃ or SCH₃,

Further preferred compounds of formula IB are selected from the following subformulae 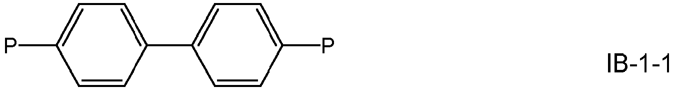 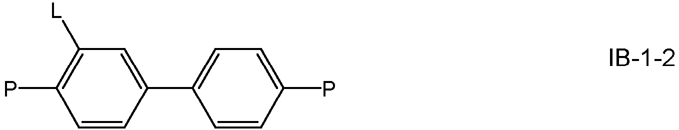 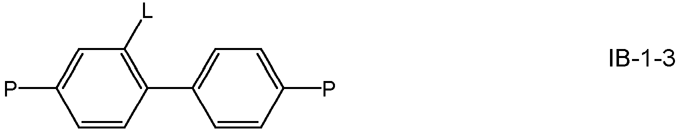 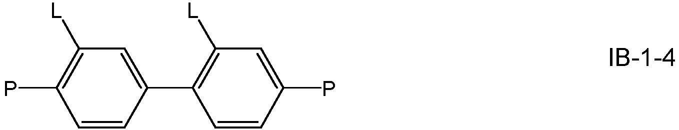 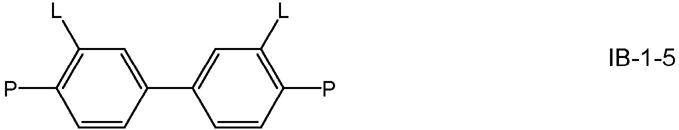 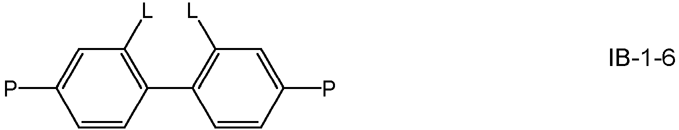 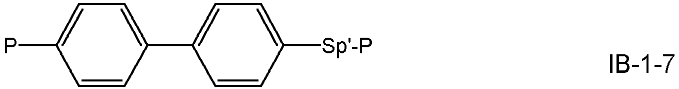 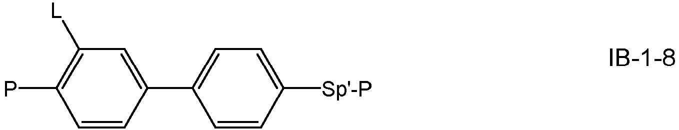 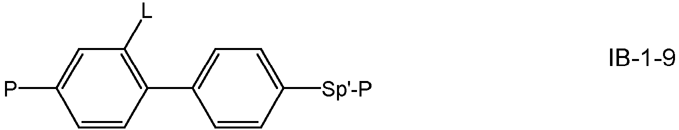 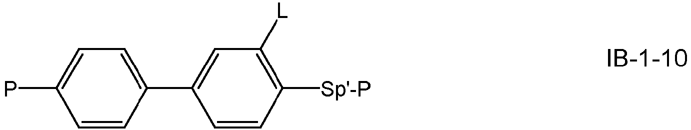 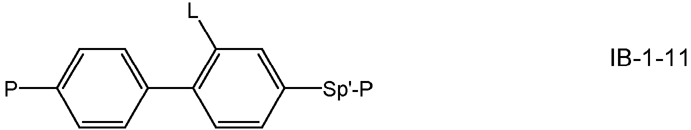 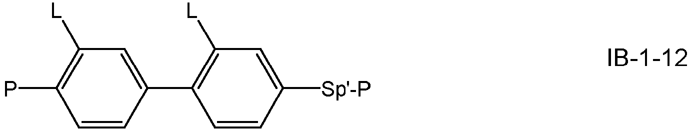 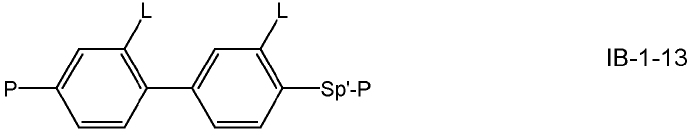 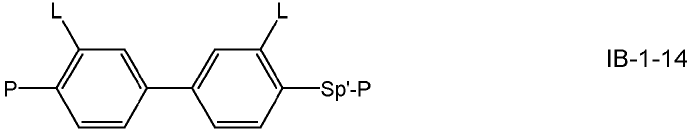 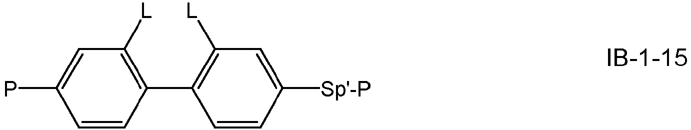 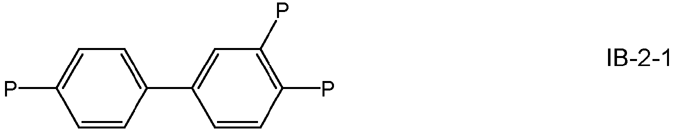 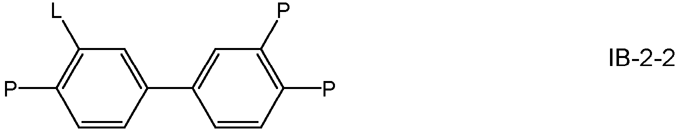 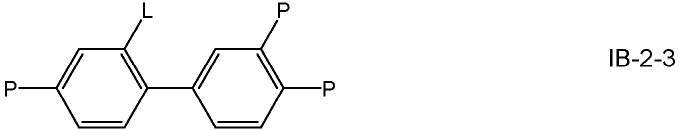 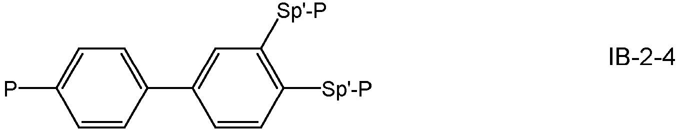 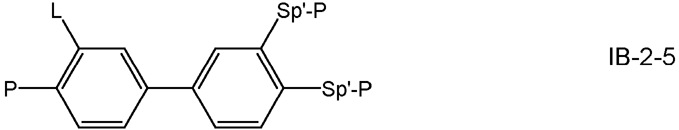 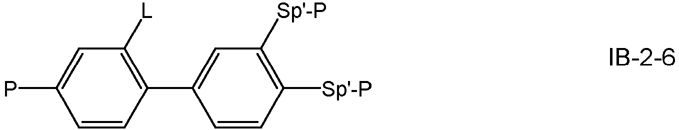 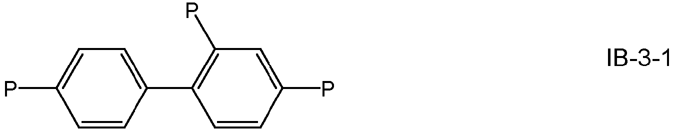 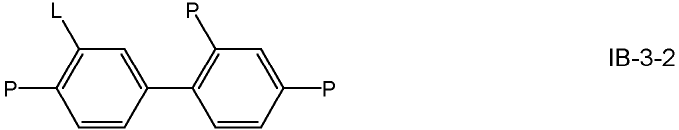 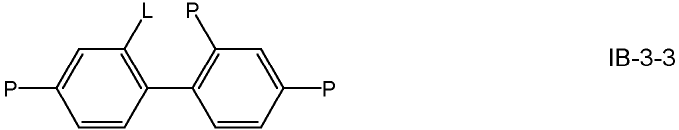 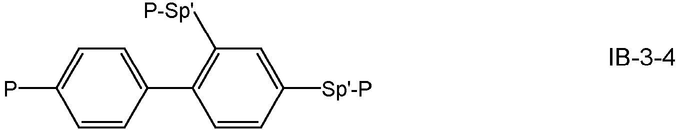 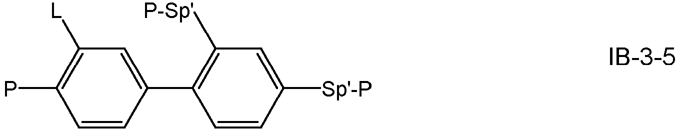 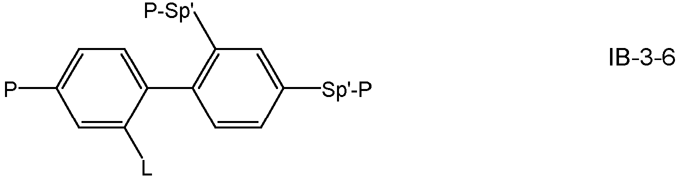 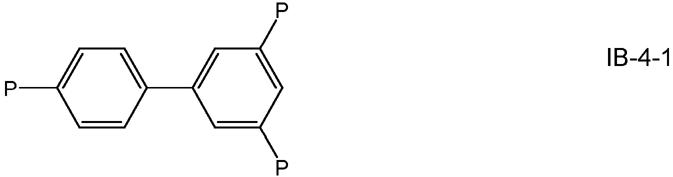 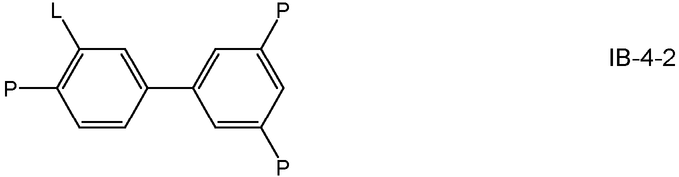 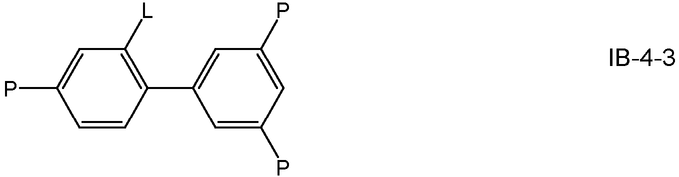 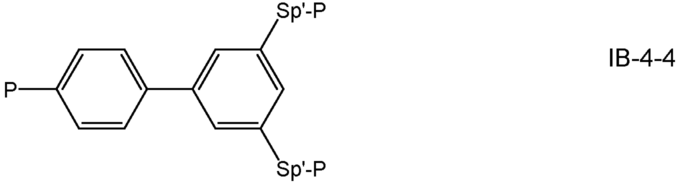 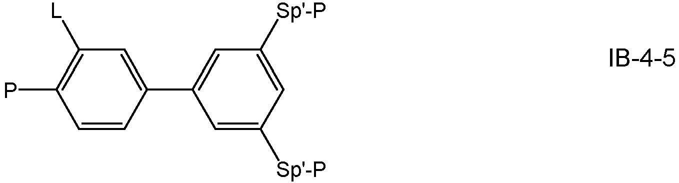 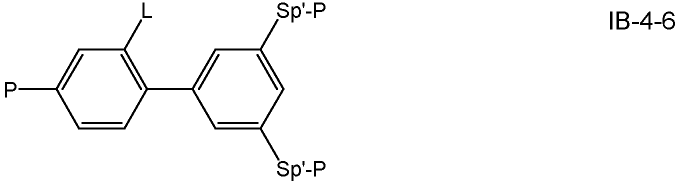 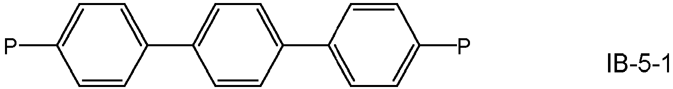 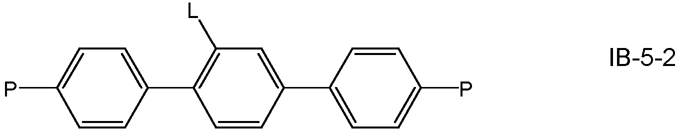 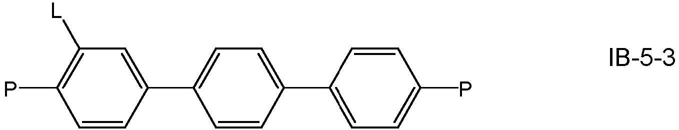 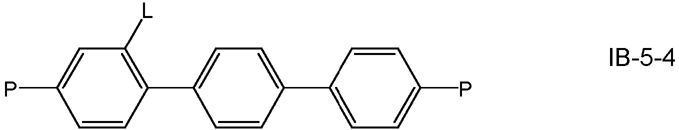 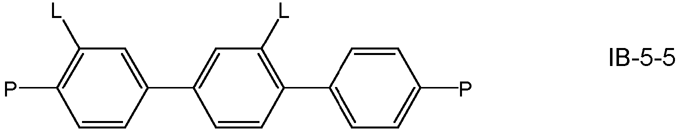 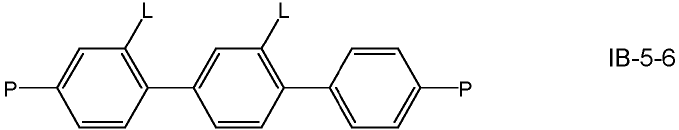 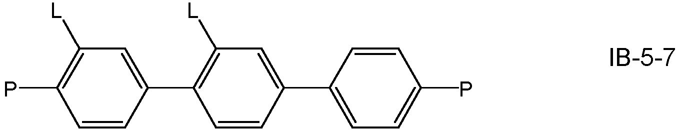 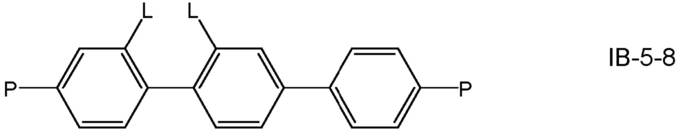 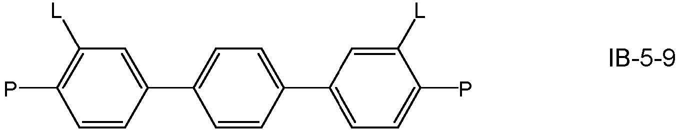 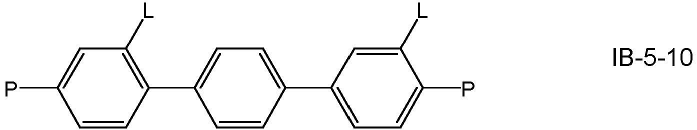 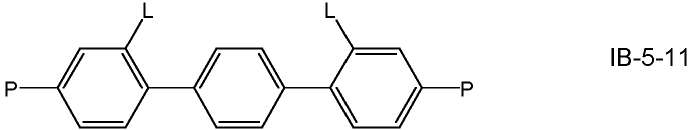 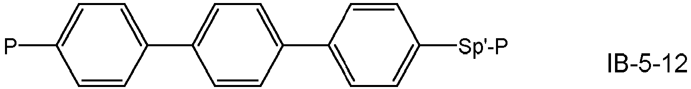 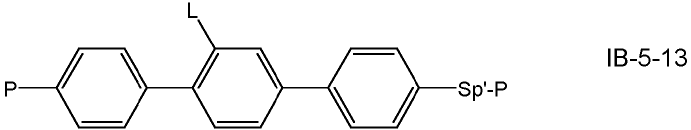 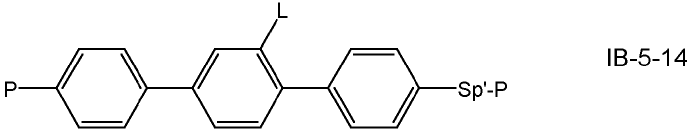 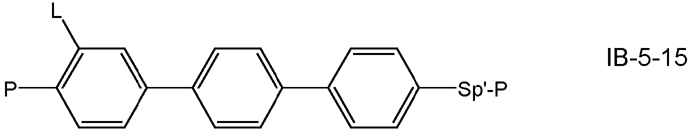 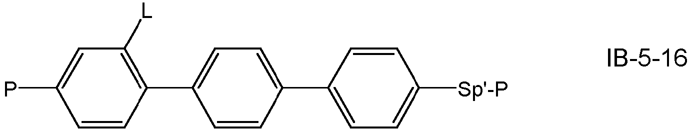 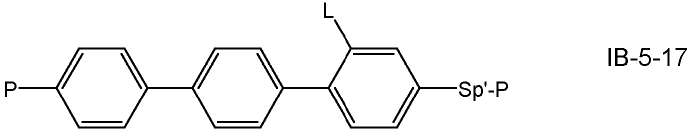 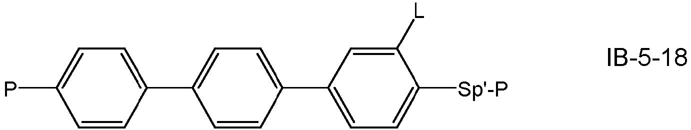 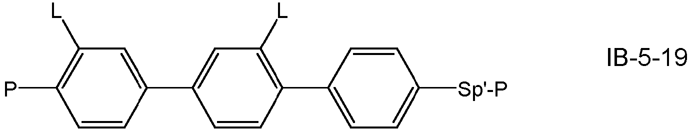 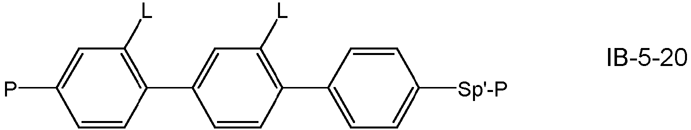 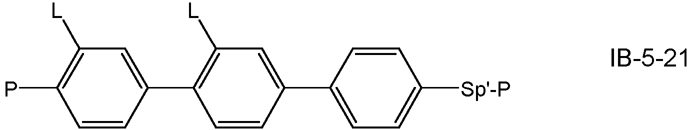 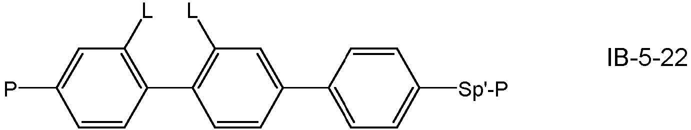 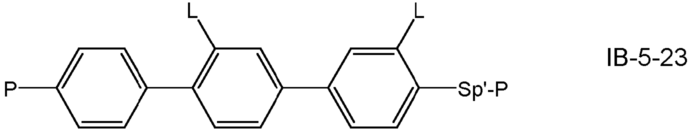 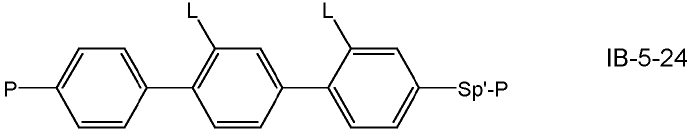 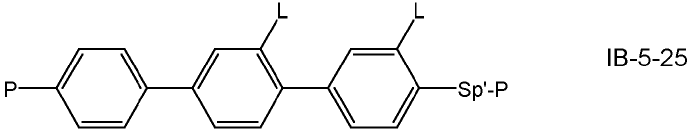 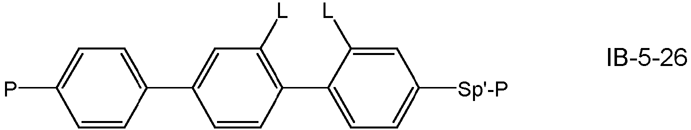 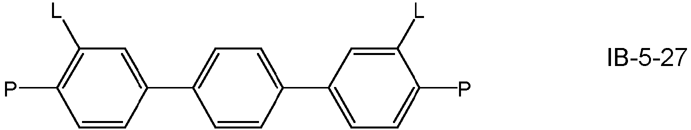 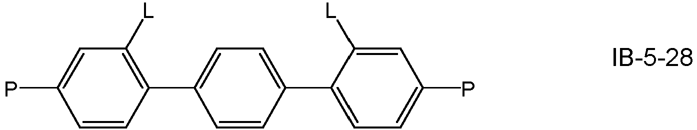 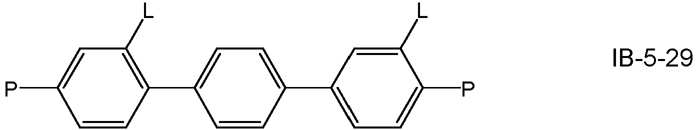 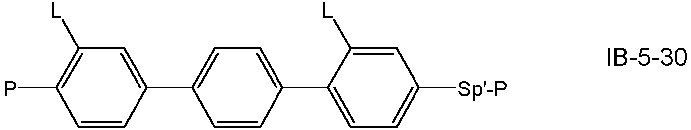 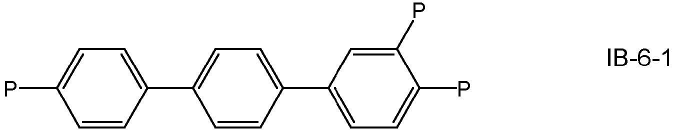 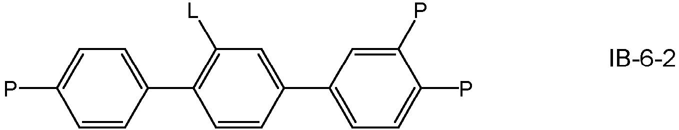 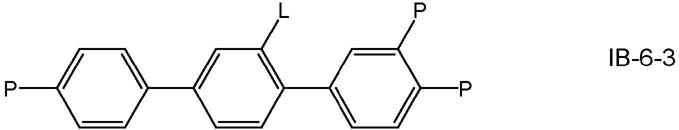 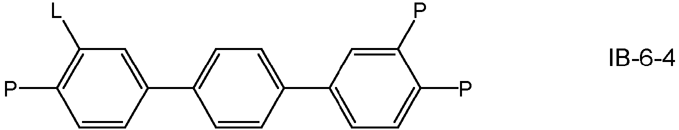 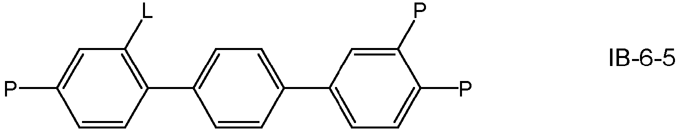 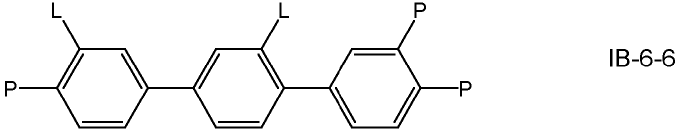 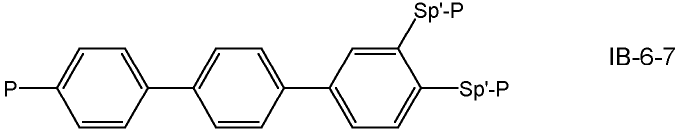 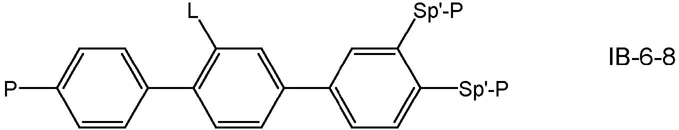 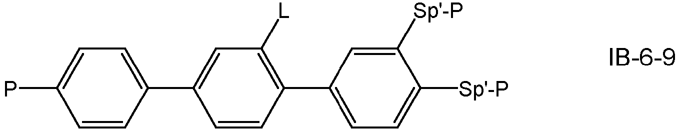 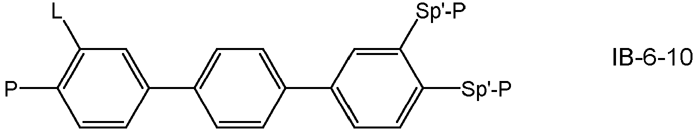 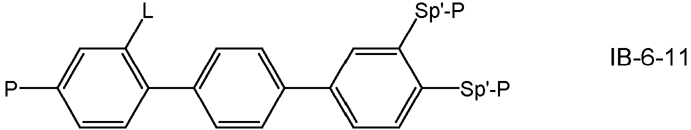 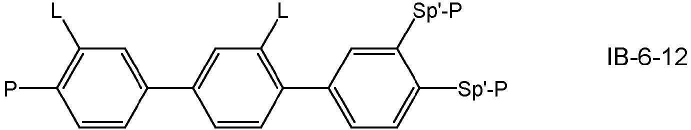 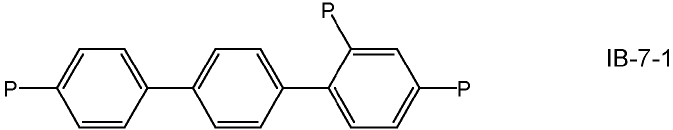 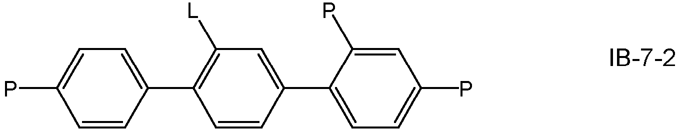 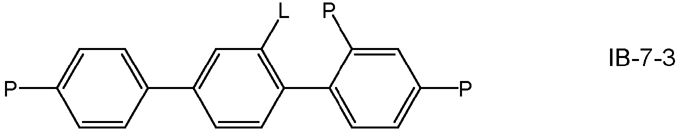 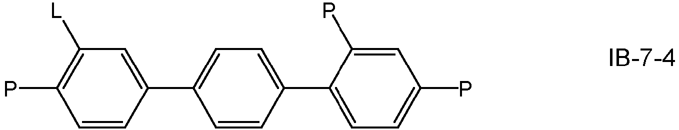 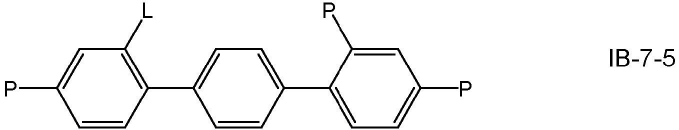 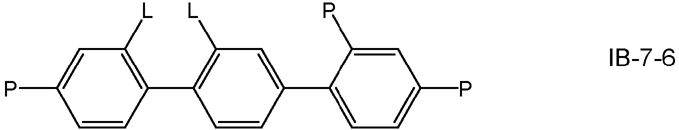 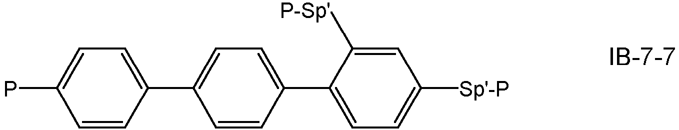 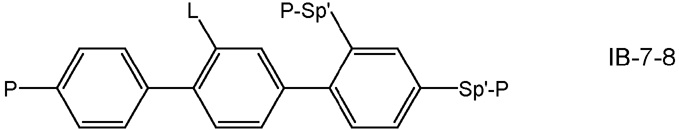 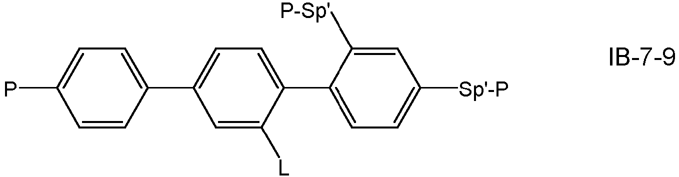 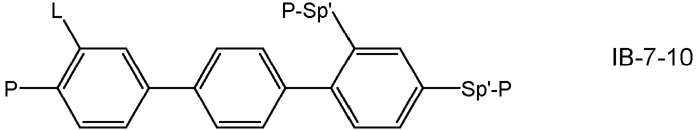 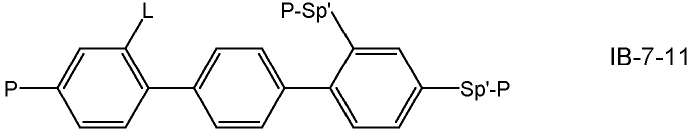 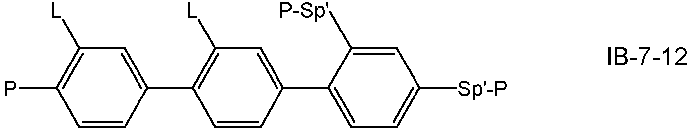 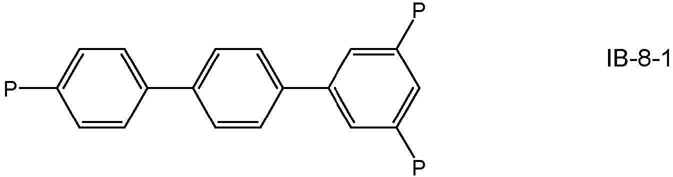 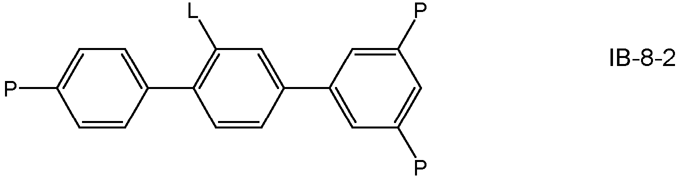 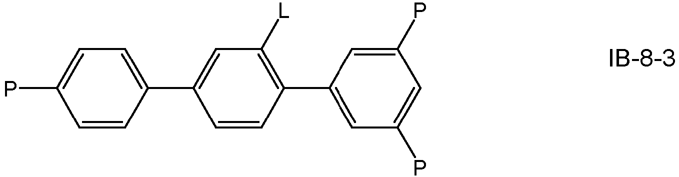 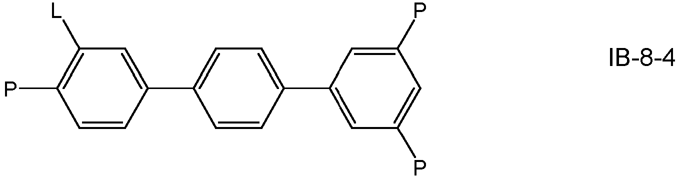 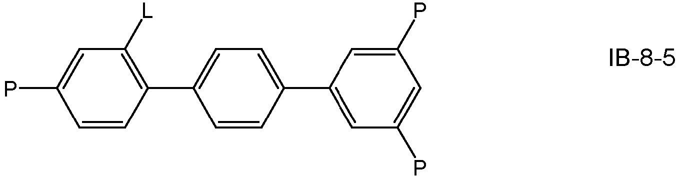 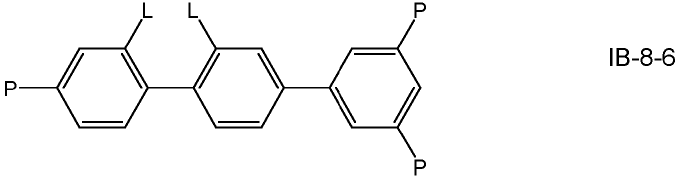 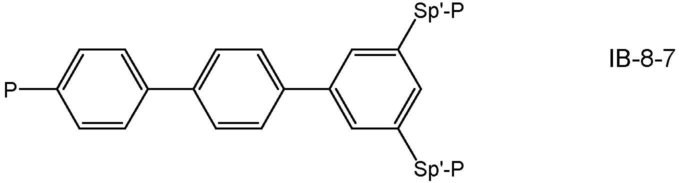 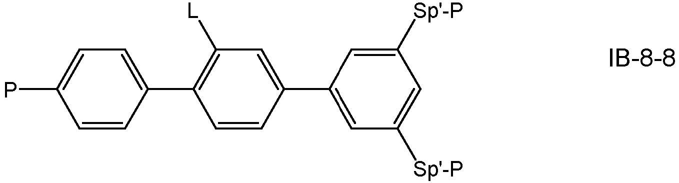 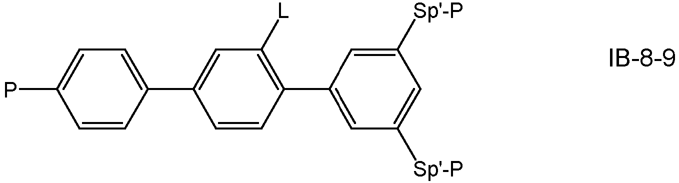 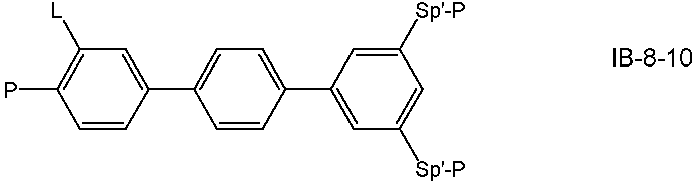 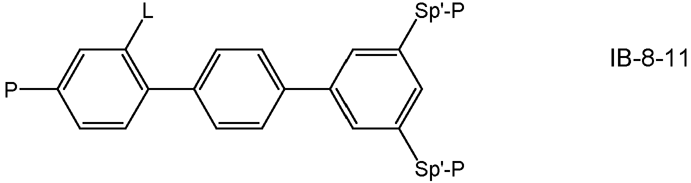 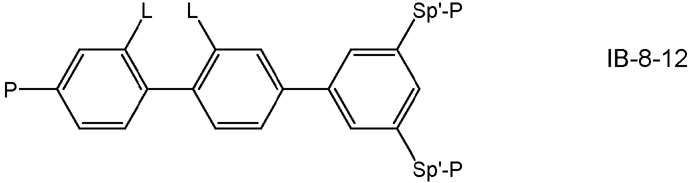 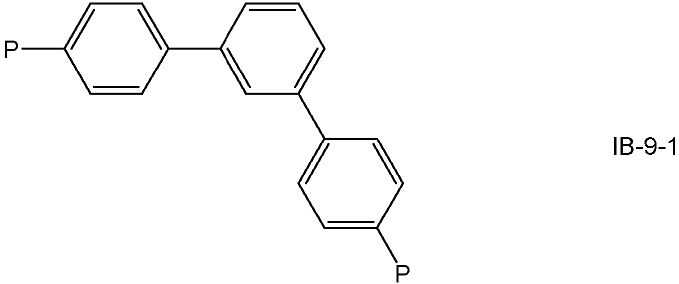 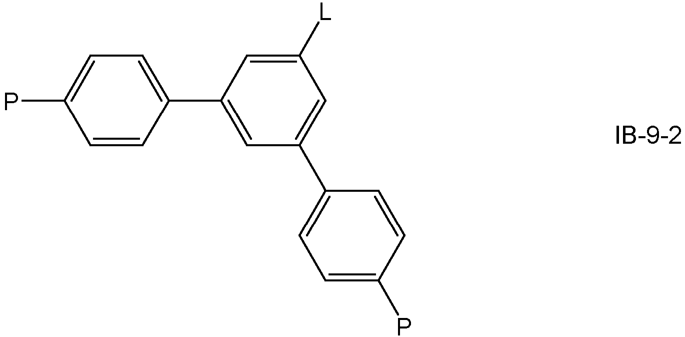 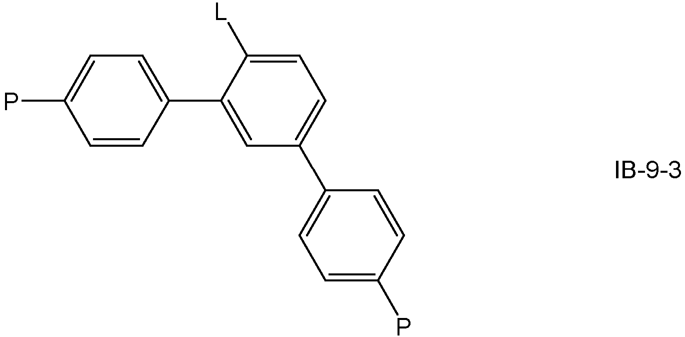 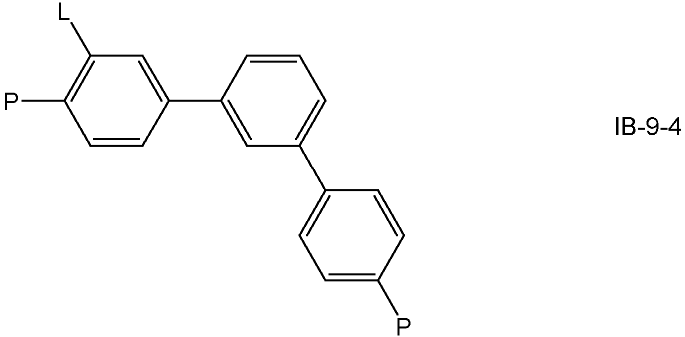 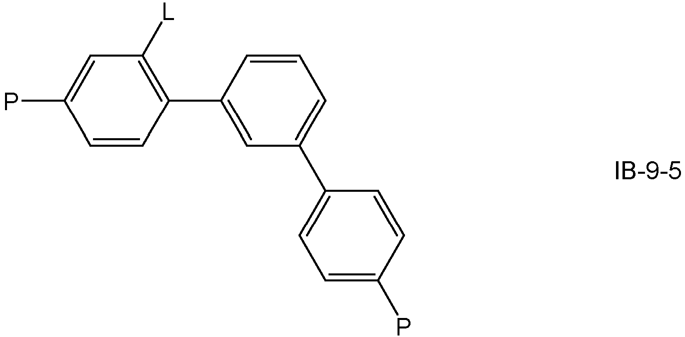 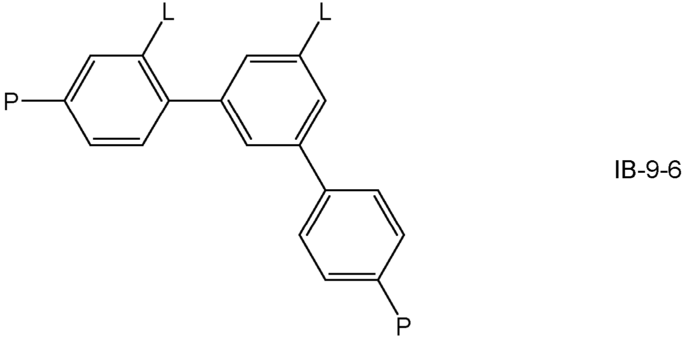 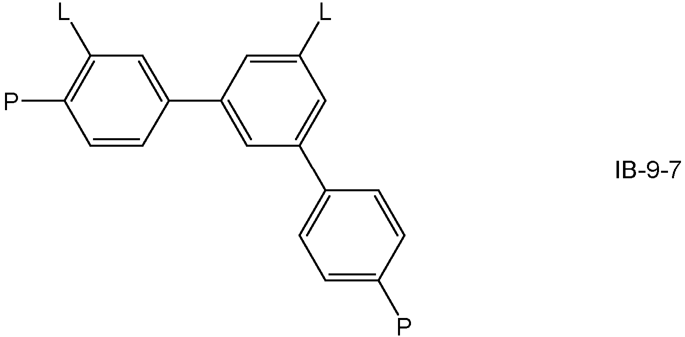 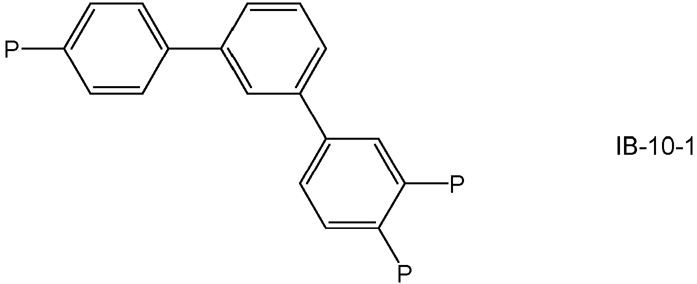 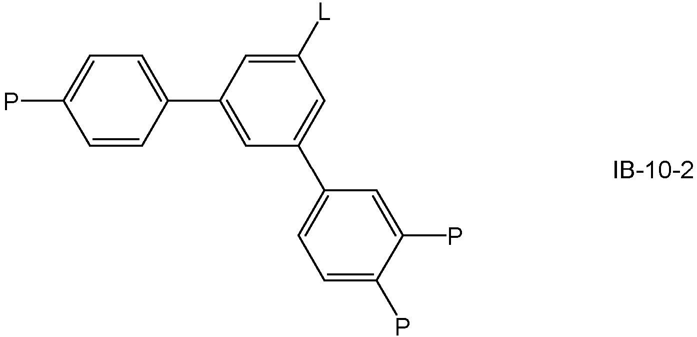 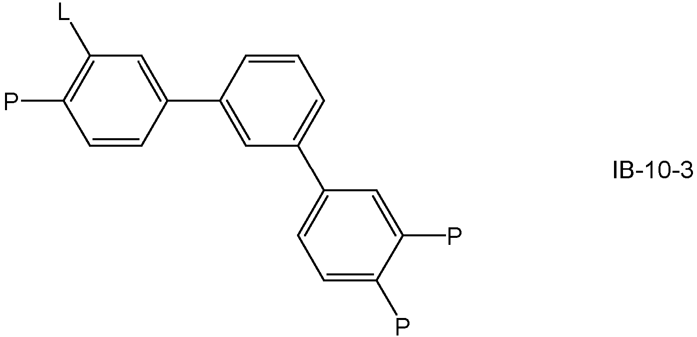 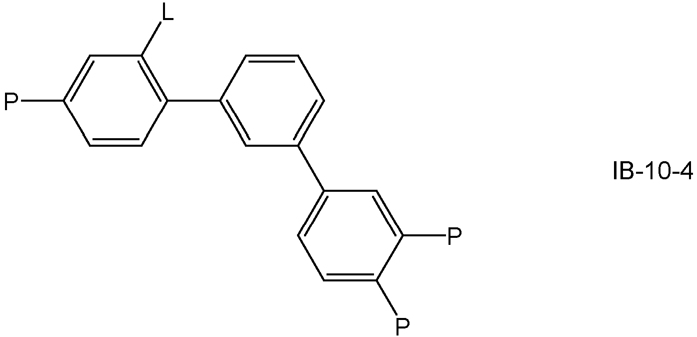 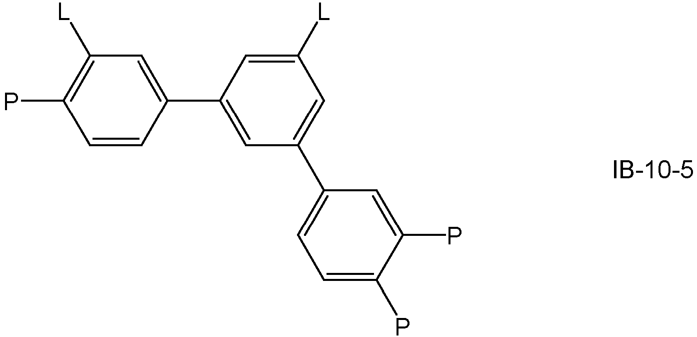 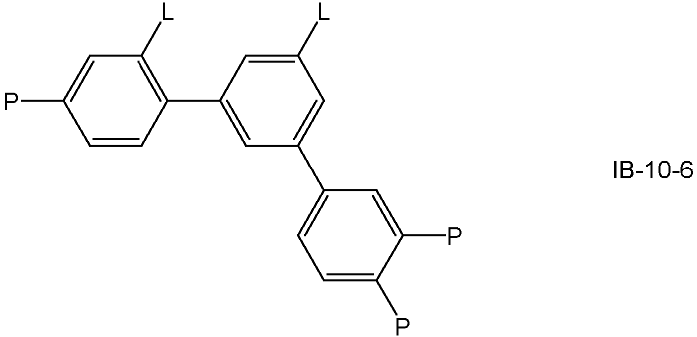 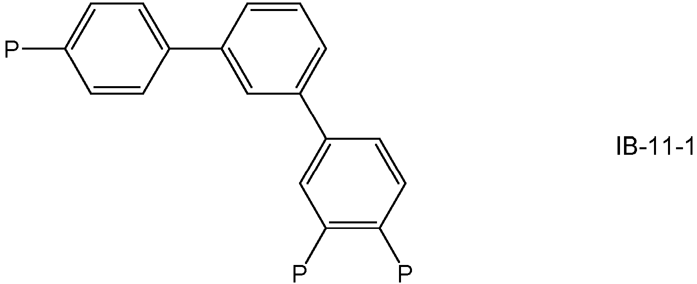 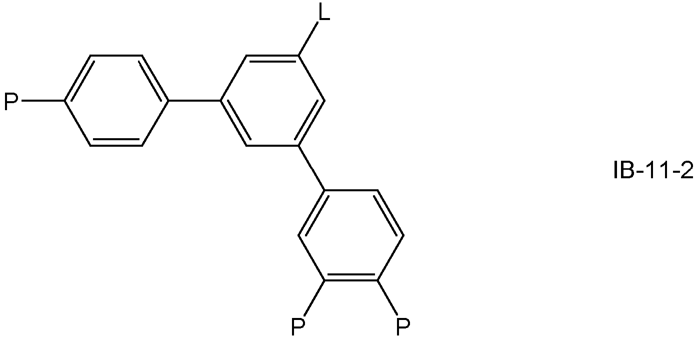 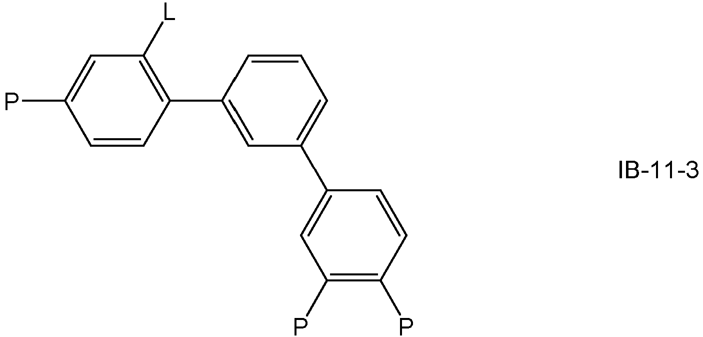 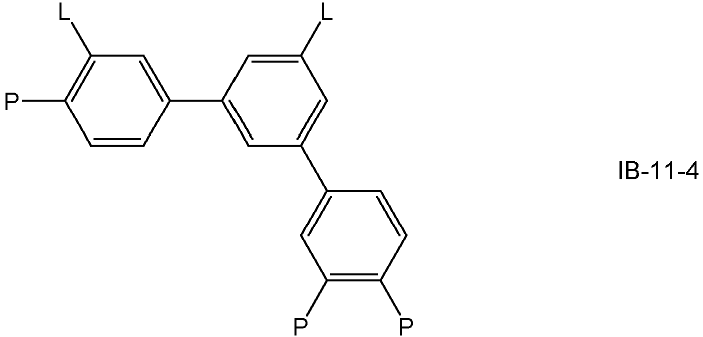 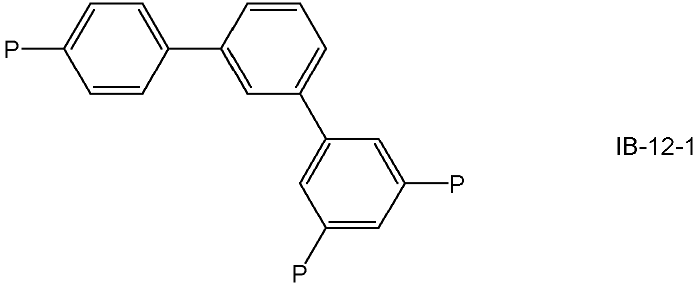 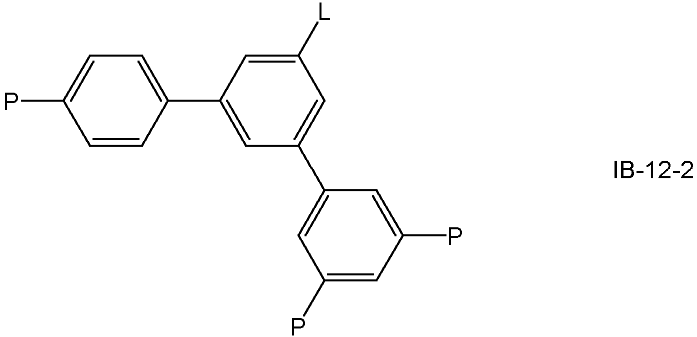 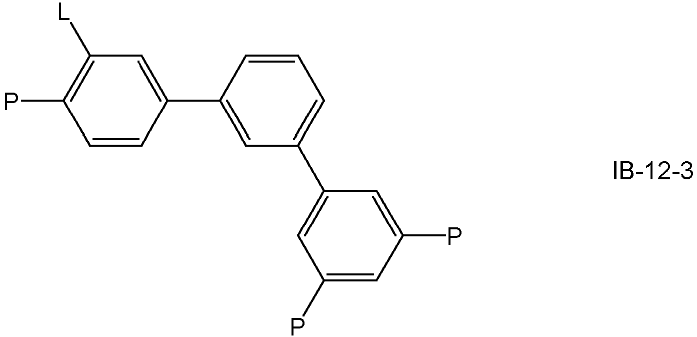 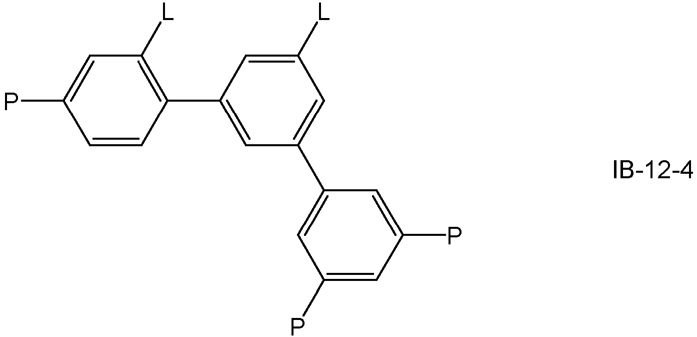 wherein P, Sp and L on each occurrence identically or differently one of the meanings as given in formula IB-T and Sp' has one of the meanings given for Sp that is different from a single bond.

Especially preferred are the compounds selected for the group consisting of formulae IB-1-1, IB-1-2, IB-1-3, IB-2-1, IB-2-2, IB-2-3, IB-5-1 to IB-5-11, IB-6-to IB-6-6, IB-9-1, IB-9-2, IB-10-1 and IB-10-2 especially those of formulae IB-1-1, IB-1-2, IB-1-3, IB-5-1 to IB-5-11, IB-9-1 and IB-9-2, very preferably those of formula IB-1-1.

Further preferred compounds of formula IB and its subformulae are selected from the following preferred embodiments, including any combination thereof:
- All groups P in the compound have the same meaning,
- All groups P in the compound denote methacrylate,
- the compounds contain exactly two polymerisable groups (represented by the groups P),
- the compounds contain exactly three polymerisable groups (represented by the groups P),
- P is selected from the group consisting of acrylate, methacrylate and oxetane, very preferably acrylate or methacrylate, most preferably methacrylate,
- all groups Sp denote single bonds,
- at Iteast one group Sp is different from a single bond,
- Sp, when being different from a single bond, or Sp', is -(CH₂)ₚ₂-, - (CH₂)ₚ₂-O-, -(CH₂)ₚ₂-CO-O-, -(CH₂)ₚ₂-O-CO-, wherein p2 is 2, 3, 4, 5 or 6, and the O-atom or the CO-group, respectively, is connected to the benzene ring,
- the compounds contain at least one, preferably exactly one, group Sp that is substituted by a group -C(R^{aa})(R^{bb})OH, wherein R^{aa} and R^{bb} denote independently of each other straight-chain alkyl with 1 to 6 C atoms, or R^{aa} and R^{bb} together with the C atom to which they are attached form a cyclic alkyl group with 3 to 12 C atoms, very preferably a cyclopropyl, cyclobutyl, cyclopentyl or cyclohexyl group,
- L denotes F, Cl, CH₃, C₂H₅, OCH₃, OC₂H₅, SCH₃ or SC₂H₅, very preferably F, OCH₃ or SCH₃,
- L denotes -CH=CH₂, -CH₂-CH=CH₂, -CH=CH-CH₃, -CH=CH-CH=CH₂ or -C(CH₃)=CH₂,
- Sp is substituted by a group selected from -C(CH₃)₂-OH, -C(C₂H₅)₂-OH and -C(CH₃)(C₂H₅)OH, very preferably -C(CH₃)₂-OH,
- L denotes -C(CH₃)₂-OH, -C(C₂H₅)₂-OH or -C(CH₃)(C₂H₅)OH, very preferably -C(CH₃)₂-OH,
- r1, r2, r3 and r4 denote 0 or 1,
- r1+r2 is 0,
- r1+r2 is 1,
- r3 is 0,
- r4 is 0.

Very preferred compounds of formula IB are selected from the following subformulae: 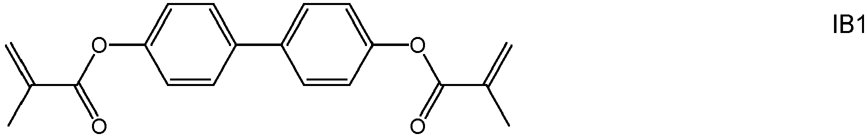 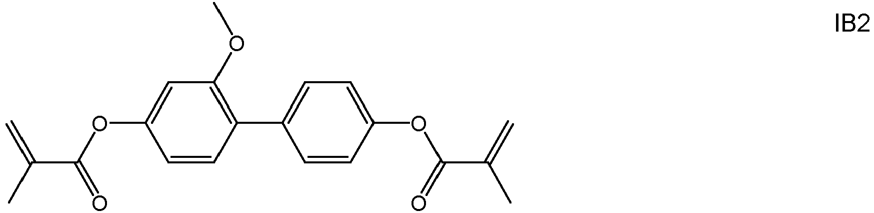 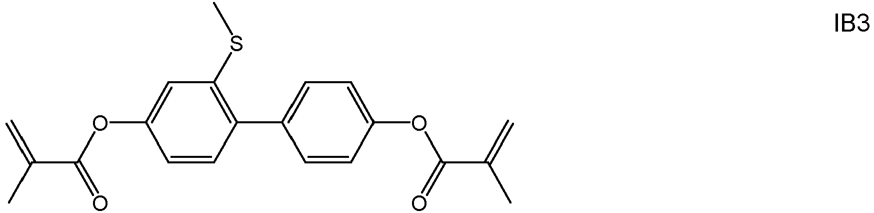 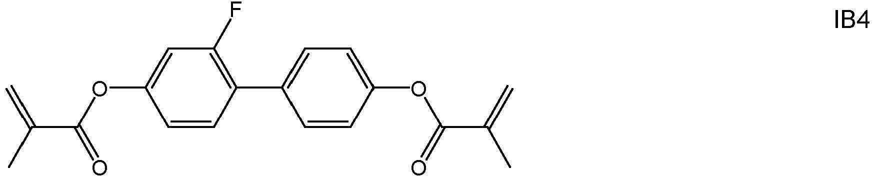 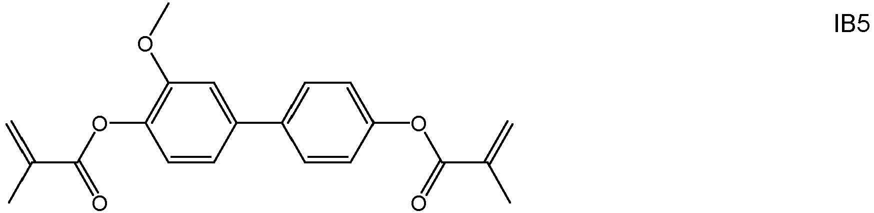 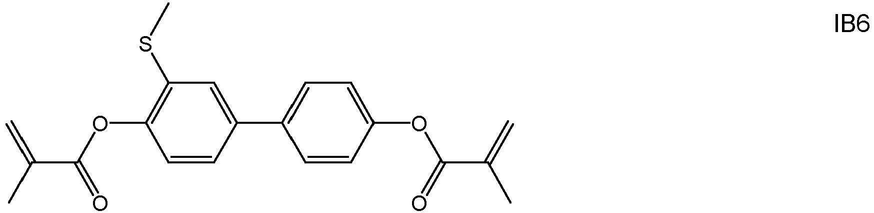 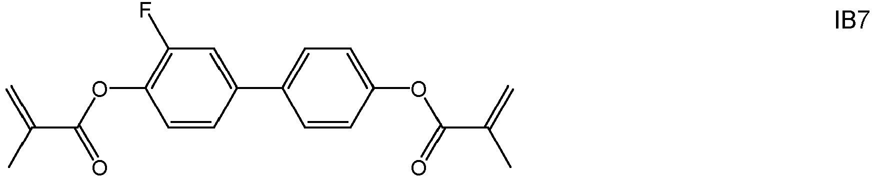 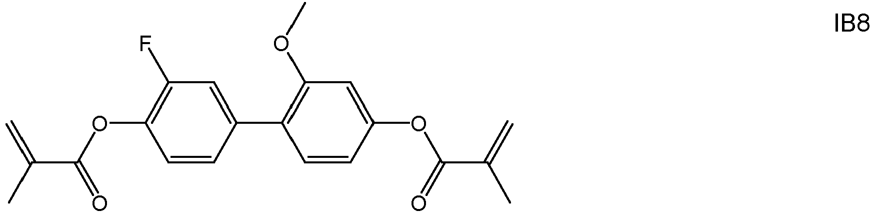 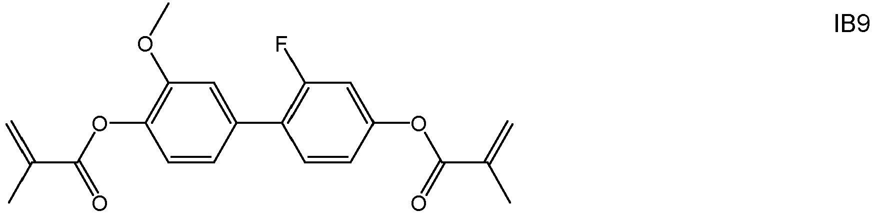 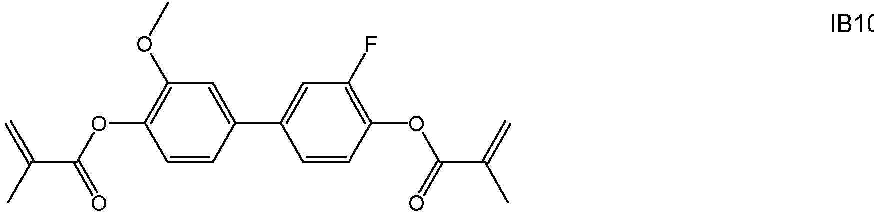 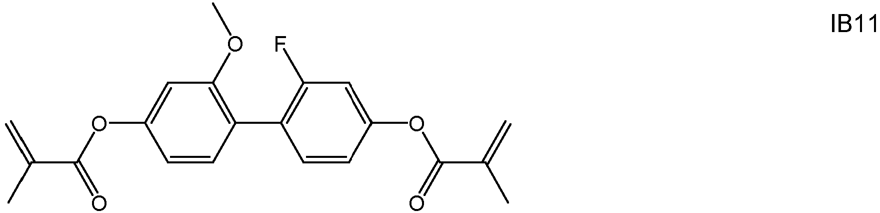 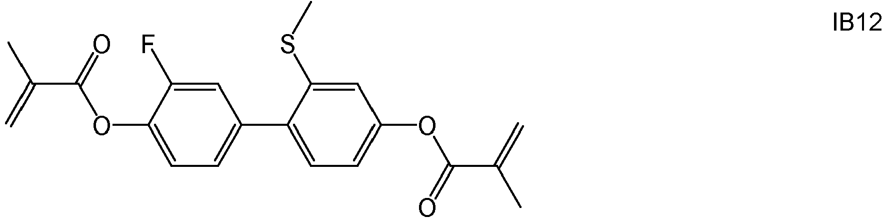 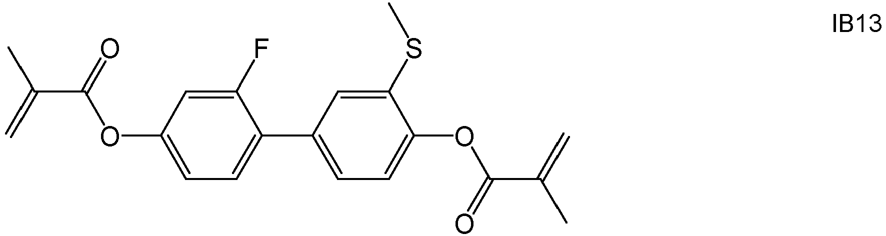 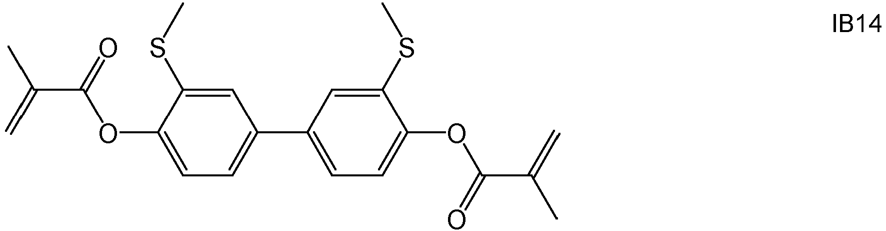 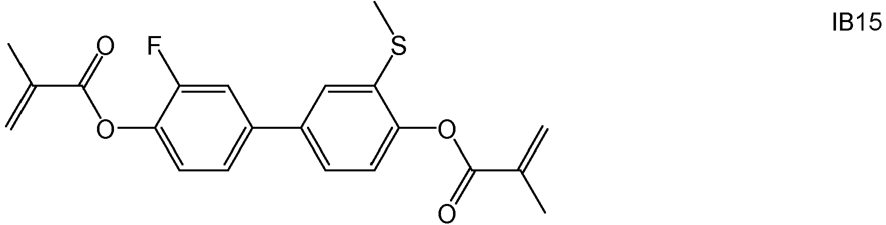 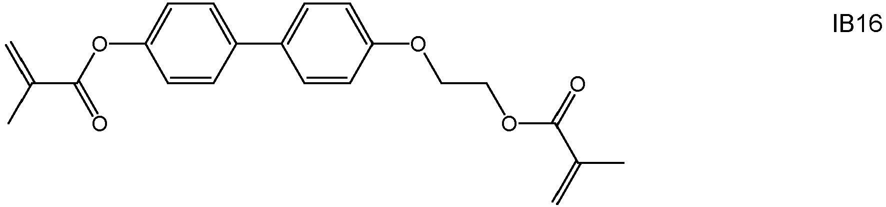 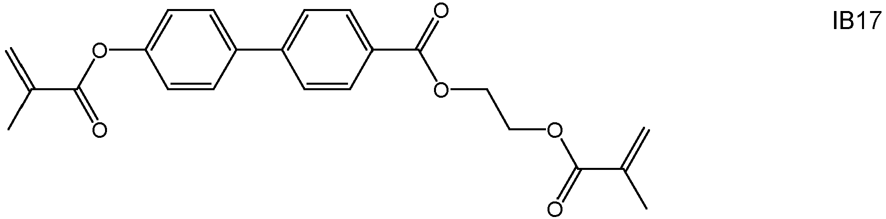 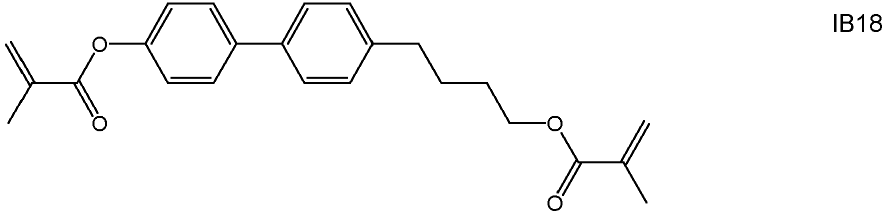 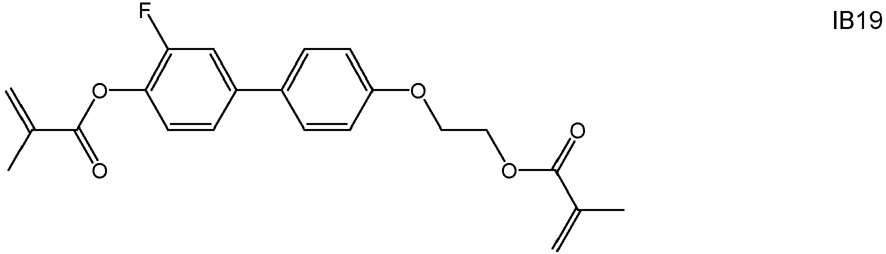 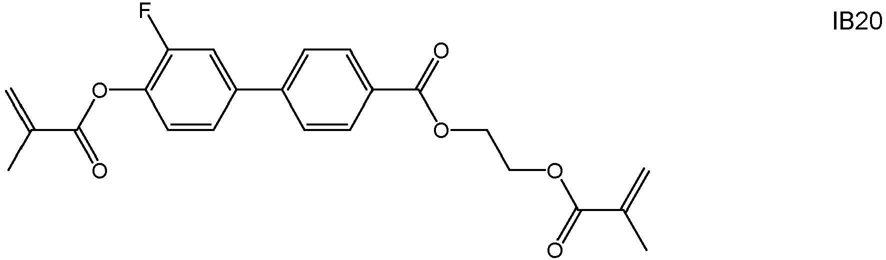 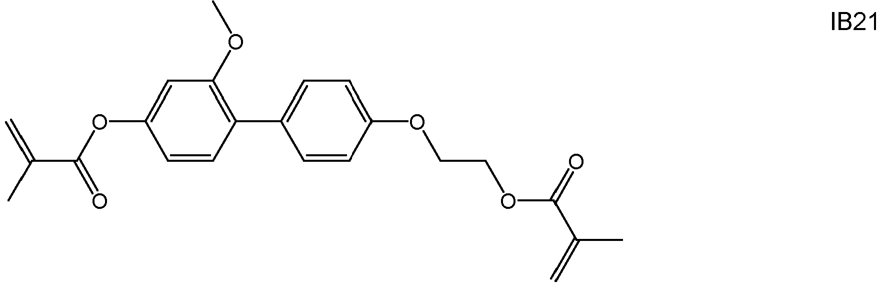 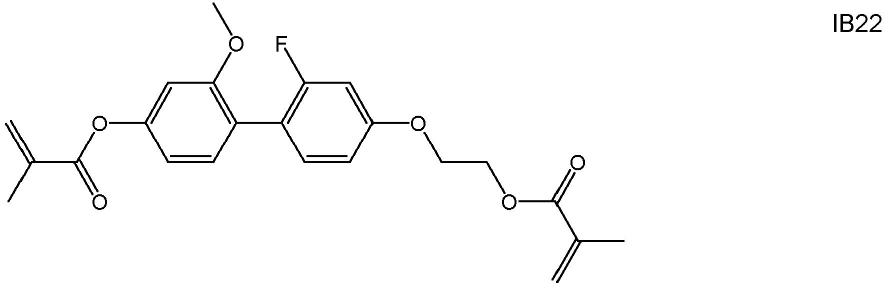 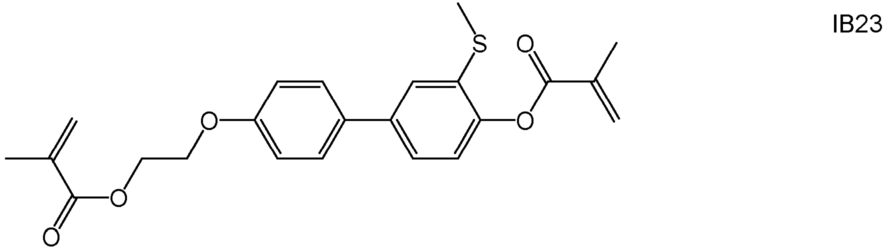 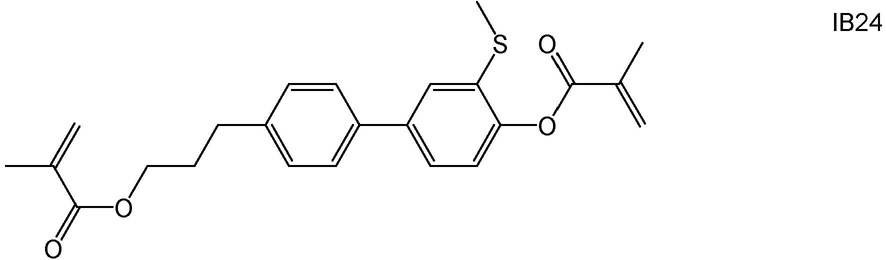 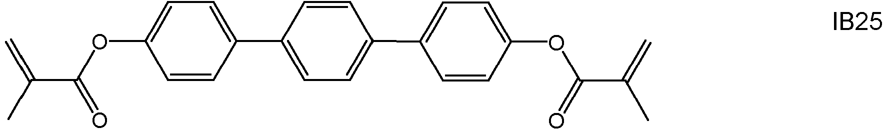 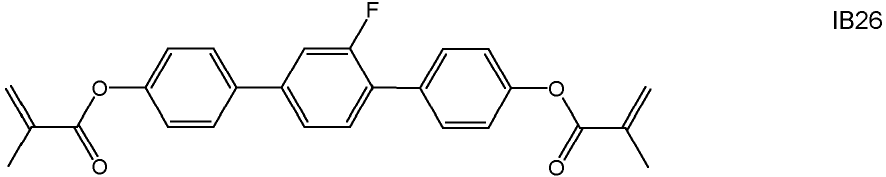 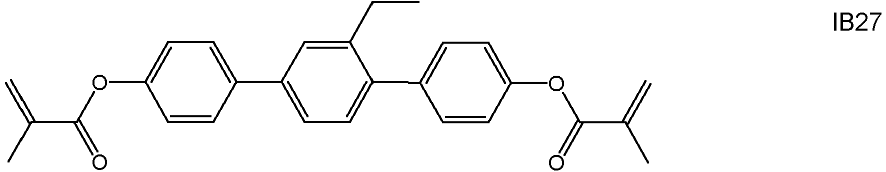 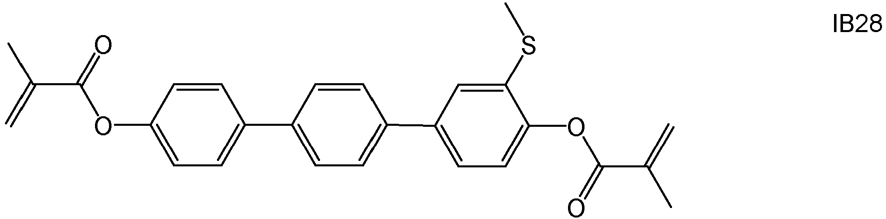 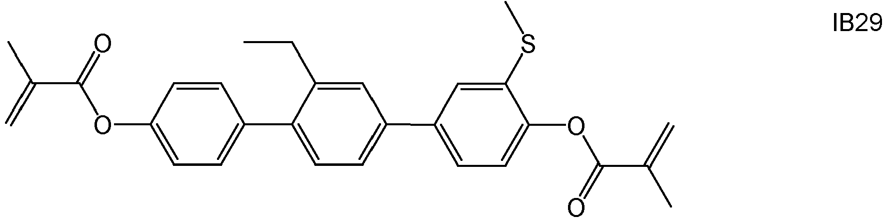 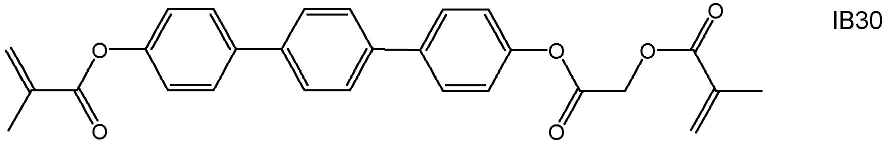 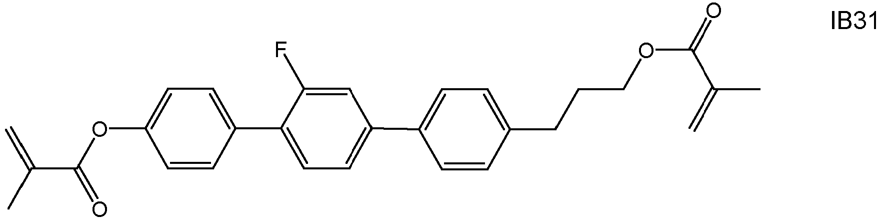 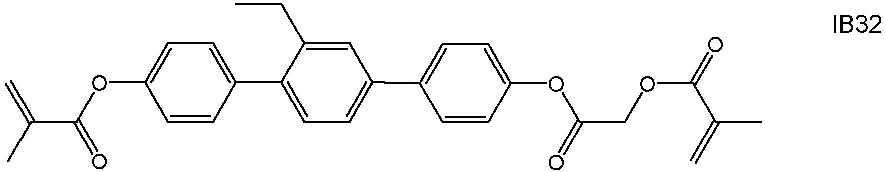 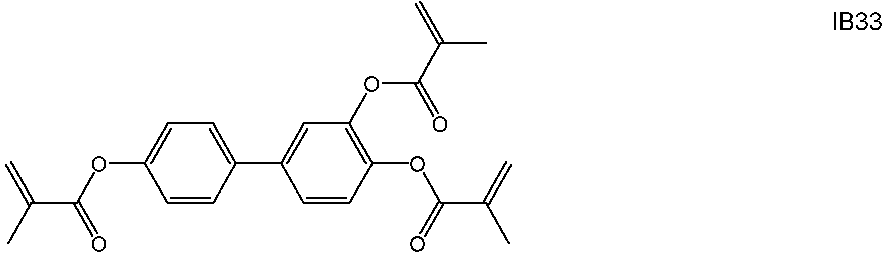 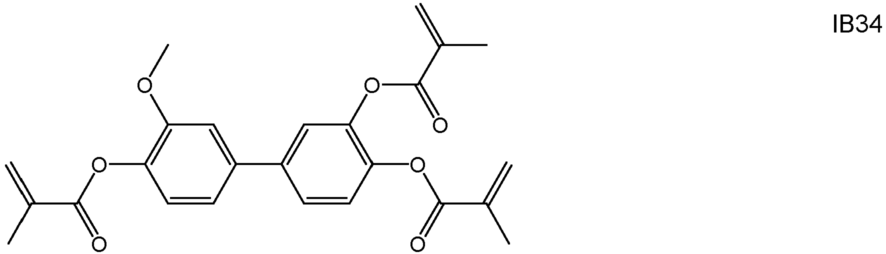 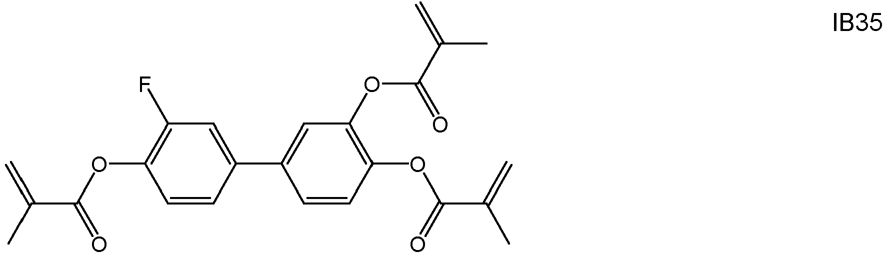 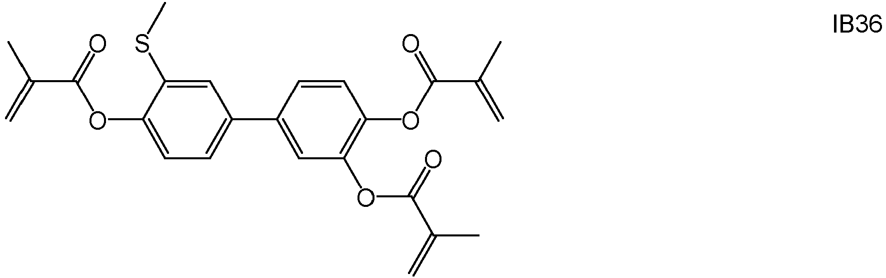 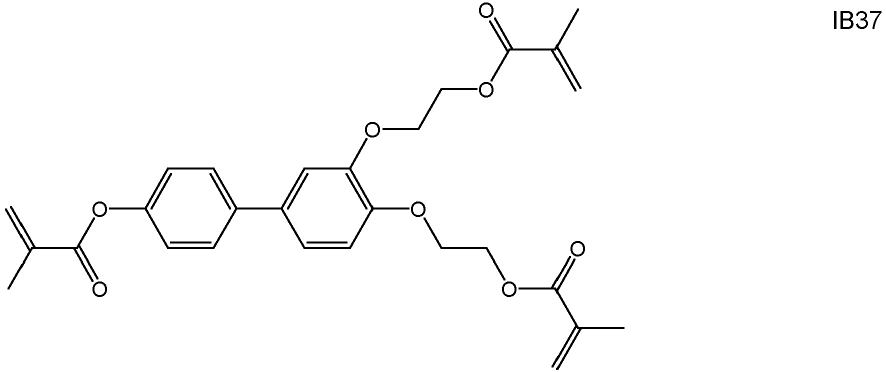 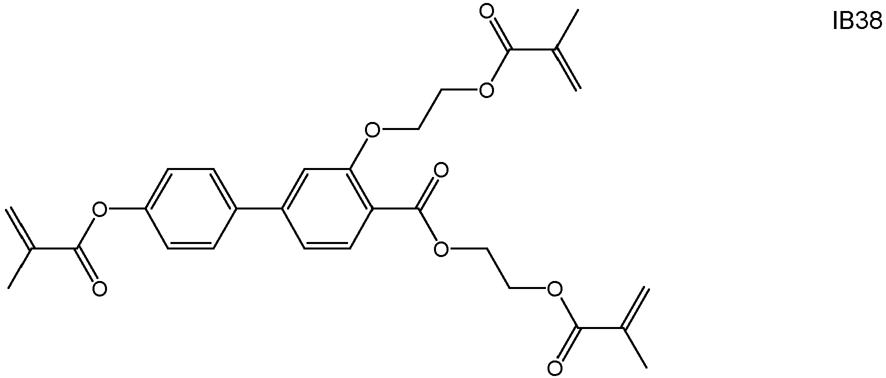 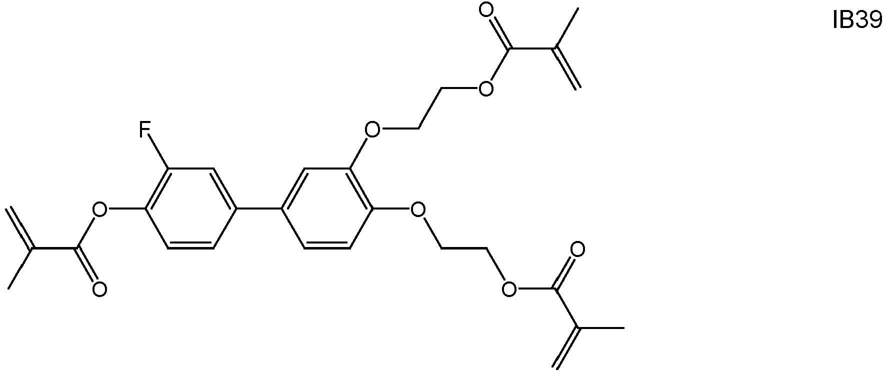 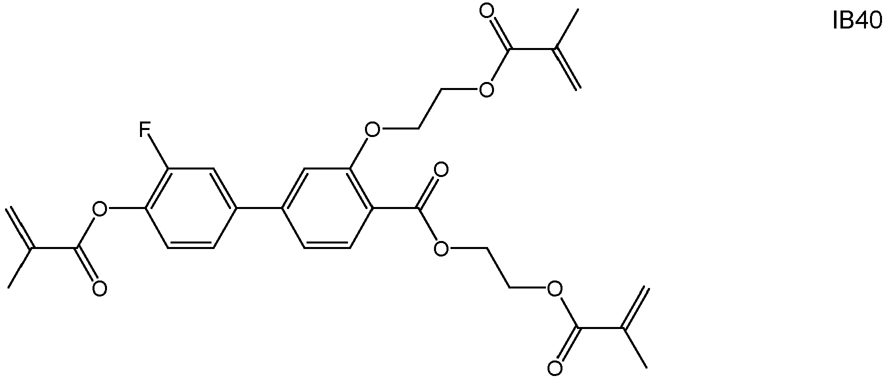 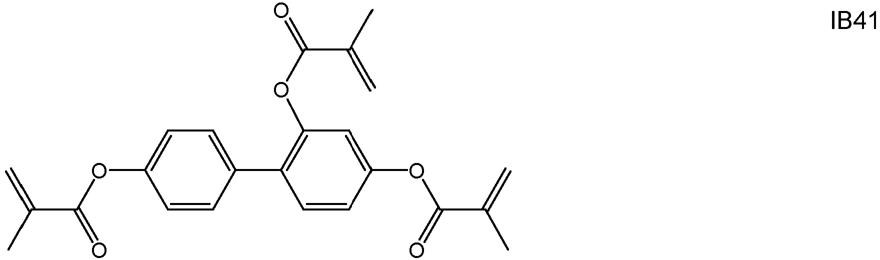 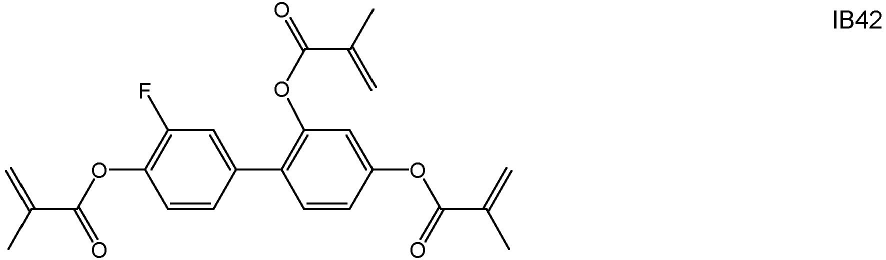 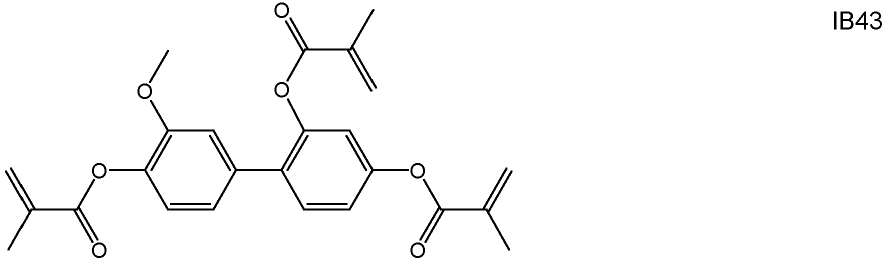 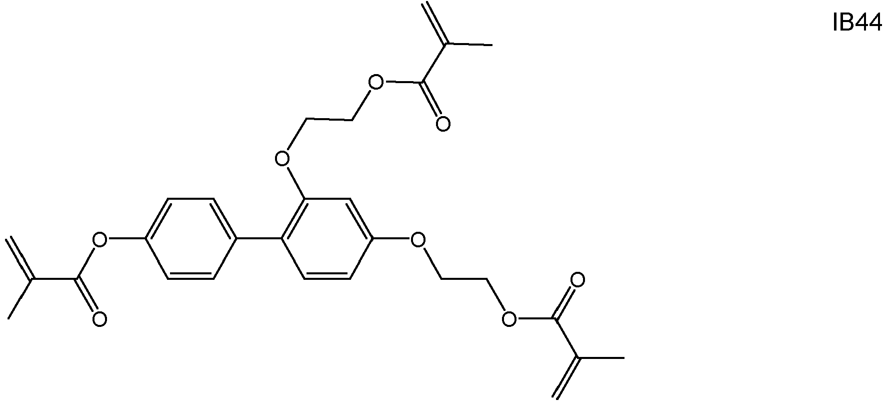 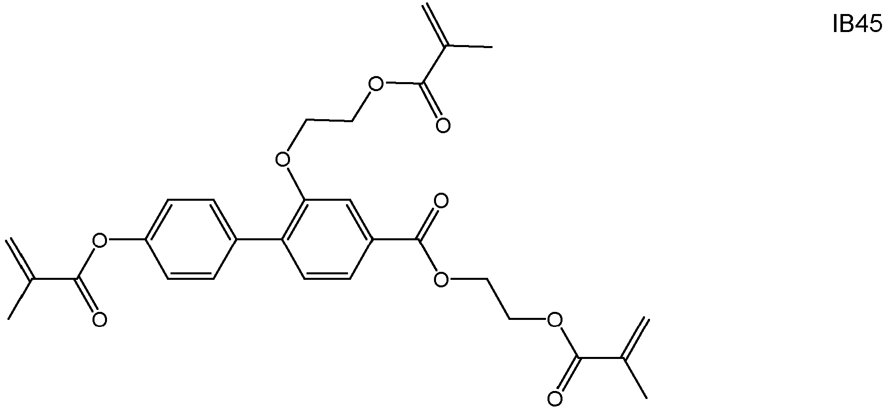 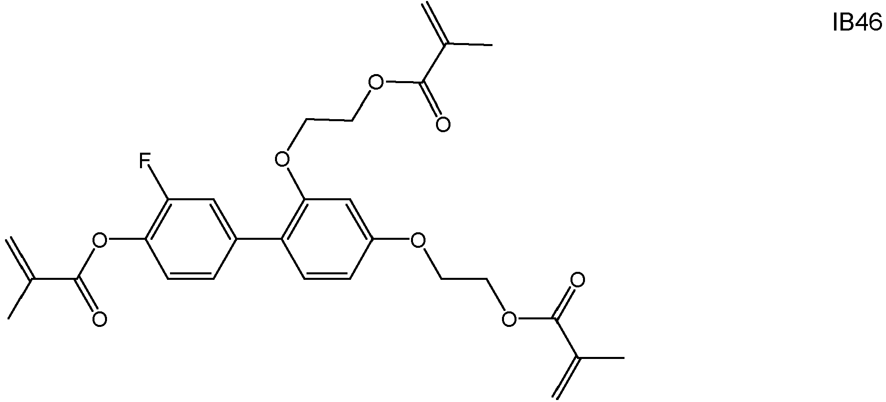 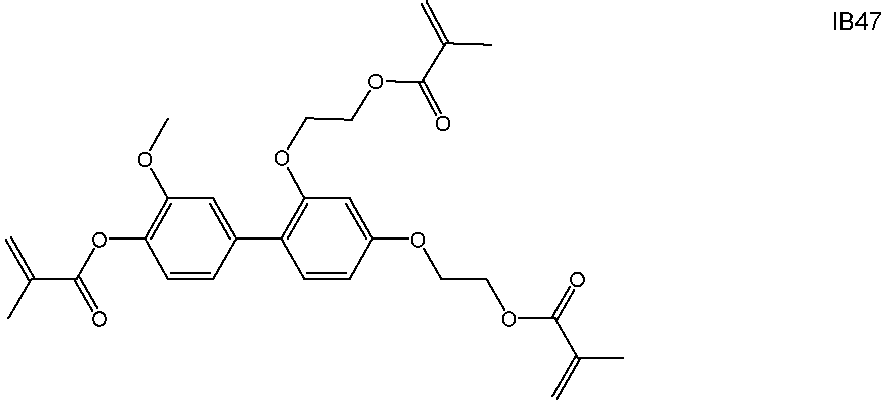 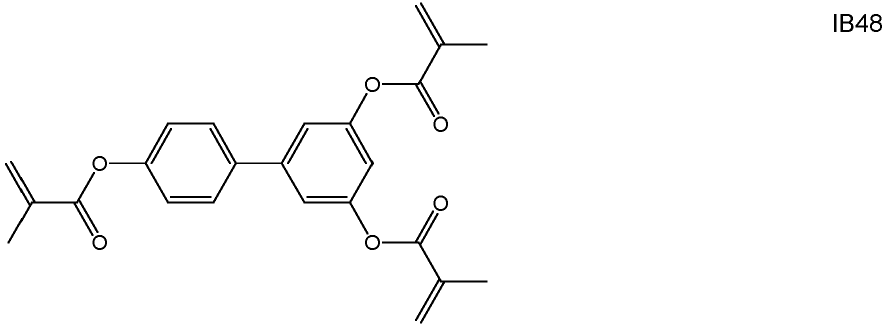 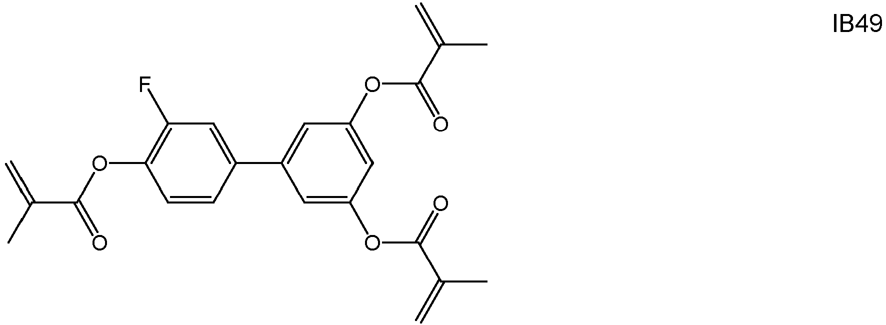 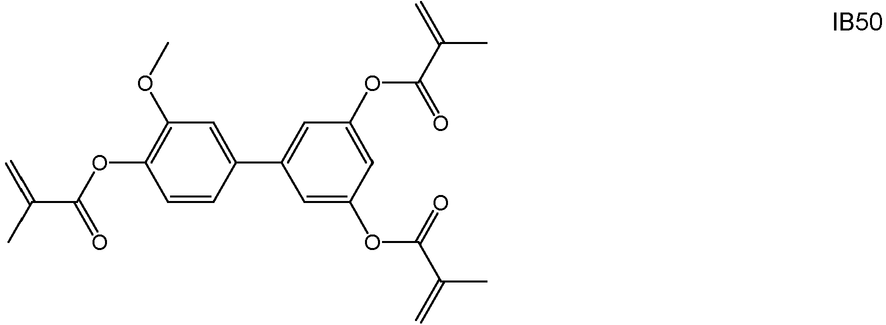 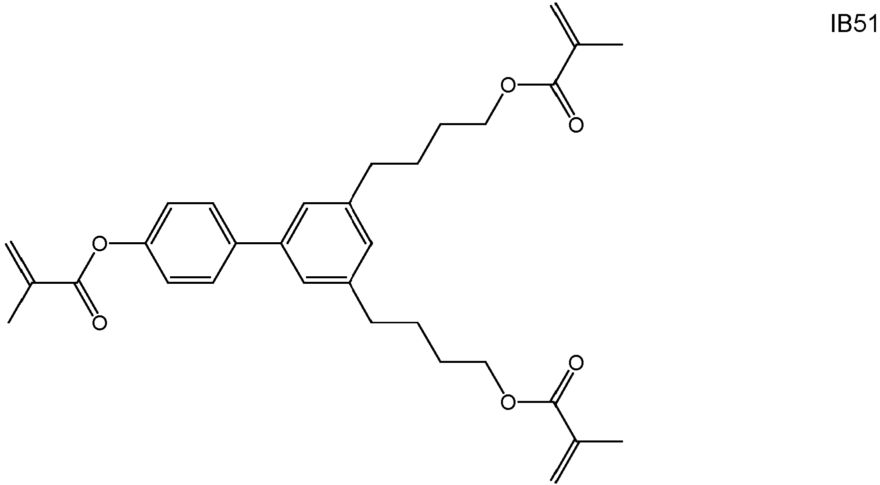 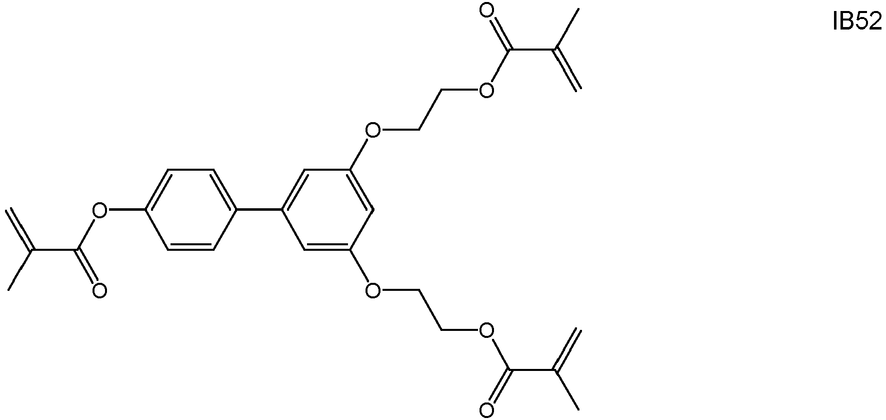 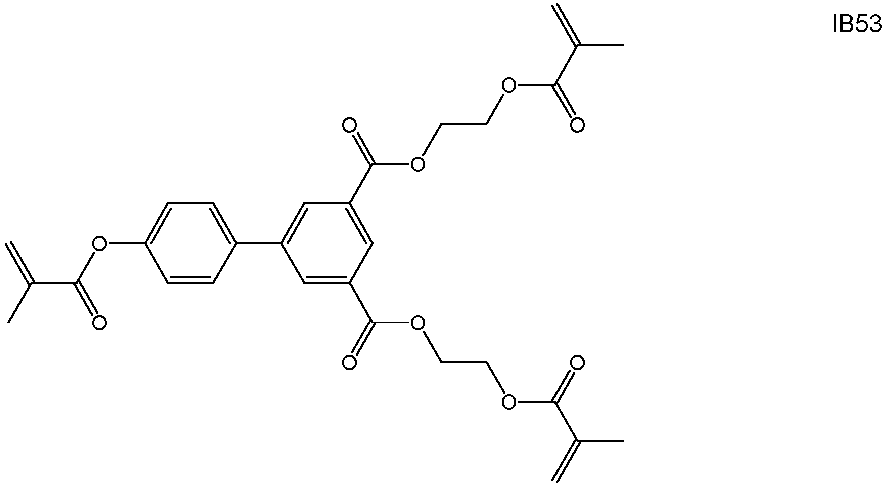 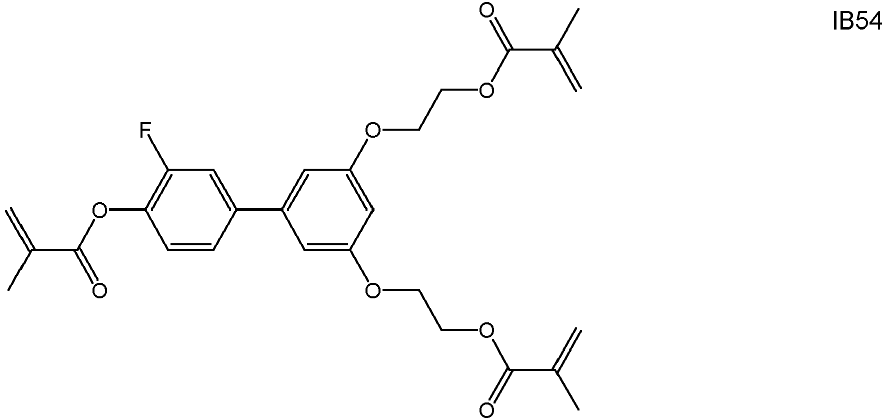 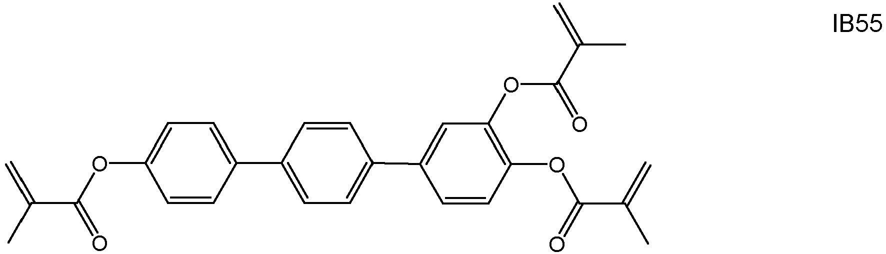 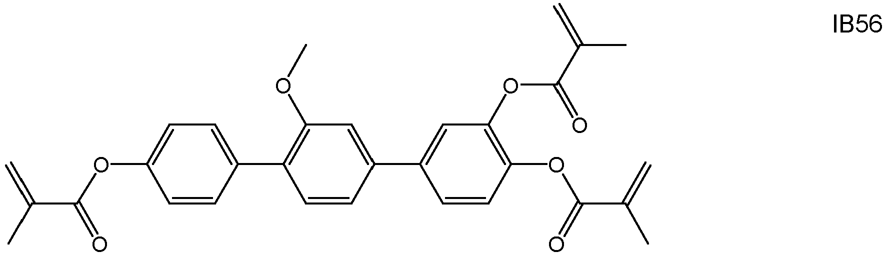 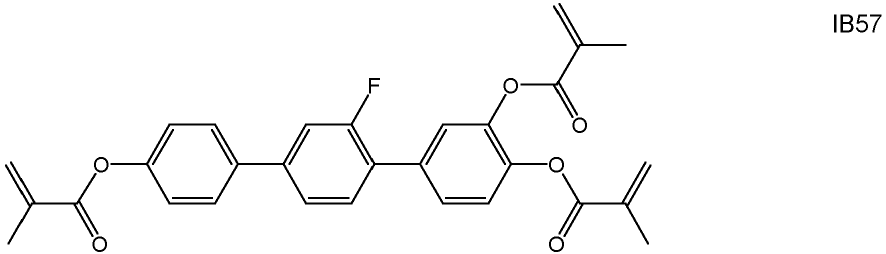 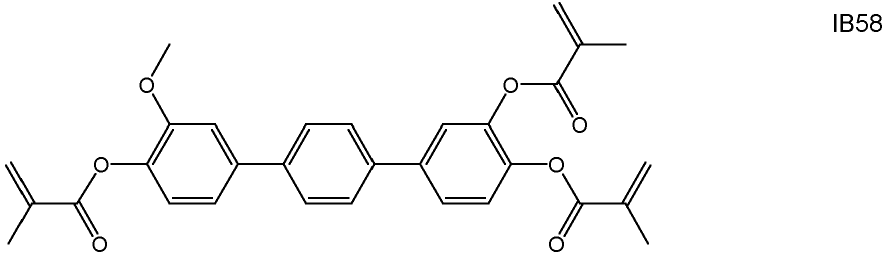 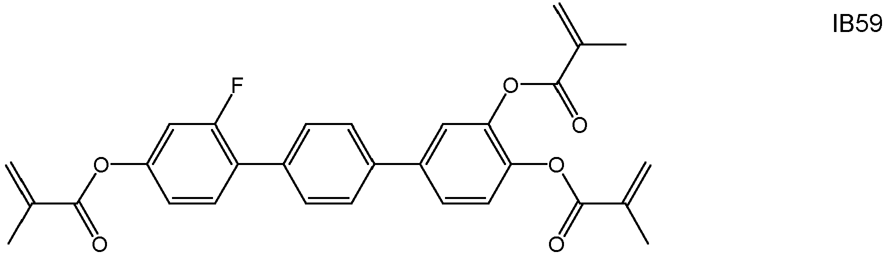 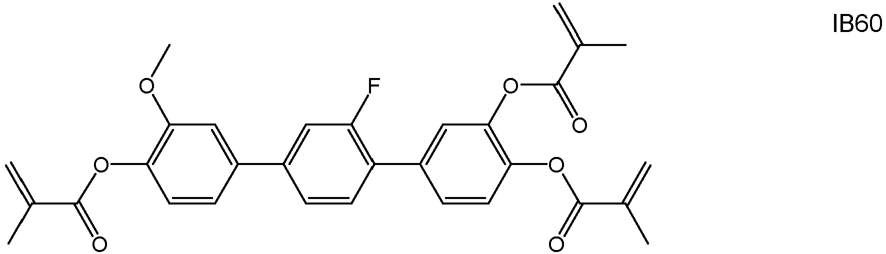 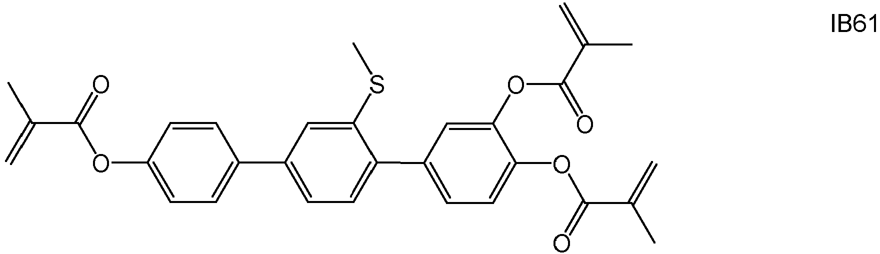 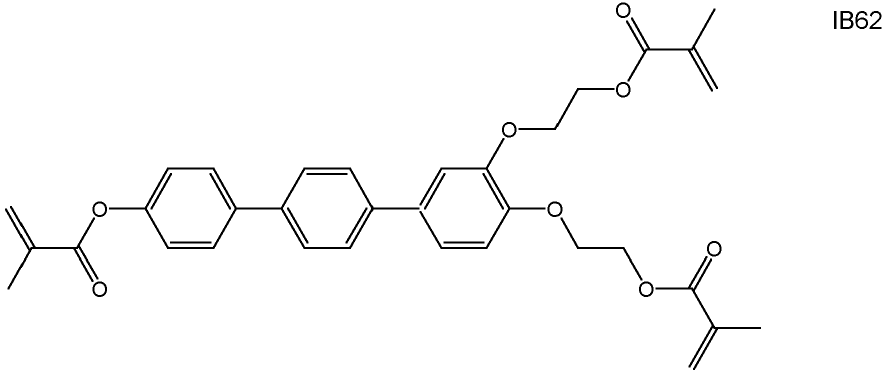 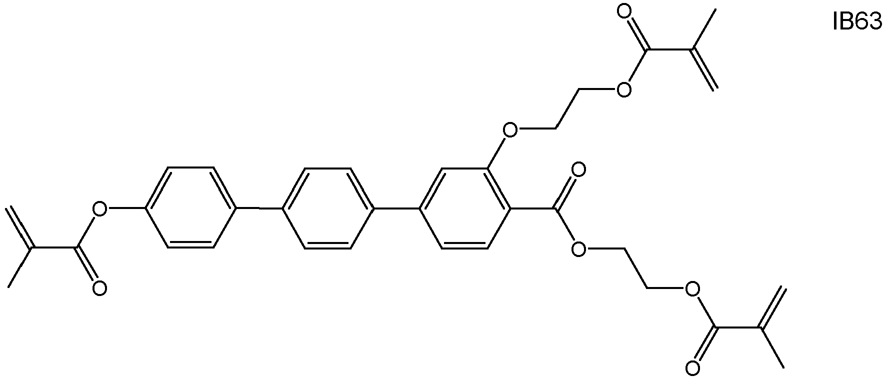 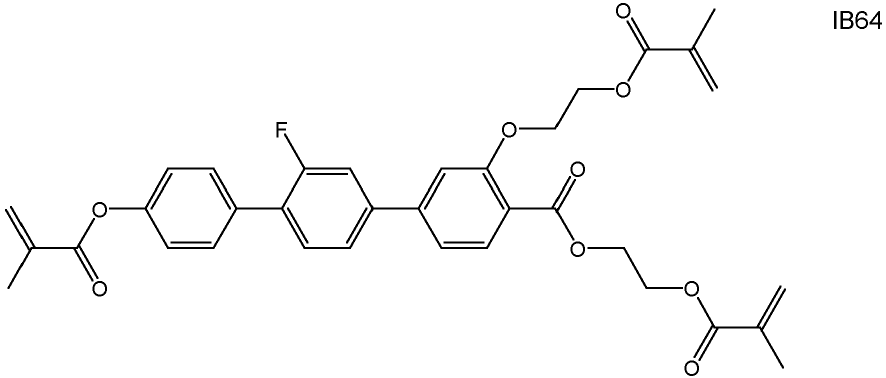 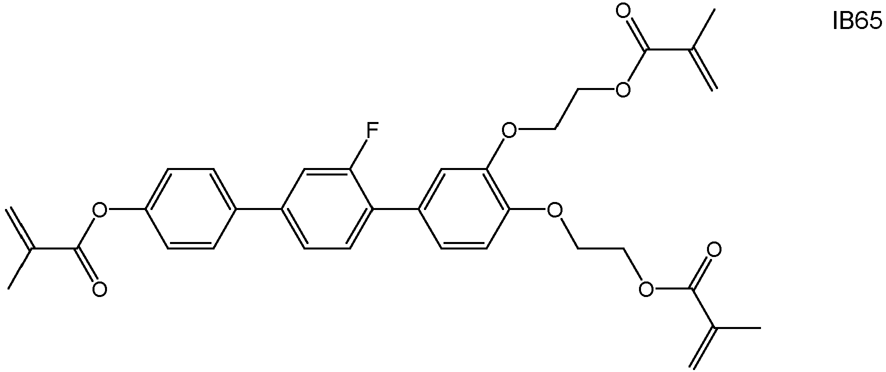 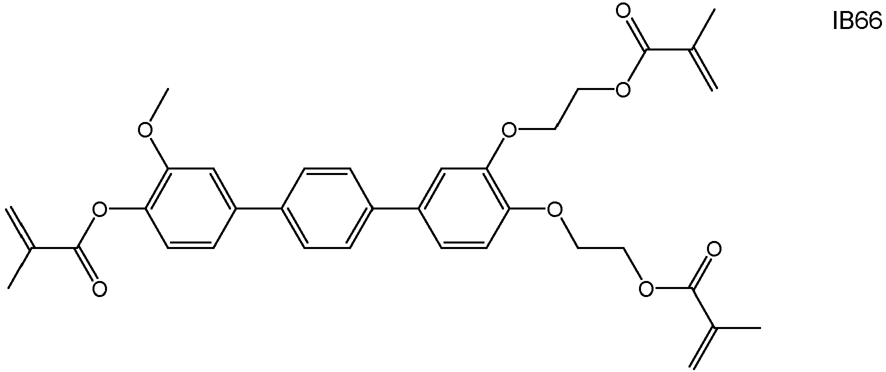 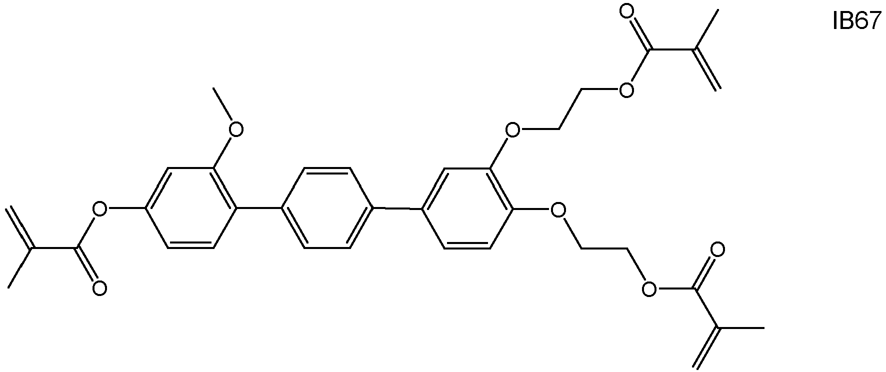 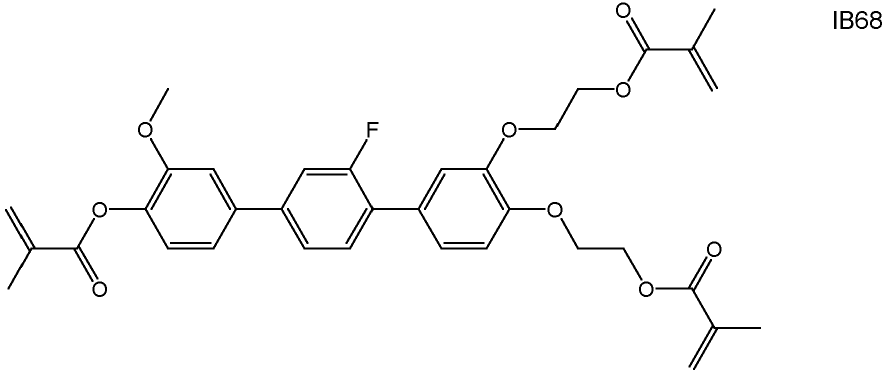 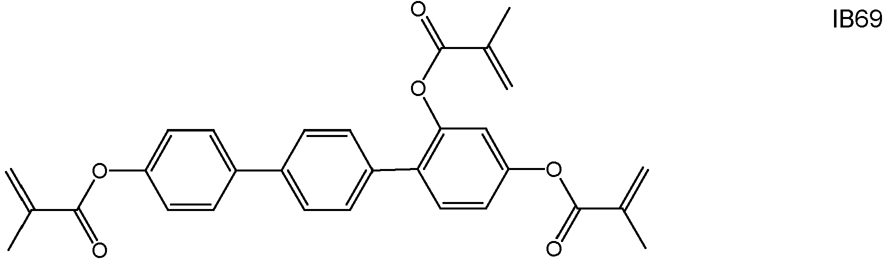 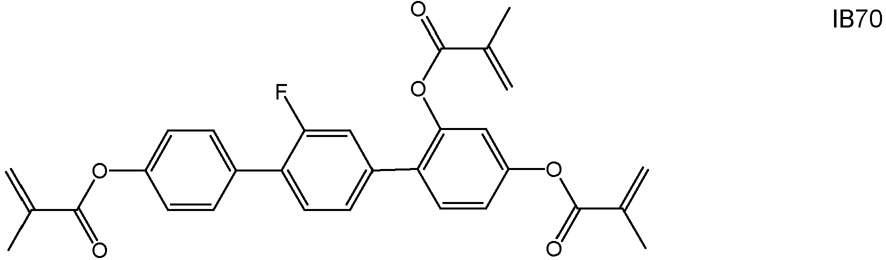 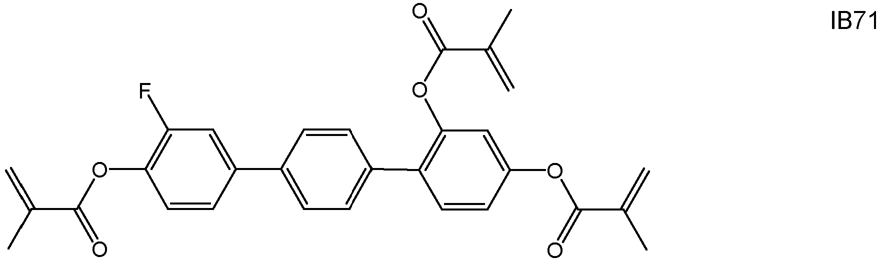 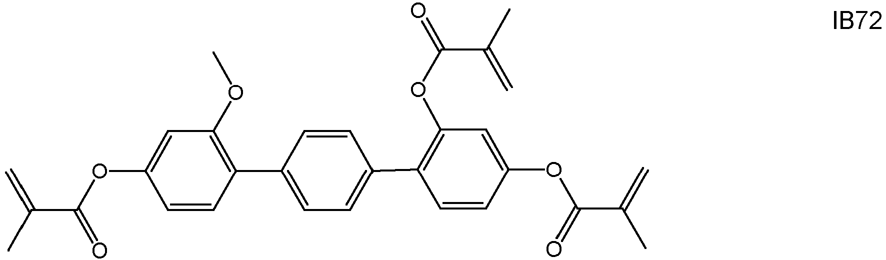 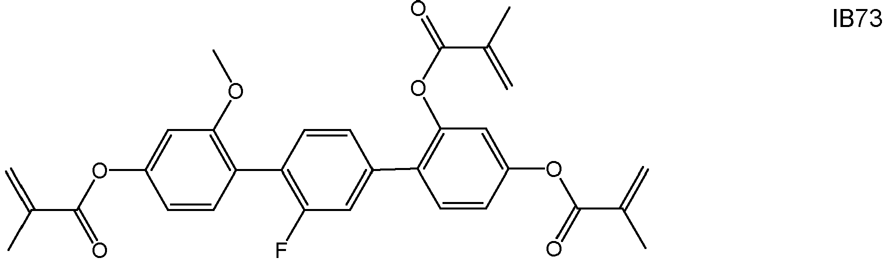 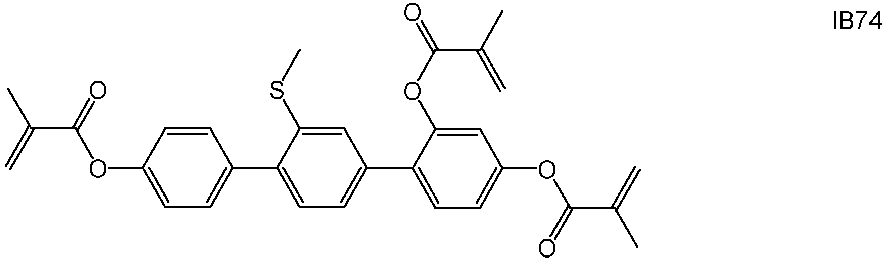 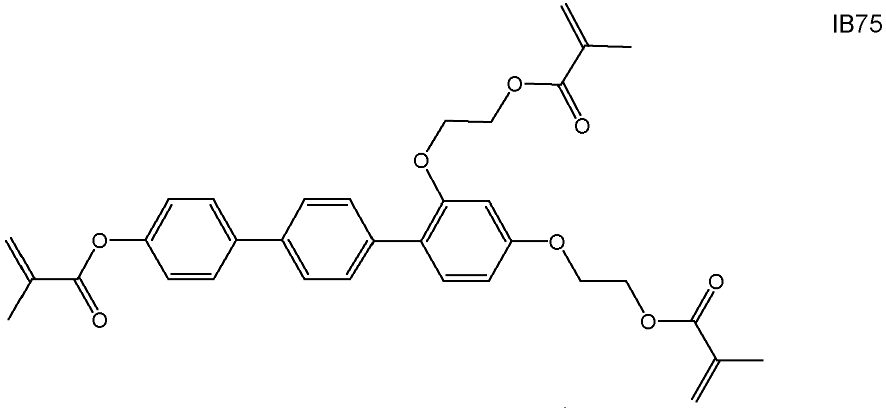 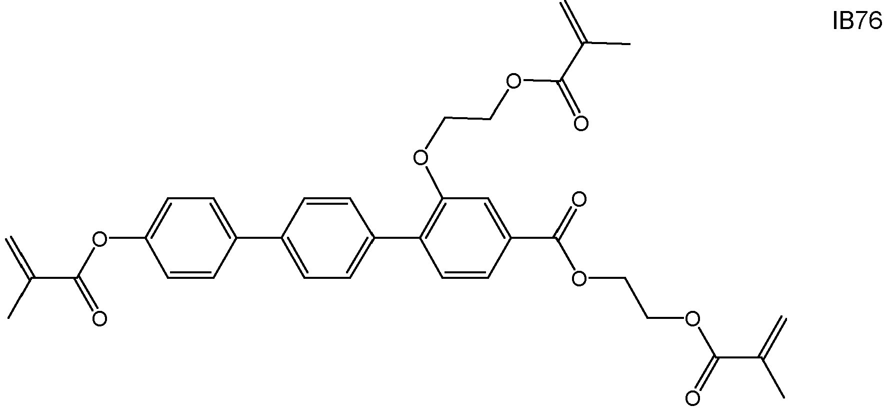 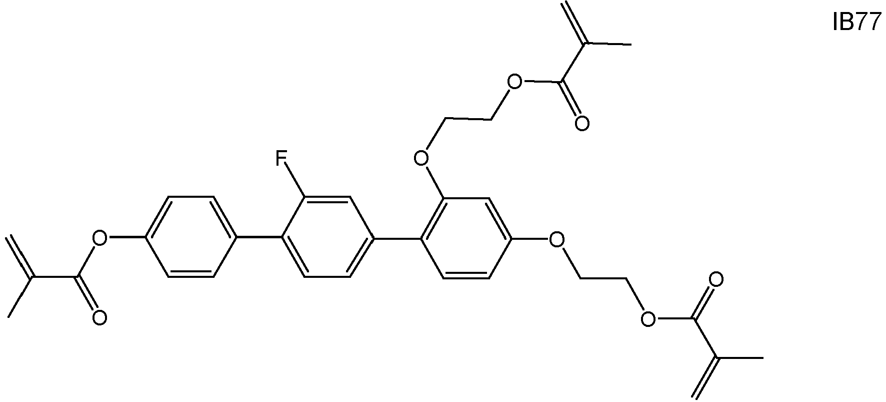 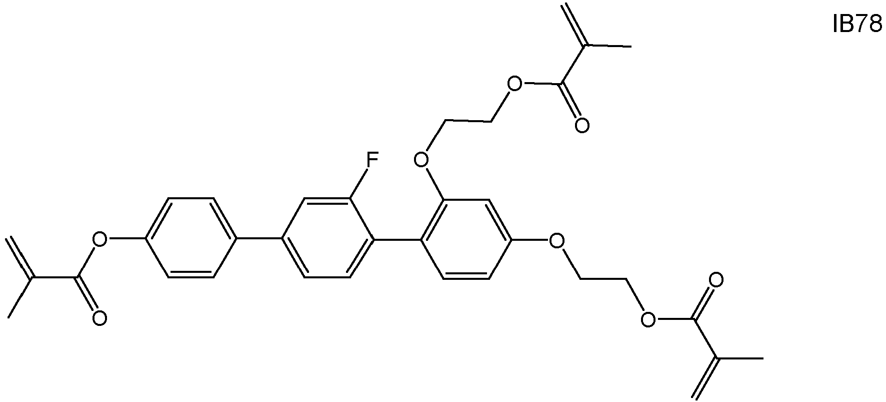 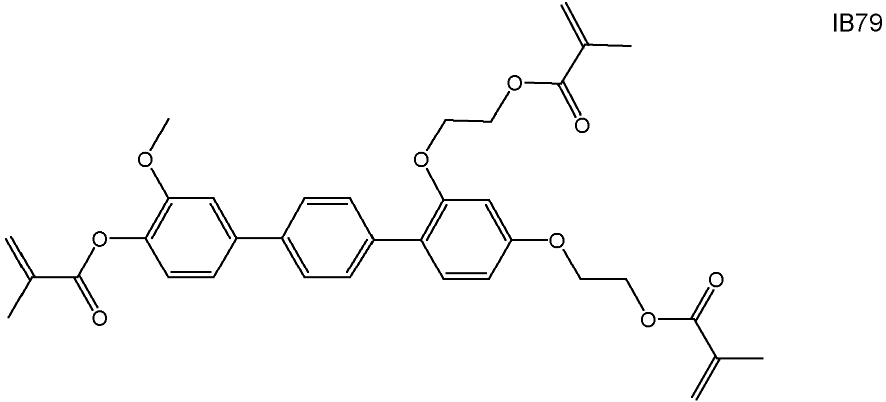 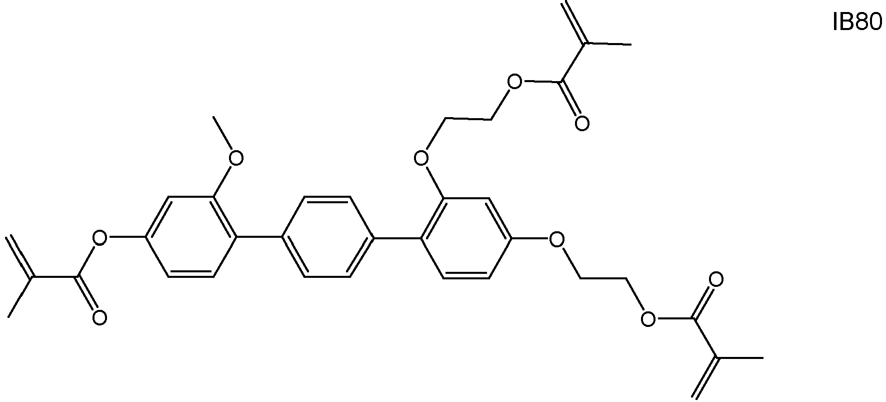 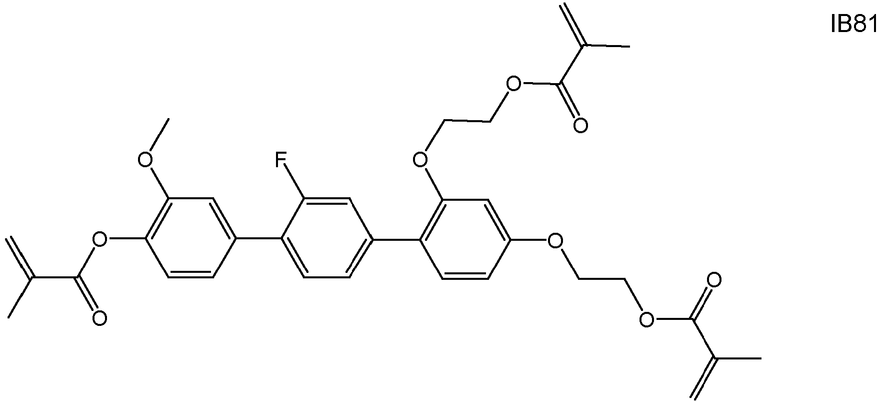 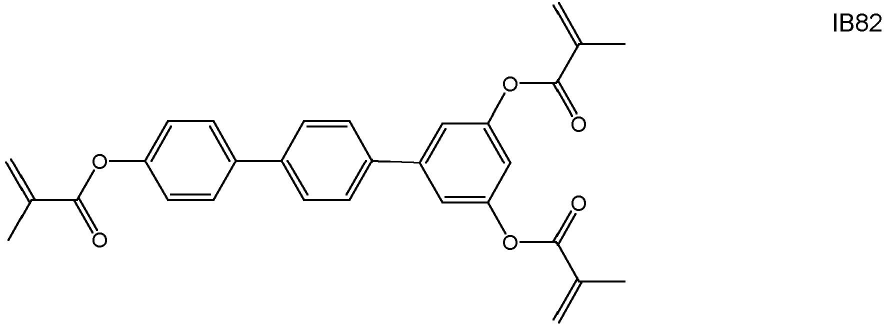 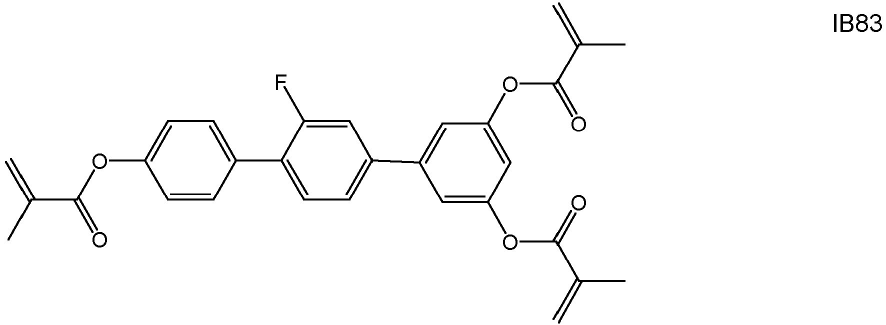 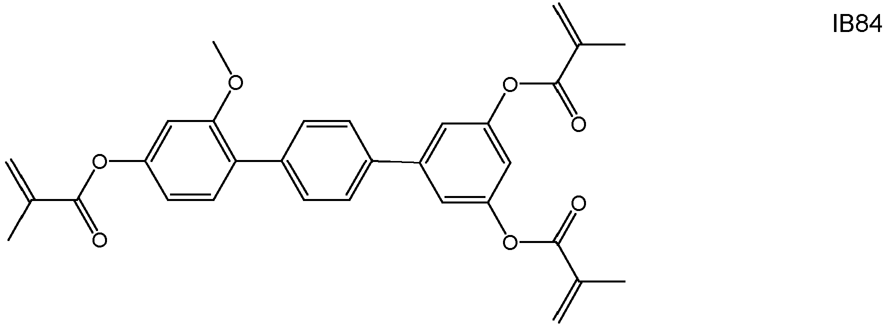 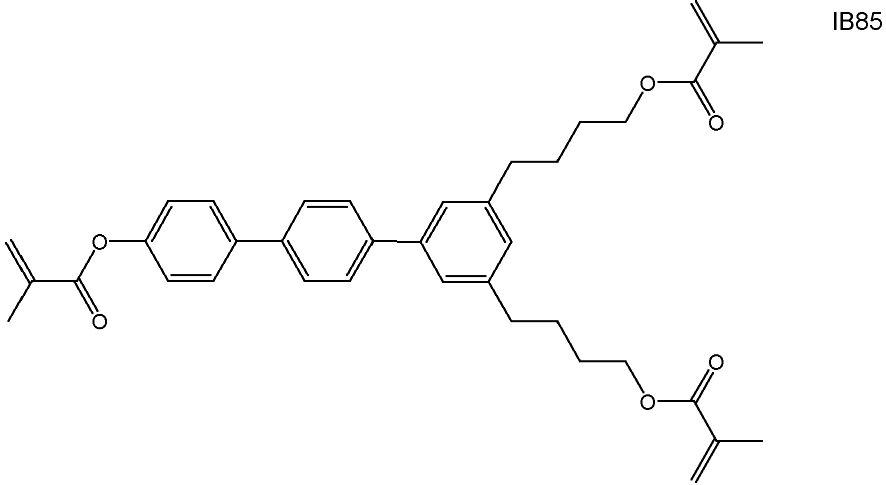 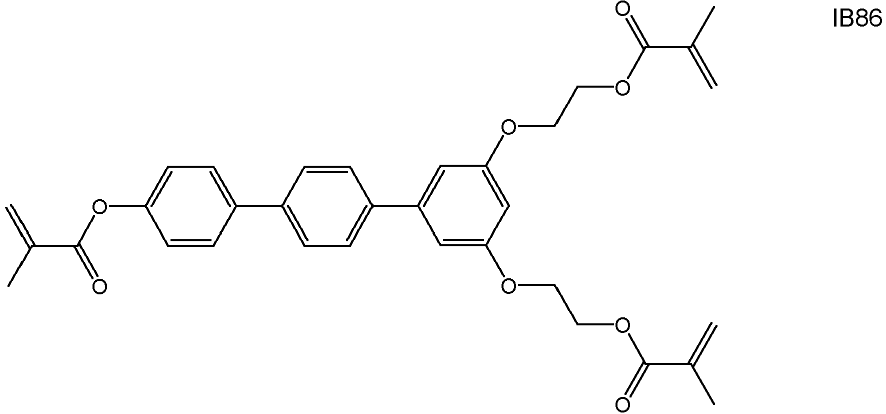 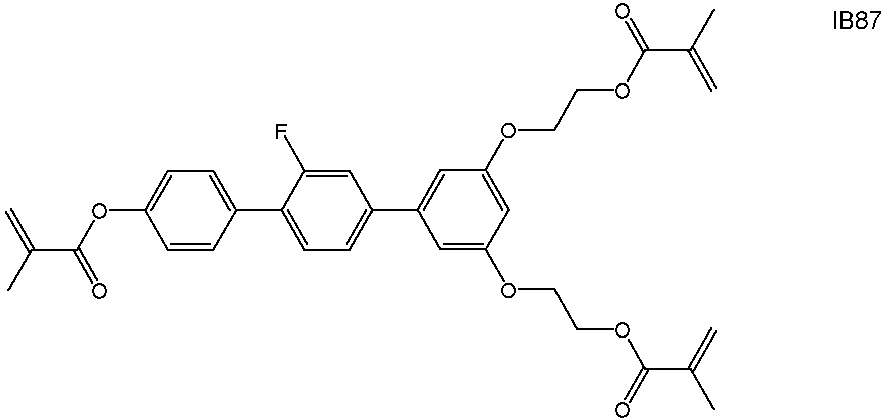 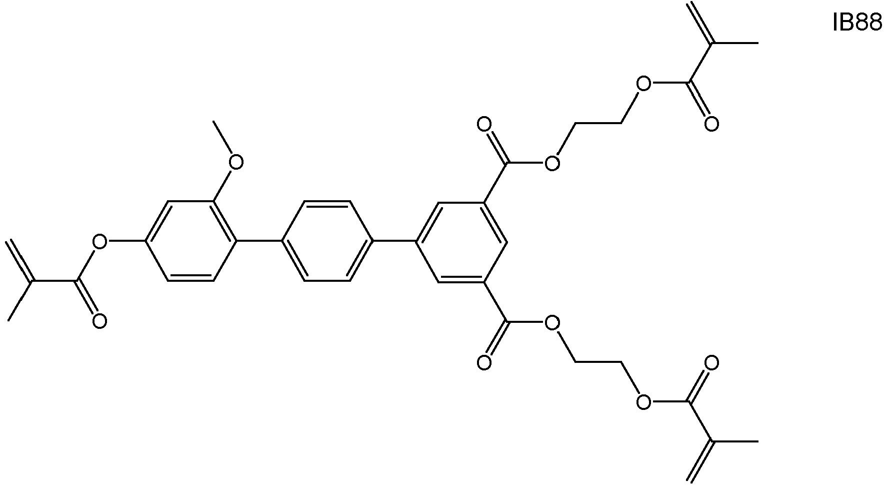 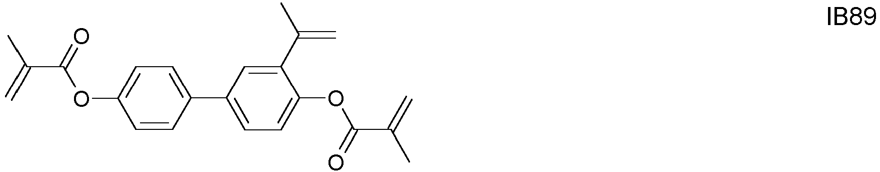 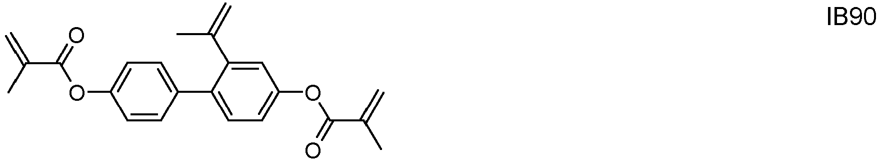 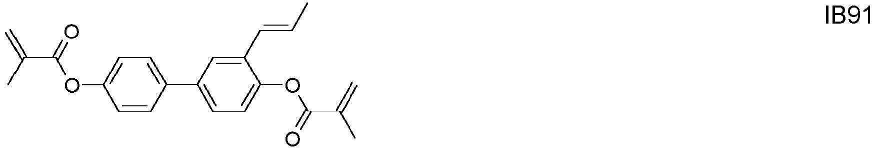 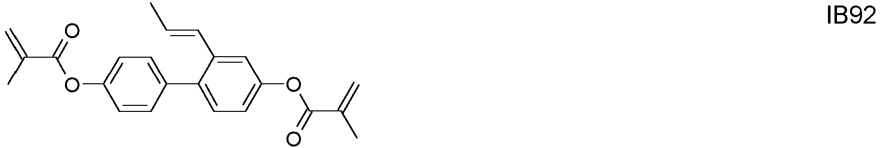 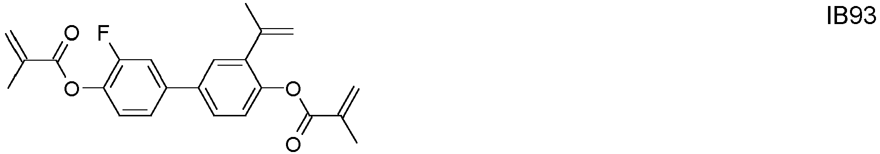 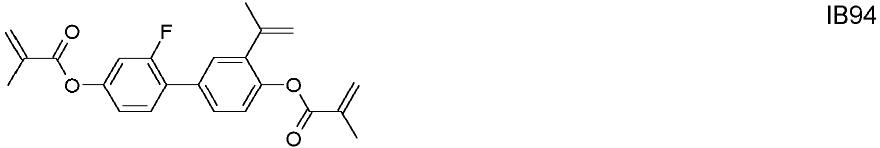 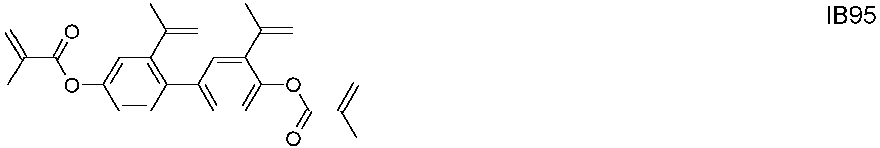 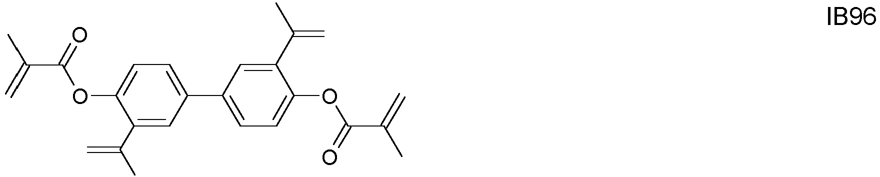 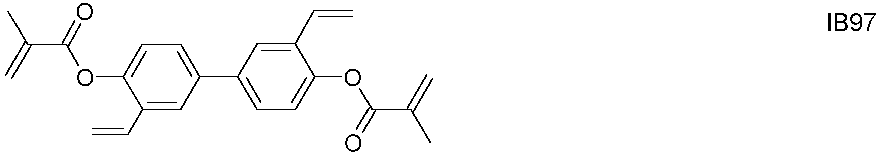 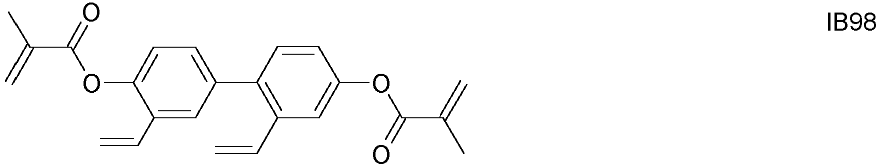 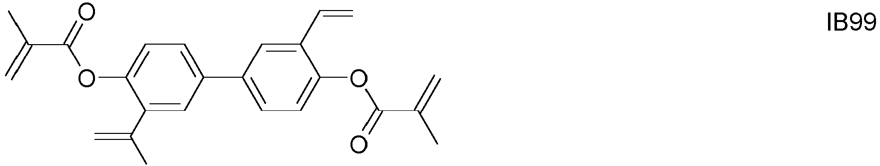 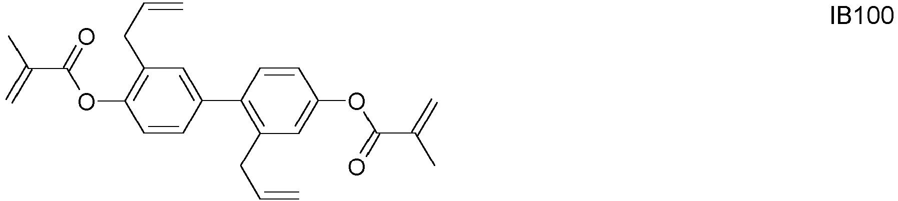 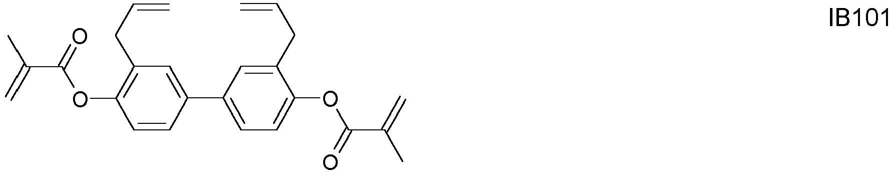 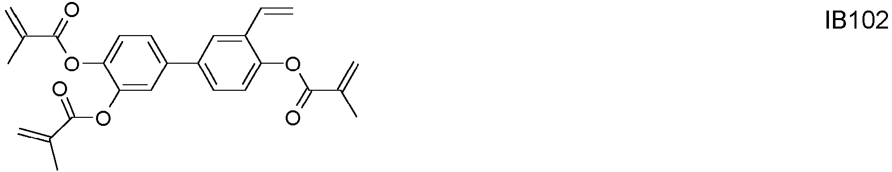 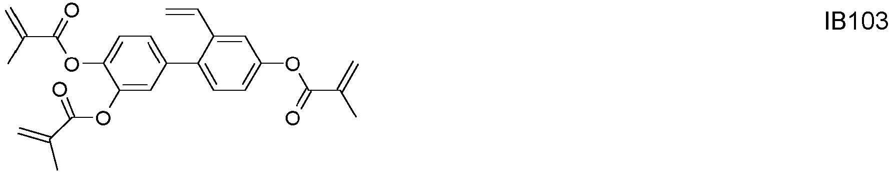 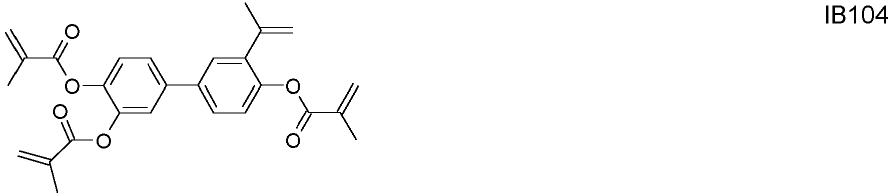 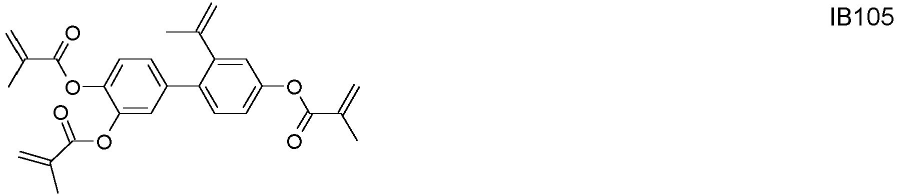 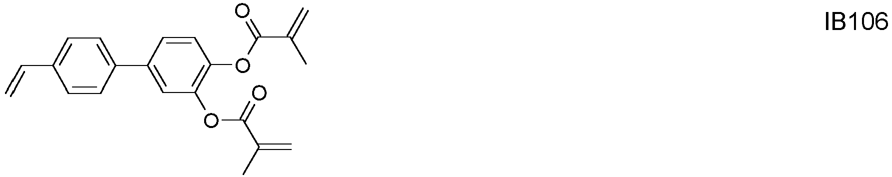 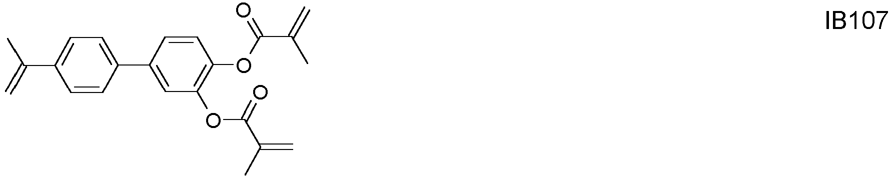 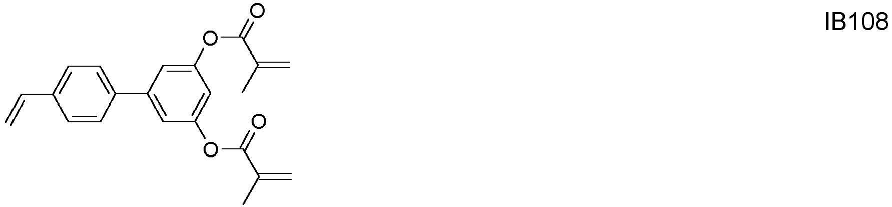 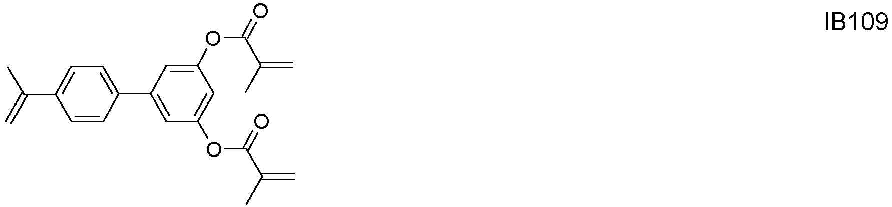 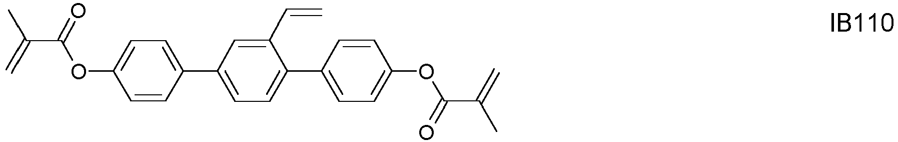 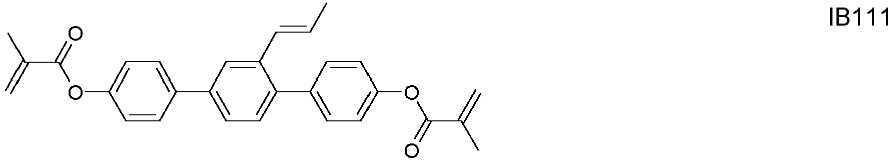 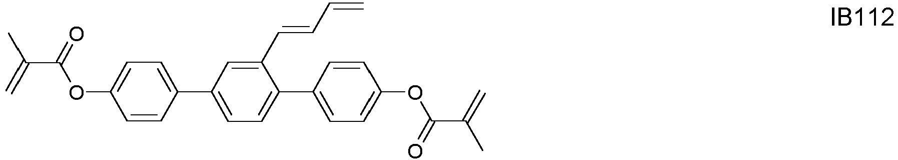 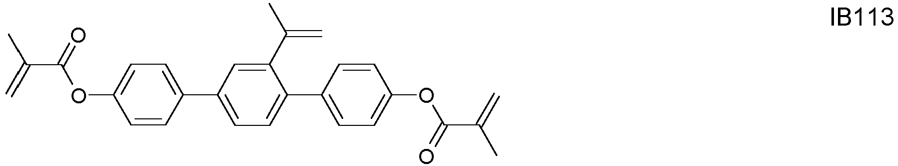 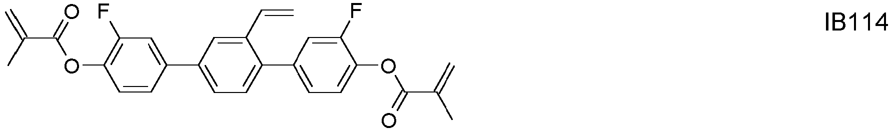 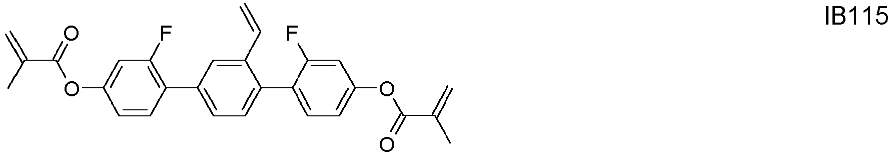 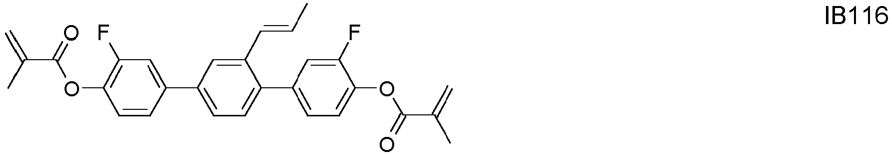 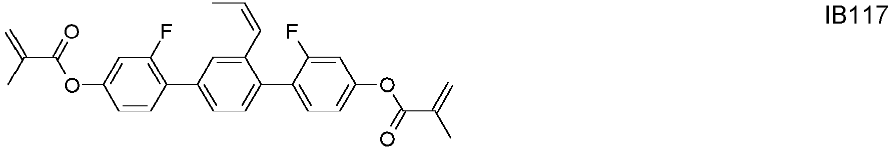 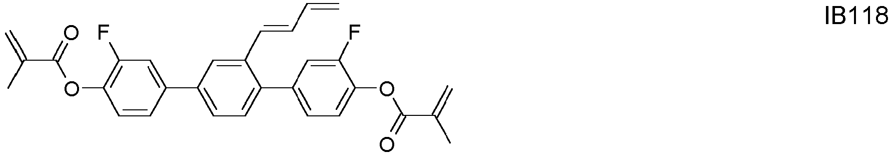 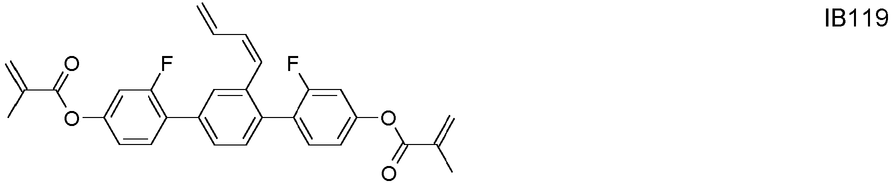 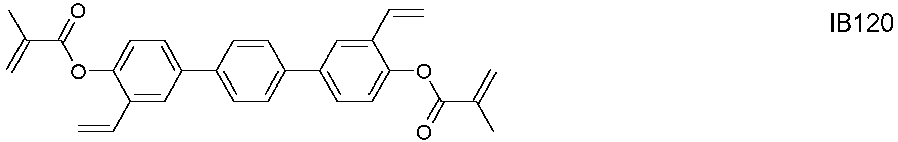 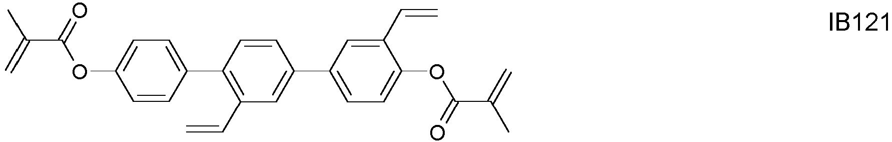 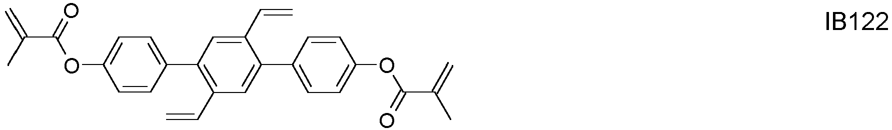 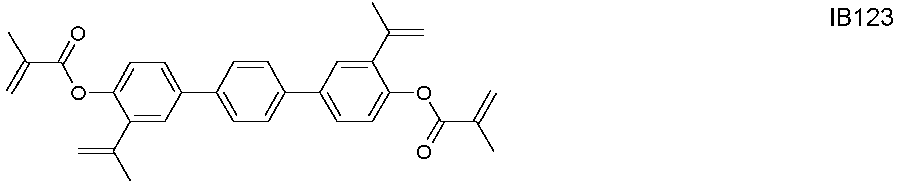 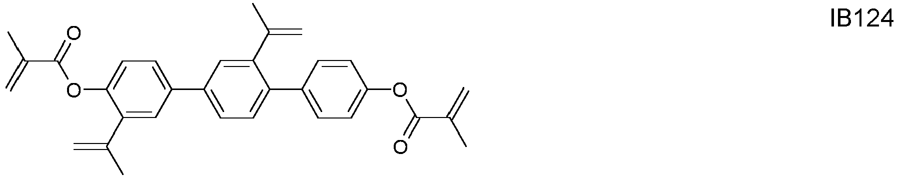 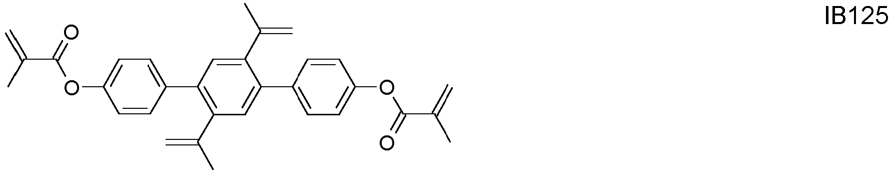 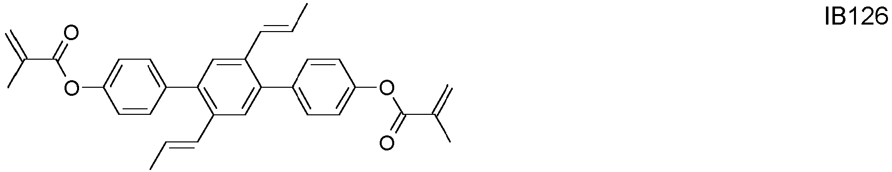 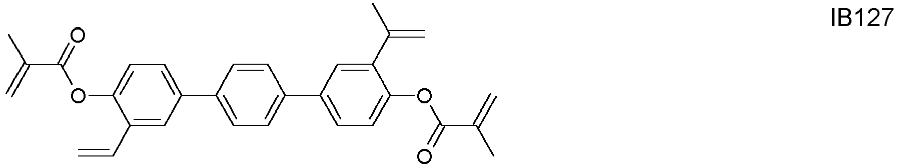 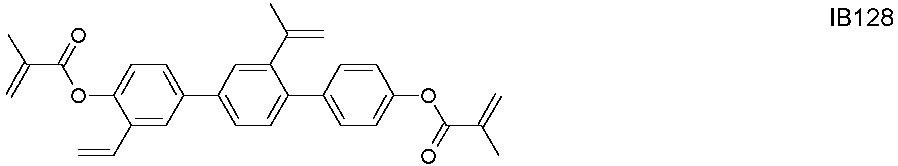 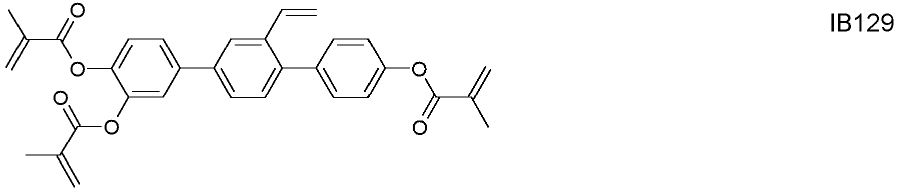 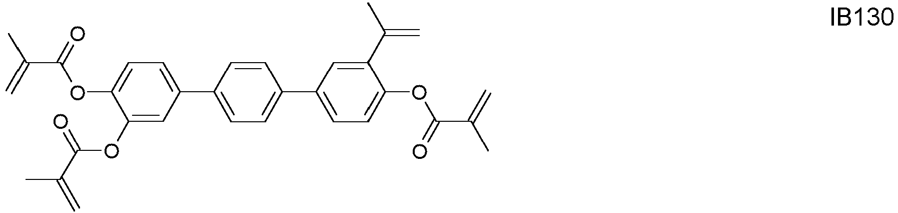 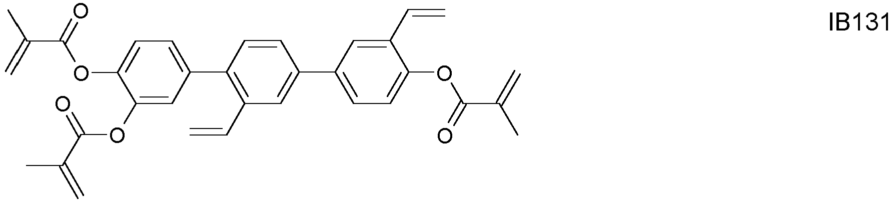 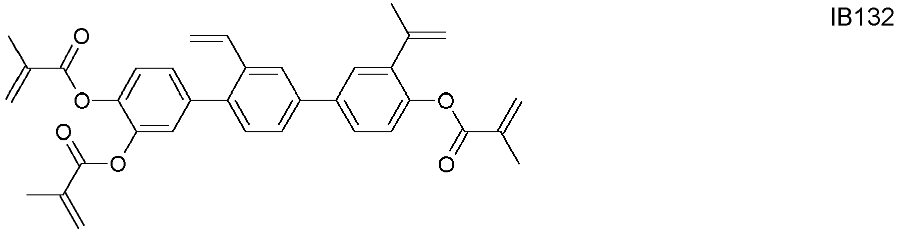 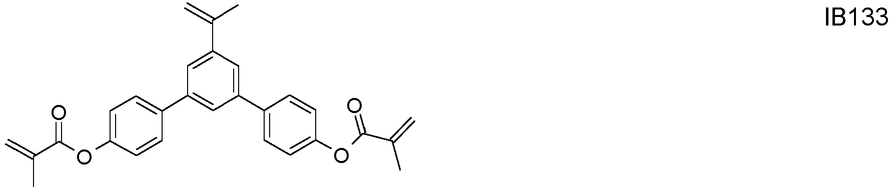 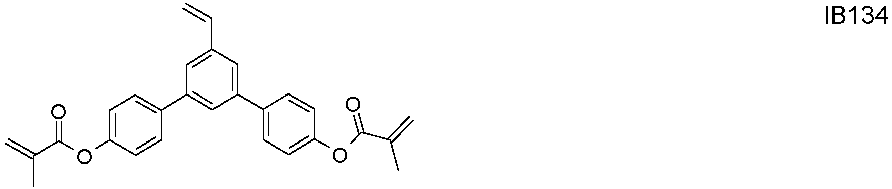 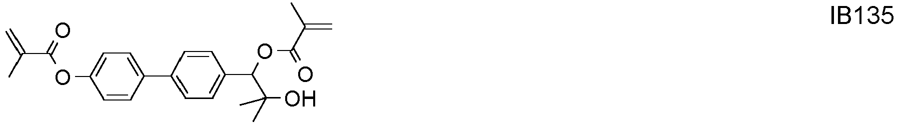 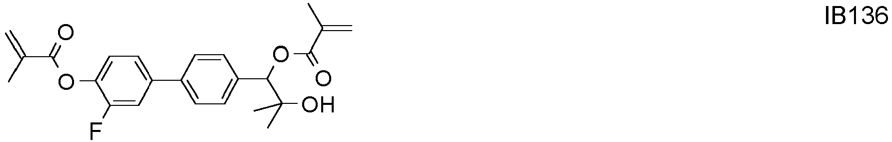 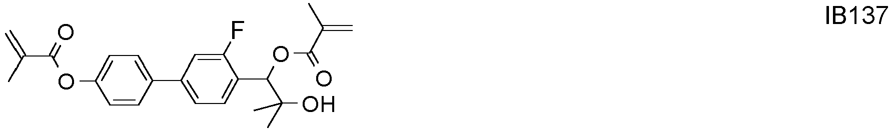 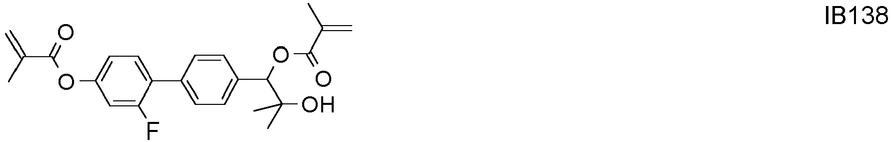 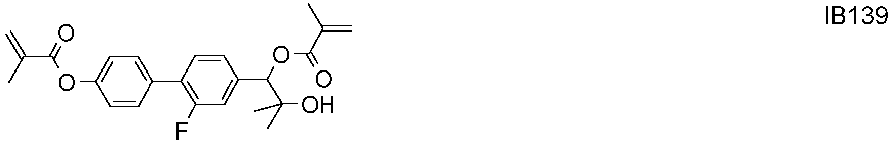 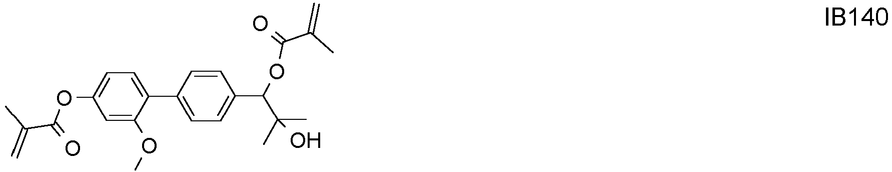 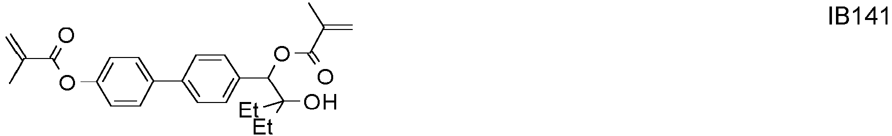 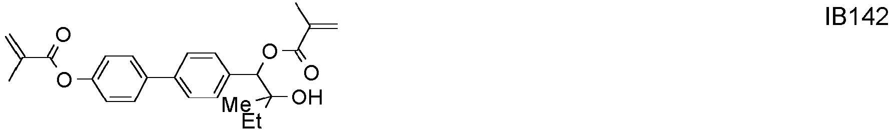 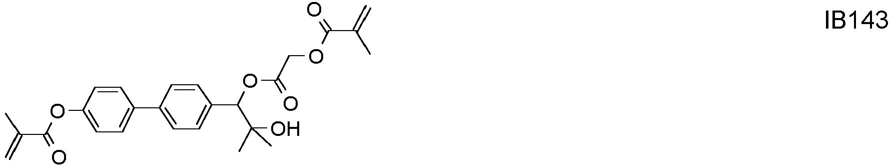 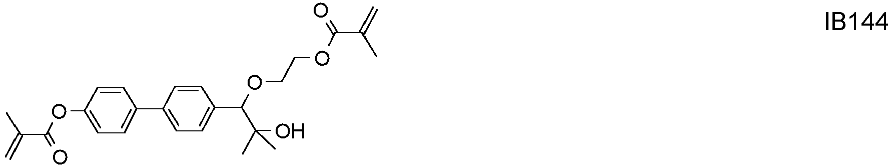 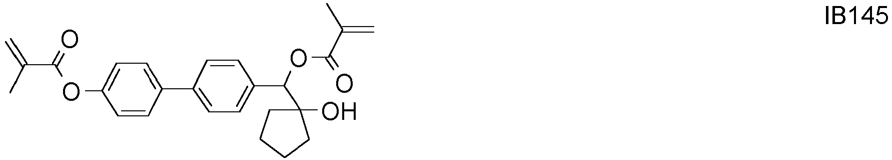 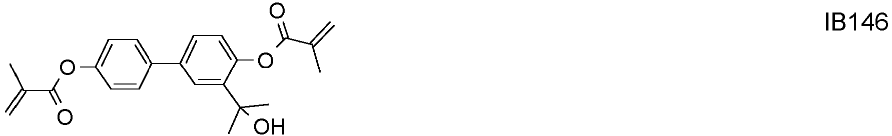 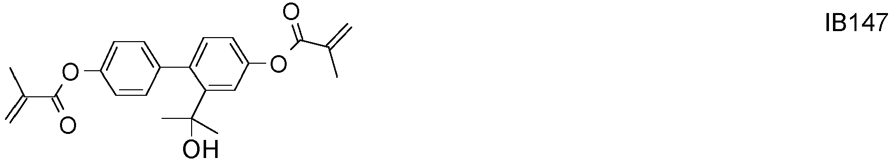 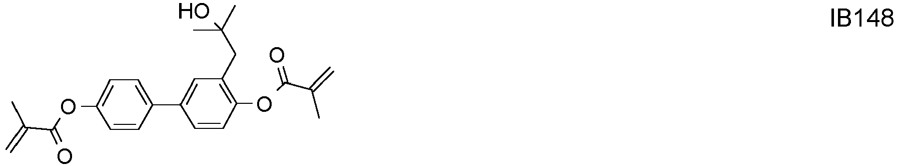 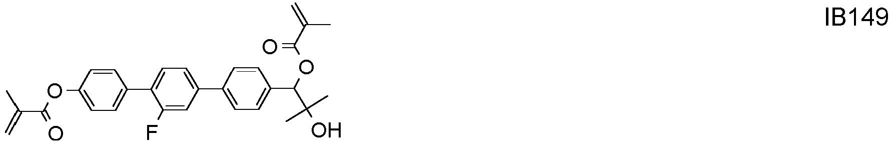 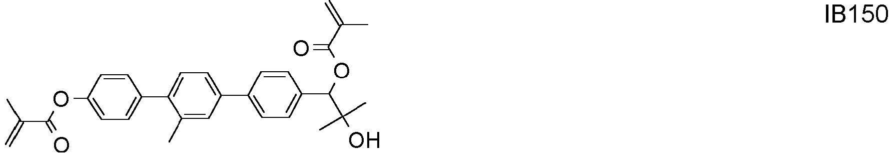 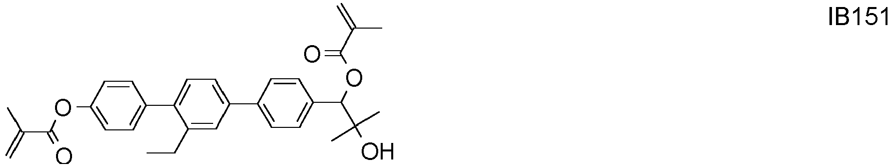 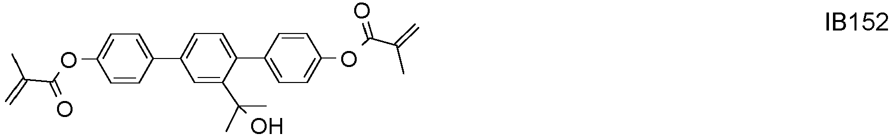 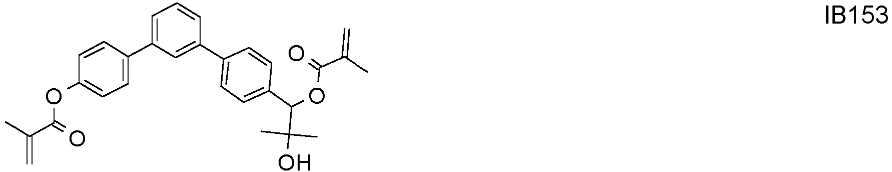 wherein "Me" is methyl and "Et" is ethyl.

In a preferred embodiment the LC medium comprises a compound of formula IA1 and a compound selected from the group consisting of formula IB1, IB2, IB3, IB6, IB11, IB25, IB33, IB55, IB70, IB89, IB110, IB113, IB133 and IB135.

In a preferred embodiment the LC medium comprises at least one polymerizable compound of formula IA-1 and/or formula IB which have absorption in the range from 300 to 380 nm. Very preferably these compounds have an extinction coefficient of at least 0.5 at a wavelength in the range from 300 to 360 nm. The extinction coefficient and absorption wavelength are measured unless stated otherwise in a solution of the compound in DCM at a concentration of 3g/L.

The total proportion of the polymerizable compounds of formulae IA-1 and IB and their subformulae in the LC medium according to the present invention is preferably from 0.1 to 2.5%, more preferably from 0.1 to 1.0%, very preferably from 0.2 to 0.6% by weight.

In a preferred embodiment of the present invention, the LC medium contains one or more, preferably exactly one, compound(s) of formula IA-1 or its subformulae and one or more, preferably exactly one, compound(s) of formula IB or its subformulae, and preferably does not contain further polymerizable compounds.

Preferably, in the LC medium of this preferred embodiment the proportion of the compound(s) of formula IA-1 or its subformulae is from 0.1 to 1.5%, very preferably from 0.2 to 1% by weight, and the proportion of the compound(s) of formula IB or its subformulae is from 0.05 to 1.5%, very preferably from 0.1 to 1% by weight.

Preferably the proportion of the compound(s) of formula IA-1 in % by weight is higher than the proportion of the compound(s) of formula IB.

In another preferred embodiment the LC medium comprises, in addition to the polymerizable compounds of formulae IA-1, IB and their subformulae, at least one further polymerizable compound.

Preferred further polymerizable compounds are selected from Table D below, especially selected from the group consisting of formulae RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-183.

The proportion of these further polymerizable compounds in the LC medium is preferably from 0.01 to 1.5%, more preferably from 0.05 to 0.9% by weight.

The polymerizable compounds as described above and below can be prepared analogously to processes known to the person skilled in the art and described in standard works of organic chemistry, such as, for example, in Houben-Weyl, Methoden der organischen Chemie [Methods of Organic Chemistry], Thieme-Verlag, Stuttgart, and from starting materials that are commercially available or can easily be synthesized. For example, starting materials for compounds of formula IA-1, like 2,5-dihydroxybenzaldehyde, 2,5-dihydroxyacetophenone, 2,5-dihydroxypropiophenone or 2-tert-butylhydroquinone, are commercially available.

For example, acrylic or methacrylic esters can be prepared by esterification of the corresponding alcohols or phenols with acid derivatives like, for example, (meth)acryloyl chloride or (meth)acrylic anhydride in the presence of a base like pyridine or triethyl amine, and 4-(N,N-dimethylamino)pyridine (DMAP). Alternatively the esters can be prepared by esterification of the alcohols with (meth)acrylic acid in the presence of a dehydrating reagent, for example according to Steglich with dicyclohexylcarbodiimide (DCC), N-(3-dimethylaminopropyl)-N'-ethylcarbodiimide (EDC) or N-(3-dimethylaminopropyl)-N'-ethylcarbodiimide hydrochloride and DMAP.

The invention furthermore relates to an LC medium or LC display as described above, wherein the polymerizable compounds are present in polymerized form.

The LC display is preferably a PS-VA, PS-IPS, PS-FFS, or SA-VA display.

For the production of PSA or polymer stabilised SA displays, the polymerizable compounds contained in the LC medium are polymerized by in-situ polymerization in the LC medium between the substrates of the LC display, preferably while a voltage is applied to the electrodes.

The structure of the displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

A preferred PSA type LC display of the present invention comprises:
- a first substrate including a pixel electrode defining pixel areas, the pixel electrode being connected to a switching element disposed in each pixel area and optionally including a micro-slit pattern, and optionally a first alignment layer disposed on the pixel electrode,
- a second substrate including a common electrode layer, which may be disposed on the entire portion of the second substrate facing the first substrate, and optionally a second alignment layer,
- an LC layer disposed between the first and second substrates and including an LC medium as described above and below, wherein the polymerizable compounds may also be present in polymerized form.

The first and/or second alignment layer controls the alignment direction of the LC molecules of the LC layer. For example, in PS-VA displays the alignment layer is selected such that it imparts to the LC molecules homeotropic (or vertical) alignment (i.e. perpendicular to the surface) or tilted alignment. Such an alignment layer may for example comprise a polyimide, which may also be rubbed, or may be prepared by a photoalignment method.

The LC layer with the LC medium can be deposited between the substrates of the display by methods that are conventionally used by display manufacturers, for example the so-called one-drop-filling (ODF) method. The polymerizable component of the LC medium is then polymerized for example by UV photopolymerization. The polymerization can be carried out in one step or in two or more steps.

The PSA display may comprise further elements, like a colour filter, a black matrix, a passivation layer, optical retardation layers, transistor elements for addressing the individual pixels, etc., all of which are well known to the person skilled in the art and can be employed without inventive skill.

The electrode structure can be designed by the skilled person depending on the individual display type. For example for PS-VA displays a multi-domain orientation of the LC molecules can be induced by providing electrodes having slits and/or bumps or protrusions in order to create two, four or more different tilt alignment directions.

Upon polymerization the polymerizable compounds form a copolymer, which causes a certain tilt angle of the LC molecules in the LC medium. Without wishing to be bound to a specific theory, it is believed that at least a part of the crosslinked polymer, which is formed by the polymerizable compounds, will phase-separate or precipitate from the LC medium and form a polymer layer on the substrates or electrodes, or the alignment layer provided thereon. Microscopic measurement data (like SEM and AFM) have confirmed that at least a part of the formed polymer accumulates at the LC/substrate interface.

The polymerization can be carried out in one step. It is also possible firstly to carry out the polymerization, optionally while applying a voltage, in a first step in order to produce a tilt angle, and subsequently, in a second polymerization step without an applied voltage, to polymerize or crosslink the compounds which have not reacted in the first step ("end curing").

Suitable and preferred polymerization methods are, for example, thermal or photopolymerization, preferably photopolymerization, in particular UV induced photopolymerization, which can be achieved by exposure of the polymerizable compounds to UV radiation.

A preferred process of preparing a PSA display includes one or more of the following features, including any combination thereof:
- the polymerizable medium is exposed to UV light in the display in a 2-step process, including a first UV exposure step ("UV1 step"), with application of a voltage, to generate the tilt angle, and a second UV exposure step ("UV2 step"), without application of a voltage, to complete polymerization,
- for irradiation of the polymerizable medium, a UV radiation source is used which has an emission spectrum at ≥300nm, preferably in the range from 300 to 380 nm. very preferably in the range from 300 to 360 nm, preferably at least in the UV2 step, more preferably both in the UV1 and UV2 step,

- for irradiation of the polymerizable medium, as radiation source a UV C-type lamp is used, preferably at least in the UV1 step, more preferably both in the UV1 and UV2 step,
- for irradiation of the polymerizable medium, as UV radiation source a UV C-type lamp is used in the UV1 step and a UV B-type lamp is used in the UV2 step.

A preferred embodiment of the present invention relates to a process for preparing a PSA display as described above and below, comprising one or more of the following features, including any combination thereof:
- the polymerizable LC medium is irradiated by UV light in a 2-step process, including a first UV exposure step ("UV1 step"), with application of a voltage, to generate the tilt angle, and a second UV exposure step ("UV2 step"), without application of a voltage, to complete polymerization,
- the polymerizable LC medium is irradiated by UV light generated by a UV lamp having an intensity of from 0.5 mW/cm² to 10 mW/cm², preferably in the UV2 step, and optionally also in the UV1 step,
- the polymerizable LC medium is irradiated by UV light having a wavelength of preferably >300 nm,
- the polymerizable LC medium is irradiated by UV light while a voltage is applied to the electrodes of the display,
- irradiation by UV light is carried out using a UV C-type lamp, preferably at least in the UV2 step, more preferably both in the UV1 and UV2 step,
- irradiation by UV light is carried out using a UV C-type lamp in the UV1 and a UV B-type lamp in the UV2 step,
- irradiation by UV light is carried out using a UV-LED lamp, preferably at least in the UV2 step, more preferably both in the UV1 and UV2 step.

This preferred process can be carried out for example by using the desired UV lamps or by using a band pass filter and/or a cut-off filter, which are substantially transmissive for UV light with the respective desired wavelength(s) and are substantially blocking light with the respective undesired wavelengths.

Preferably UV irradiation is carried out using a UV C-type lamp, preferably at least in the UV2 step, more preferably both in the UV1 and UV2 step, or using a C-type lamp in the UV1 step and a b-type lamp in the UV2 step.

UV radiation energy is preferably in the range from 2 to 100 J, depending on the production process conditions.

The LC medium according to the present invention may additionally comprise one or more further components or additives, preferably selected from the list including but not limited to co-monomers, chiral dopants, polymerization initiators, inhibitors, stabilizers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

The LC medium has preferably a nematic LC phase.

In a preferrd embodiment the LC medium contains one or more polymerization initiators. Suitable conditions for the polymerization and suitable types and amounts of initiators are known to the person skilled in the art and are described in the literature. Suitable for free-radical polymerization are, for example, the commercially available photoinitiators Irgacure651^{®}, Irgacure184^{®}, Irgacure907^{®}, Irgacure369^{®} or Darocure1173^{®} (Ciba AG). If a polymerization initiator is employed, its proportion is preferably 0.001 to 5% by weight, particularly preferably 0.001 to 1% by weight.

The polymerizable compounds according to the invention are also suitable for polymerization without an initiator, which is accompanied by considerable advantages, such, for example, lower material costs and in particular less contamination of the LC medium by possible residual amounts of the initiator or degradation products thereof.

The polymerization can thus also be carried out without the addition of an initiator. Thus, in another preferred embodiment, the LC medium does not contain a polymerization initiator.

In another preferred embodiment the LC medium additionally comprises one or more stabilisers in order to prevent undesired spontaneous polymerization of the RMs, for example during storage or transport. Suitable types and amounts of stabilisers are known to the person skilled in the art and are described in the literature. Particularly suitable are, for example, the commercially available stabilisers from the Irganox^{®} series (Ciba AG), such as, for example, Irganox^{®} 1076. If stabilisers are employed, their proportion, based on the total amount of RMs or the polymerizable component (component A), is preferably 10-50,000 ppm, particularly preferably 50-5,000 ppm.

In a preferred embodiment the LC medium contains one or more chiral dopants, preferably in a concentration from 0.01 to 1% by weight, very preferably from 0.05 to 0.5% by weight. The chiral dopants are preferably selected from the group consisting of compounds from Table B below, very preferably from the group consisting of R- or S-1011, R- or S-2011, R- or S-3011, R- or S-4011, and R- or S-5011.

In another preferred embodiment the LC media contain a racemate of one or more chiral dopants, which are preferably selected from the chiral dopants mentioned in the previous paragraph.

In another preferred embodiment of the present invention the LC media contain one or more further stabilisers.

Preferred stabilisers are selected from the compounds of formula H 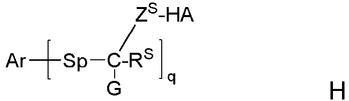 in which
- Ar: denotes an aromatic or heteroaromatic hydrocarbon group having 4 to 40 C atoms, preferably 6 to 30 C atoms;
- Sp: denotes a spacer group;
- R^{S}: denotes H, alkyl having 1 to 12 C atoms or alkenyl having 2 to 12 C atoms;
- Z^{S}: denotes -O-, -C(O)O-, -(CH₂)_{z}- or -(CH₂)_{z}O-, or a single bond;
- HA: denotes 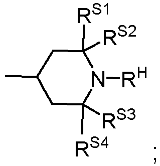
- R^{H}: denotes H, O·, CH₃, OH or OR^{S}, preferably H or O·;
- R^{S1}, R^{S2}, R^{S3} and R^{S4},: identically or differently, denote alkyl having 1 to 6 C atoms, preferably having 1 to 3 C atoms, very preferably CH₃;
- G: denotes H or R^{S} or a group Z^{S}-HA;
- z: is an integer from 1 to 6; and
- q: is 3 or 4.

The compounds of formula H are described in EP3354710 A1 and EP3354709 A1.

Preferred compounds of formula H are selected from the formulae H-1, H-2 and H-3: 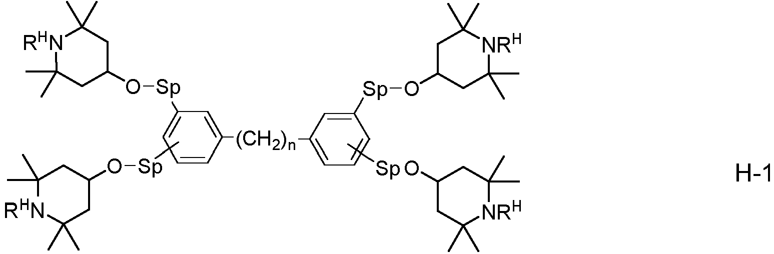 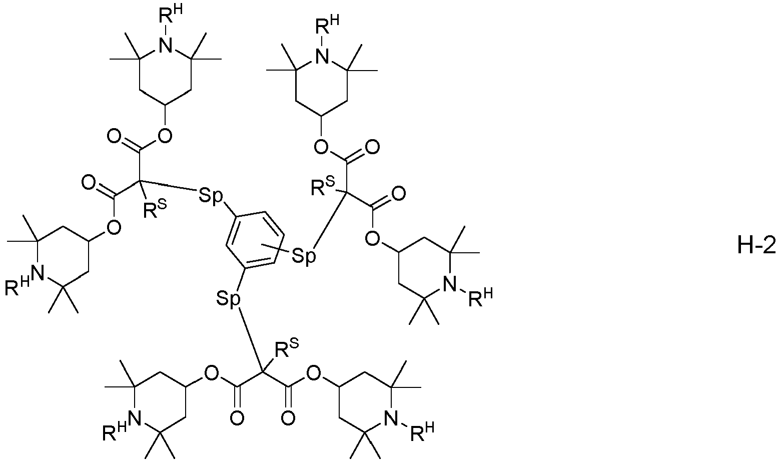 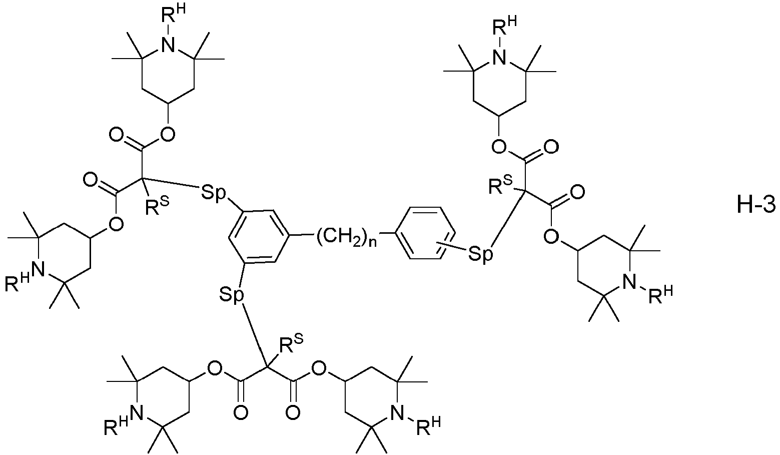 in which R^{H} has the meanings given above and preferably denotes H or O·, and n is an integer from 0 to 12, preferably 5, 6, 7, 8 or 9, very preferably 7, and Sp denotes a spacer group, preferably alkylene having 1 to 12 C atoms in which one or more non-adjacent -CH₂- groups may be replaced with -O-.

Preferred compounds of formula H-1 are those of formula H-1-1: 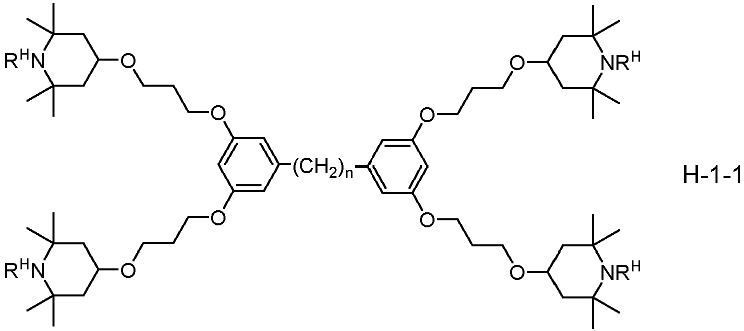 in which R^{H} has the meanings given above and preferably denotes H or O·, and n is an integer from 0 to 12, preferably 5, 6, 7, 8 or 9, very preferably 7.

Very preferred compounds of formula H-1-1 are those of formula H-1-1-1:

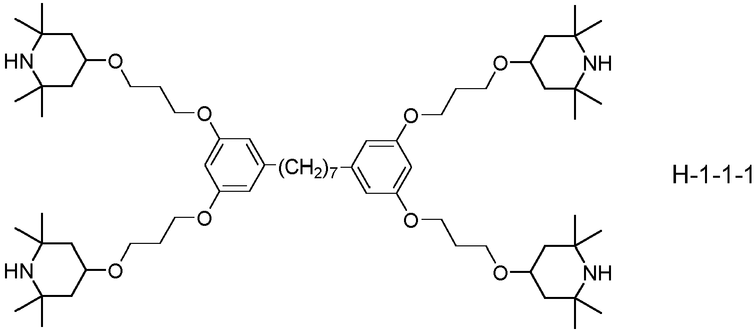

Preferred compounds of formula H-2 are those of formula H-2-1: 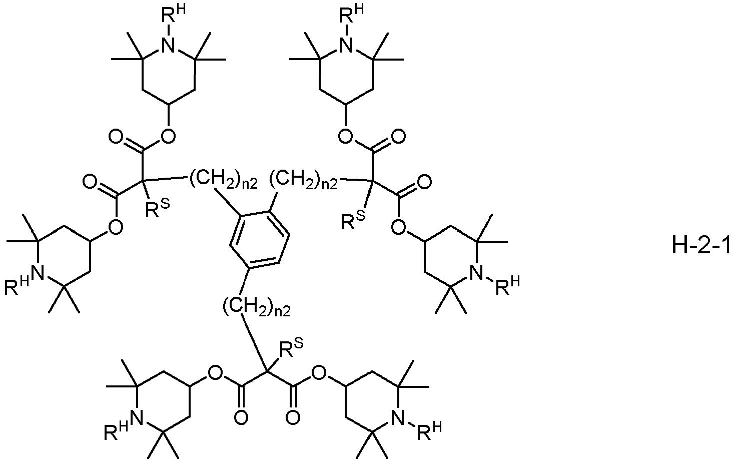 in which R^{H} has the meanings given above and preferably denotes H or O·, and n2, on each occurrence identically or differently, preferably identically, is an integer from 1 to 12, preferably 2, 3, 4, 5, or 6, very preferably 3, and R^{S} on each occurrence identically or differently, preferably identically, denotes alkyl having 1 to 6 C atoms, preferably n-butyl.

Very preferred compounds of formula H-2-1 are those of formula H-2-1-1:

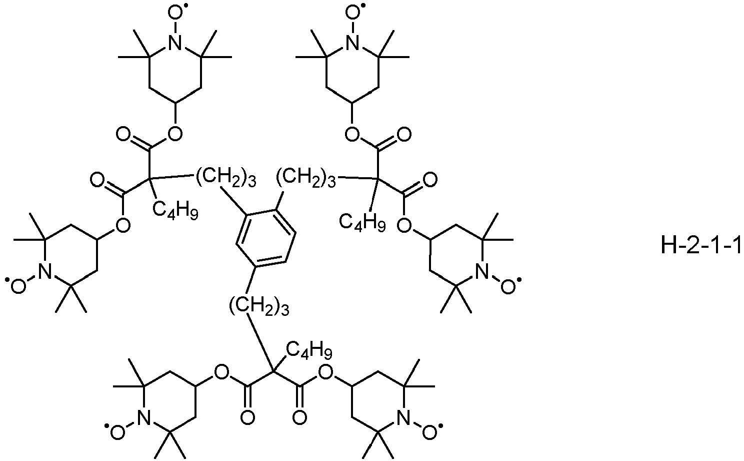

Preferred compounds of formula H-3 are selected from the formula H-3-1: 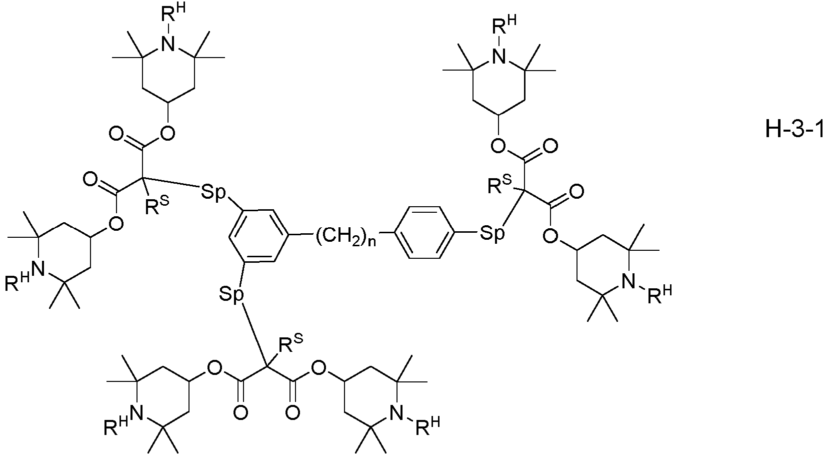 in which Sp and R^{H} have the meanings given above and R^{H} preferably denotes H or O·, and n is an integer from 0 to 12, preferably 5, 6, 7, 8 or 9, very preferably 7.

Further preferred stabilisers are selected from the group consisting of the formulae ST-1 to ST-18: 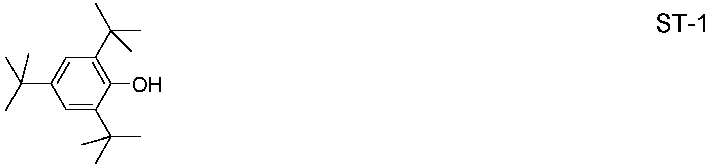 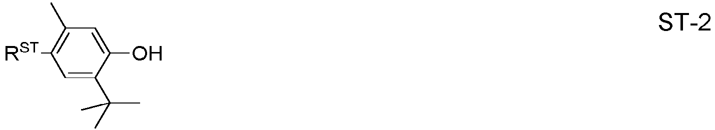 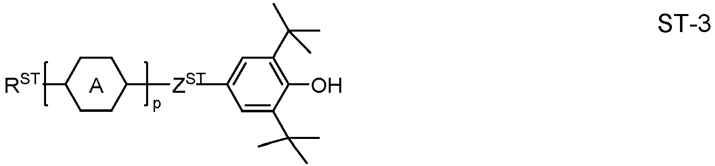 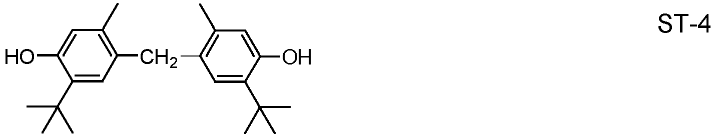 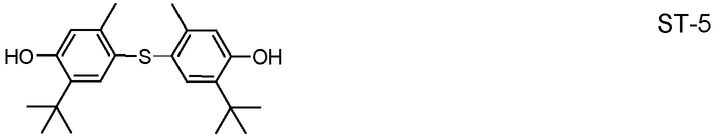 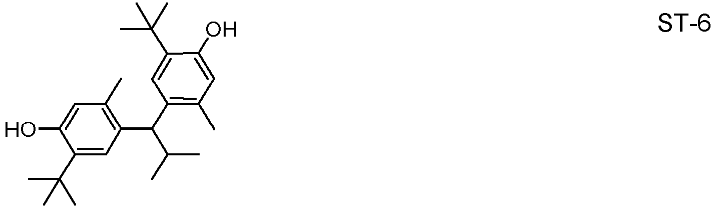 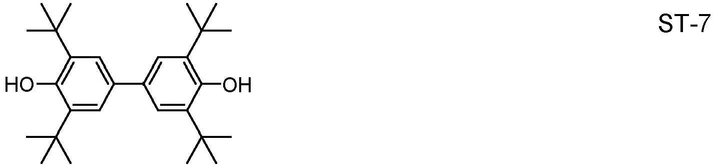 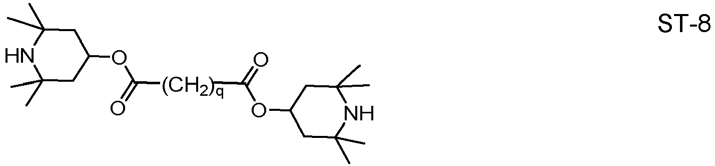 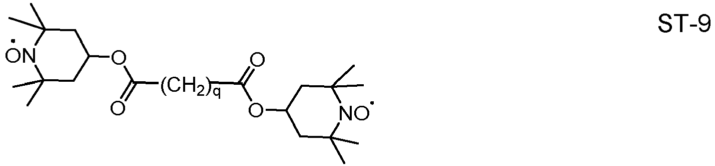 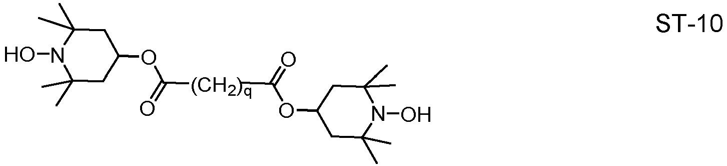 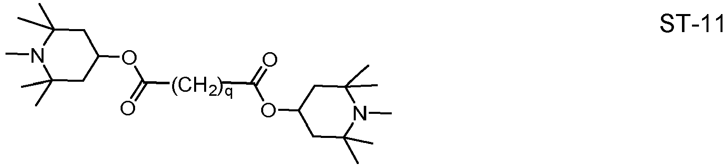 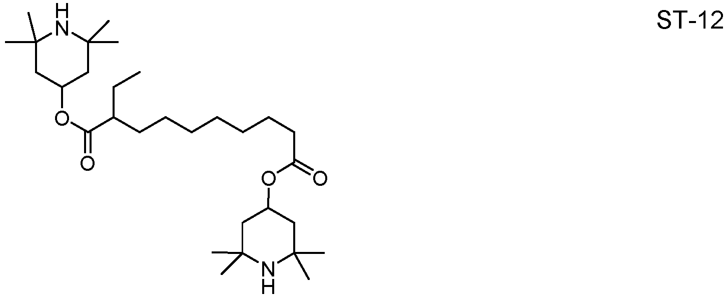 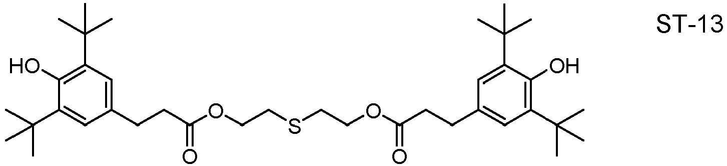 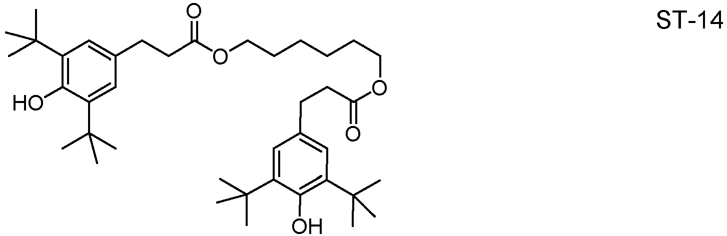 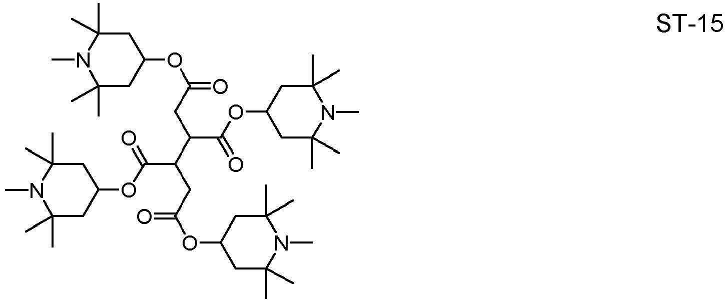 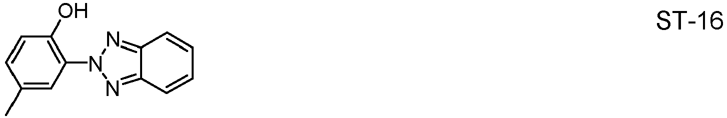 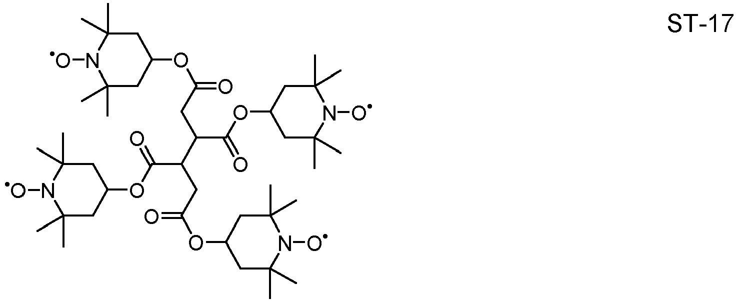 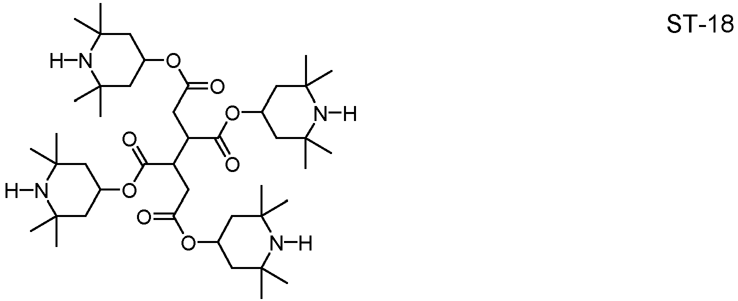 in which
- R^{ST}: denotes H, an alkyl or alkoxy radical having 1 to 15 C atoms, wherein, in addition, one or more CH₂ groups may each be replaced, independently of one another, by -C≡C-, -CF₂O-, -OCF₂-, -CH=CH-, 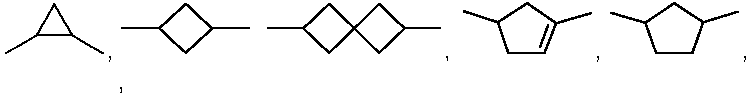
- to: -O-, -CO-O-, -O-CO- in such a way that O atoms are not linked directly one another, and in which, in addition, one or more H atoms may be replaced by halogen, on each occurrence, identically or differently, denotes 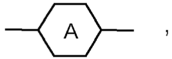 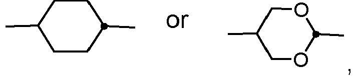
- Z^{ST} , ,: each, independently of one another, denote -CO-O-, -O-CO-, -CF₂O--OCF₂-, -CH₂O-, -OCH₂-, -CH₂-, -CH₂CH₂-, -(CH₂)₄-, -CH=CH-, -CH₂O--C₂F₄-, -CH₂CF₂-, -CF₂CH₂-, -CF=CF-, -CH=CF-, -CF=CH-, -CH=CH-, -C≡C- or a single bond,
- L¹ and L²: each, independently of one another, denote F, Cl, CH₃, CF₃ or CHF₂,
- p: denotes 0, 1 or 2,
- q: denotes 1, 2, 3, 4, 5, 6, 7, 8, 9 or 10.

Preferred compounds of formula ST are those selected from the formulae ST-3 and in particular: 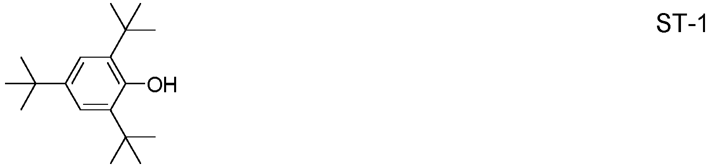 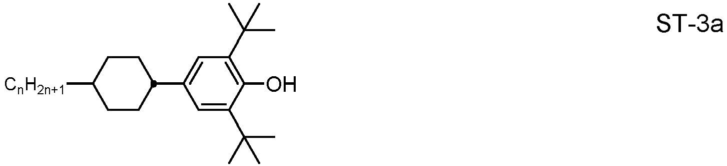 in which n = 1, 2, 3, 4, 5, 6 or 7, preferably n = 3 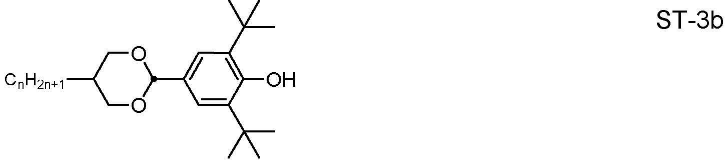 in which n = 1, 2, 3, 4, 5, 6 or 7, preferably n = 3 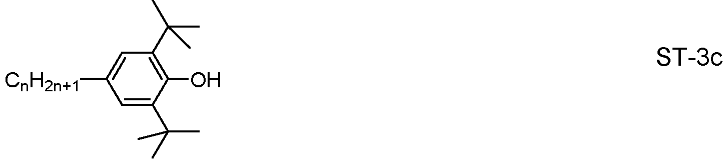 in which n = 1, 2, 3, 4, 5, 6 or 7, preferably n = 1 or 7

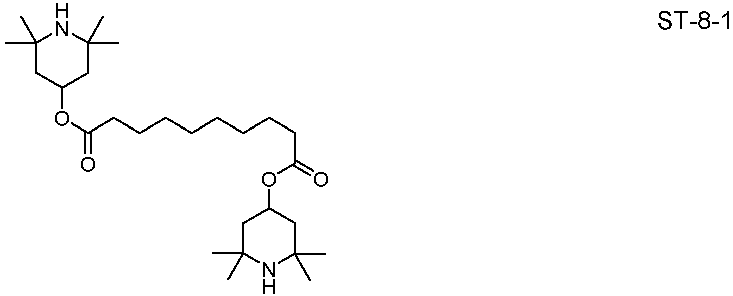

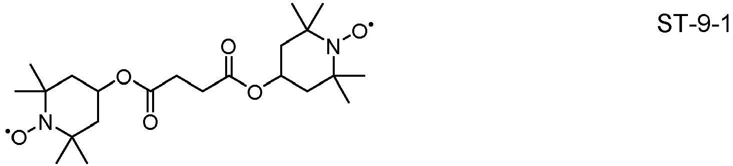

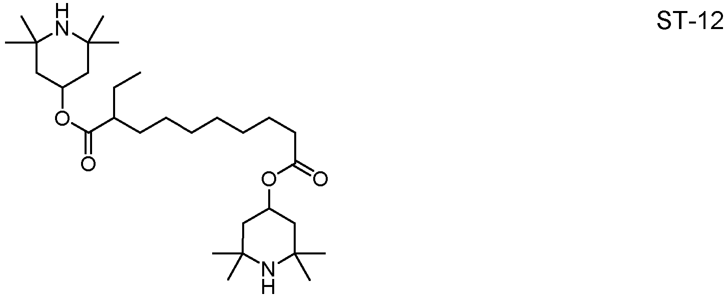

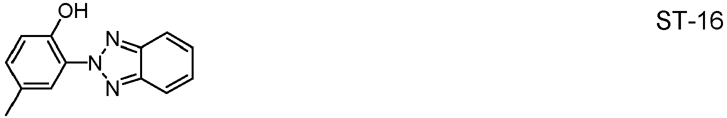

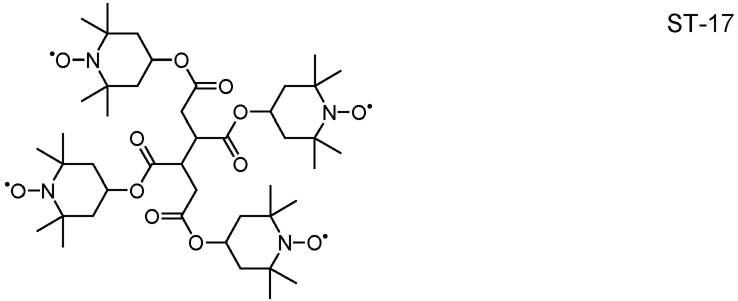

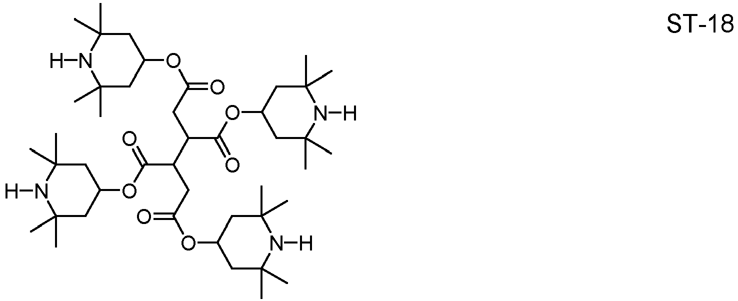

In the compounds of the formulae ST-3a and ST-3b, n preferably denotes 3. In the compounds of the formula ST-2a, n preferably denotes 7.

Very preferred stabilisers are selected from the group of the compounds of the formulae ST-2a-1, ST-3a-1, ST-3b-1, ST-8-1, ST-9-1 and ST-12:

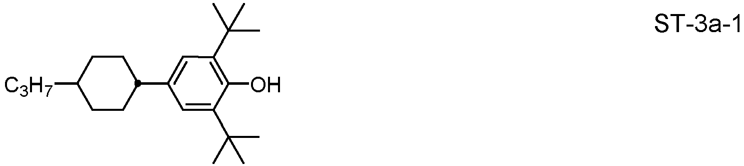

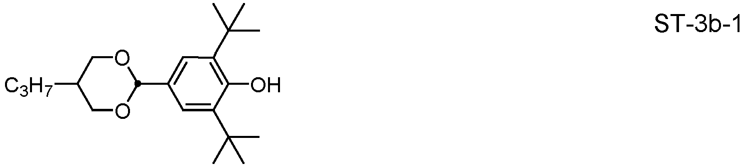

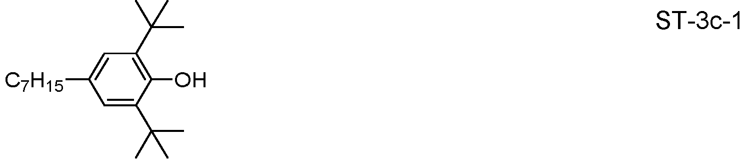

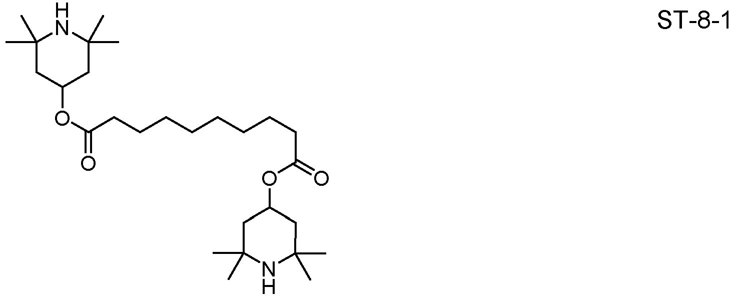

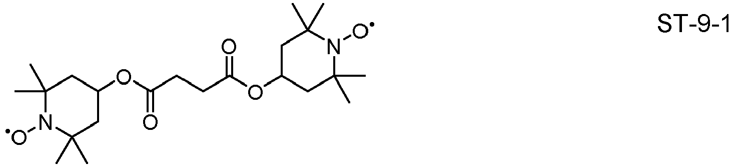

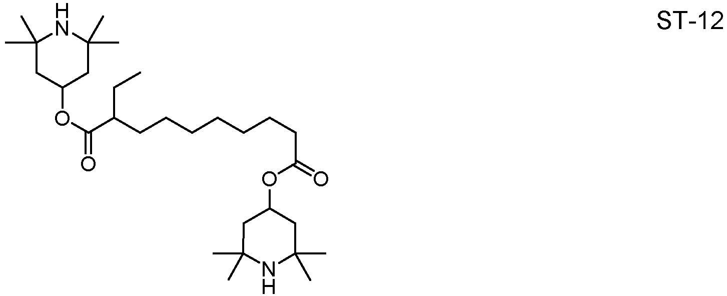

In another preferred embodiment the LC medium comprises one or more stabilisers selected from Table C below.

Preferably the proportion of stabilisers in the LC medium is from 10 to 500 ppm, very preferably from 20 to 100 ppm.

In another preferred embodiment the LC medium according to the present invention contains a self alignment (SA) additive, preferably in a concentration of 0.1 to 2.5 %.

In a preferred embodiment the SA-VA display according to the present invention does not contain a polyimide alignment layer. In another preferred embodiment the SA-VA display according to preferred embodiment contains a polyimide alignment layer.

Preferred SA additives for use in this preferred embodiment are selected from compounds comprising a mesogenic group and a straight-chain or branched alkyl side chain that is terminated with one or more polar anchor groups selected from hydroxy, carboxy, amino or thiol groups.

Further preferred SA additives contain one or more polymerizable groups which are attached, optionally via spacer groups, to the mesogenic group. These polymerizable SA additives can be polymerized in the LC medium under similar conditions as applied for the RMs in the PSA process.

Suitable SA additives to induce homeotropic alignment, especially for use in SA-VA mode displays, are disclosed for example in US 2013/0182202 A1, US 2014/0838581 A1, US 2015/0166890 A1 and US 2015/0252265 A1.

In another preferred embodiment an LC medium or a polymer stabilised SA-VA display according to the present invention contains one or more self alignment additives selected from Table E below.

In another preferred embodiment the LC medium according to the present invention contains one or more SA additives, preferably selected from formula II or its subformulae or selected from Table E, in a concentration from 0.1 to 5%, very preferably from 0.2 to 3%, most preferably from 0.2 to 1.5%.

Besides the polymerizable compounds and additives described above, the LC medium for use in the LC displays according to the invention comprises an LC mixture ("host mixture") comprising one or more, preferably two or more LC compounds which are selected from low-molecular-weight compounds that are unpolymerizable, and at least one of which is a compound of formula II. These LC compounds are selected such that they stable and/or unreactive to a polymerization reaction under the conditions applied to the polymerization of the polymerizable compounds.

Particularly preferred embodiments of such an LC medium are shown below.

Preferably the LC medium comprises one or more compounds of formula II selected from the group consisting of compounds of the formulae IIA, IIB, IIC and IID, 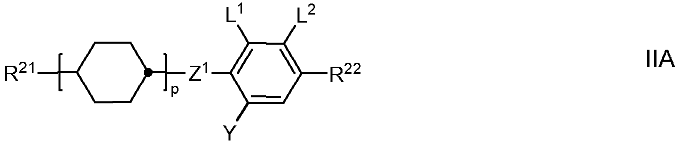 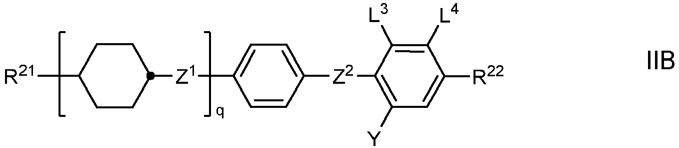 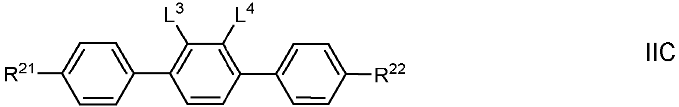 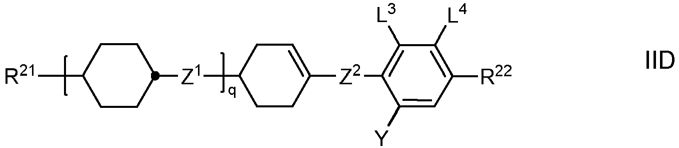 in which the individual radicals, on each occurrence identically or differently, and each, independently of one another, have the following meaning:
- R²¹, R²²: H, an alkyl, alkoxy or alkenyl radical having up to 15 C atoms which is unsubstituted or monosubstituted by F, Cl, CN or CF₃ and where, in addition, one or more CH₂ groups in these radicals may be replaced by -O-, -S-,-C≡C-, -CF₂O-, -OCF₂-, -OC-O-, -O-CO- 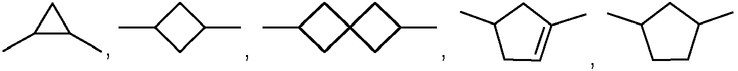 in such a way that O- and/or S-atoms are not linked directly to one another,
- L¹ to L⁴: F, Cl, CF₃ or CHF₂,
- Y: H, F, Cl, CF₃, CHF₂ or CH₃, preferably H or CH₃, particularly preferably H,
- Z¹, Z²: a single bond, -CH₂CH₂-, -CH=CH-, -CF₂O-, -OCF₂-, -CH₂O-, - OCH₂-, -COO-, -OCO-, -C₂F₄-, -CF=CF-, -CH=CHCH₂O,
- p: 0, 1 or 2, and
- q: 0 or 1.

Preferred compounds of the formulae IIA, IIB, IIC and IID are those wherein R²² denotes an alkyl or alkoxy radical having up to 15 C atoms, and very preferablydenotes (O)CᵥH₂ᵥ₊₁ wherein (O) is an oxygen atom or a single bond and v is 1, 2, 3, 4, 5 or 6.

Further preferred compounds of the formulae IIA, IIB, IIC and IID are those wherein R²¹ or R²² denotes or contains cycloalkyl or cycloalkoxy radical, preferably selected from the group consisting of 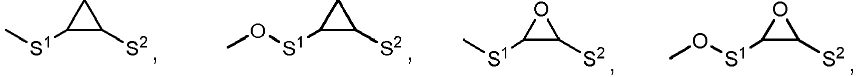 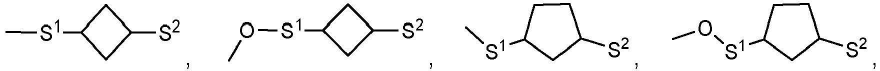 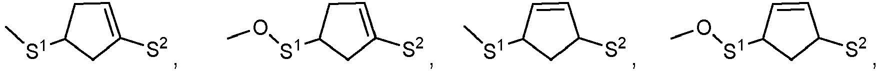 wherein S¹ is C₁₋₁₂-alkylene or C₂₋₁₂-alkenylene and S² is H, C₁₋₁₂-alkyl or C₂₋₁₂-alkenyl, and very preferably are selected from the group consisting of

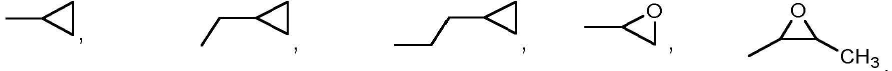

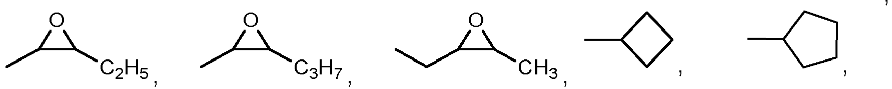

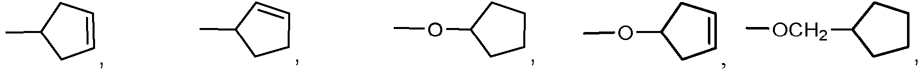

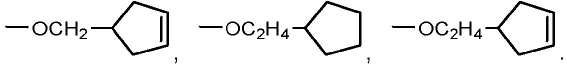

Further preferred compounds of the formulae IIA, IIB, IIC and IID are indicated below.

In a preferred embodiment the LC medium comprises one or more compounds of the formula IIA selected from the group consisting of the following formulae: 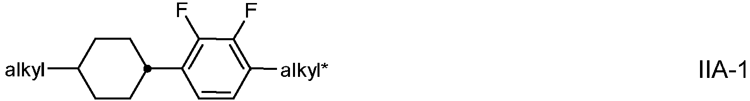 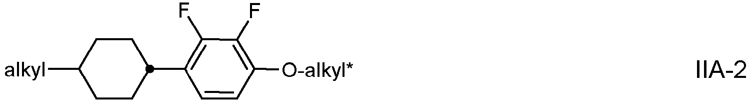 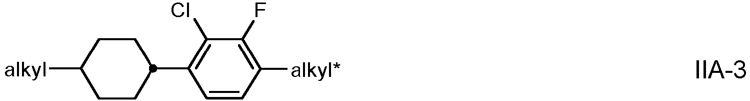 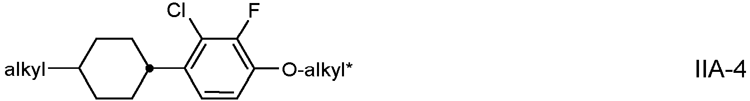 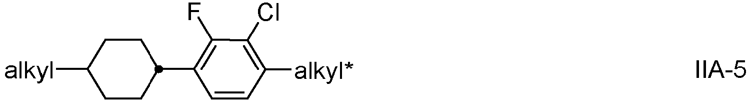 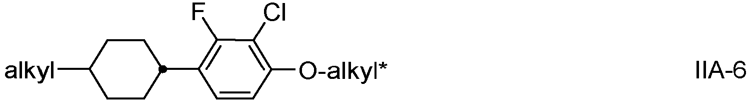 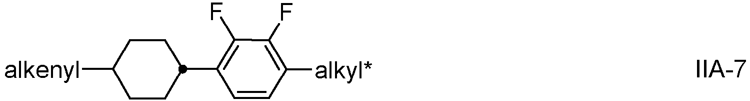 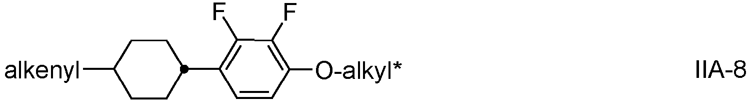 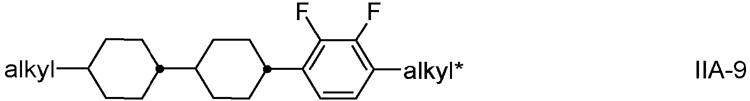 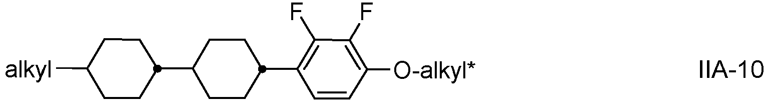 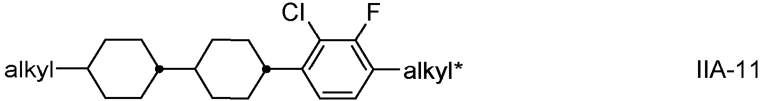 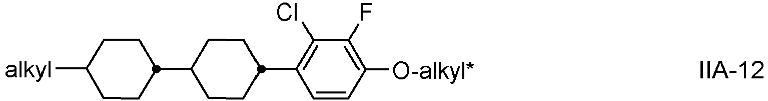 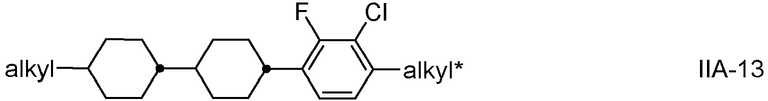 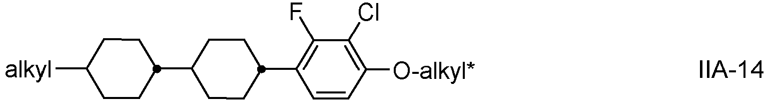 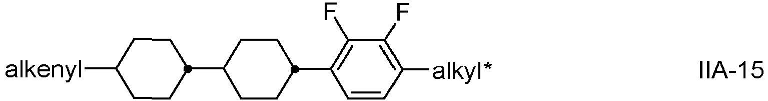 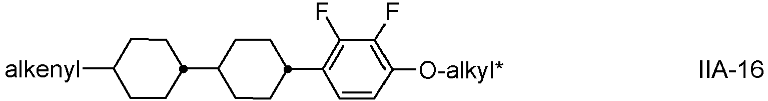 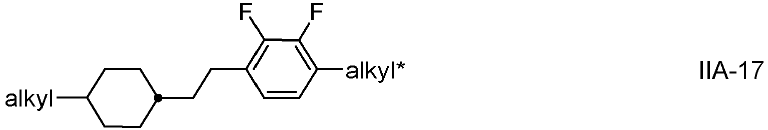 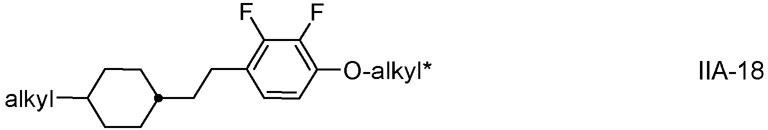 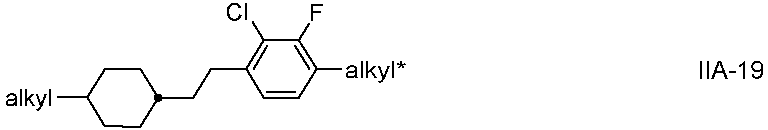 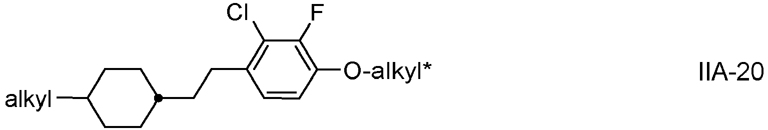 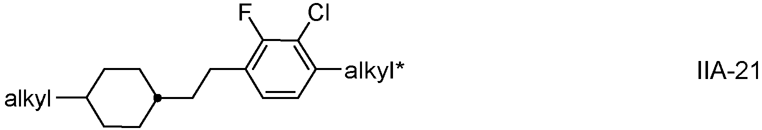 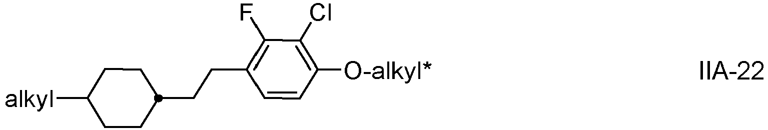 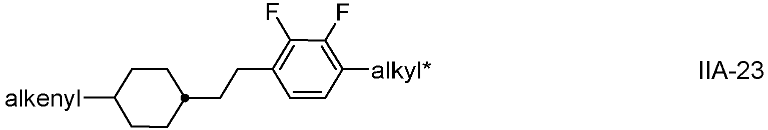 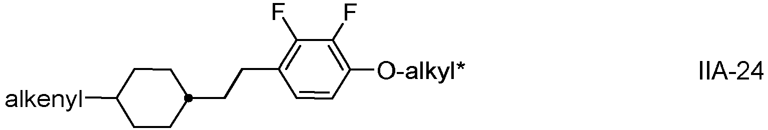 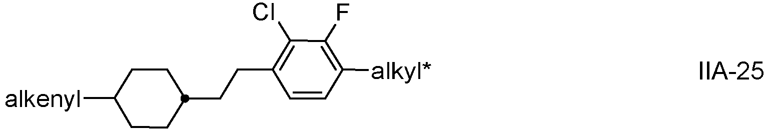 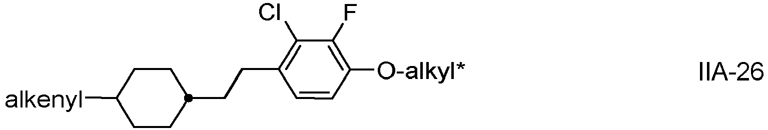 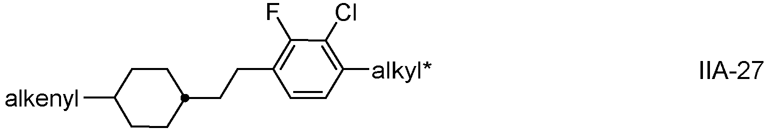 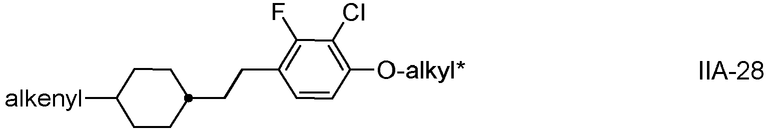 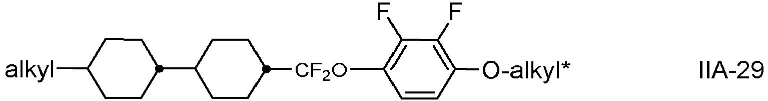 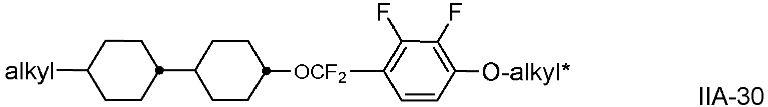 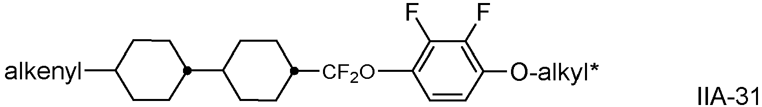 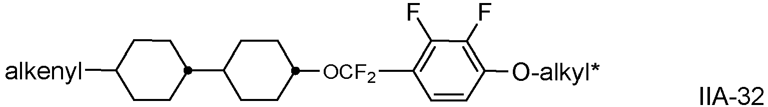 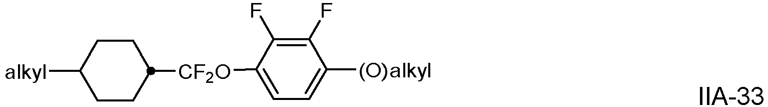 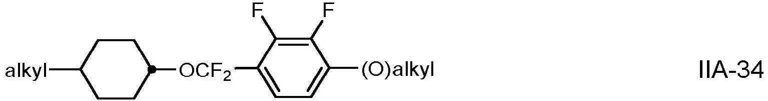 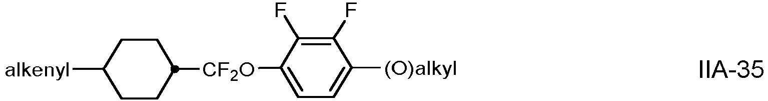 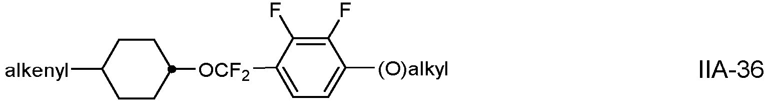 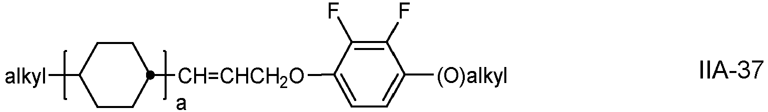 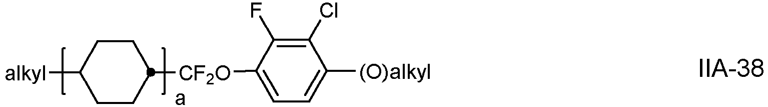 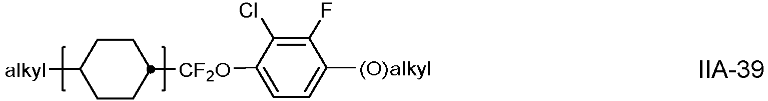 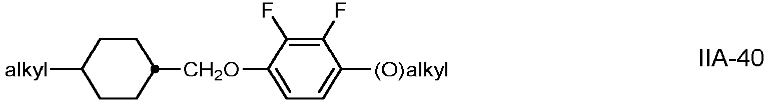 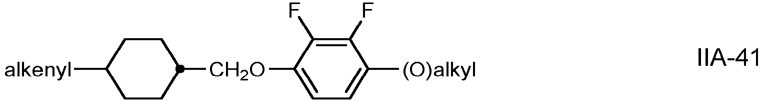 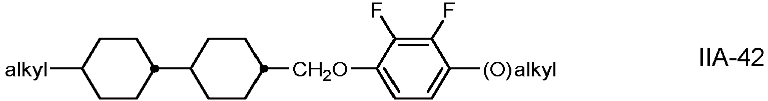 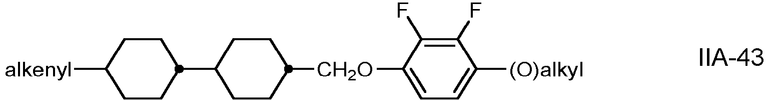 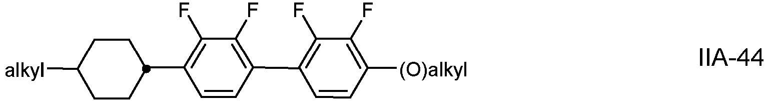 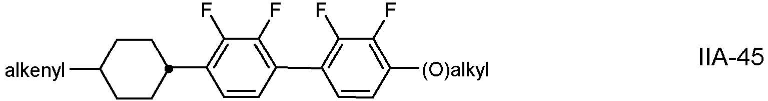 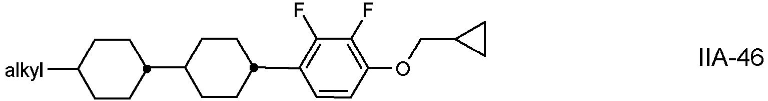 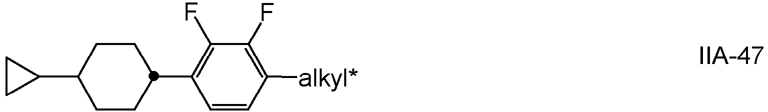 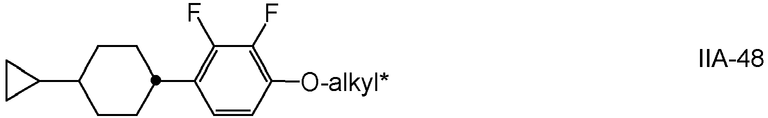 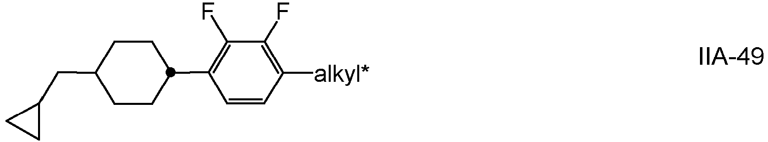 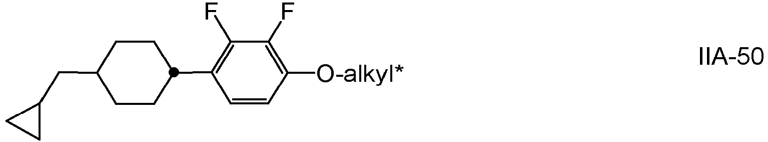 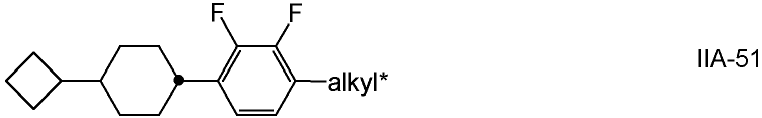 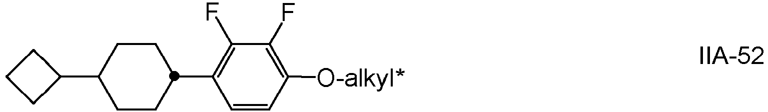 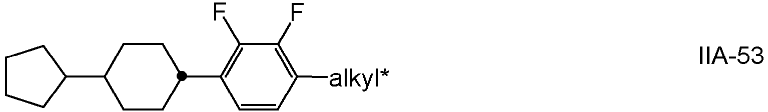 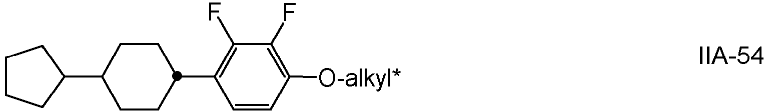 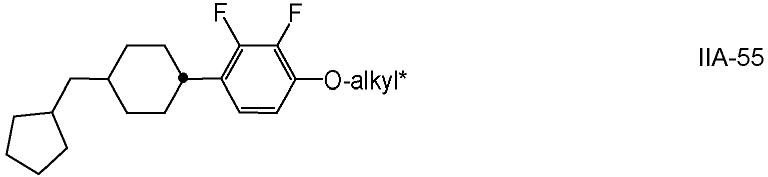 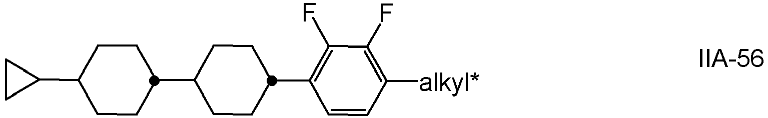 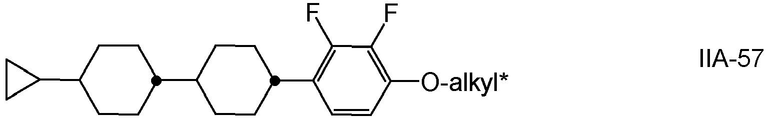 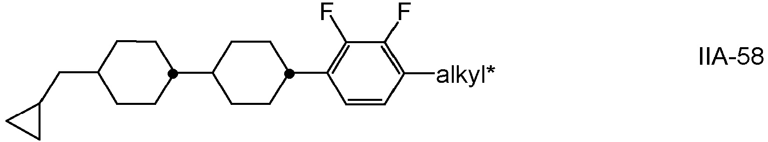 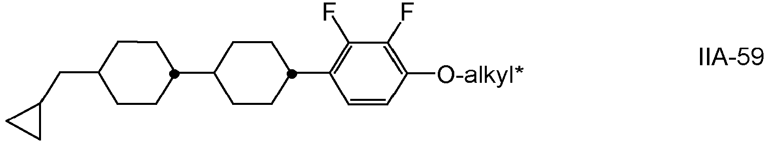 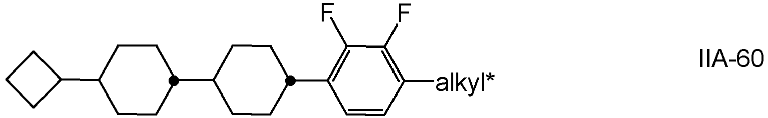 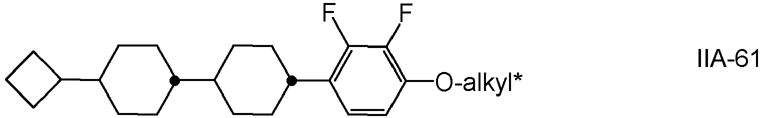 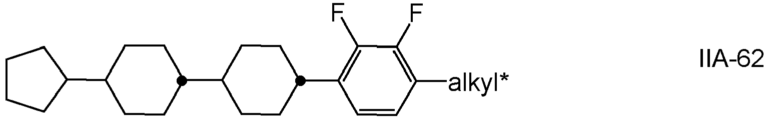 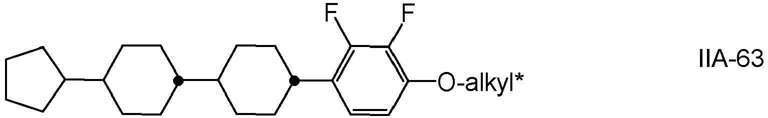 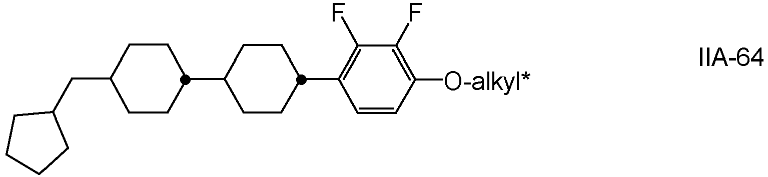 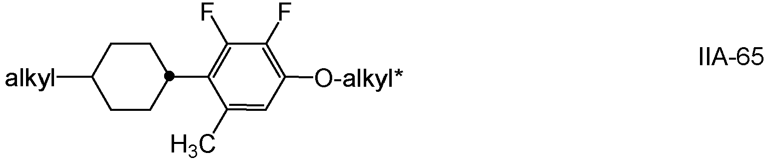 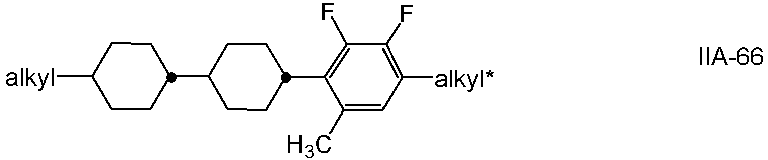 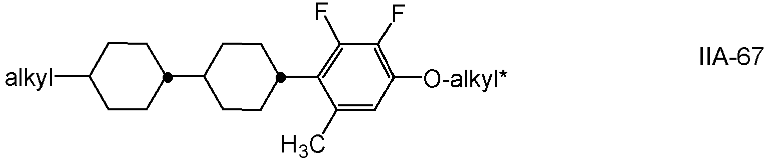 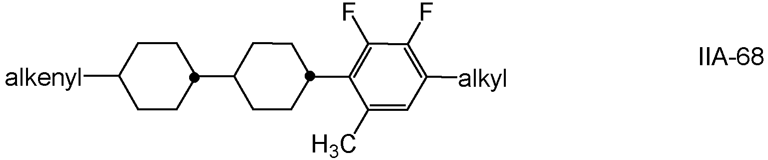 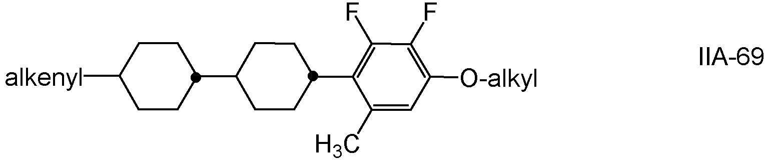 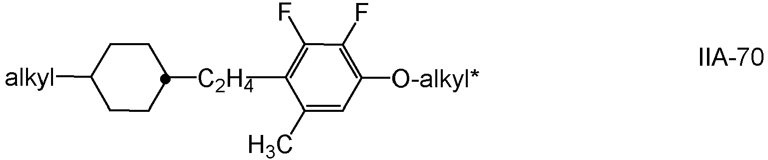 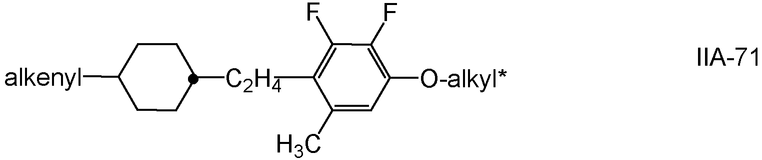 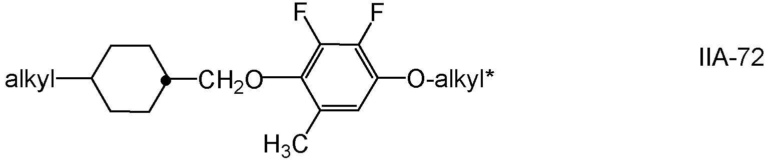 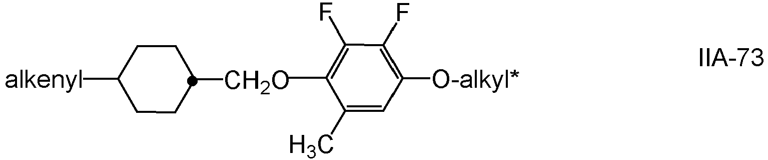 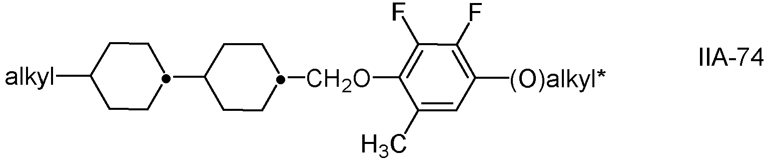 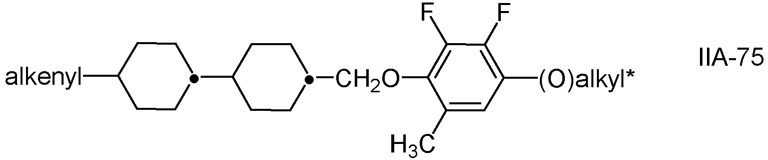 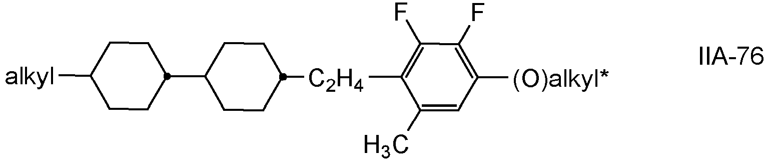 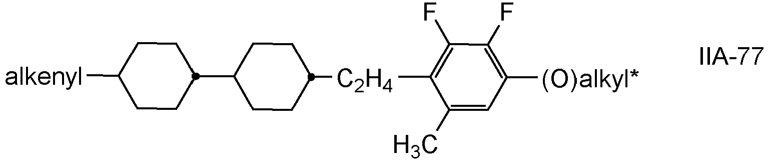 in which the index a denotes 1 or 2, alkyl and alkyl* each, independently of one another, denote a straight-chain alkyl radical having 1-6 C atoms, alkenyl denotes a straight-chain alkenyl radical having 2-6 C atoms, and (O) denotes an oxygen atom or a single bond, and alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred LC media according to the invention comprise one or more compounds selected from the group consisting of formulae IIA-2, IIA-8, IIA-10, IIA-16, 11-18, IIA-40, IIA-41, IIA-42 and IIA-43.

In another preferred embodiment the LC medium comprises one or more compounds of the formula IIB selected from the group consisting of formulae IIB-1 to IIB-26, 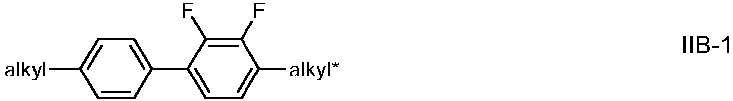 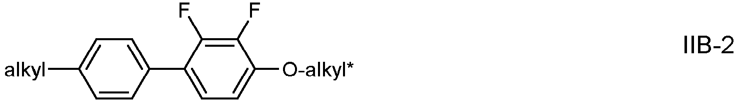 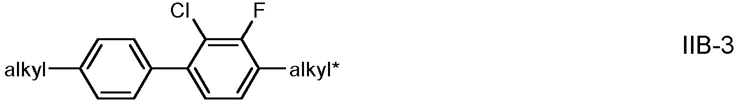 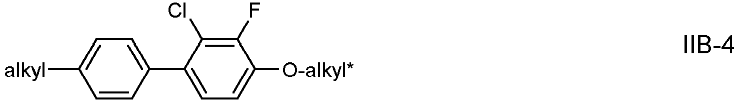 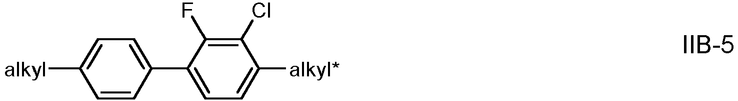 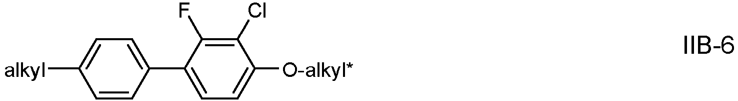 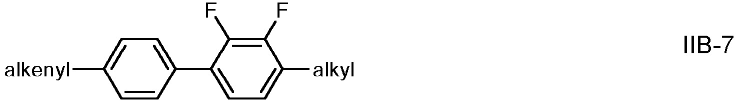 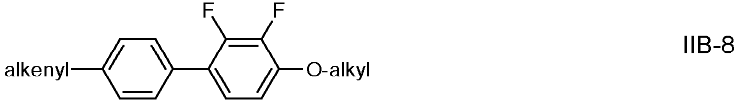 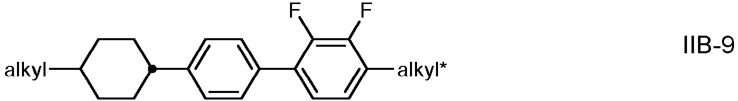 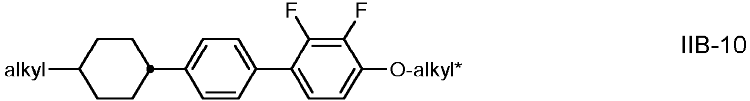 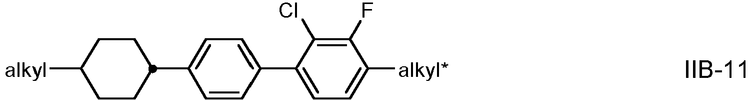 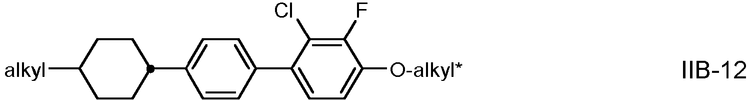 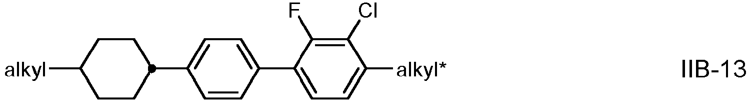 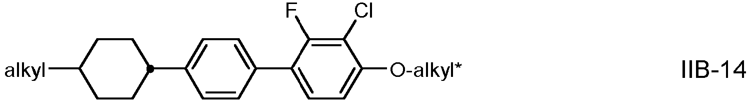 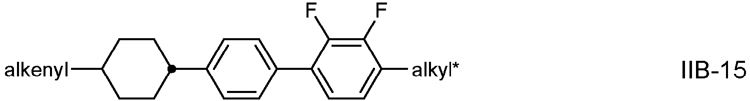 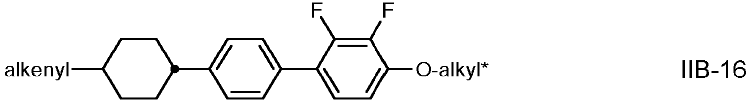 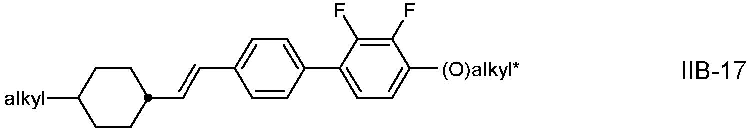 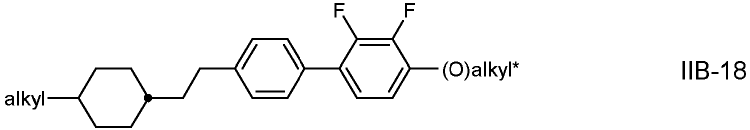 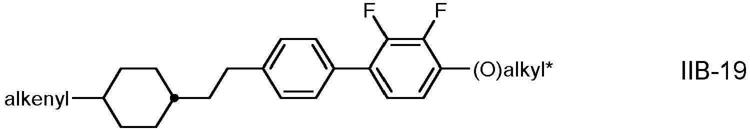 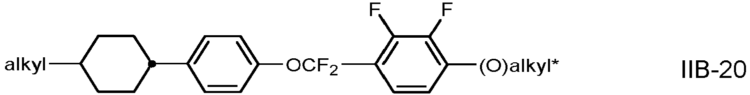 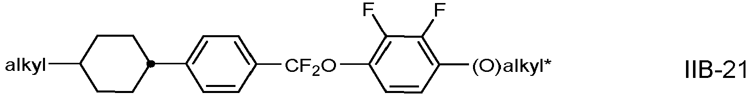 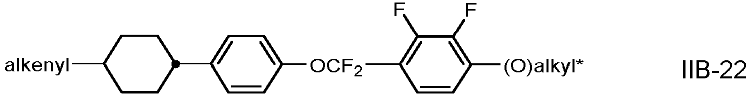 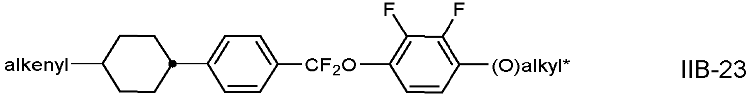 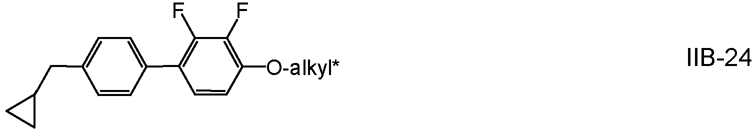 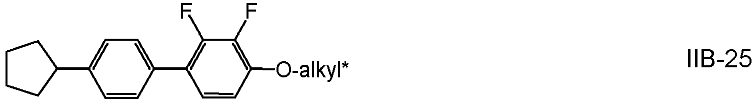 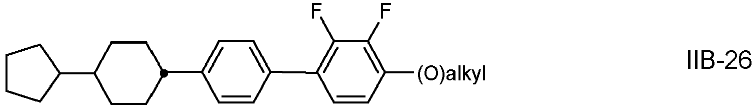 in which alkyl and alkyl* each, independently of one another, denote a straight-chain alkyl radical having 1-6 C atoms, alkenyl denotes a straight-chain alkenyl radical having 2-6 C atoms, and (O) denotes an oxygen atom or a single bond, and alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred LC media according to the invention comprise one or more compounds selected from the group consisting of formulae IIB-2, IIB-10 and IIB-16.

In another preferred embodiment the LC medium comprises one or more compounds of the formula IIC selected from the formula IIC-1, 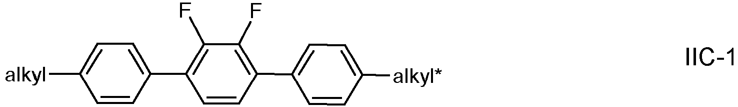 in which alkyl and alkyl* each, independently of one another, denote a straight-chain alkyl radical having 1-6 C atoms, preferably in amounts of 0.5% to 5 % by weight, in particular 1% to 3 % by weight.

In another preferred embodiment the LC medium comprises one or more compounds of the formula IID selected from the group consisting of the following formulae, 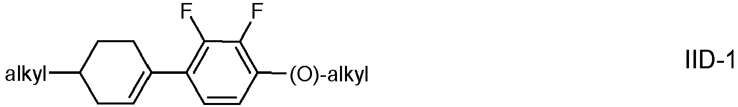 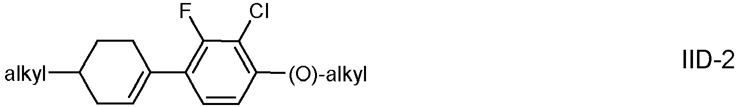 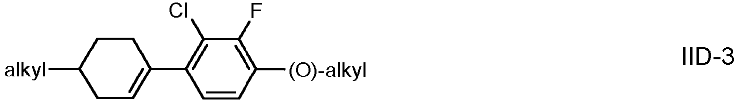 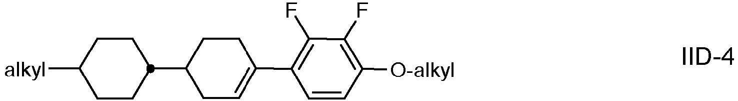 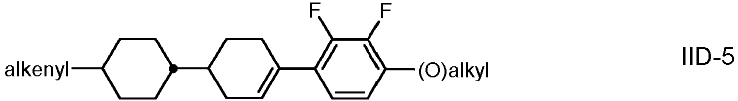 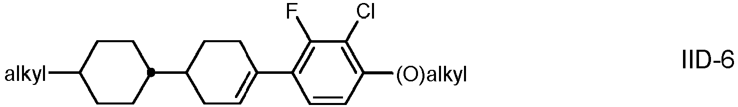 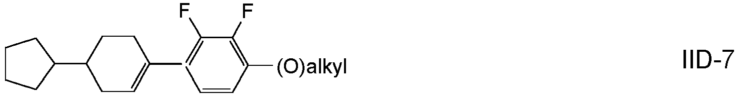 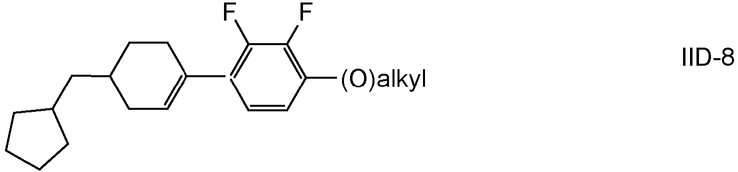 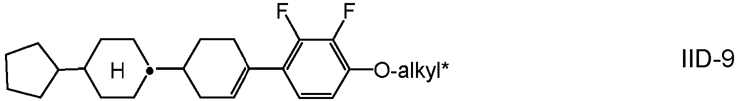 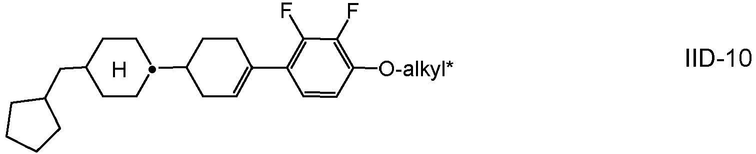 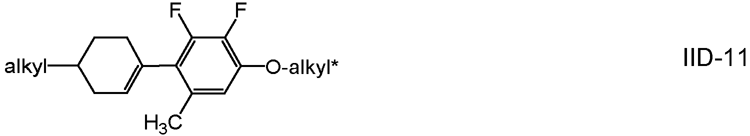 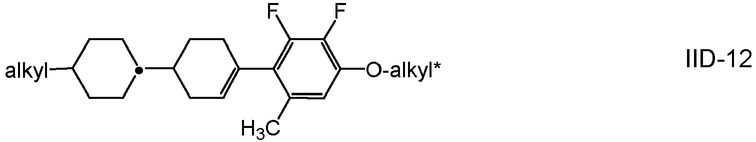 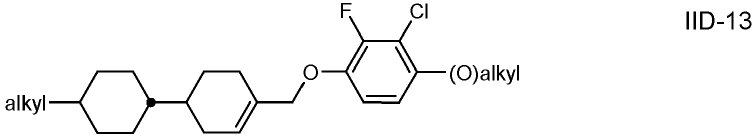 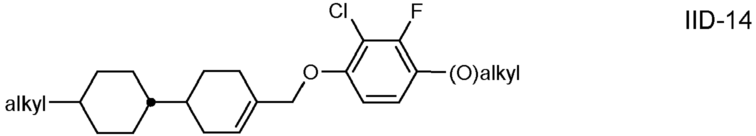 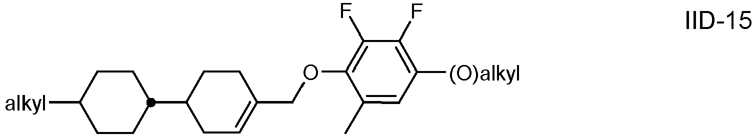 in which alkyl and alkyl* each, independently of one another, denote a straight-chain alkyl radical having 1-6 C atoms, alkenyl denotes a straight-chain alkenyl radical having 2-6 C atoms, and (O) denotes an oxygen atom or a single bond, and alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred LC media according to the invention comprise one or more compounds of the formula IID-4.

Very preferred compounds of the formula IID are selected from the following subformulae, 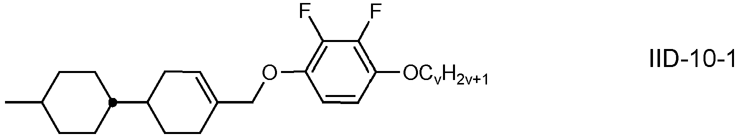 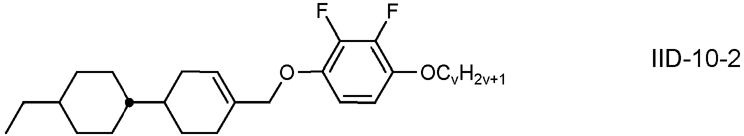 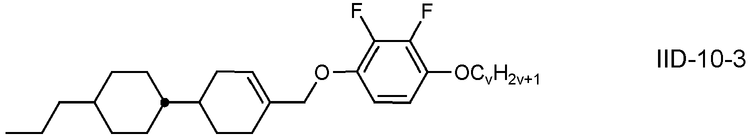 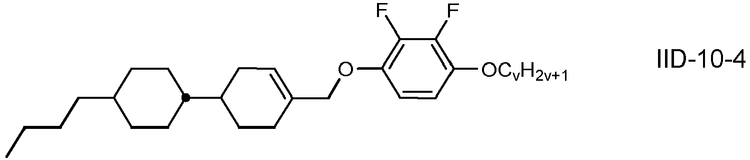 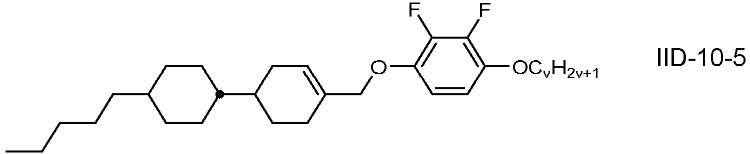 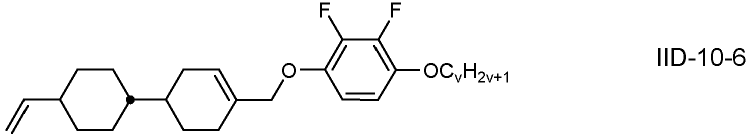 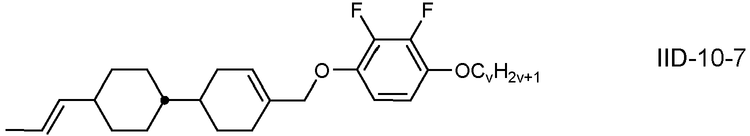 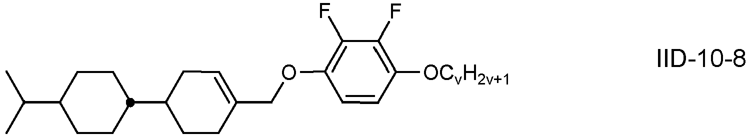 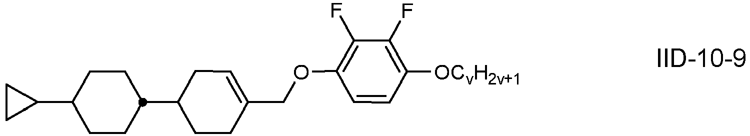 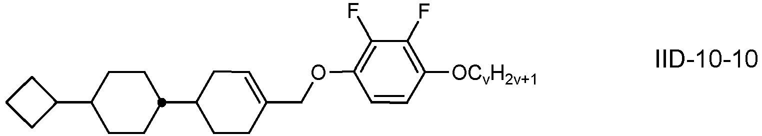 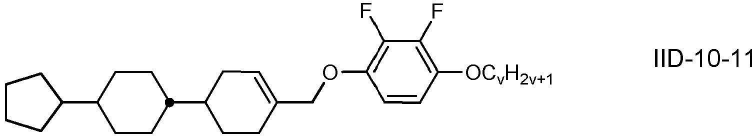 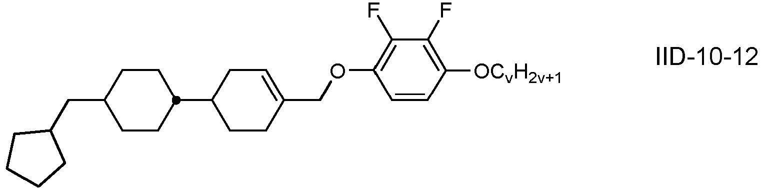 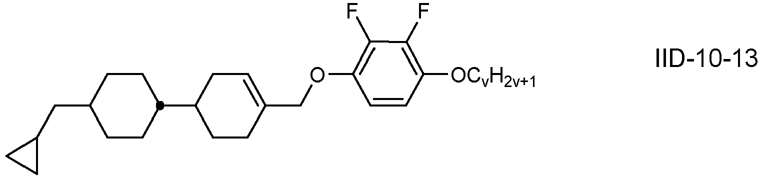 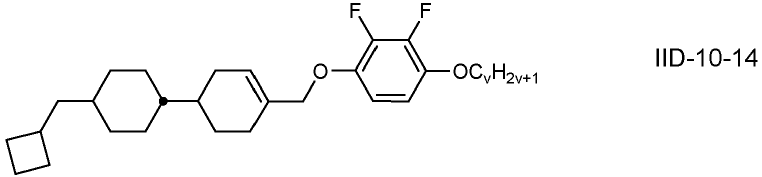 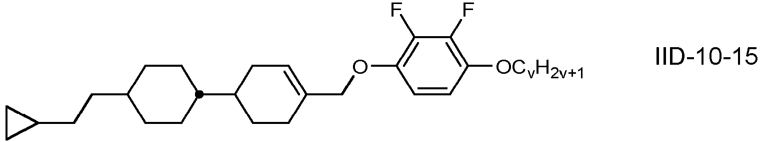 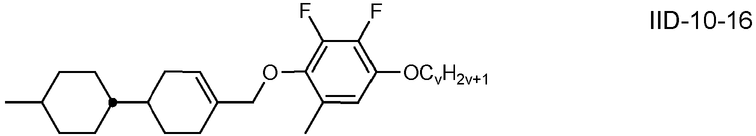 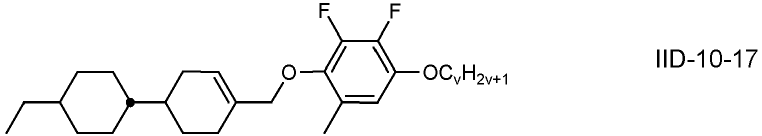 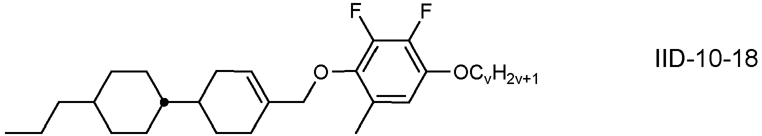 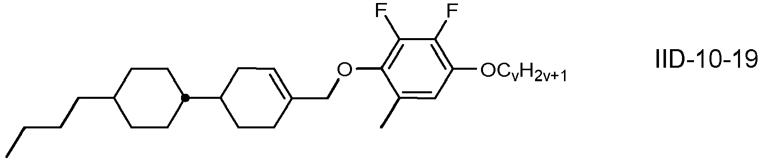 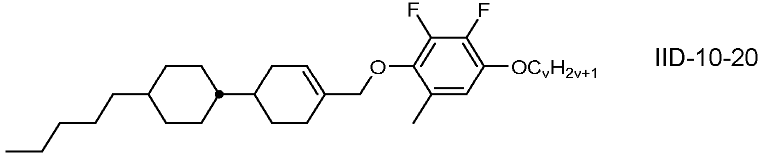 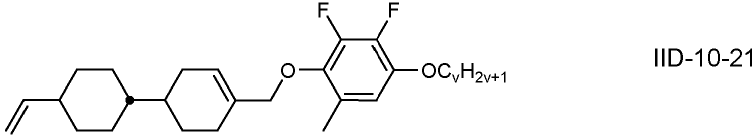 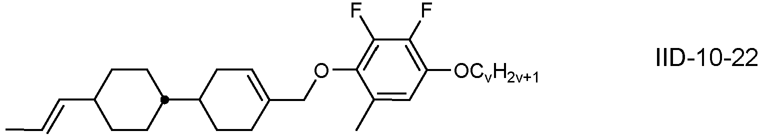 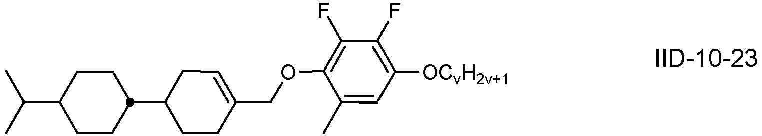 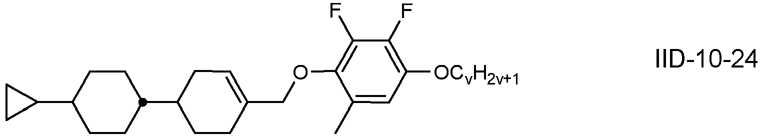 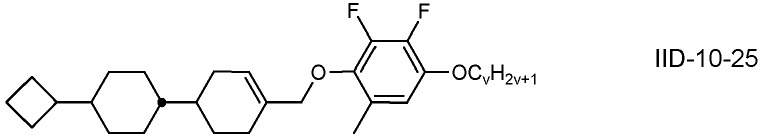 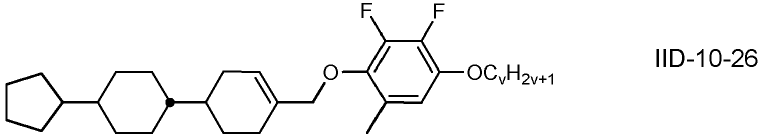 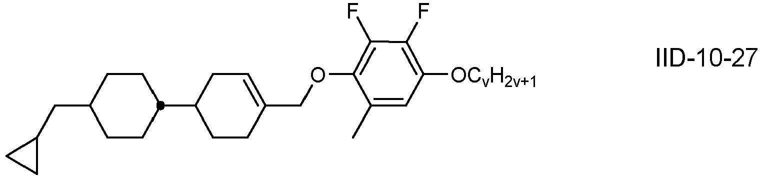 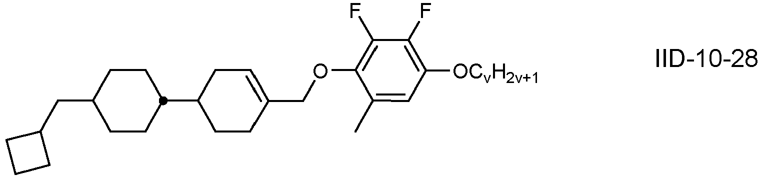 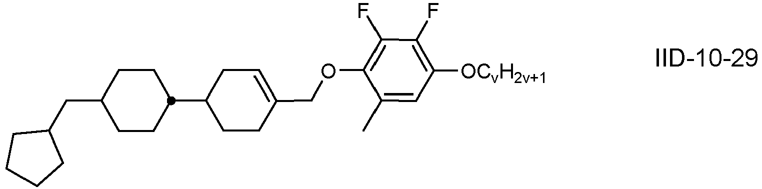 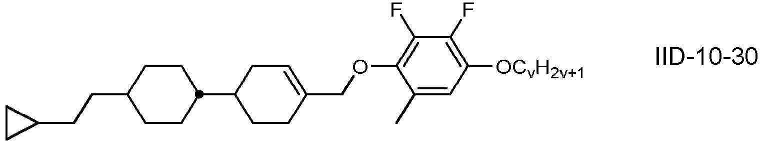 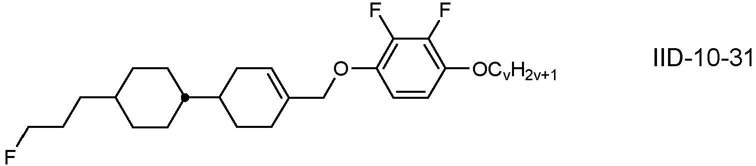 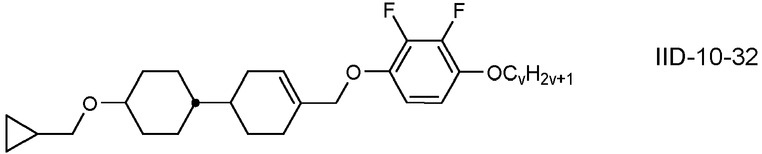 wherein v is 1, 2, 3, 4, 5 or 6.

In a preferred embodiment, the LC medium comprises one or more compounds of formula IID-10a 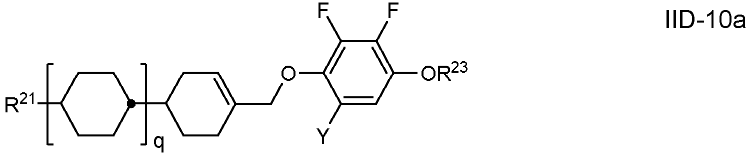 in which R²¹, Y and q have the meanings given in formula IID, and R²³ is 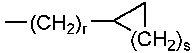 , in which r is 0, 1, 2, 3, 4, 5 or 6 and s is 1, 2 or 3.

Preferred compounds of formula IID-10a are the compounds IID-10a-1 to IID-10a-14:

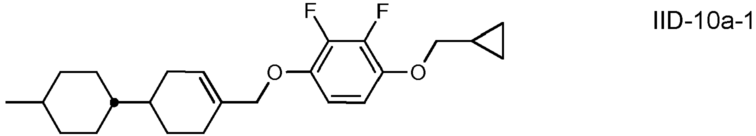

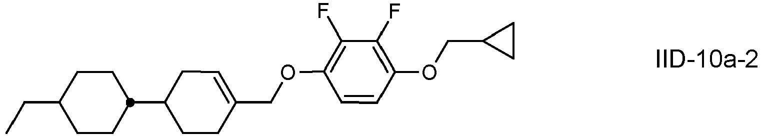

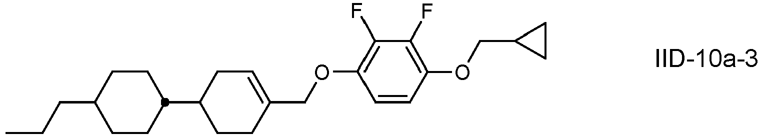

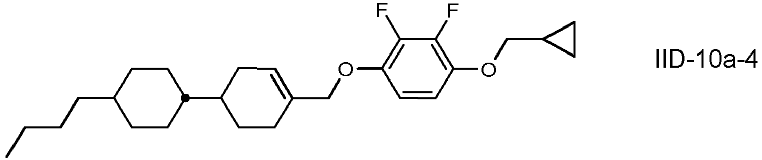

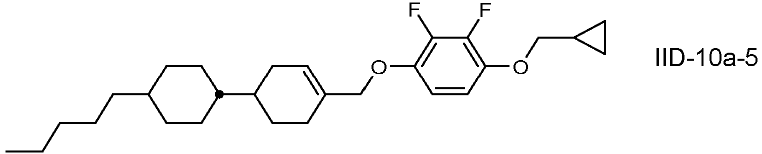

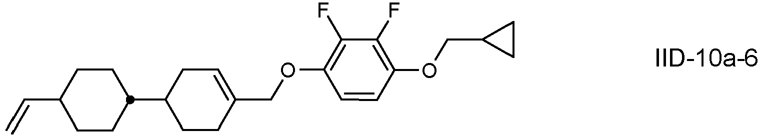

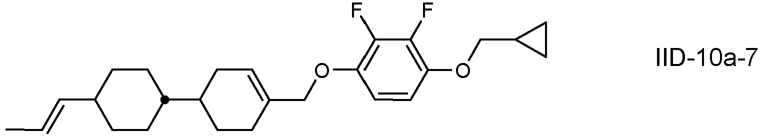

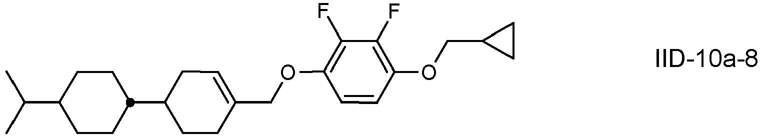

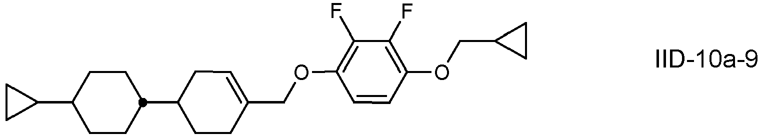

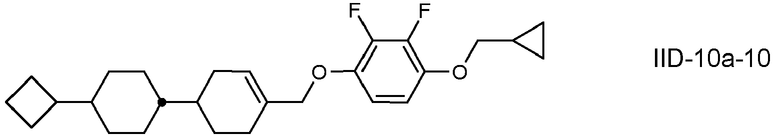

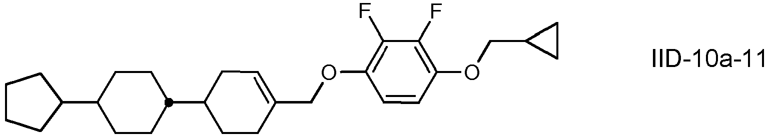

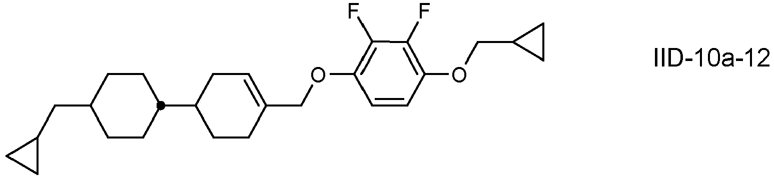

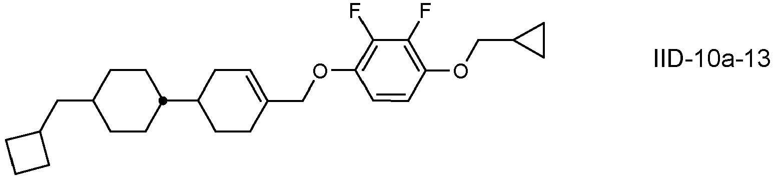

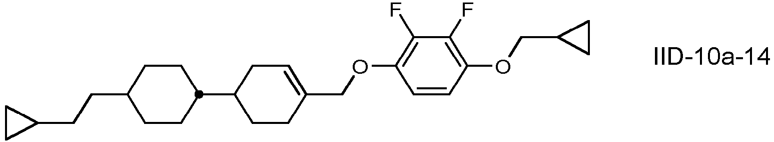

Particularly preferred LC media according to the invention comprise one or more compounds selected from the formulae IIA-2, IIA-8, IIA-10, IIA-16, II-18, IIA-40, IIA-41, IIA-42, IIA-43, IIB-2, IIB-10, IIB-16, IIC-1, and IID-4 and IID-10 or their subformulae.

The proportion of compounds of the formulae IIA and/or IIB in the mixture as a whole is preferably at least 20 % by weight.

Preferably, the LC medium comprises one or more compounds of the formula IIA-2 selected from the following subformulae:

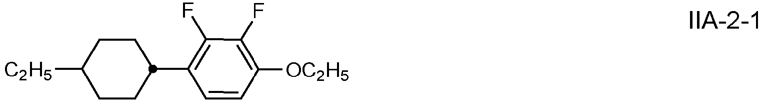

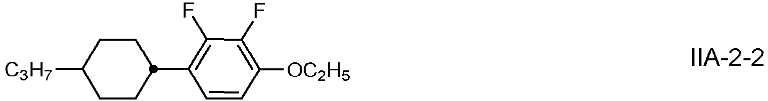

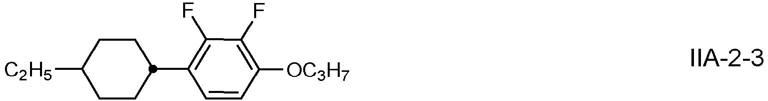

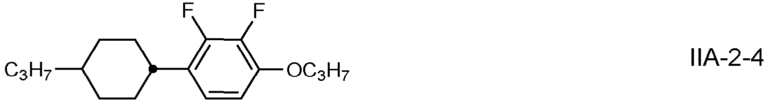

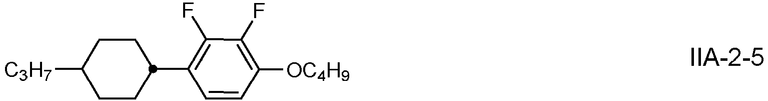

Alternatively, preferably in addition to the compounds of the formulae IIA-2-1 to IIA-2-5, the LC medium comprises one or more compounds of the following formulae:

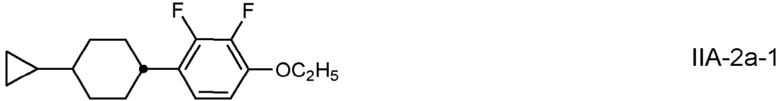

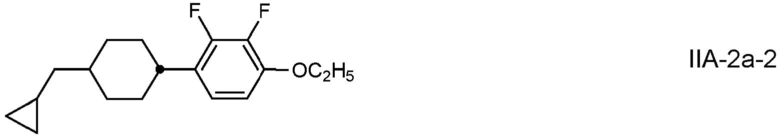

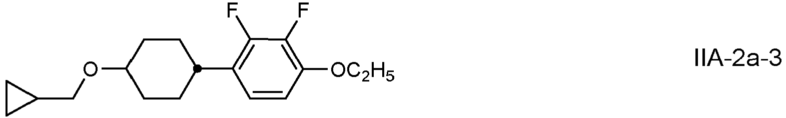

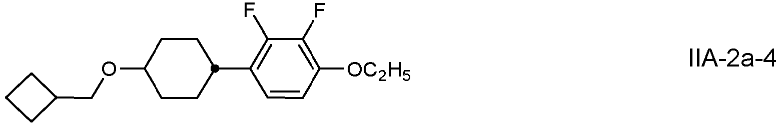

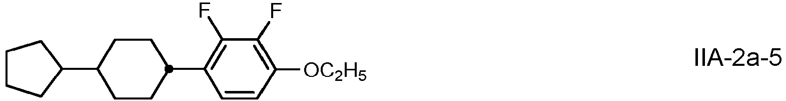

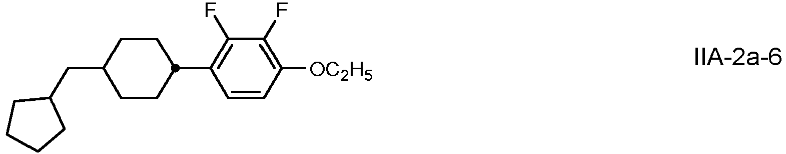

Further preferably, the LC medium comprises one or more compounds of the formula IIA-10 selected from the following sub-formulae:

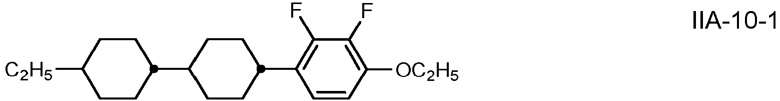

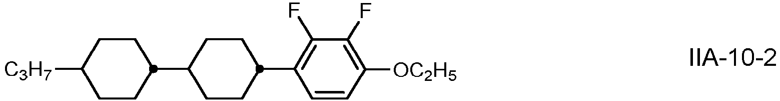

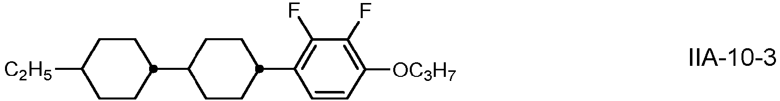

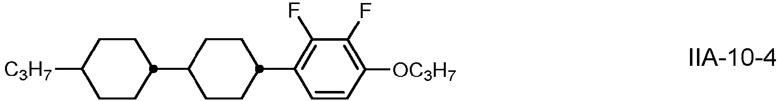

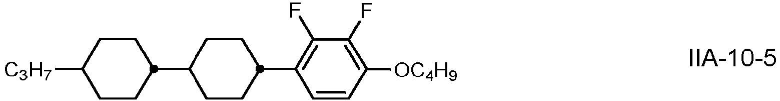

Alternatively, preferably in addition to the compounds of the formulae IIA-10-1 to IIA-10-5, the LC medium comprises one or more compounds of the following formulae:

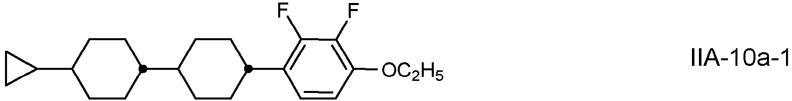

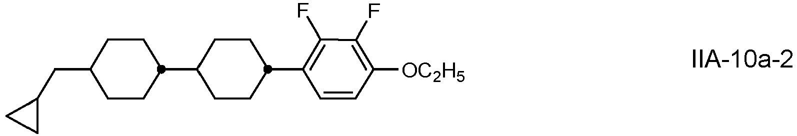

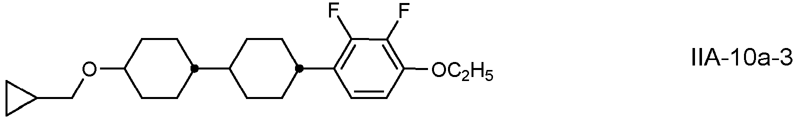

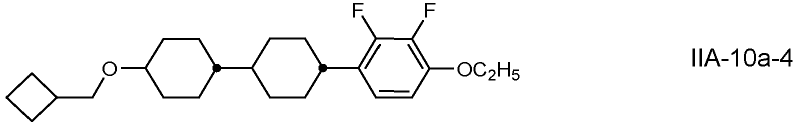

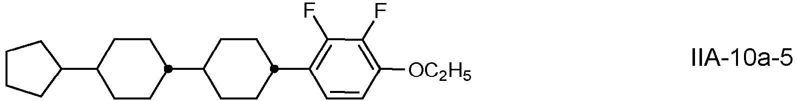

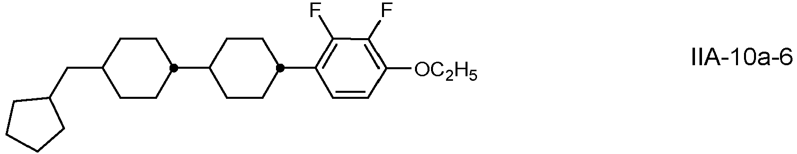

Preferably, the LC medium comprises one or more compounds of the formula IIB-10 selected from the following sub-formulae:

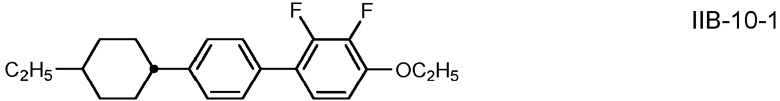

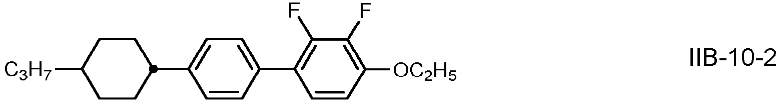

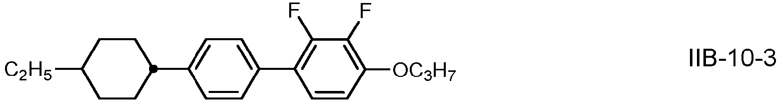

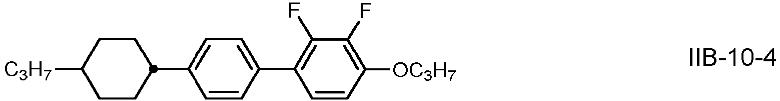

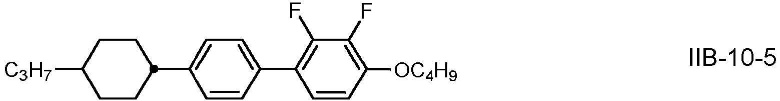

Alternatively, preferably in addition to the compounds of the formulae IIB-10-1 to IIB-10-5, the LC medium comprises one or more compounds of the formulae IIB-10a-1 to IIB-10a-5:

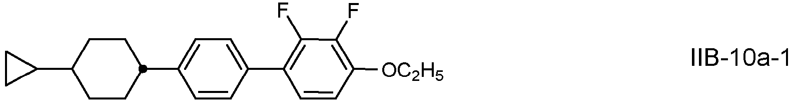

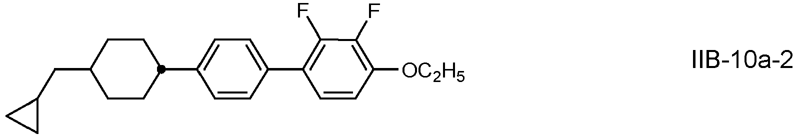

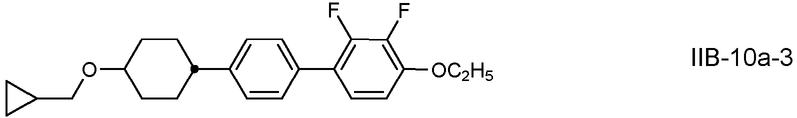

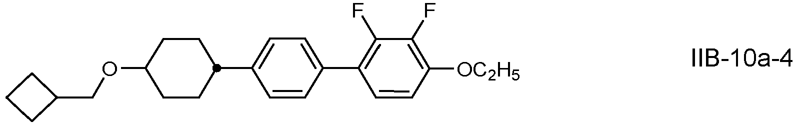

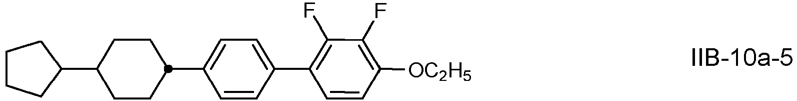

In another preferred embodiment the LC medium comprises one or more compounds of formula III which are different from formula IA-1, 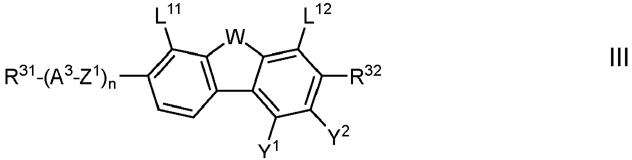 wherein the individual radicals, independently of each other and on each occurrence identically or differently, have the following meanings
- R³¹ R³²: H, an alkyl, alkoxy or alkenyl radical having up to 15 C atoms which is unsubstituted, monosubstituted by F, Cl, CN or CF₃ or at least monosubstituted by halogen, where, in addition, one or more CH₂ groups in these radicals may be replaced by -O-, -S-, 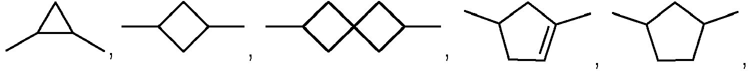 -C≡C-, -CF₂O-, -OCF₂-, -OC-O- or -O-CO- in such a way that O atoms are not linked directly to one another,
- A³: a) a 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N, or
c) a radical selected from the group consisting of spiro[3.3]heptane-2,6-diyl, 1,4-bicyclo[2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,
wherein the radicals a), b) and c) may be mono- or polysubstituted by halogen atoms,
- n: 0, 1 or 2, preferably 0 or 1,
- Z¹: -CO-O-, -O-CO-, -CF₂O- , -OCF₂-, -CH₂O-, -OCH₂-, -CH₂-, - CH₂CH₂-, -(CH₂)₄-, -CH=CH-CH₂O-, -C₂F₄-, -CH₂CF₂-, -CF₂CH₂ -, -CF=CF-, -CH=CF-, -CF=CH-, -CH=CH-, -C≡C- or a single bond,
- L¹¹, L¹²: F, Cl, CF₃ or CHF₂, preferably H or F, most preferably F,
- W: O or S,
- Y¹, Y²: H, F, Cl, CF₃, CHF₂, CH₃ or OCH₃, preferably H, CH₃ or OCH₃, very preferably H.

In the compounds of formula III R³¹ and R³² are preferably selected frm straight-chain alkyl or alkoxy with 1 to 12, preferably 1 to 7 C atoms, straight-chain alkenyl with 2 to 12, preferably 2 to 7 C atoms and cyclic alkyl or alkoxy with 3 to 12, preferably 3 to 8 C atoms.

In a preferred embodiment of the present invention the LC medium comprises one or more compounds of the formula III-1 or III-2, 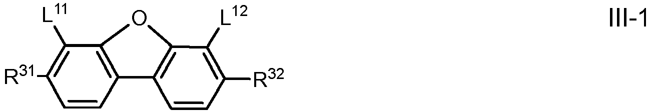 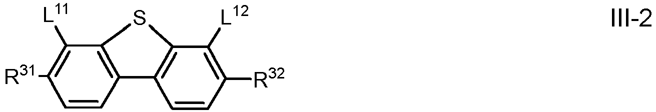 in which the occurring groups have the same meanings as given under formula III above and preferably
- R³¹ and R³²: each, independently of one another, an alkyl, alkenyl or alkoxy radical having up to 15 C atoms, more preferably one or both of them denote an alkoxy radical and
- L¹¹ and L¹²: each preferably denote F.

In another preferred embodiment the LC medium comprises one or more compounds of the formula III-1 selected from the group of compounds of formulae III-1-1 to III-1-10, preferably of formula 111-1-6, 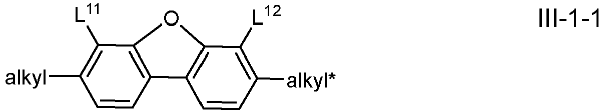 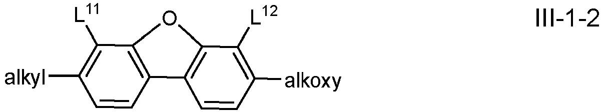 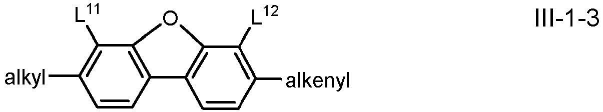 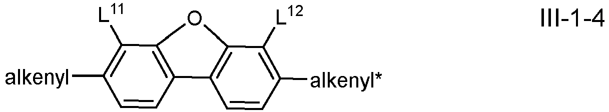 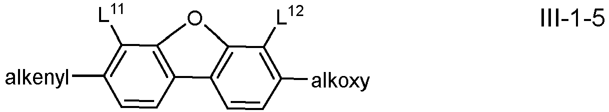 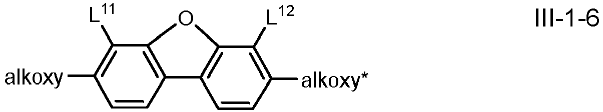 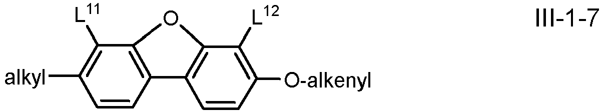 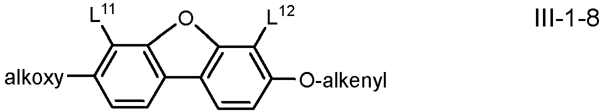 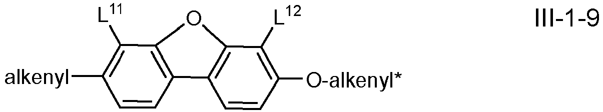 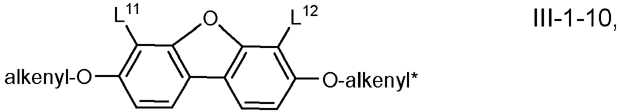 in which alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L¹¹ and L¹² each, independently of one another, denote F or Cl, preferably both F.

In another preferred embodiment the LC medium comprises one or more compounds of the formula III-2 selected from the group of compounds of formulae III-2-1 to III-2-10, preferably of formula III-2-1, 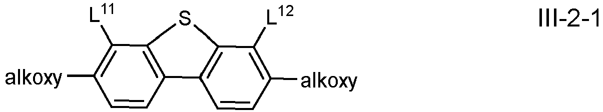 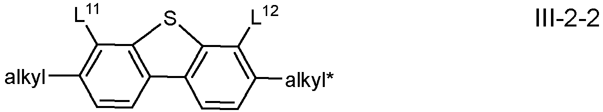 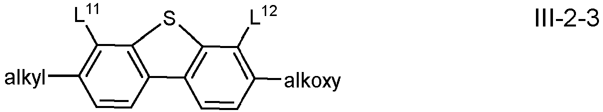 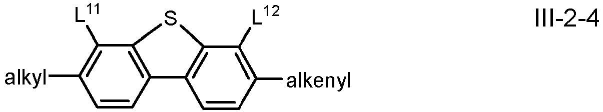 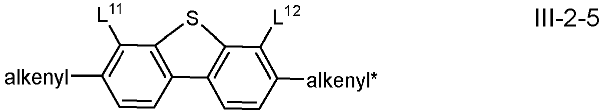 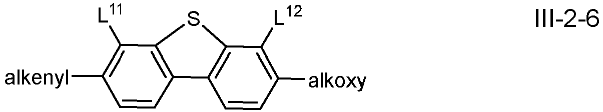 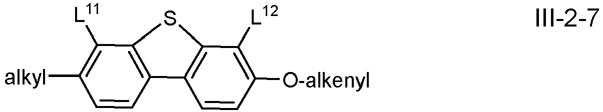 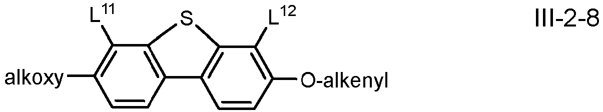 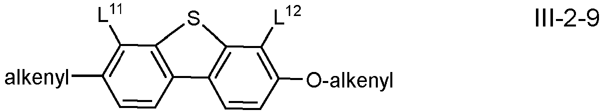 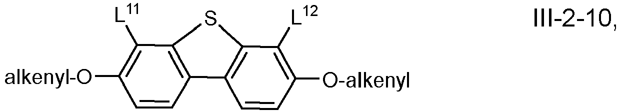 in which alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L¹¹ and L¹² each, independently of one another, denote F or Cl, preferably both F.

Very preferred compounds of formula III-2 are selected from the group consisting of the following subformulae, 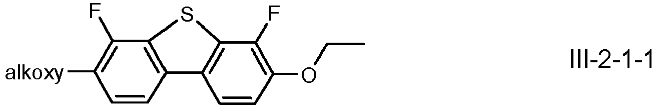 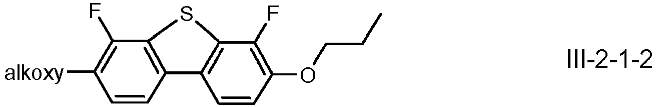 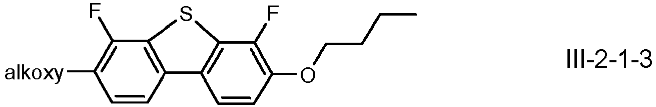 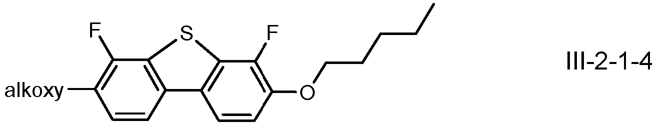 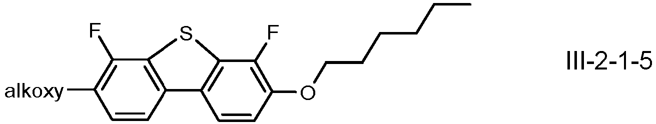 in which alkoxy denotes a straight-chain alkoxy radical having 1-6 C atoms, preferably ethoxy, propoxy, butoxy or pentoxy, very preferaby ethoxy or propoxy.

Very preferred are the compounds of formula III-2-1-3, III-2-1-4 and III-2-1-5.

In another preferred embodiment of the present invention the LC medium comprises one or more compounds of the formula III-3-1 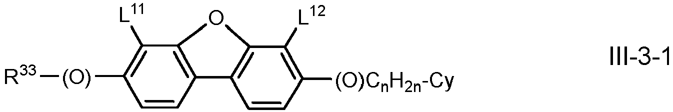 in which L¹¹ and L¹² have the same meanings as given under formula III, (O) denotes O or a single bond,
- R³³: denotes alkyl or alkenyl having up to 7 C atoms or a group Cy-CₘH₂ₘ₊₁-,
- m and n: are, identically or differently, 0, 1, 2, 3, 4, 5 or 6, preferably 1, 2 or 3, very preferably 1, and
- Cy: denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl or cyclopentyl.

The compounds of formula III3-1 are contained in the LC medium either alternatively or additionally to the compounds of formula III, preferably additionally.

Very preferred compounds of the formula III3-1 are the following, 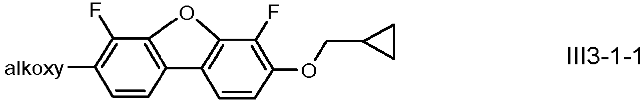 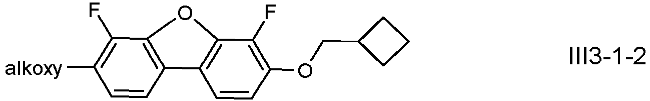 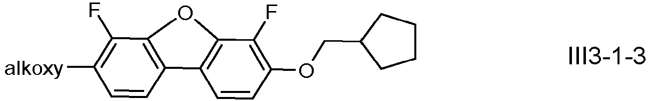 in which alkoxy denotes a straight-chain alkoxy radical having 1-6 C atoms.

In another preferred embodiment of the present invention, the LC medium comprises one or more compounds of the formulae III-4 to III-6, preferably of formula III-5, 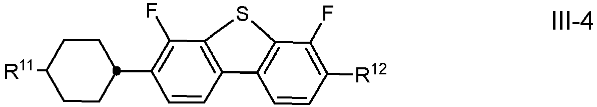 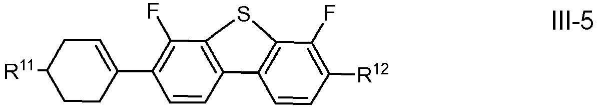 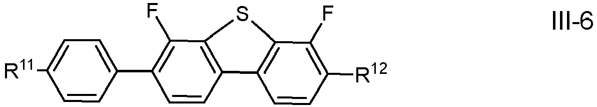 in which the parameters have the meanings given above, R¹¹ preferably denotes straight-chain alkyl and R¹² preferably denotes alkoxy, each having 1 to 7 C atoms.

In another preferred embodiment the LC medium comprises one or more compounds of the formula I selected from the group of compounds of formulae III-7 to III-9, preferably of formula III-8, 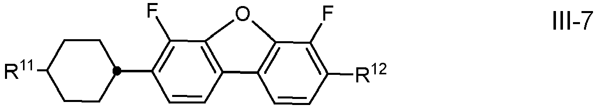 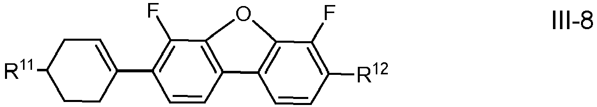 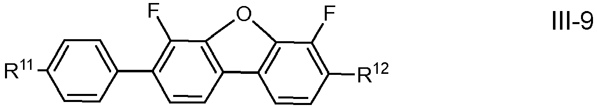 in which the parameters have the meanings given above, R¹¹ preferably denotes straight-chain alkyl and R¹² preferably denotes alkoxy each having 1 to 7 C atoms.

In a preferred embodiment, the LC medium comprises one or more compounds of the formula IV, 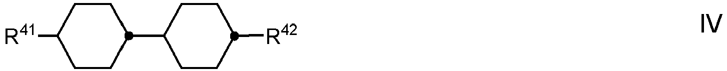 in which
- R⁴¹: denotes an unsubstituted alkyl radical having 1 to 7 C atoms where, in addition, one or more CH₂ groups may be replaced by 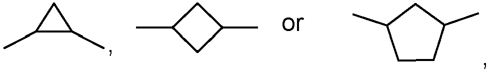 or an unsubstituted alkenyl radical having 2 to 7 C atoms, preferably an n-alkyl radical, particularly preferably having 2, 3, 4 or 5 C atoms, and
- R⁴²: denotes an unsubstituted alkyl radical having 1 to 7 C atoms or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or a 1-propenyl radical and in particular a vinyl radical.

The compounds of the formula IV are preferably selected from the group of the compounds of the formulae IV-1 to IV-3, 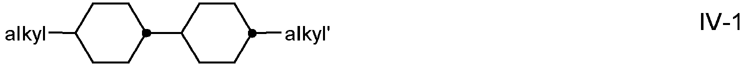 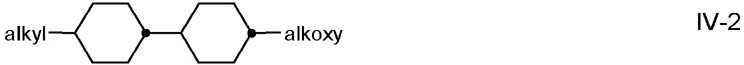 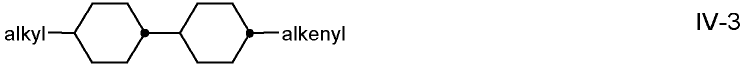 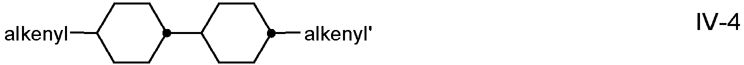 in which
- alkyl and alkyl',: independently of one another, denote alkyl having 1 to 7 C atoms, preferably having 2 to 5 C atoms,
- alkenyl: denotes an alkenyl radical having 2 to 5 C atoms, preferably having 2 to 4 C atoms, particularly preferably 2 C atoms,
- alkenyl': denotes an alkenyl radical having 2 to 5 C atoms, preferably having 2 to 4 C atoms, particularly preferably having 2 to 3 C atoms, and
- alkoxy: denotes alkoxy having 1 to 5 C atoms, preferably having 2 to 4 C atoms.

Preferably, the LC medium comprises one or more compounds selected from the compounds of the formulae IV-1-1 to IV-1-6:

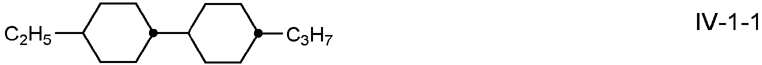

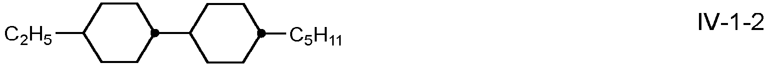

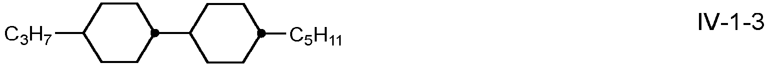

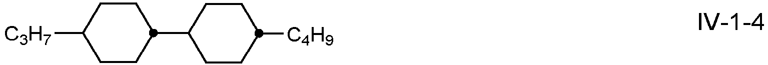

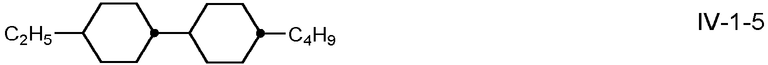

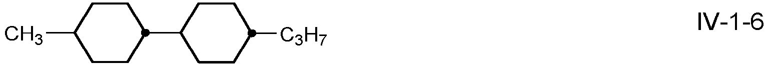

Very preferably, the LC medium according to the invention comprises one or more compounds of the formulae IV-2-1 and/or IV-2-2

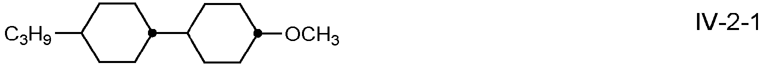

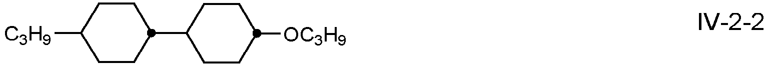

Very preferably, the LC medium according to the invention comprises a compound of formula IV-3, in particular selected from the compounds of the formulae IV-3-1 to IV-3-9:

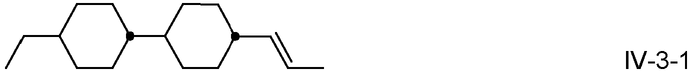

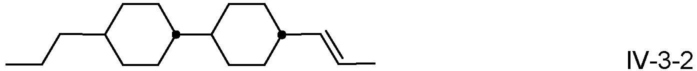

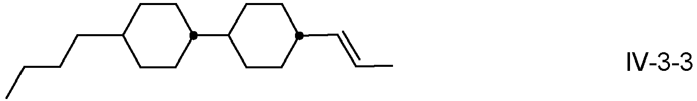

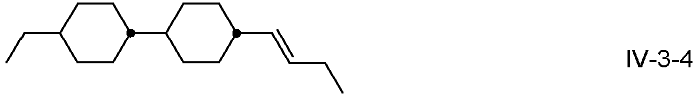

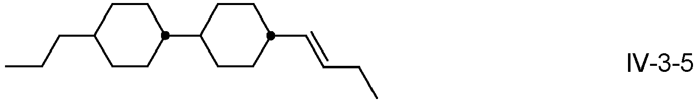

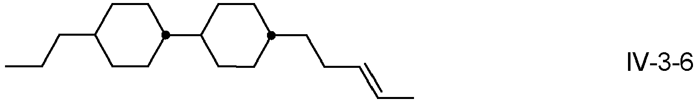

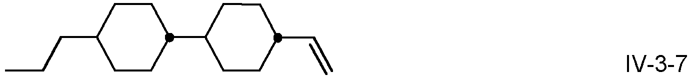

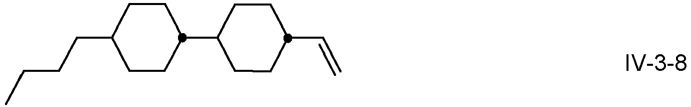

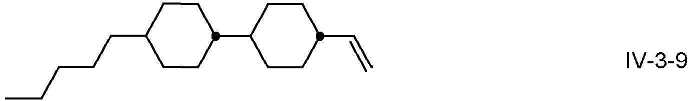

In another preferred embodiment, the LC medium according to the invention comprises one or more compounds of formula IV-3 selected from the compounds of the formulae IV-3-10 to IV-3-27: 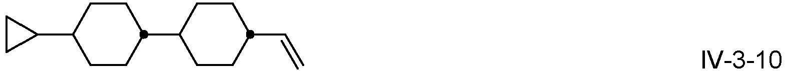 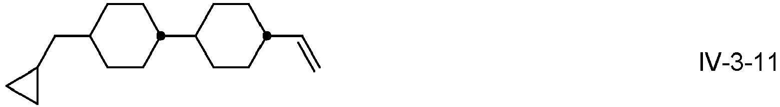 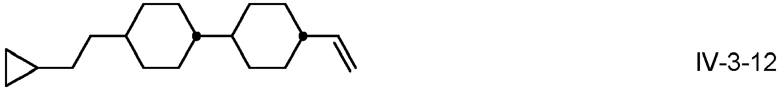 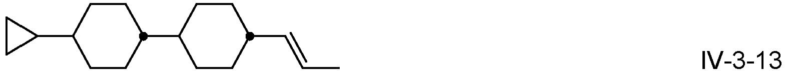 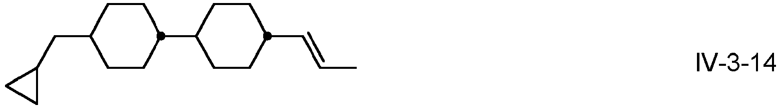 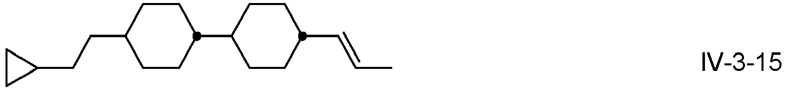 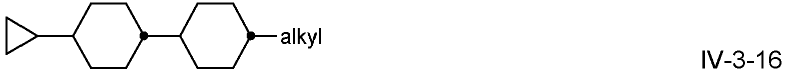 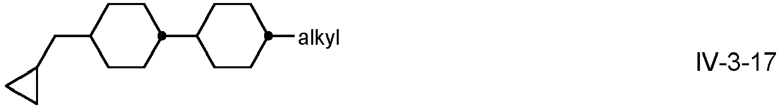 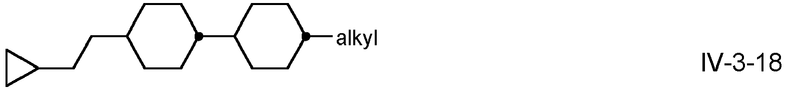 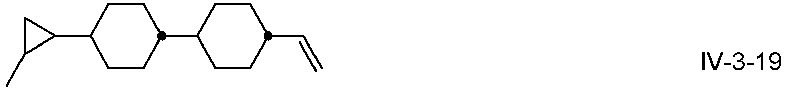 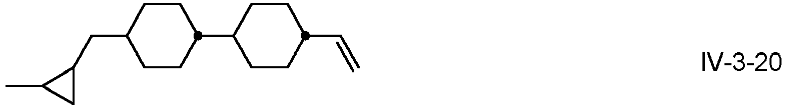 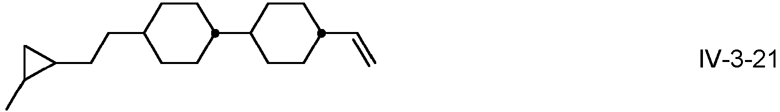 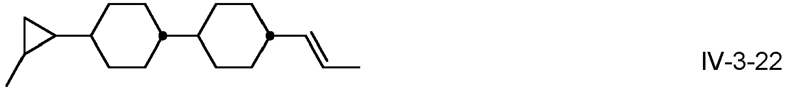 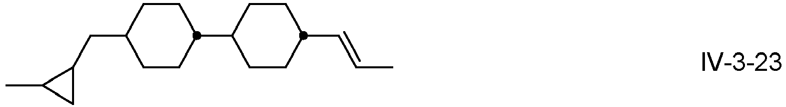 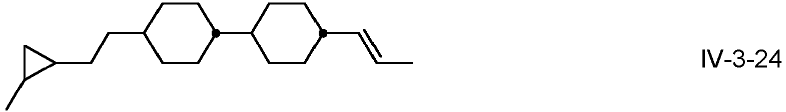 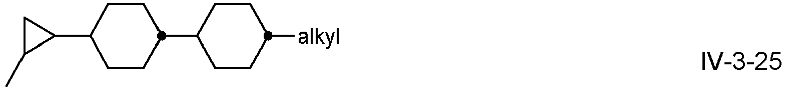 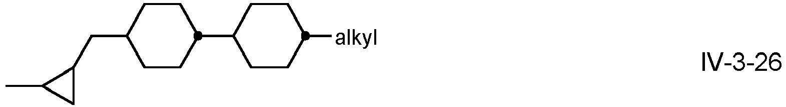 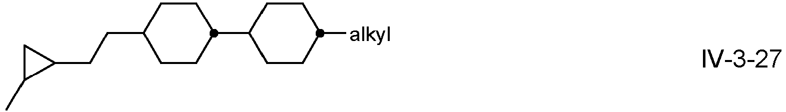 in which alkyl denotes methyl, ethyl, n-propyl, isopropyl, n-butyl, isobutyl, or n-pentyl.

Very preferably, the LC medium according to the invention comprises a compound of formula IV-4, in particular selected from the compounds of the following formulae:

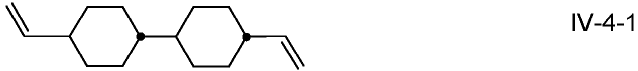

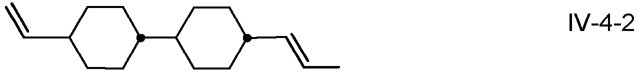

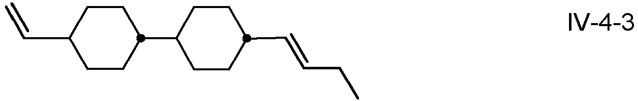

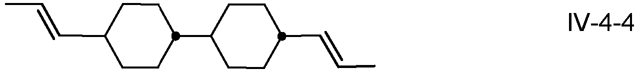

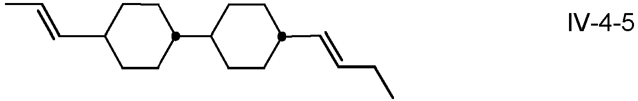

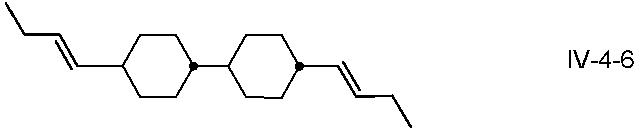

In another preferred embodiment the LC medium comprises one or more compounds of formula IV-4 and its subformulae in which one or both of "alkenyl" and "alkenyl' " denote 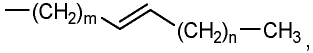 in which m is 0, 1 or 2, and n is 0, 1 or 2, very preferably selected from compounds of formulae IV-4-3 to IV-4-6.

Very preferably, the LC medium according to the invention comprises one or more compounds of the formula IV-1 or its subformulae and/or one or more compounds of the formula IV-3 or its subformulae and/or one or more compounds of the formula IV-4 or its subformulae, where the total concentration of these compounds of the formula IV-1 is in the range from 1% to 30%.

The LC medium according to the invention preferably additionally comprises one or more compounds of the formula IVa, 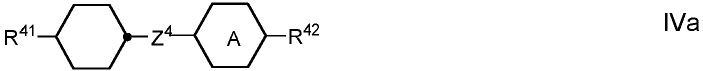 in which
- R⁴¹ and R⁴²: each, independently of one another, denote a straight-chain alkyl, alkoxy, alkenyl or alkoxyalkyl radical having up to 12 C atoms, 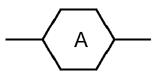 denotes 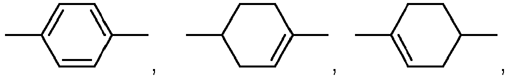 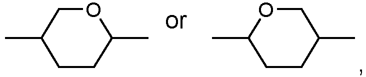
- Z⁴: denotes a single bond, -CH₂CH₂-, -CH=CH-, -CF₂O-, -OCF₂-, -CH₂O-, -OCH₂-, -COO-, -OCO-, -C₂F₄-, -C₄H₈- or -CF=CF-.

Preferred compounds of the formula IVa are indicated below: 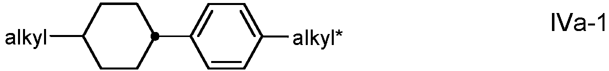 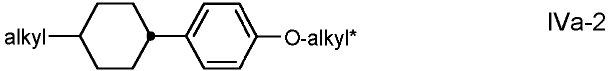 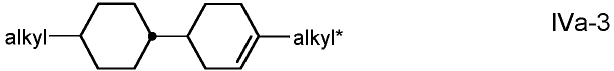 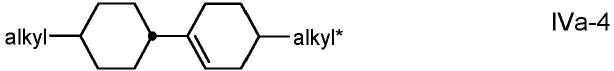 in which alkyl and alkyl* each, independently of one another, denote a straight-chain alkyl radical having 1 to 6 C atoms.

The LC medium according to the invention preferably comprises at least one compound of the formula IVa-1 and/or formula IVa-2.

The proportion of compounds of the formula IVa in the mixture as a whole is preferably at least 5 % by weight

Preferably, the LC medium comprises one or more compounds of formula IVb-1 to IVb-3 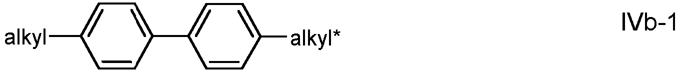 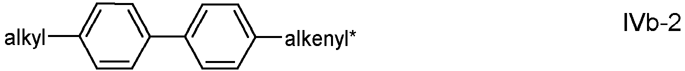 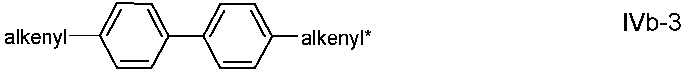 in which
- alkyl and alkyl*: each, independently of one another, denote a straight-chain alkyl radical having 1 to 6 C atoms, and
- alkenyl and alkenyl*: each, independently of one another, denote a straight-chain alkenyl radical having 2 to 6 C atoms.

The proportion of the compounds of the formulae IV-1 to IV-3 in the mixture as a whole is preferably at least 3 % by weight, in particular ≥ 5 % by weight.

Of the compounds of the formulae IVb-1 to IVb-3, the compounds of the formula IVb-2 are particularly preferred.

Particularly preferred compounds of the formulae IV-1 to IV-3 are selected from the group consisting of the following formulae 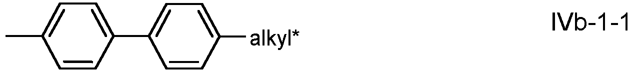 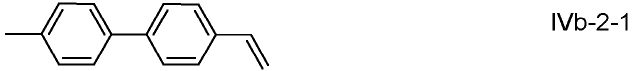 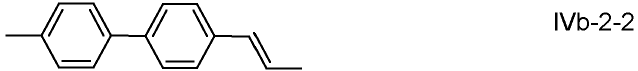 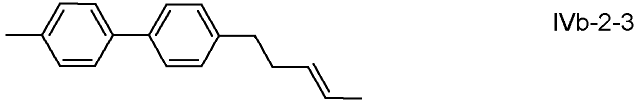 in which alkyl* denotes an alkyl radical having 1 to 6 C atoms and preferably denotes n-propyl.

The LC medium according to the invention particularly preferably comprises one or more compounds of the formulae IVb-1-1 and/or IVb-2-3.

In another preferred embodiment, the LC medium according to the invention comprises one or more compounds of formula V 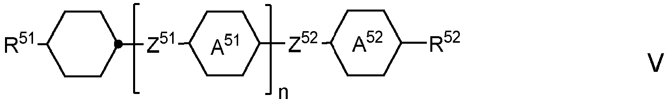 in which
- R⁵¹ and R⁵²: independently of one another, denote H, an alkyl, alkoxy or alkenyl radical having up to 15 C atoms which is unsubstituted, monosubstituted by F, Cl, CN or CF₃ or at least monosubstituted by halogen, where, in addition, one or more CH₂ groups in these radicals may be replaced by -O-, -S-,-C≡C-, -CF₂O-, -OCF₂-, -OC-O-, -O-CO- 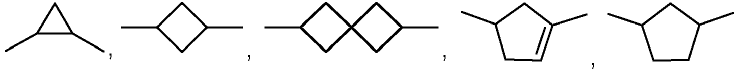 in such a way that O atoms are not linked directly to one another, and preferably denote alkyl having 1 to 7 C atoms, preferably n-alkyl, particularly preferably n-alkyl having 1 to 5 C atoms, alkoxy having 1 to 6 C atoms, preferably n-alkoxy, particularly preferably n-alkoxy having 2 to 5 C atoms, alkoxyalkyl, alkenyl or alkenyloxy having 2 to 7 C atoms, preferably having 2 to 4 C atoms, preferably alkenyloxy, identically or differently, denote 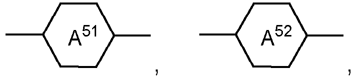 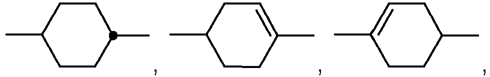 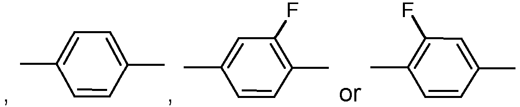 in which 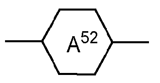 preferably denotes 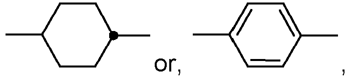
- Z⁵¹ , Z⁵²: each, independently of one another, denote -CH₂-CH₂-, -CH₂-O-,-CH=CH-, -C≡C-, -COO- or a single bond, preferably - CH₂-CH₂-, -CH₂-O- or a single bond and particularly preferably a single bond, and
- n: is 1 or 2.

The compounds of formula V are preferably selected from the compounds of the formulae V-1 to V-17: 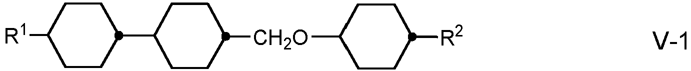 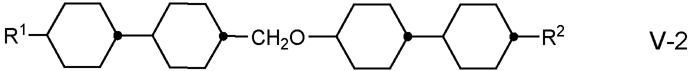 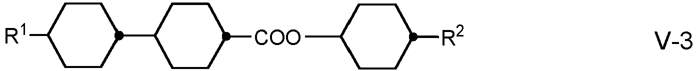 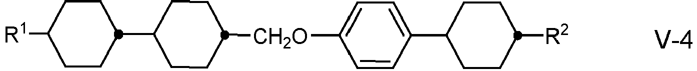 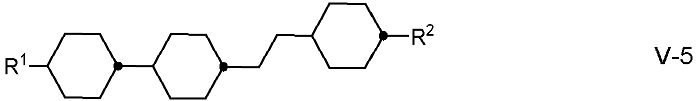 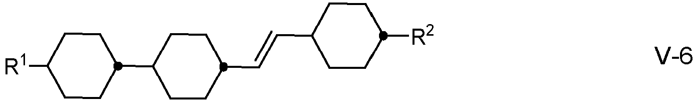 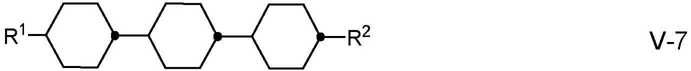 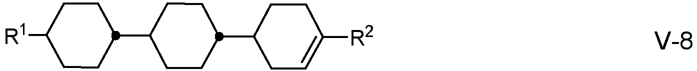 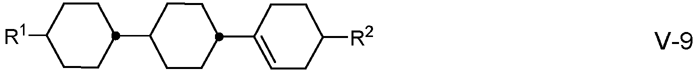 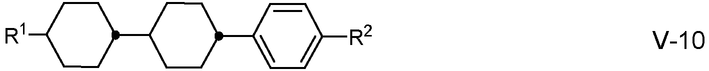 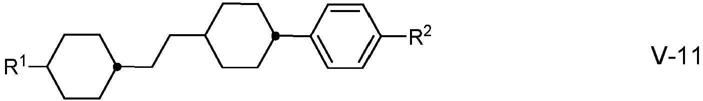 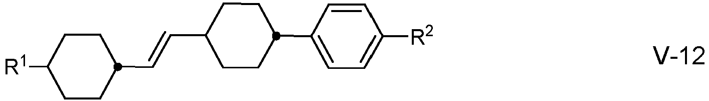 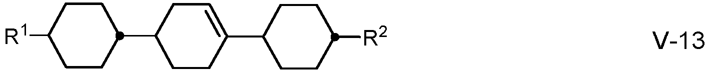 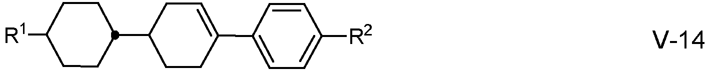 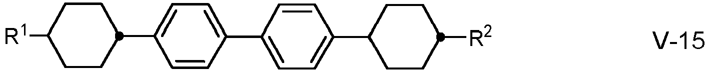 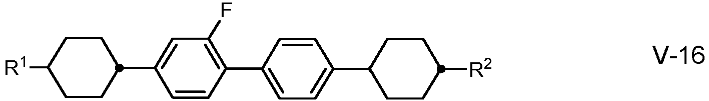 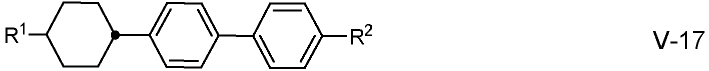 in which R¹ and R² have the meanings indicated for R⁵¹ and R⁵² above.

R¹ and R² preferably each, independently of one another, denote straight-chain alkyl or alkenyl.

Preferred LC media comprise one or more compounds of the formulae V-1, V-3, V-4, V-6, V-7, V-10, V-11, V-12, V-14, V-15, and/or V-16

LC media according to the invention very particularly preferably comprise the compounds of the formula V-10 and/or IV-1, in particular in amounts of 5 to 30 %.

Preferred compounds of the formulae V-10 are indicated below:

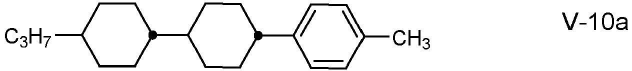

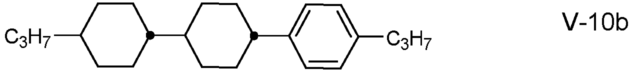

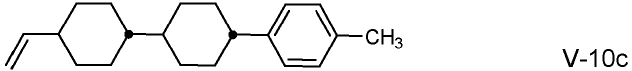

The LC medium according to the invention particularly preferably comprises the tricyclic compounds of the formula V-10a and/or of the formula V-10b in combination with one or more bicyclic compounds of the formulae IV-1 The total proportion of the compounds of the formulae V-10a and/or V-10b in combination with one or more compounds selected from the bicyclohexyl compounds of the formula IV-1 is 5 to 40 %, very particularly preferably 15 to 35 %.

Particularly preferred LC media comprise the compounds V-10a and/or IV-1-1

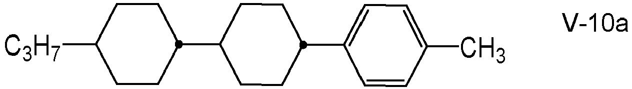

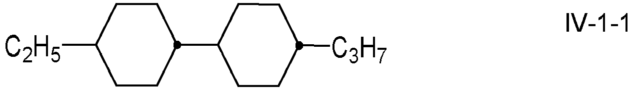

The compounds V-10a and IV-1-1 are preferably present in the mixture in a concentration of 5 to 30 %, very preferably 10 to 25 %, based on the mixture as a whole.

Preferred LC media comprise at least one compound selected from the group of the compounds 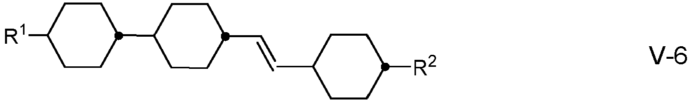 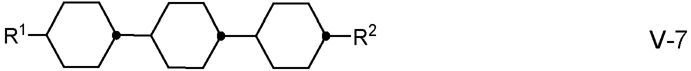 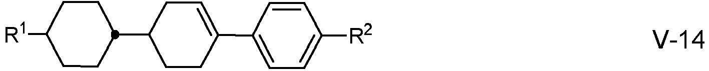 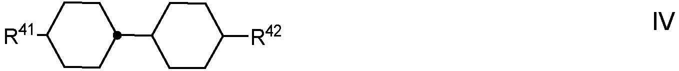 in which R¹, R², R⁴¹ and R⁴² have the meanings indicated above. Preferably in the compounds V-6, V-7 and IV, R¹ and R⁴¹ denotes alkyl or alkenyl having 1 to 6 or 2 to 6 C atoms, respectively, and R² and R⁴² denotes alkenyl having 2 to 6 C atoms. Preferably in the compounds V-14, R¹ denotes alkyl or alkenyl having 1 to 6 or 2 to 6 C atoms and R² denotes alkyl having 1 to 6 C atoms.

In another preferred embodiment the LC medium according to the invention comprises one or more compounds of the formula V-7, preferably selected from the compounds of the formulae V-7a to V-7e: 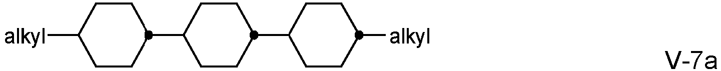 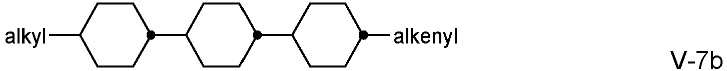 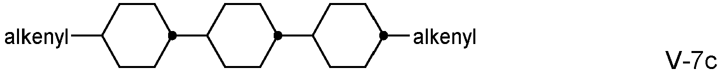 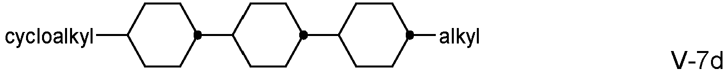 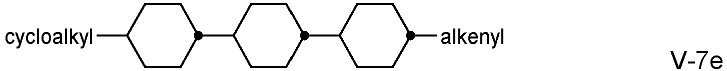 in which alkyl denotes an alkyl group having 1 to 7 C atoms, alkenyl denotes an alkenyl group having 2 to 7 C atoms, and cycloalkyl denotes a cyclic alkyl group having 3 to 12 C atoms, preferably cyclopropyl, cyclobutyl, cyclopentyl, cyclopropylalkyl, cyclobutylalkyl or cyclopentylalkyl.

Very preferred compounds of the formulae V-7a to V-7e are selected from the compounds of the formulae V7-b1 to V7-b3, V-7d-1 to V-7d-8 and V-7e-1 to V-7e-12. 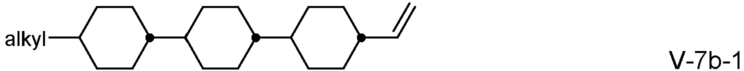 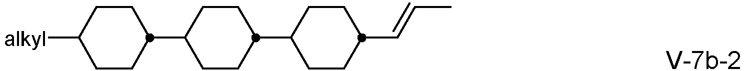 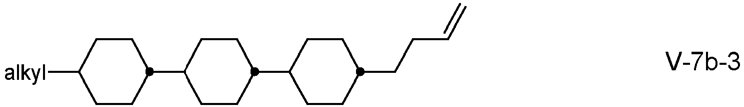 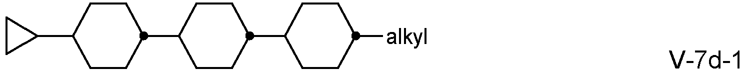 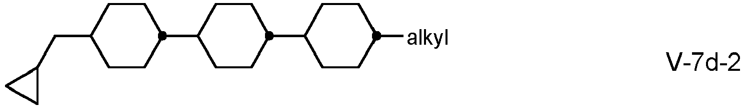 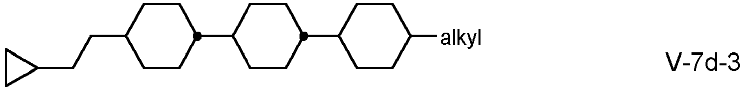 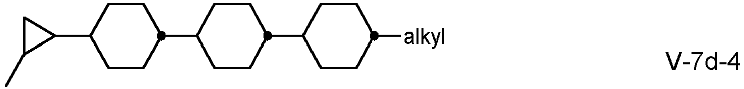 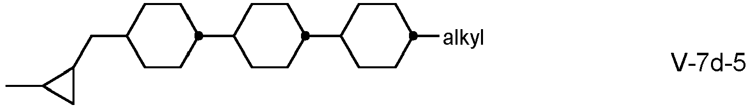 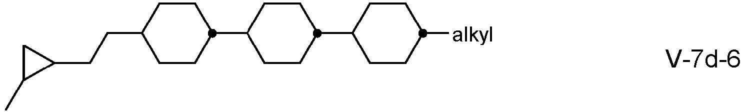 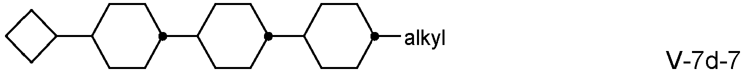 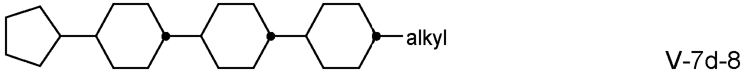 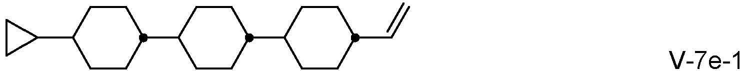 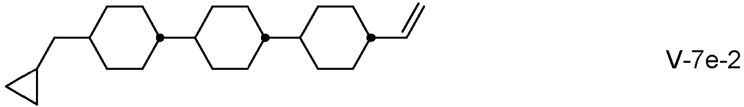 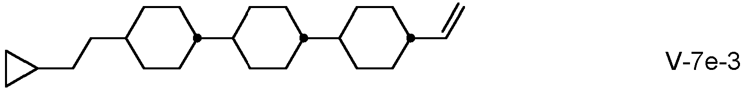 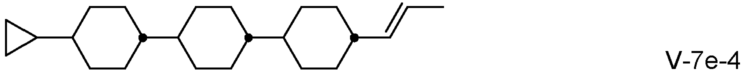 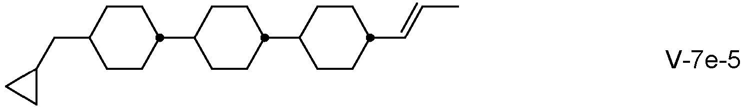 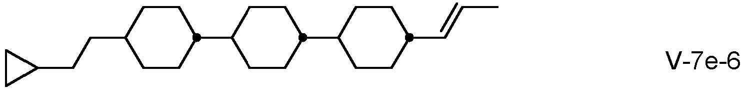 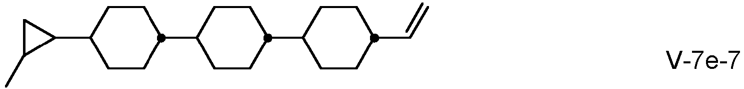 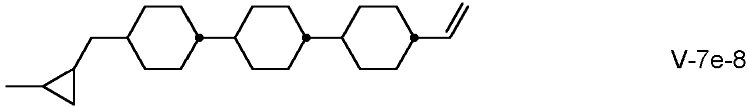 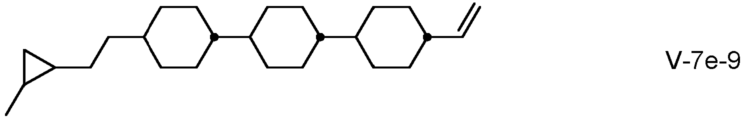 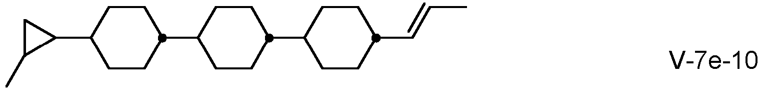 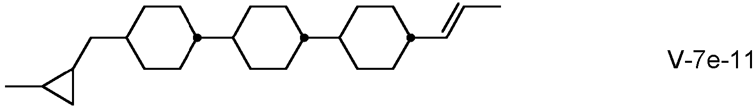 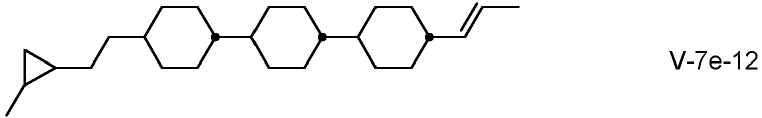 in which alkyl denotes ethyl, n-propyl, n-butyl or n-pentyl, preferably n-propyl.

Further preferred are compounds of formula V, wherein R⁵¹ and R⁵² independently of one another denote straight-chain alkyl having 1 to 7 C atoms or alkenyl having 2 to 7 C atoms.

In a preferred embodiment of the present invention the LC medium additionally comprises one or more compounds of the formulae VI-1 to VI-25, 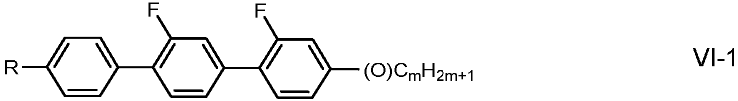 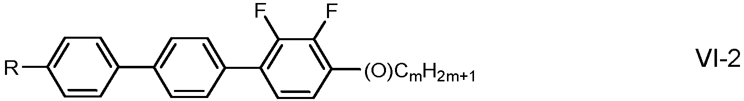 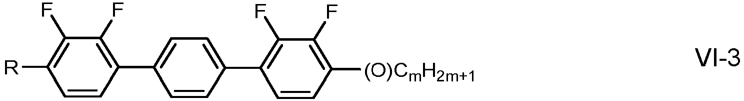 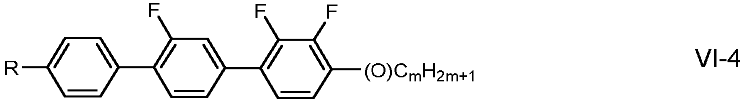 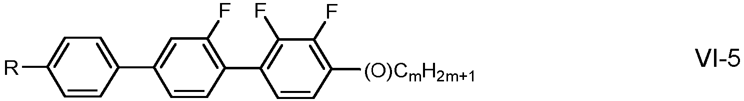 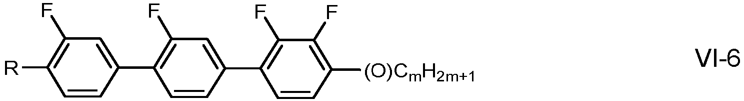 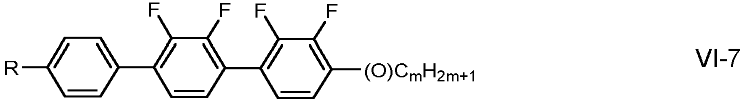 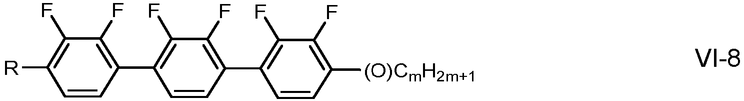 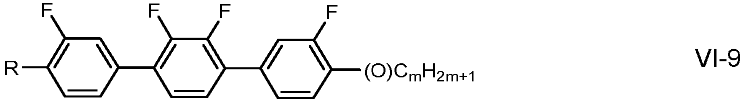 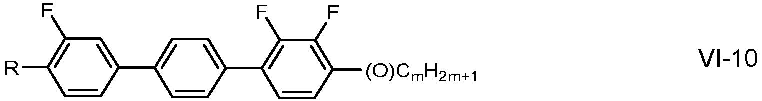 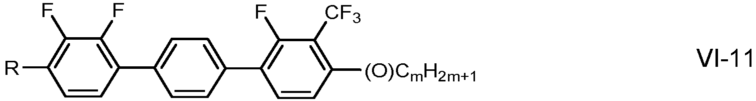 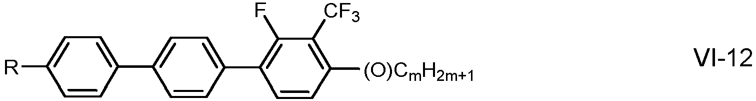 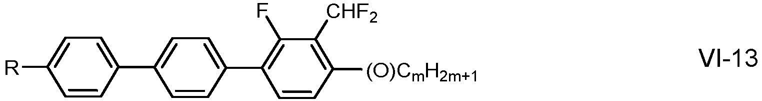 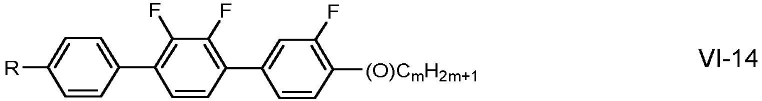 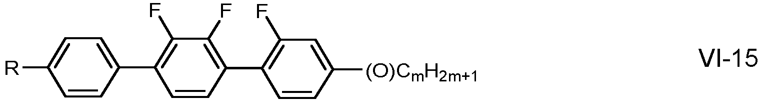 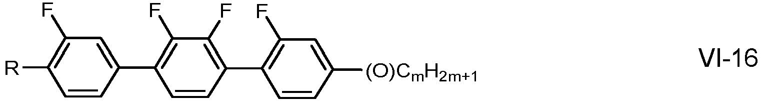 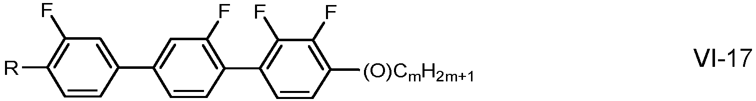 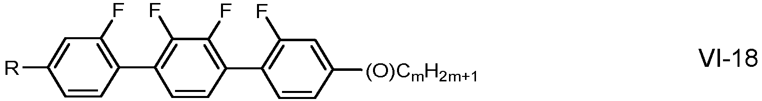 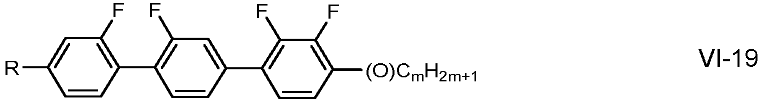 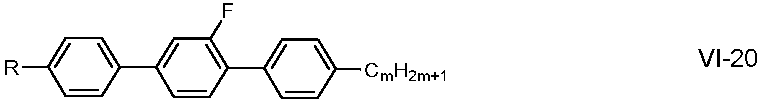 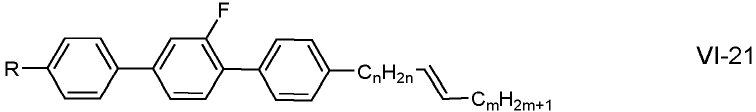 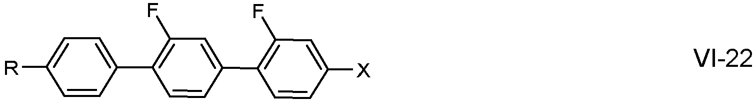 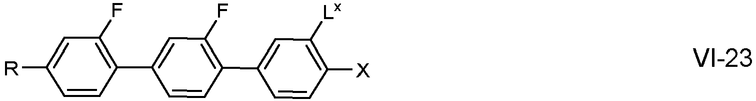 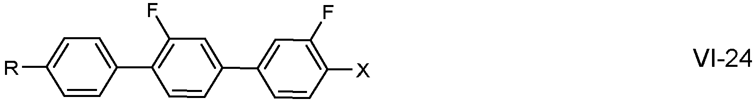 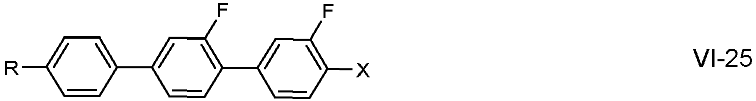 in which
R denotes a straight-chain alkyl or alkoxy radical having 1 to 6 C atoms, (O) denotes -O- or a single bond, X denotes F, Cl, OCF₃ or OCHF₂, L^{x} denotes H or F, m is 0, 1, 2, 3, 4, 5 or 6 and n is 0, 1, 2, 3 or 4.

R preferably denotes methyl, ethyl, propyl, butyl, pentyl, hexyl, methoxy, ethoxy, propoxy, butoxy, pentoxy.

X preferably denotes F or OCH₃, very preferably F.

The LC medium according to the invention preferably comprises the terphenyls of the formulae VI-1 to VI-25 in amounts of 2 to 30 % by weight, in particular 5 to 20 % by weight.

Particular preference is given to compounds of the formulae VI-1, VI-2, VI-4, VI-20, VI-21, and VI-22 wherein X denotes F. In these compounds, R preferably denotes alkyl, furthermore alkoxy, each having 1 to 5 C atoms. In the compounds of the formula VI-20, R preferably denotes alkyl or alkenyl, in particular alkyl. In the compounds of the formula VI-21, R preferably denotes alkyl. In the compounds of the formulae VI-22 to VI-25, X preferably denotes F.

The terphenyls of formula VI-1 to VI-25 are preferably employed in the LC media according to the invention if the Δn value of the mixture is to be ≥ 0.1. Preferred LC media comprise 2 to 20 % by weight of one or more terphenyl compounds selected from the group of the compounds of formulae VI-1 to VI-25.

In another preferred embodiment of the present invention the LC medium additionally comprises one or more compounds of the formulae VII-1 to VII-9 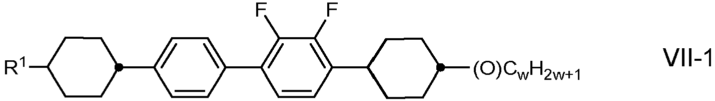 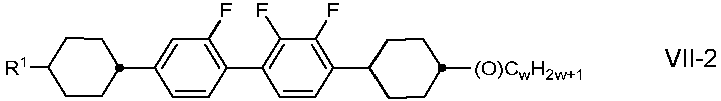 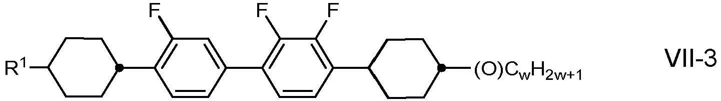 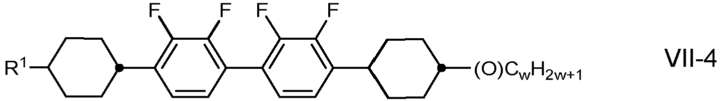 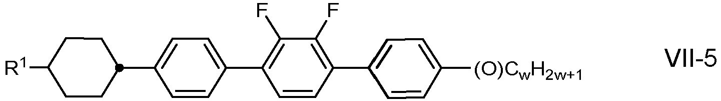 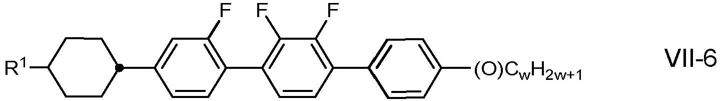 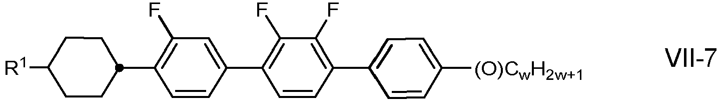 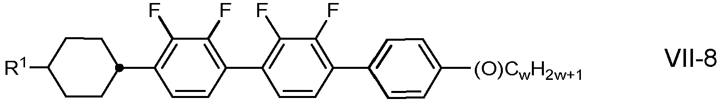 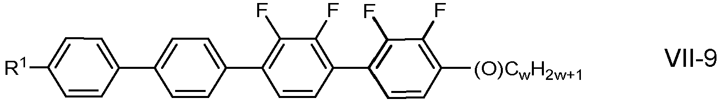 in which
- R¹: each, independently of one another, have one of the meanings indicated for R²¹ in formula IIA, and
- w and x: each, independently of one another, denote 1 to 6.

Particular preference is given to LC media comprising at least one compound of the formula VII-9.

LC medium comprising one or more substances which contain a tetrahydronaphthyl or naphthyl unit, such as, for example, the compounds of the formulae N-1 to N-5, 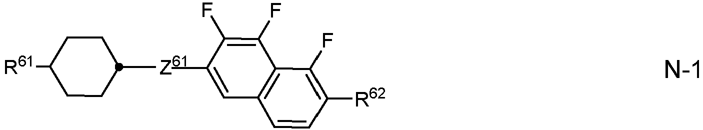 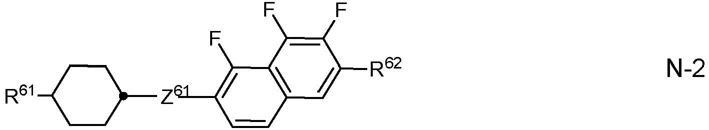 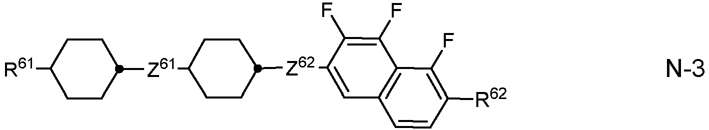 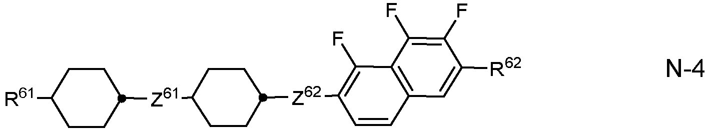 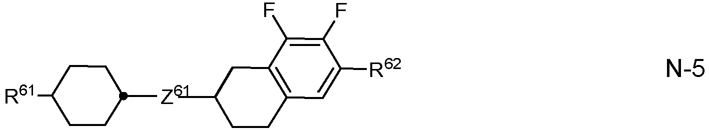 in which R⁶¹ and R⁶² each, independently of one another, have the meanings indicated for R²¹, preferably denote straight-chain alkyl, straight-chain alkoxy or straight-chain alkenyl, and
- Z⁶¹ and Z⁶²: each, independently of one another, denote -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- or a single bond.

c) LC medium comprising one or more compounds selected from the group of the difluorodibenzochroman compounds of the formula BC, chromans of the formula CR, and fluorinated phenanthrenes of the formulae PH-1 and PH-2, 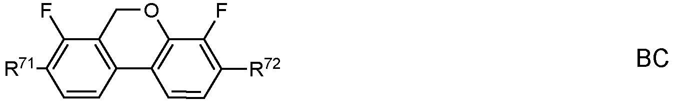 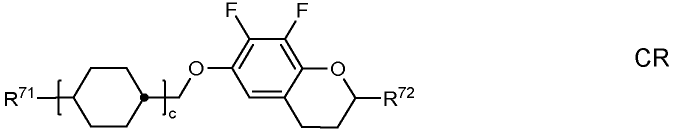 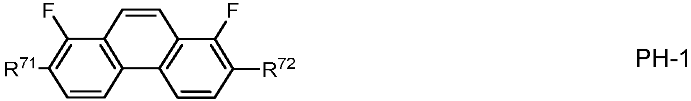 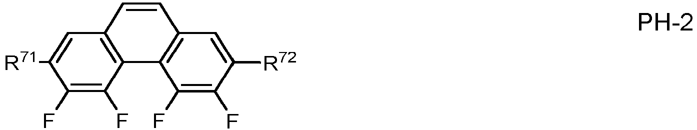 in which
R⁷¹ and R⁷² each, independently of one another, have the meaning of R²¹ and c is 0, 1 or 2. R⁷¹ and R⁷² preferably, independently of one another, denote alkyl or alkoxy having 1 to 6 C atoms.

The LC medium according to the invention preferably comprises the compounds of the formulae BC, CR, PH-1, PH-2 in amounts of 3 to 20 % by weight, in particular in amounts of 3 to 15 % by weight.

Particularly preferred compounds of the formulae BC and CR are the compounds BC-1 to BC-7 and CR-1 to CR-5, 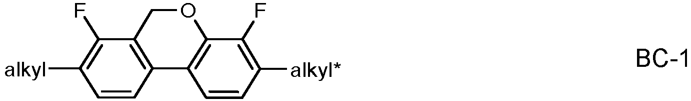 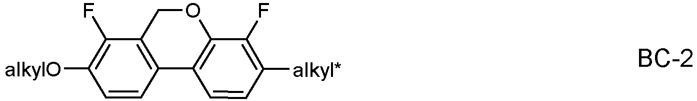 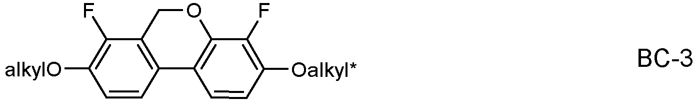 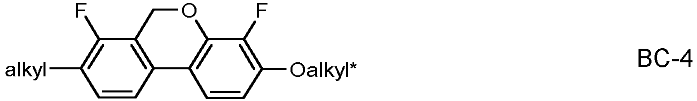 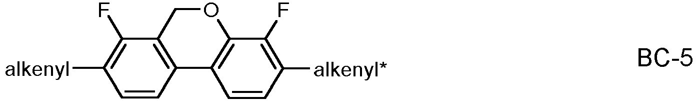 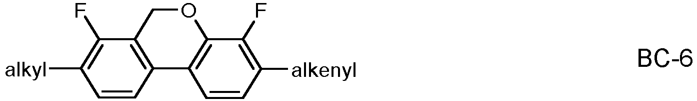 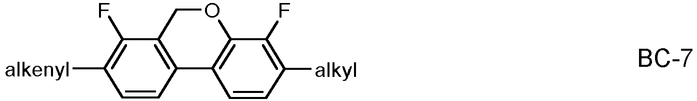 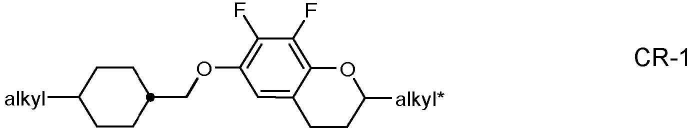 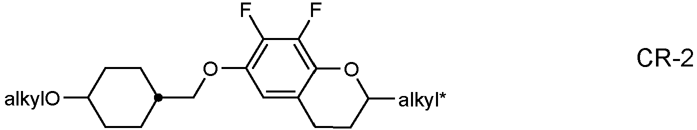 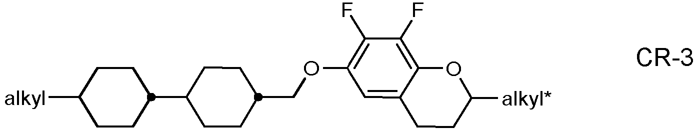 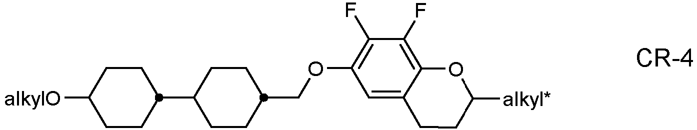 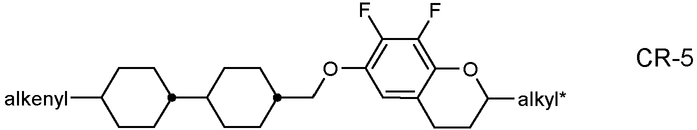 in which
- alkyl and alkyl*: each, independently of one another, denote a straight-chain alkyl radical having 1 to 6 C atoms, and
- alkenyl and alkenyl*: each, independently of one another, denote a straight-chain alkenyl radical having 2 to 6 C atoms.

Very particular preference is given to an LC medium comprising one, two or three compounds of the formula BC-2, BF-1 and/or BF-2.

d) LC medium comprising one or more indane compounds of the formula In, 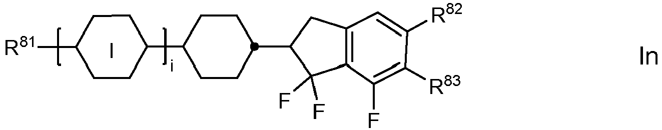 in which
- R⁸¹ , R⁸², R⁸³: each, independently of one another, denote a straight-chain alkyl, alkoxy, alkoxyalkyl or alkenyl radical having 1 to 6 C atoms,
- R⁸² and R⁸³: may also denote halogen, preferably F, 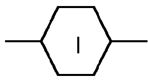 denotes 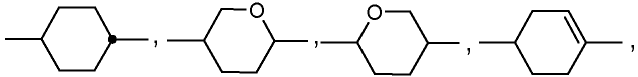 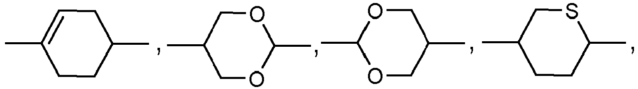 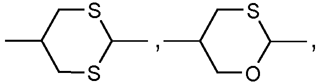
- i: denotes 0, 1 or 2.

Preferred compounds of the formula In are the compounds of the formulae In-1 to In-16 indicated below:

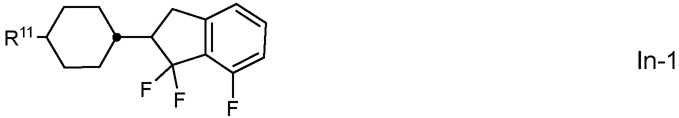

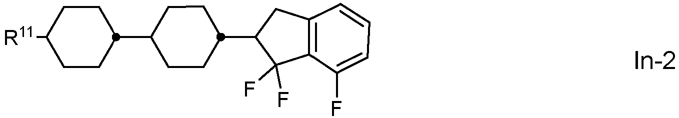

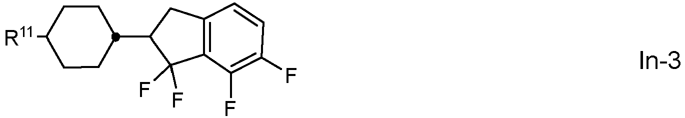

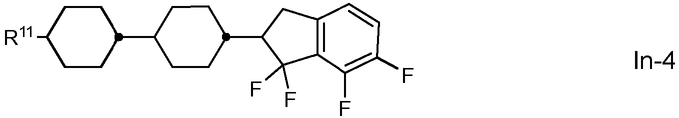

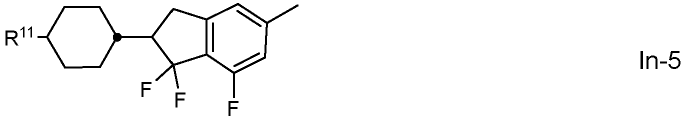

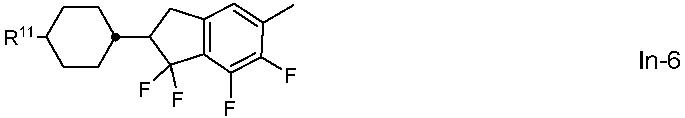

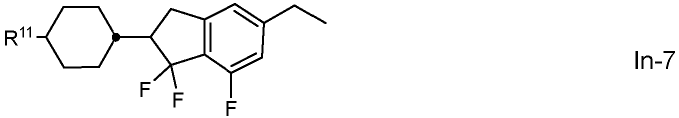

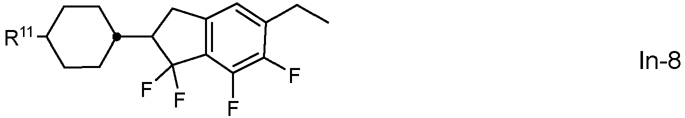

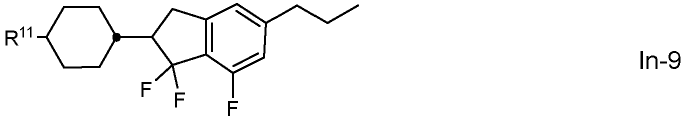

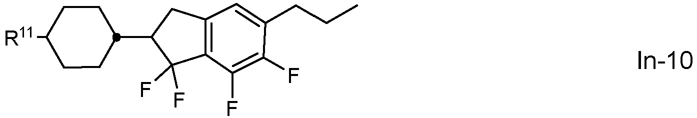

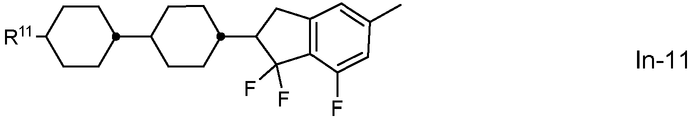

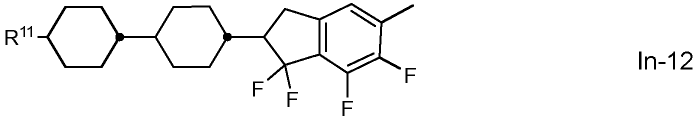

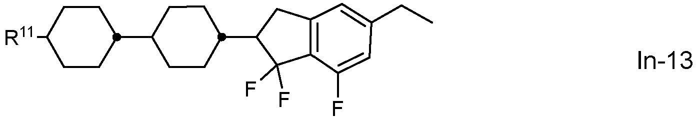

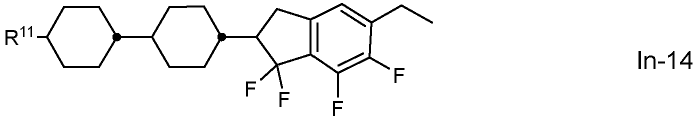

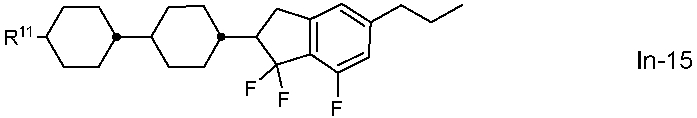

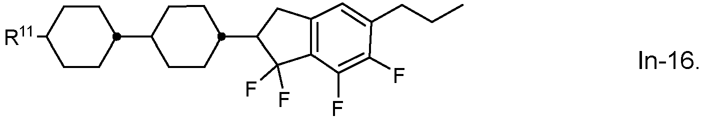

Particular preference is given to the compounds of the formulae In-1, In-2, In-3 and In-4.

The compounds of the formula In and the sub-formulae In-1 to In-16 are preferably employed in the LC media according to the invention in concentrations ≥ 5 % by weight, in particular 5 to 30 % by weight and very particularly preferably 5 to 25 % by weight.

e) LC medium comprising one or more compounds of the formulae L-1 to L-8, 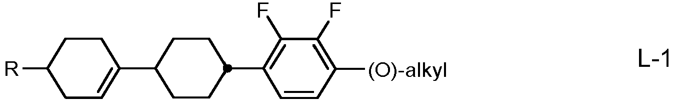 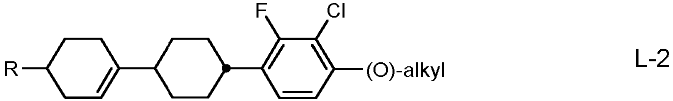 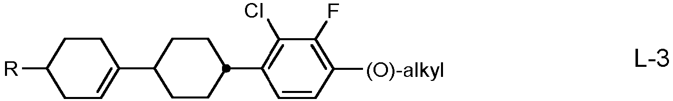 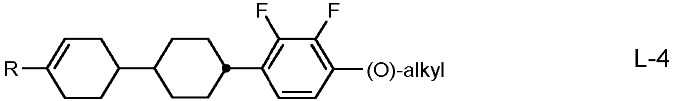 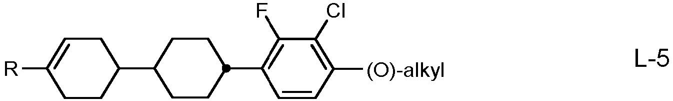 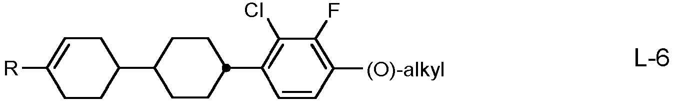 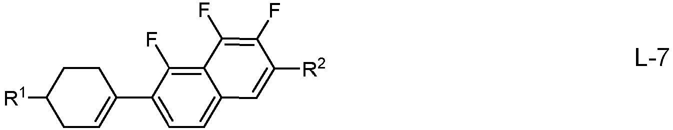 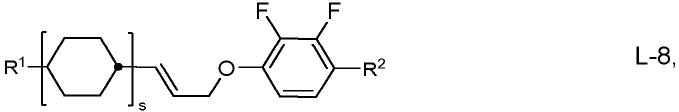 in which
R, R¹ and R² each, independently of one another, have the meanings indicated for R²¹ in formula IIA above, and alkyl denotes an alkyl radical having 1 to 6 C atoms. The parameter s denotes 1 or 2.

The compounds of the formulae L-1 to L8 are preferably employed in concentrations of 5 to 15 % by weight, in particular 5 to 12 % by weight and very particularly preferably 8 to 10 % by weight.

f) Preferred LC media additionally comprise one or more compounds of formula IIA-Y 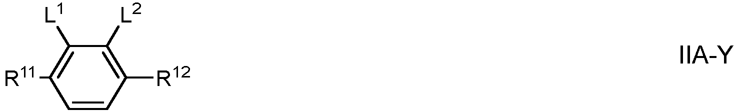 in which R¹¹ and R¹² have one of the meanings given for R²¹ in formula IIA above, and L¹ and L², identically or differently, denote F or Cl.

Preferred compounds of the formula IIA-Y are selected from the group consisting of the following subformulae 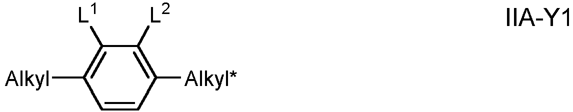 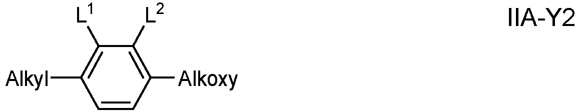 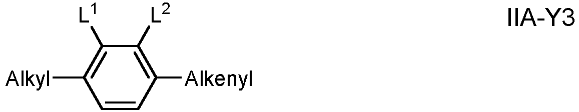 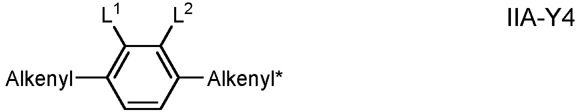 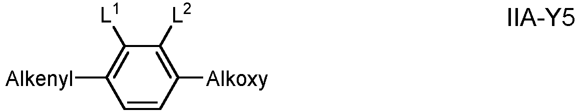 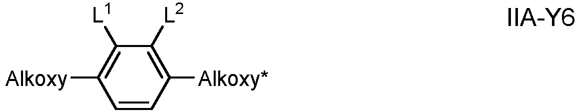 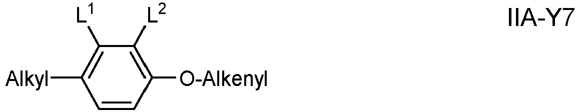 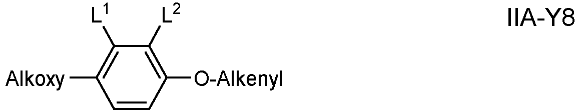 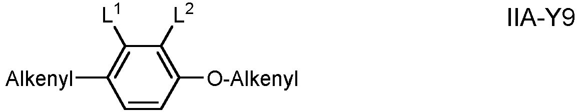 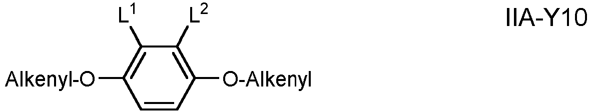 in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred compounds of the formula IIA-Y are selected from the group consisting of following subformulae: 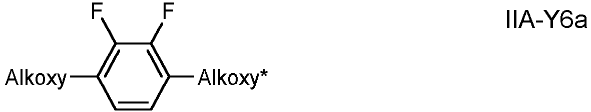 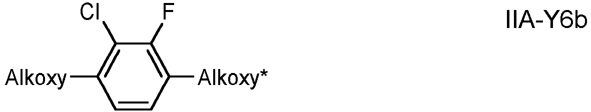 in which Alkoxy and Alkoxy* have the meanings defined above and preferably denote methoxy, ethoxy, n- propyloxy, n-butyloxy or n-pentyloxy.

g) LC medium comprising one or more quaterphenyl compounds selected from the following formula: 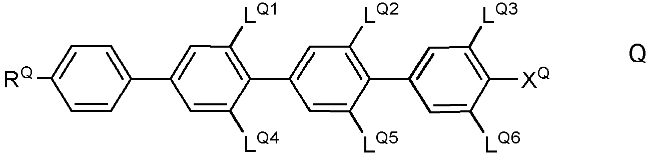 wherein
- R^{Q}: is alkyl, alkoxy, oxaalkyl or alkoxyalkyl having 1 to 9 C atoms or alkenyl or alkenyloxy having 2 to 9 C atoms, all of which are optionally fluorinated,
- X^{Q}: is F, Cl, halogenated alkyl or alkoxy having 1 to 6 C atoms or halogenated alkenyl or alkenyloxy having 2 to 6 C atoms,
- L^{Q1} to L^{Q6}: independently of each other are H or F, with at least one of L^{Q1} to L^{Q6} being F.

Preferred compounds of formula Q are those wherein R^{Q} denotes straight-chain alkyl with 2 to 6 C-atoms, very preferably ethyl, n-propyl or n-butyl.

Preferred compounds of formula Q are those wherein L^{Q3} and L^{Q4} are F. Further preferred compounds of formula Q are those wherein L^{Q3}, L^{Q4} and one or two of L^{Q1} and L^{Q2} are F.

Preferred compounds of formula Q are those wherein X^{Q} denotes F or OCF₃, very preferably F.

The compounds of formula Q are preferably selected from the following subformulae 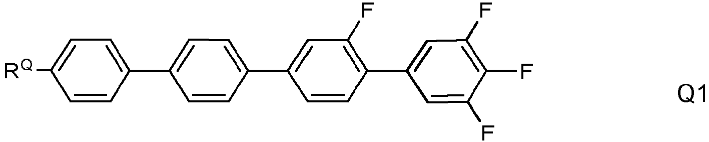 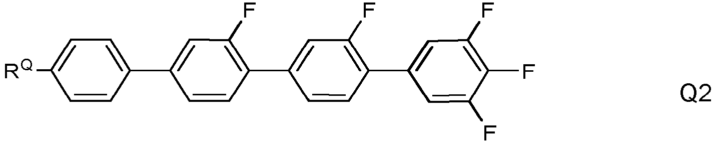 wherein R^{Q} has one of the meanings of formula Q or one of its preferred meanings given above and below, and is preferably ethyl, n-propyl or n-butyl.

Especially preferred are compounds of formula Q1, in particular those wherein R^{Q} is n-propyl.

Preferably the proportion of compounds of formula Q in the LC medium is from >0 to ≤5% by weight, very preferably from 0.05 to 2% by weight, more preferably from 0.1 to 1% by weight, most preferably from 0.1 to 0.8% by weight.

Preferably the LC medium contains 1 to 5, preferably 1 or 2 compounds of formula Q.

The addition of quaterphenyl compounds of formula Q to the LC mixture of a poymerizable LC medium enables to reduce ODF mura, whilst maintaining high UV absorption, enabling quick and complete polymerization, enabling strong and quick tilt angle generation, and increasing the UV stability of the LC medium.

Besides, the addition of compounds of formula Q, which have positive dielectric anisotropy, to the LC medium with negative dielectric anisotropy allows a better control of the values of the dielectric constants ε_{∥} and ε_{⊥}, and in particular enables to achieve a high value of the dielectric constant ε_{∥} while keeping the dielectric anisotropy Δε constant, thereby reducing the kick-back voltage and reducing image sticking.

The LC medium according to the invention preferably comprises
- one or more compounds of formula IA-1 or its subformulae, preferably of formula IA1-1, preferably in a proportion from 1 to 30%, very preferably from 2 to 20 %, most preferably from 2 to 15% by weight;
   and/or
- one or more compounds of formula IIA and/or IIB, preferably in a total concentration in the range of from 30% to 65%, more preferably from 35% to 60%, particularly preferably from 40 to 55%;
   and/or
- one or more compounds of formula IV, preferably in a total concentration in the range of 35% to 60%, more preferably 40% to 55%, particularly preferably 45% to 50%;
   and/or
- one or more compounds of formula III, preferably of formula III-2, very preferably of formula III-2-1, preferably in a total concentration in the range of 2% to 25%, very preferably 4% to 15%.

In particular, the LC medium comprises
- one or more compounds CY-n-Om, in particular CY-3-O4, CY-5-O4 and/or CY-3-O2, preferably in a total concentration in the range of from 5% to 30%, preferably 10% to 20%, based on the mixture as a whole;
- one or more compounds PY-n-Om, in particular PY-1-O2, PY-2-O2 and/or PY-3-O2, preferably in a total concentration in the range of from 5% to 40%, preferably 10% to 30%, based on the mixture as a whole;
   and/or
- one or more compounds CPY-n-Om, in particular CPY-2-O2, CPY-3-O2 and/or CPY-5-O2, preferably in concentrations > 5%, in particular 7% to 20%, based on the mixture as a whole,
   and/or
- one or more compounds CCY-n-Om, preferably CCY-4-O2, CCY-3-O2, CCY-3-O3, CCY-3-O1 and/or CCY-5-O2, preferably in concentrations > 3%, in particular 5 to 15%, based on the mixture as a whole;
   and/or
- one or more compounds CPY-n-Om and CY-n-Om, preferably in concentrations of 10 to 80%, based on the mixture as a whole,
   and/or
- one or more compounds CPY-n-Om and PY-n-Om, preferably CPY-2-O2 and/or CPY-3-O2 and PY-3-O2 or PY-1-O2, preferably in concentrations of 5 to 20%, more preferably 10 to 15% to based on the mixture as a whole,
   and/or
- one or more compound(s) selected from the group consisting of CCH-13, CCH-23, CCH-34, CCH-35, CCH-301 and CCH-303, preferably in a total concentration of 3 to 40%, preferably 3 to 25% based on the mixture as a whole,
   and/or
- one or more compounds selected from the group consisting of CC-2-V1, CC-3-V1, CC-3-V2, CC-4-V1, CC-3-V, CC-4-V and CC-5-V, preferably in a total concentration of 3 to 40%, more preferably from 5% to 30% based on the mixture as a whole,
   and/or
- one or more compound(s) CCP-n-m and/or CCP-Vn-m and/or CPP-n-m, preferably selected from the group consisting of CCP-3-1, CCP-V-1, CCP-V2-1 and CPP-3-2, preferably in a total concentration of 4 to 35%, preferably 5 to 25% based on the mixture as a whole,
   and/or
- one or more compound(s) CLP-n-m and/or CLP-Vn-m, preferably selected from the group consisting of CLP-3-1, CLP-3-2 and CLP-V-1, preferably in a total concentration of 1 to 25%, preferably 2 to 15% based on the mixture as a whole,
   and/or
- one or more compounds selected from the group consisting of PYP-n-m, PGIY-n-Om and PGP-n-2V, preferably in a total concentration of 2 to 20%, more preferably 2% to 15%, most preferably 2 to 10%, based on the mixture as a whole,
   and/or
- one or more compound(s) PP-n-m and/or PP-n-nVm, preferably selected from the group consisting of PP-1-3, PP-1-4, PP-1-5, PP-1-2V and PP-1-2V1, preferably in a total concentration of 1 to 15%, preferably 2 to 10% based on the mixture as a whole,
   and/or
- the compound PPGU-3-F, preferably in a concentration of 0.1% to 3% based on the mixture as a whole.

The invention furthermore relates to an electro-optical display having active-matrix addressing, characterised in that it contains, as dielectric, a LC medium according to claim 1 and wherein the display is a VA, SA-VA, IPS, U-IPS, FFS, UB-FFS, SA-FFS, PS-VA, PS-OCB, PS-IPS, PS-FFS, PS-UB-FFS, PS-posi-VA, PS-TN, polymer stabilised SA-VA or polymer stabilised SA-FFS display.

It is advantageous for the LC medium according to the invention to preferably have a nematic phase from ≤ -20°C to ≥ 70°C, particularly preferably from ≤ -30°C to ≥ 80°C, very particularly preferably from ≤ -40°C to ≥ 90°C.

The medium according to the invention has a clearing temperature of 70°C or more, preferably of 74°C or more.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

The liquid-crystal mixture preferably has a nematic phase range of at least 60 K and a flow viscosity v₂₀ of at most 30 mm² · s⁻¹ at 20°C.

The mixture is nematic at a temperature of -20°C or less, preferably at -30°C or less, very preferably at -40°C or less.

The values of the birefringence Δn in the liquid-crystal mixture are generally between 0.07 and 0.16, preferably between 0.08 and 0.15, very preferably between 0.09 and 0.14.

In a preferred embodiment of the present invention, the medium has a birefringence in the range of from 0.090 to 0.110, preferably from 0.095 to 0.105, in particular from 0.100 to 0.105.

In another preferred embodiment, the medium according to the invention has a birefringence of 0.120 or more, preferably in the range of from 0.125 to 0.145, more preferably from 0.130 to 0.140.

The liquid-crystal mixture according to the invention has a dielectric anisotropy Δε of -1.5 to -8.0, preferably of -2.0 to - 4.0, in particular -2.5 to -3.5,

The rotational viscosity γ₁ at 20°C is preferably ≤ 120 mPa·s, in particular ≤ 100 mPa·s.

In a preferred embodiment, the rotational viscosity γ₁ at 20°C is ≤ 100mPa·s, in particular ≤ 95 mPa·s.

The liquid-crystal media according to the invention have relatively low values for the threshold voltage (V₀). They are preferably in the range from 1.7 V to 3.0 V, particularly preferably ≤ 2.7 V and very particularly preferably ≤ 2.5 V.

For the present invention, the term "threshold voltage" relates to the capacitive threshold (V₀), also called the Freedericks threshold, unless explicitly indicated otherwise.

In addition, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10 % of the compounds in a LC host and determining the capacitance of the resultant mixture in at least one test cell in each case having a layer thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The LC media according to the invention are suitable for all VA-TFT (vertical alignment-thin film transistor) applications, such as, for example, VAN (vertically aligned nematic), MVA (multidomain VA), (S)-PVA (super patterned VA), ASV (advanced super view, or axially symmetric VA), PSA (polymer sustained VA) and PS-VA (polymer stabilized VA). They are furthermore suitable for IPS (in-plane switching) and FFS (fringe field switching) applications having negative Δε.

The nematic LC media in the displays according to the invention generally comprise two components A and B, which themselves consist of one or more individual compounds.

Component A has significantly negative dielectric anisotropy and gives the nematic phase a dielectric anisotropy of ≤ -0.5. Besides one or more compounds of the formula I, it preferably comprises the compounds of the formulae IIA, IIB and/or IIC, furthermore one or more compounds of the formula IV-1.

The proportion of component A is preferably between 45 and 100 %, in particular between 60 and 85 %.

For component A, one (or more) individual compound(s) which has (have) a value of Δε ≤ -0.8 is (are) preferably selected. This value must be more negative, the smaller the proportion A in the mixture as a whole.

Component B has pronounced nematogeneity and a flow viscosity of not greater than 30 mm² · s⁻¹, preferably not greater than 25 mm² · s⁻¹, at 20°C.

A multiplicity of suitable materials is known to the person skilled in the art from the literature.

Particularly preferred individual compounds in component B are extremely low-viscosity nematic liquid crystals having a flow viscosity of not greater than 18 mm² · s⁻¹, preferably not greater than 12 mm² · s⁻¹, at 20°C.

Component B is monotropically or enantiotropically nematic, has no smectic phases and is able to prevent the occurrence of smectic phases down to very low temperatures in LC media. For example, if various materials of high nematogeneity are added to a smectic liquid-crystal mixture, the nematogeneity of these materials can be compared through the degree of suppression of smectic phases that is achieved.

The mixture may optionally also comprise a component C, comprising compounds having a dielectric anisotropy of Δε ≥1.5. These so-called positive compounds are generally present in a mixture of negative dielectric anisotropy in amounts of ≤ 20 % by weight, based on the mixture as a whole.

Besides one or more compounds of the formula IA-1 and IB, the medium preferably comprises 4 to 15, in particular 5 to 12, and particularly preferably < 10, compounds of the formulae IIA, IIB and/or IIC and optionally one or more compounds of the formula IV-1.

Besides compounds of the formula IA-1 and IB and the compounds of the formulae IIA, IIB and/or IIC and optionally IV-1, other constituents may also be present, for example in an amount of up to 45 % of the mixture as a whole, but preferably up to 35 %, in particular up to 10 %.

The other constituents are preferably selected from nematic or nematogenic substances, in particular known substances, from the classes of the azoxybenzenes, benzylideneanilines, biphenyls, terphenyls, phenyl or cyclohexyl benzoates, phenyl or cyclohexyl cyclohexanecarboxylates, phenylcyclohexanes, cyclohexylbiphenyls, cyclohexylcyclohexanes, cyclo-hexylnaphthalenes, 1,4-biscyclohexylbiphenyls or cyclohexylpyrimidines, phenyl- or cyclohexyldioxanes, optionally halogenated stilbenes, benzyl phenyl ethers, tolanes and substituted cinnamic acid esters.

The most important compounds which are suitable as constituents of liquid-crystal phases of this type can be characterised by the formula OC

R²⁰-L-G-E-R²¹ OC

in which L and E each denote a carbo- or heterocyclic ring system from the group formed by 1,4-disubstituted benzene and cyclohexane rings, 4,4'-disubstituted biphenyl, phenylcyclohexane and cyclohexylcyclohexane systems, 2,5-disubstituted pyrimidine and 1,3-dioxane rings, 2,6-disubstituted naphthalene, di- and tetrahydronaphthalene, quinazoline and tetrahydroquinazoline,

| | | |
|---|---|---|
| G denotes | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

or a C-C single bond, Q denotes halogen, preferably chlorine, or -CN, and R²⁰ and R²¹ each denote alkyl, alkenyl, alkoxy, alkoxyalkyl or alkoxycarbonyl-oxy having up to 18, preferably up to 8, carbon atoms, or one of these radicals alternatively denotes CN, NC, NO₂, NCS, CF₃, SF₅, OCF₃, F, Cl or Br.

In most of these compounds, R²⁰ and R²¹ are different from one another, one of these radicals usually being an alkyl or alkoxy group. Other variants of the proposed substituents are also common. Many such substances or also mixtures thereof are commercially available. All these substances can be prepared by methods known from the literature.

It goes without saying for the person skilled in the art that the VA, IPS or FFS mixture according to the invention may also comprise compounds in which, for example, H, N, O, Cl and F have been replaced by the corresponding isotopes.

The combination of compounds of the preferred embodiments mentioned above with the polymerized compounds described above causes low threshold voltages, low rotational viscosities and very good low-temperature stabilities in the LC media according to the invention at the same time as constantly high clearing points and high HR values, and allows the rapid establishment of a particularly low tilt angle (i.e. a large tilt) in PSA displays. In particular, the LC media exhibit significantly shortened response times, in particular also the grey-shade response times, in PSA displays compared with the LC media from the prior art.

The LC media according to the invention may also comprise further additives which are known to the person skilled in the art and are described in the literature, such as, for example, polymerization initiators, inhibitors, stabilisers, surface-active substances or chiral dopants. These may be polymerizable or non-polymerizable. Polymerizable additives are accordingly ascribed to the polymerizable component or component A). Non-polymerizable additives are accordingly ascribed to the non-polymerizable component or component B).

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

The individual components of the above-listed preferred embodiments of the LC media according to the invention are either known or methods for the preparation thereof can readily be derived from the prior art by the person skilled in the relevant art, since they are based on standard methods described in the literature. Corresponding compounds of the formula CY are described, for example, in EP-A-0 364 538. Corresponding compounds of the formula ZK are described, for example, in DE-A-26 36 684 and DE-A-33 21 373.

The LC media which can be used in accordance with the invention are prepared in a manner conventional per se, for example by mixing one or more of the above-mentioned compounds with one or more polymerizable compounds as defined above, and optionally with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing. The invention furthermore relates to the process for the preparation of the LC media according to the invention.

It goes without saying to the person skilled in the art that the LC media according to the invention may also comprise compounds in which, for example, H, N, O, Cl, F have been replaced by the corresponding isotopes like deuterium etc.

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

For the present invention and in the following examples, the structures of the liquid-crystal compounds are indicated by means of acronyms. Unless stated otherwise, the transformation into chemical formulae is done in accordance with Tables A.1 to A.3 below. All radicals CₙH₂ₙ₊₁, CₘH₂ₘ₊₁ and CₗH₂ₗ₊₁ or CₙH₂ₙ, CₘH₂ₘ and CₗH₂ₗ, are straight-chain alkyl radicals or alkylene radicals, in each case having n, m and l C atoms respectively. Preferably n, m and l are independently of each other 1, 2, 3, 4, 5, 6, or 7. Table A.1 shows the codes for the ring elements of the nuclei of the compound, Table A.2 lists the bridging units, and Table A.3 lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group.

**Table A.1: Ring elements**

| | | | |
|---|---|---|---|
| **C** | 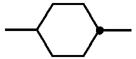 | | |
| **D** | 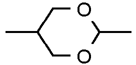 | **Dl** | 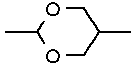 |
| **A** | 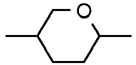 | **Al** | 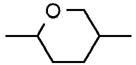 |
| **P** | 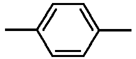 | | |
| **G** | 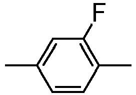 | **Gl** | 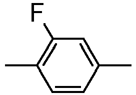 |
| **U** | 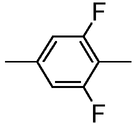 | **Ul** | 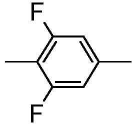 |
| **Y** | 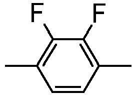 | | |
| **P(F, Cl)Y** | 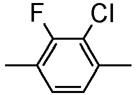 | **P(Cl,F)Y** | 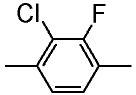 |
| **np** | 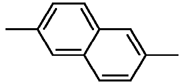 | | |
| **n3f** | 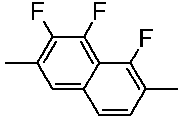 | **nN3fl** | 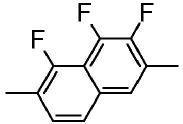 |
| **th** | 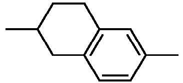 | **thl** | 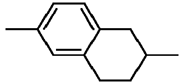 |
| **tH2f** | 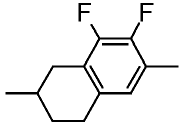 | **tH2fl** | 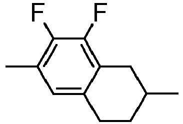 |
| **o2f** | 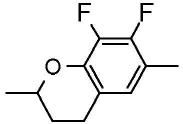 | **o2fl** | 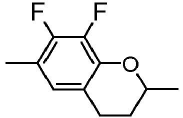 |
| **dh** | 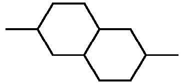 | **nf** | 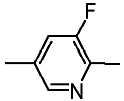 |
| **B** | 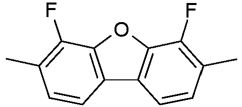 | **B(S)** | 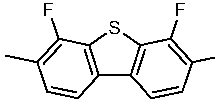 |
| **O** | 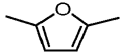 | **S** | 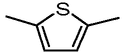 |
| **K** | 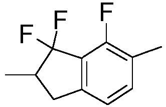 | **Kl** | 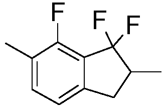 |
| **L** | 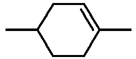 | **Ll** | 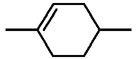 |
| **F** | 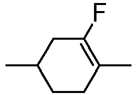 | **Fl** | 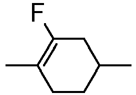 |
| **Bh** | 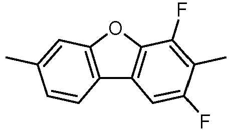 | **Bh(S)** | 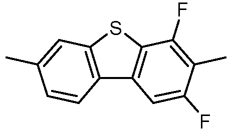 |
| **Bf** | 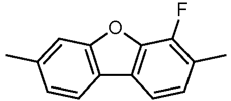 | **Bf(S)** | 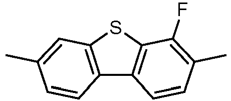 |
| **Bfi** | 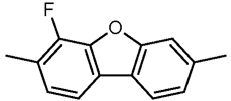 | **Bfi(S)** | 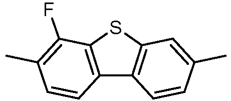 |

**Table A.2: Bridging units**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Table A.3: End groups**

| **On the left individually or in combination** | | **On the right individually or in combination** | |
|---|---|---|---|
| **-n-** | CₙH₂ₙ₊₁- | **-n** | -CₙH₂ₙ₊₁ |
| **-nO-** | CₙH₂ₙ₊₁-O- | **-On** | -O-CₙH₂ₙ₊₁ |
| | | **-m** | -CₘH₂ₘ₊₁ |
| | | **-Om** | -O-CₘH₂ₘ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO - | **-OD** | -OCF₂H |
| **-TO-** | CF₃O - | **-OT** | -OCF₃ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |
| **-(cn)-** | 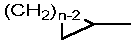 | **-(cn)** | 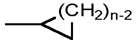 |
| **-(cn)m-** | 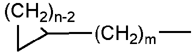 | **-m(cn)** | 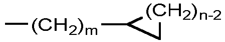 |

| **On the left only in combination** | | **On the right only in combination** | |
|---|---|---|---|
| **-...n...-** | -CₙH₂ₙ- | **-...n...-** | -CₙH₂ₙ- |
| | | **-...m...-** | -CₘH₂ₘ- |
| **-...M...-** | -CFH- | **-...M...-** | -CFH- |
| **-...O...-** | -CF₂- | **-...O...-** | -CF₂- |
| **-...V...-** | -CH=CH- | **-...V...-** | -CH=CH- |
| **-...Z...-** | -CO-O- | **-...Z...-** | -CO-O- |
| **-...Zl...-** | -O-CO- | **-...Zl...-** | -O-CO- |
| **-...K...-** | -CO- | **-...K...-** | -CO- |
| **-...W...-** | -CF=CF- | **-...W...-** | -CF=CF- |
| **-...O...-** | -O- | **-...O...-** | -O- |

in which n and m are each integers, and the three dots "..." are placeholders for other abbreviations from this table.

Table B shows illustrative structures of compounds together with their respective abbreviations.

**Table B**

| In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is preferably 1, 2, 3 or 4, more preferably 2 or 4. The combination "-nVm" preferably is "2V1". (O)CₘH₂ₘ₊₁ means CₘH₂ₘ₊₁ or OCₘH₂ₘ₊₁. | |
|---|---|
| 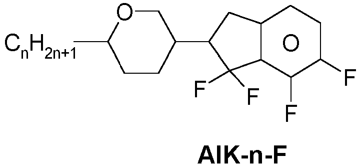 | 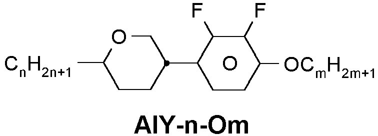 |
| 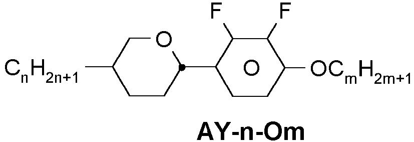 | 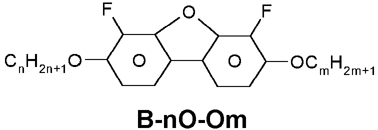 |
| 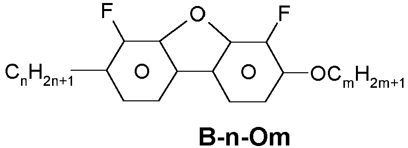 | 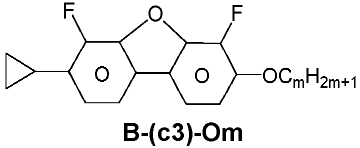 |
| 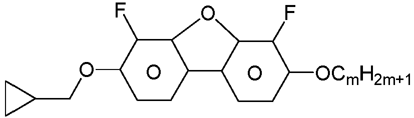 | 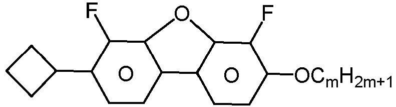 |
| 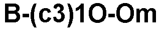 | 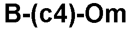 |
| 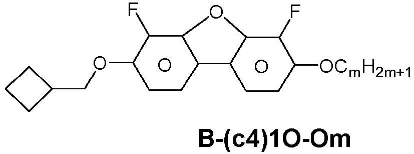 | 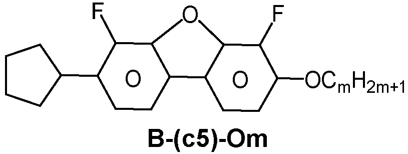 |
| 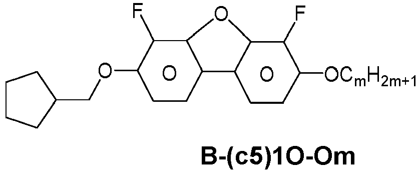 | 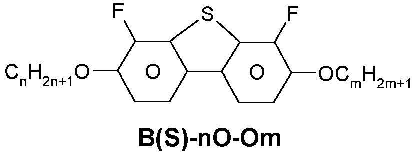 |
| 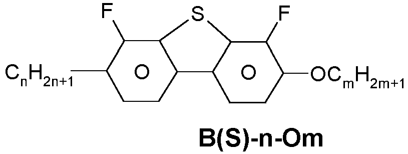 | 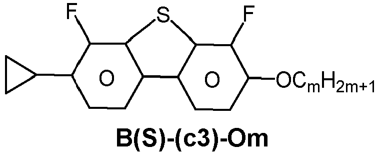 |
| 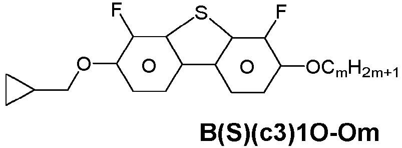 | 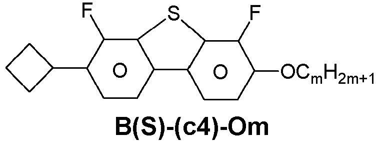 |
| 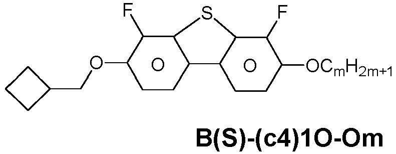 | 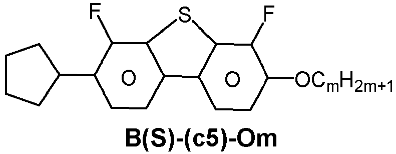 |
| 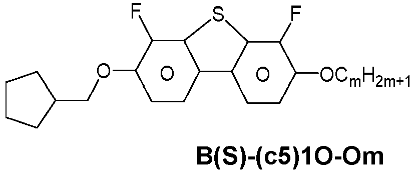 | 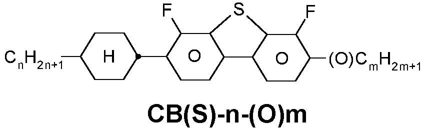 |
| 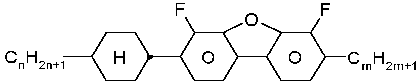 | 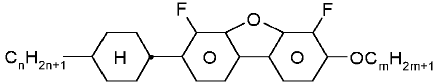 |
| 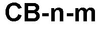 | 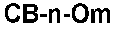 |
| 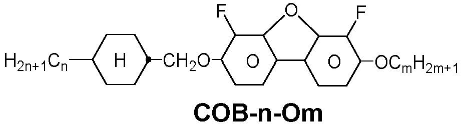 | |
| 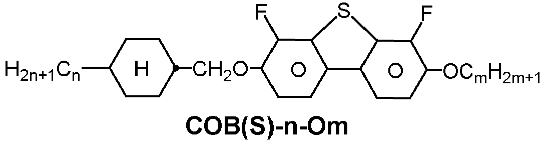 | |
| 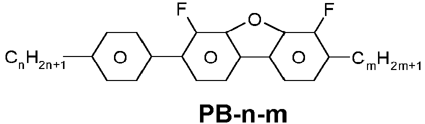 | 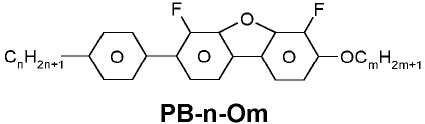 |
| 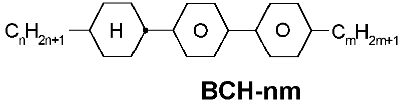 | 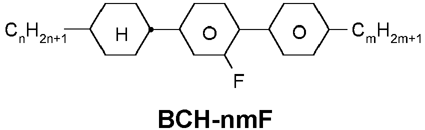 |
| 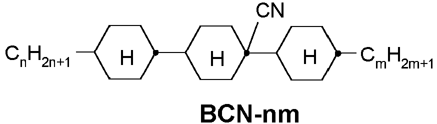 | 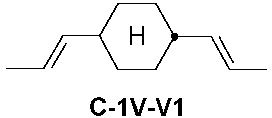 |
| 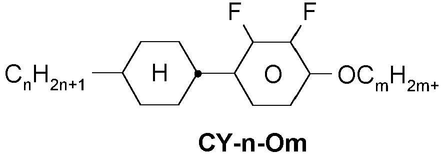 | 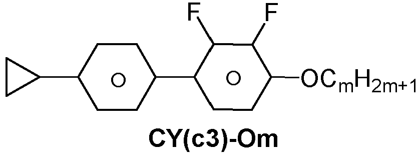 |
| 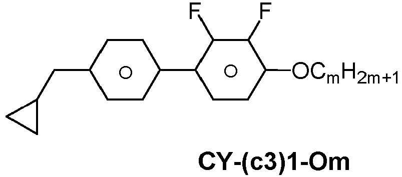 | 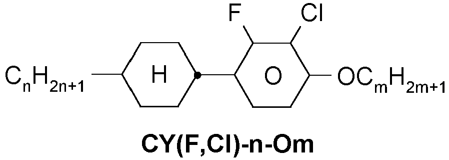 |
| 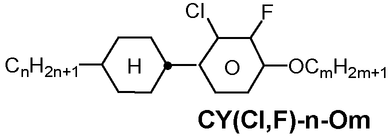 | 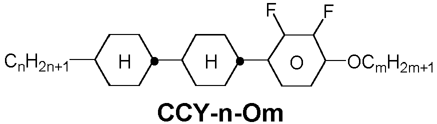 |
| 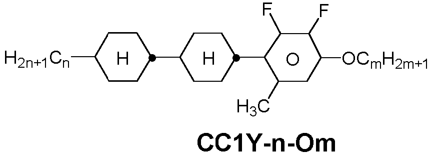 | 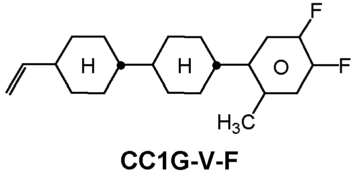 |
| 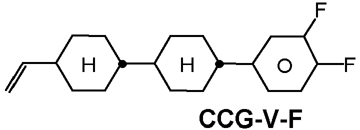 | 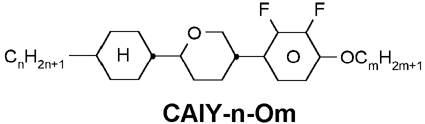 |
| 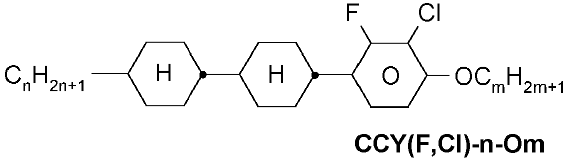 | |
| 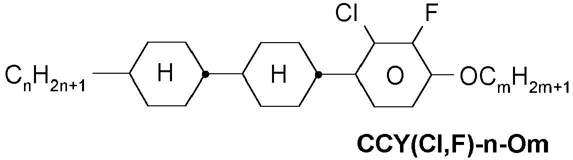 | |
| 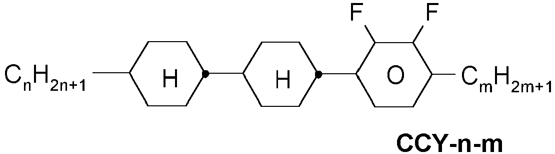 | |
| 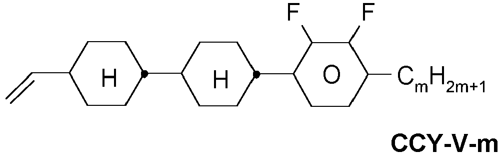 | |
| 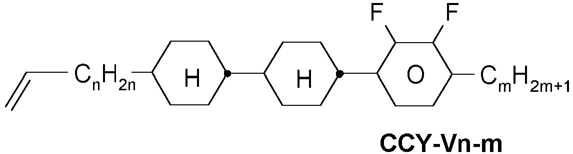 | |
| 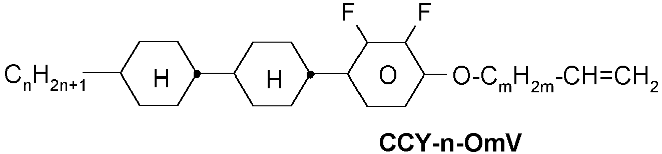 | |
| 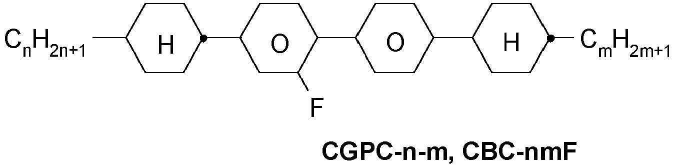 | |
| 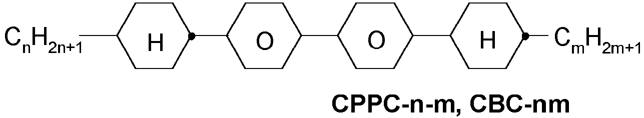 | |
| 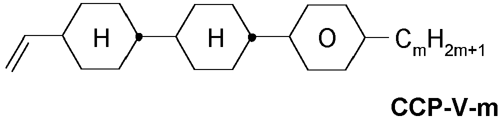 | |
| 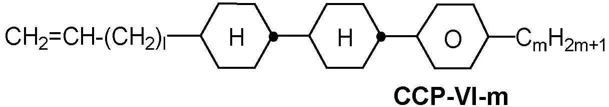 | |
| 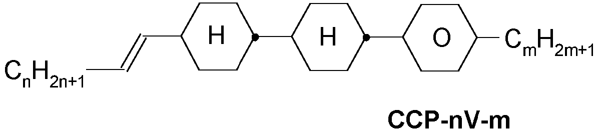 | |
| 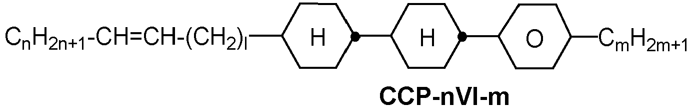 | |
| 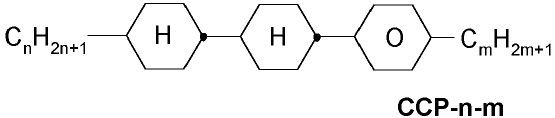 | |
| 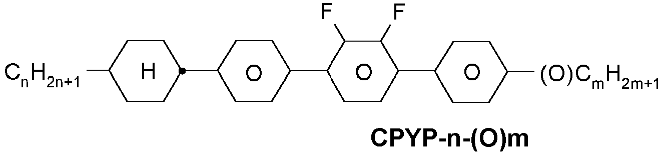 | |
| 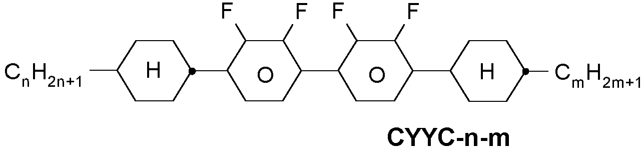 | |
| 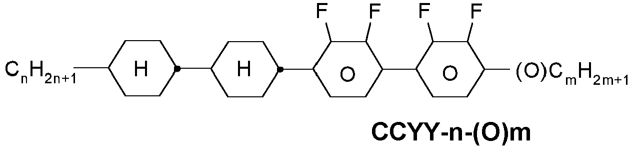 | |
| 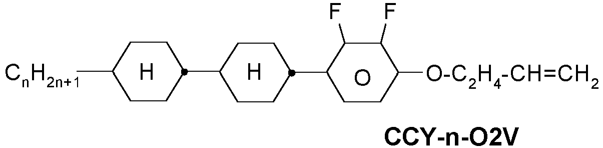 | |
| 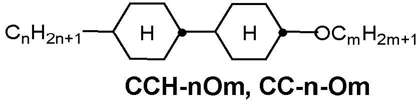 | 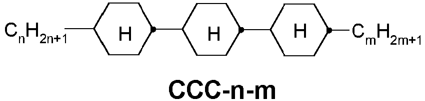 |
| 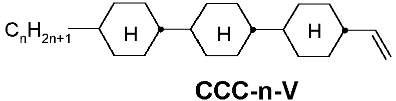 | 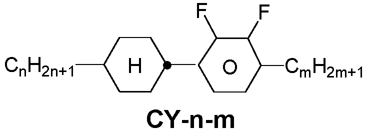 |
| 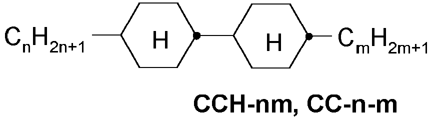 | 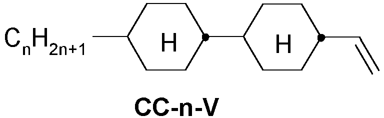 |
| 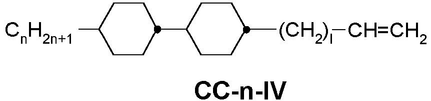 | 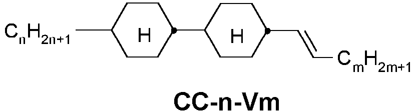 |
| 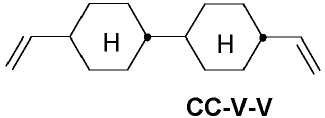 | 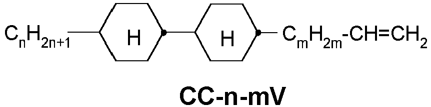 |
| 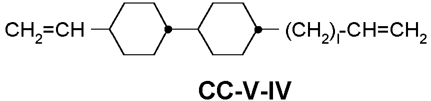 | 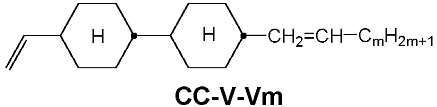 |
| 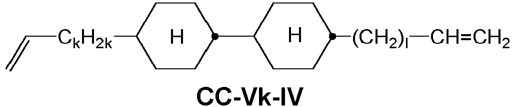 | |
| 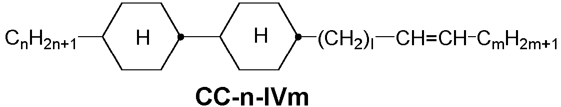 | |
| 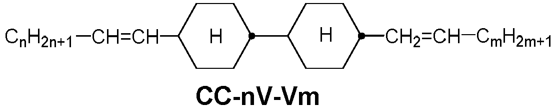 | |
| 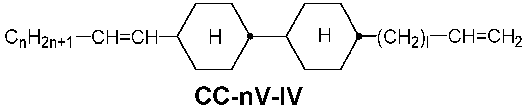 | |
| 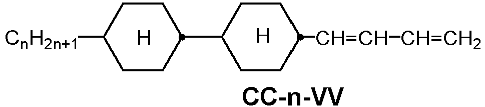 | |
| 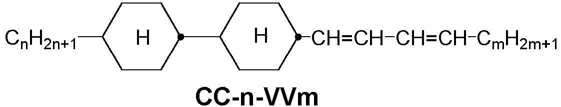 | |
| 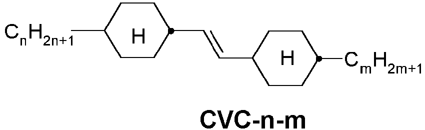 | |
| 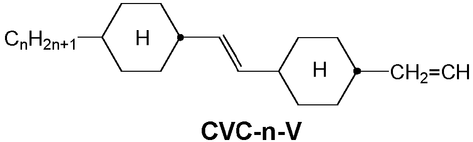 | |
| 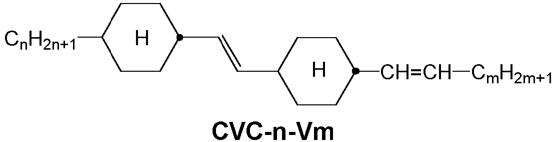 | |
| 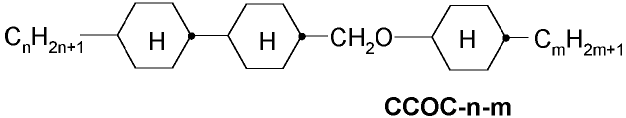 | |
| 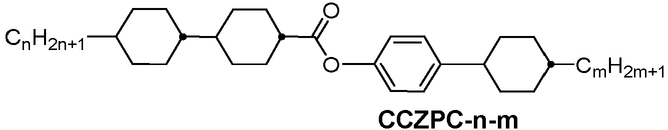 | |
| 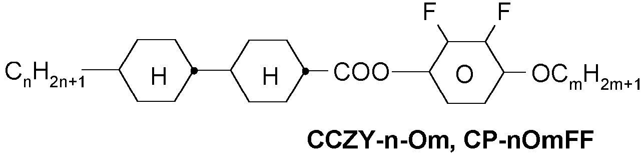 | |
| 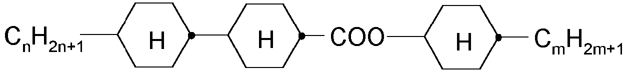 | |
| 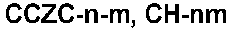 | |
| 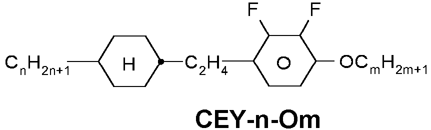 | 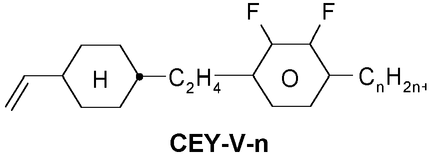 |
| 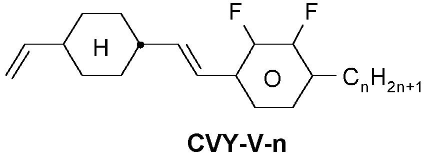 | 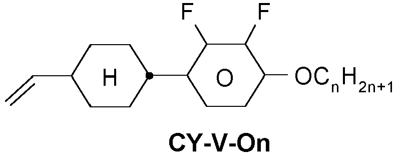 |
| 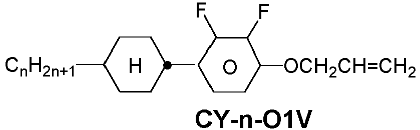 | 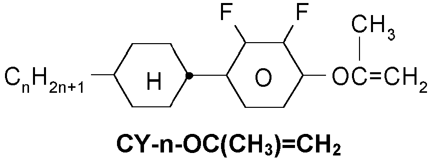 |
| 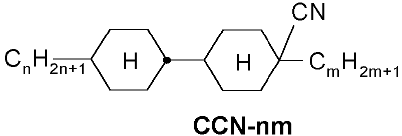 | 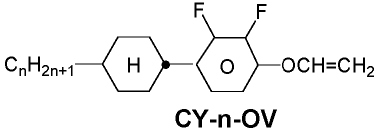 |
| 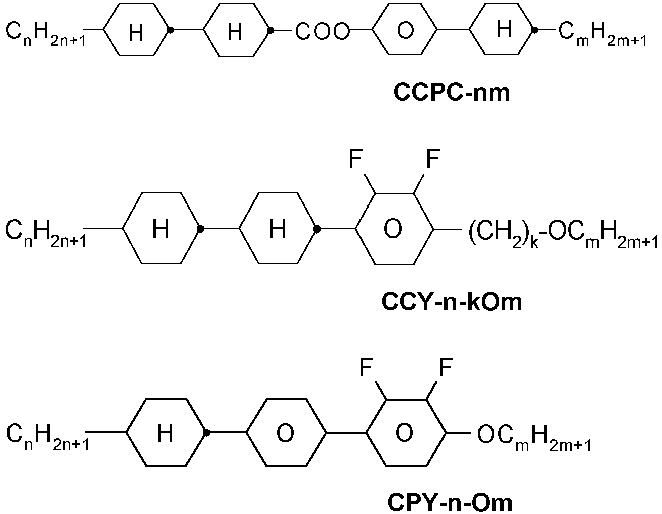 | |
| 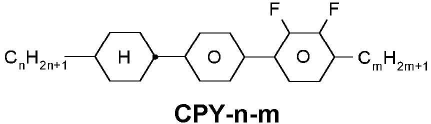 | 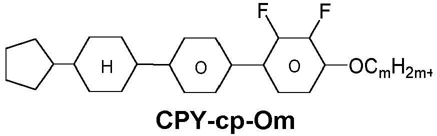 |
| 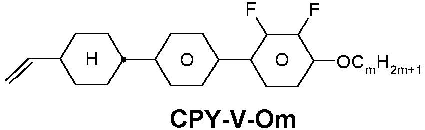 | 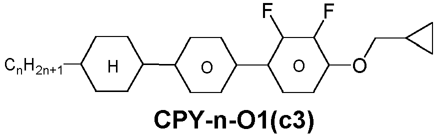 |
| 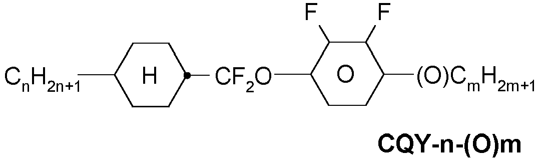 | |
| 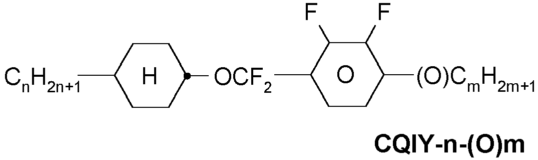 | |
| 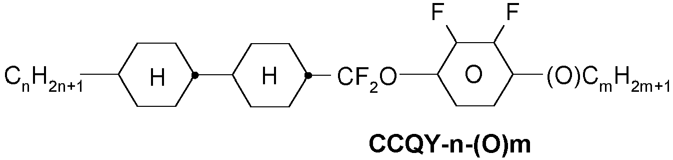 | |
| 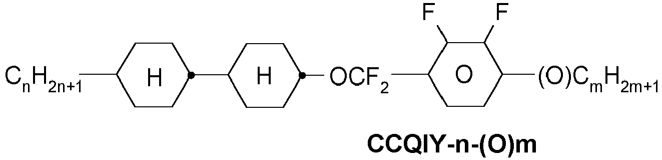 | |
| 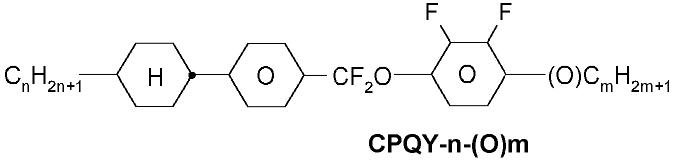 | |
| 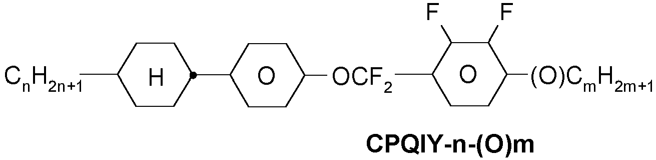 | |
| 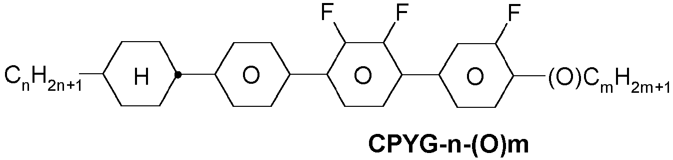 | |
| 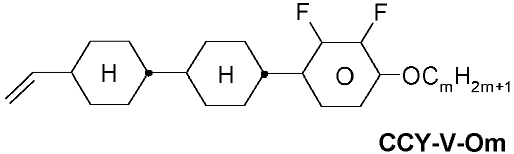 | |
| 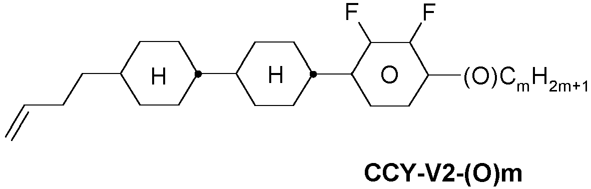 | |
| 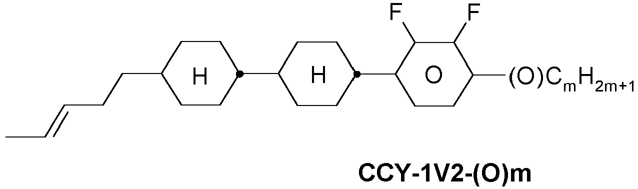 | |
| 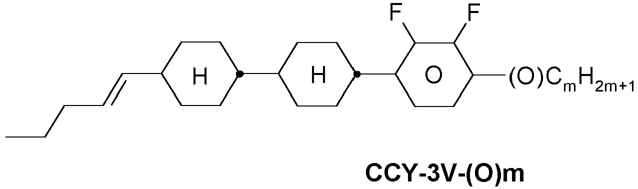 | |
| 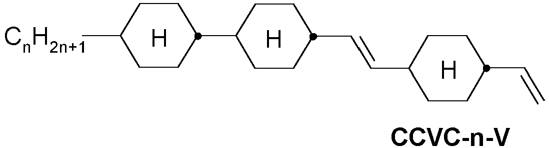 | |
| 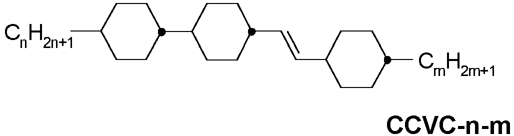 | |
| 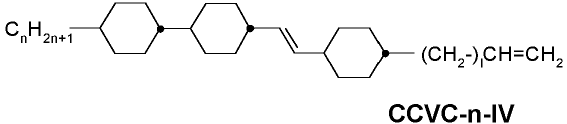 | |
| 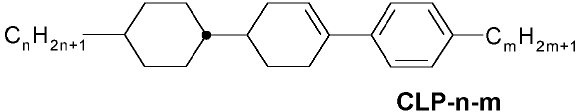 | |
| 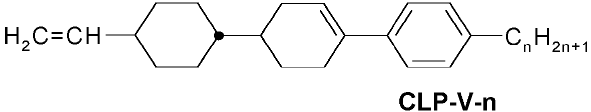 | |
| 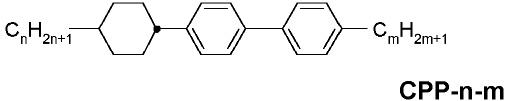 | |
| 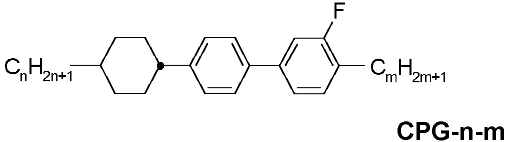 | |
| 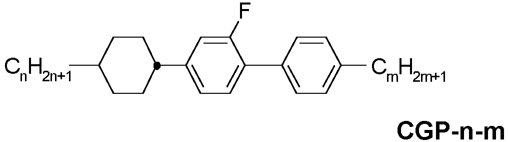 | |
| 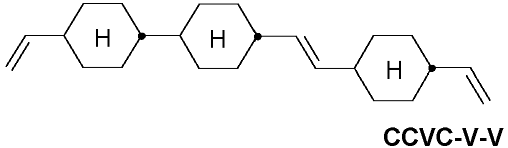 | |
| 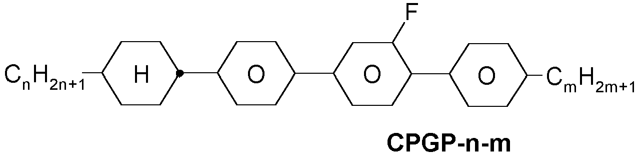 | |
| 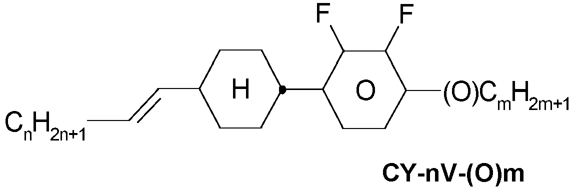 | |
| 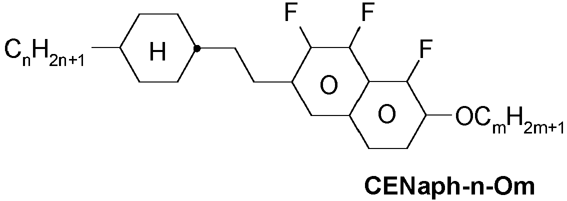 | |
| 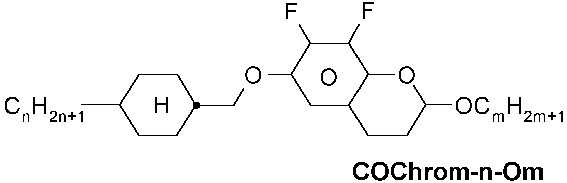 | |
| 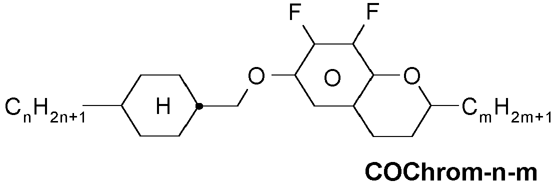 | |
| 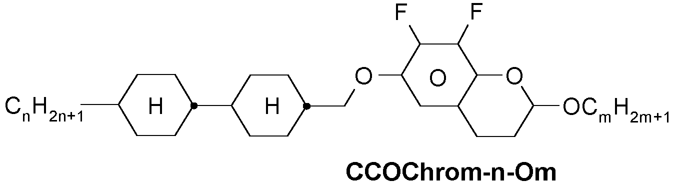 | |
| 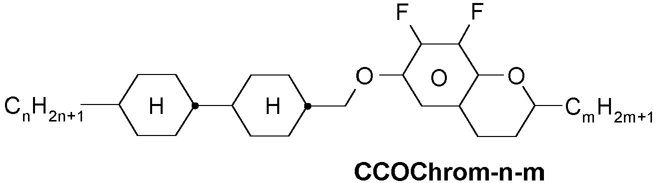 | |
| 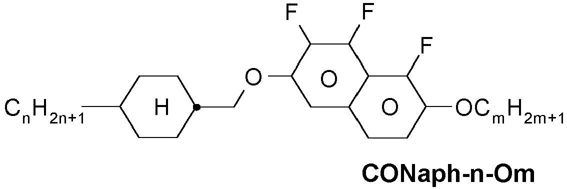 | |
| 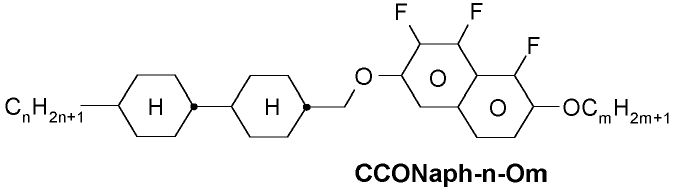 | |
| 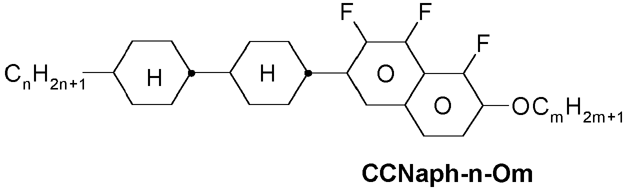 | |
| 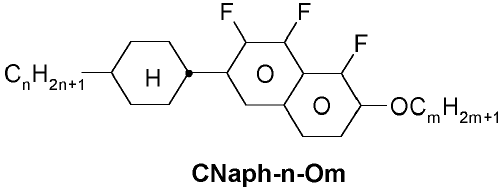 | |
| 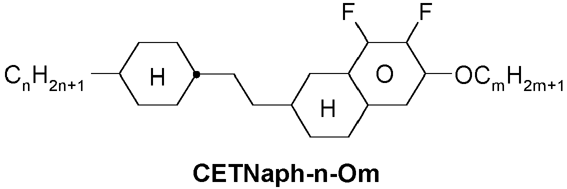 | |
| 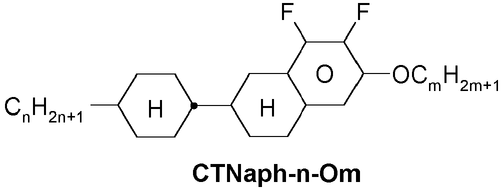 | |
| 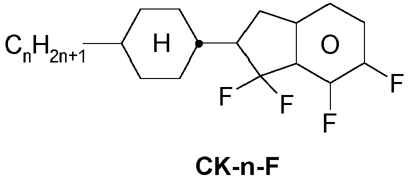 | |
| 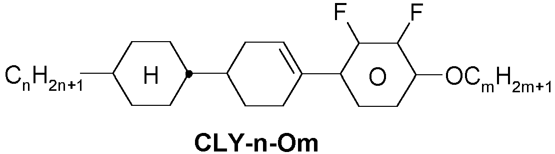 | |
| 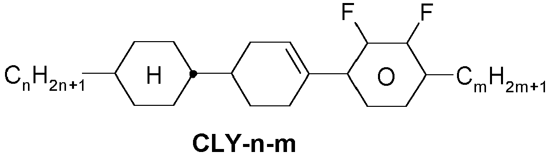 | |
| 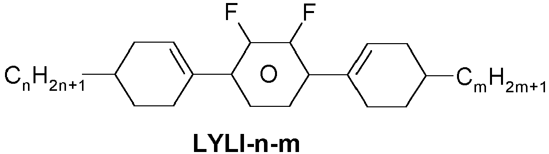 | |
| 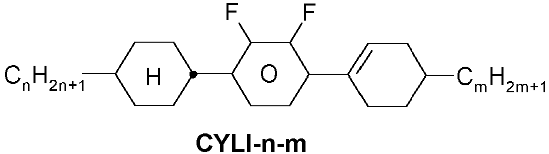 | |
| 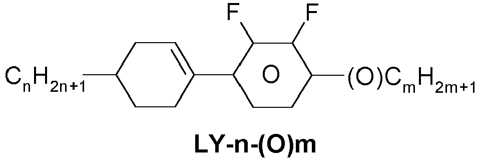 | |
| 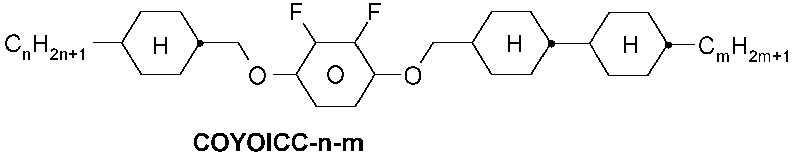 | |
| 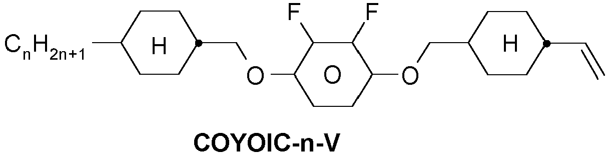 | |
| 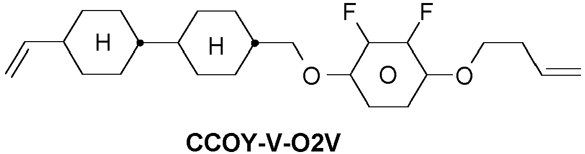 | |
| 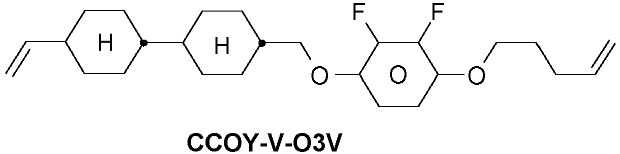 | |
| 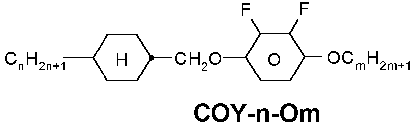 | |
| 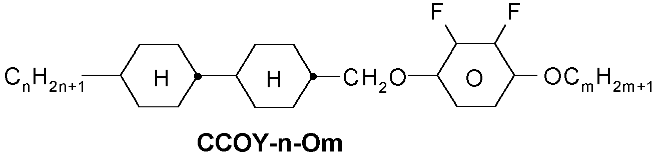 | |
| 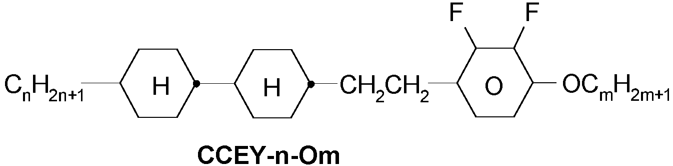 | |
| 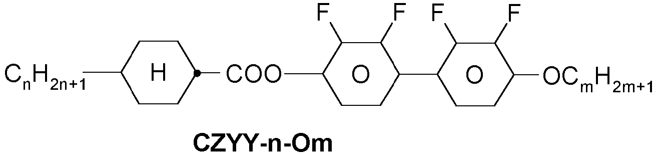 | |
| 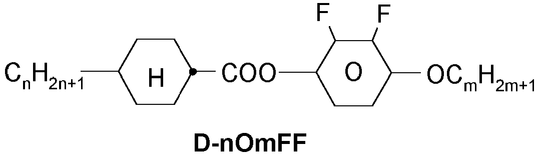 | |
| 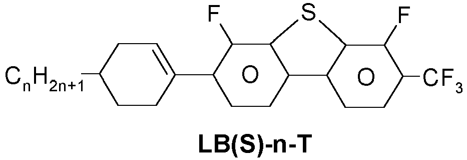 | |
| 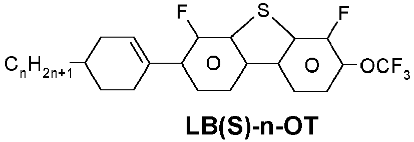 | 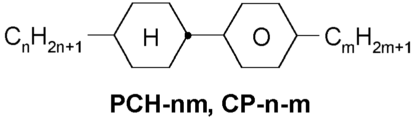 |
| 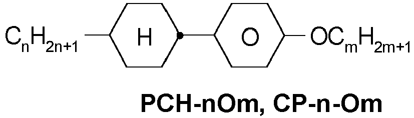 | 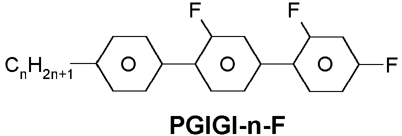 |
| 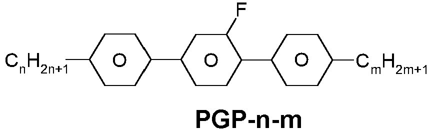 | 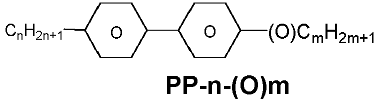 |
| 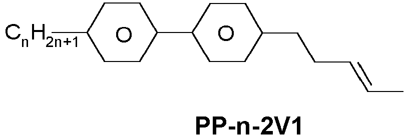 | 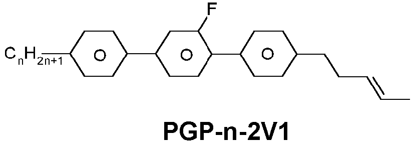 |
| 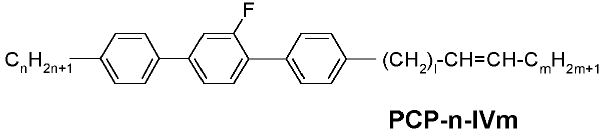 | |
| 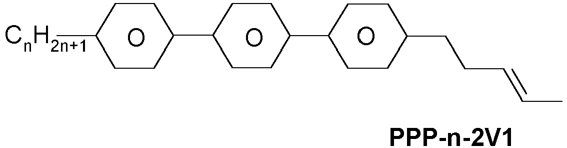 | |
| 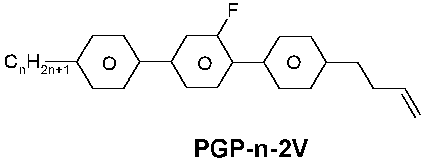 | 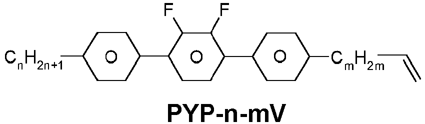 |
| 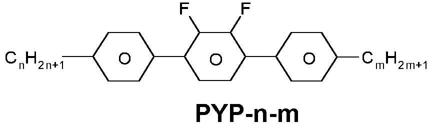 | 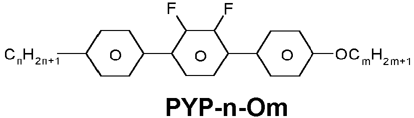 |
| 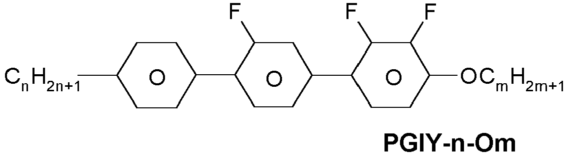 | |
| 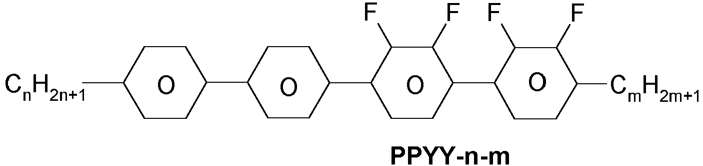 | |
| 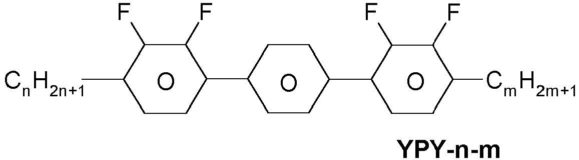 | |
| 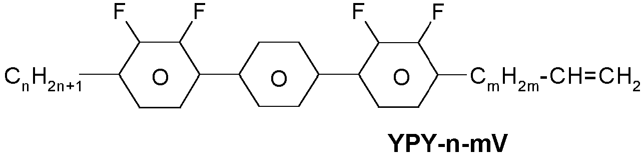 | |
| 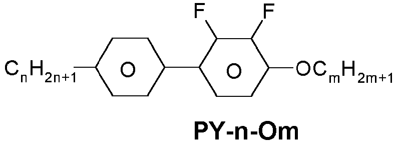 | 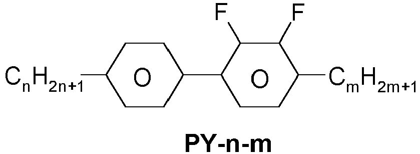 |
| 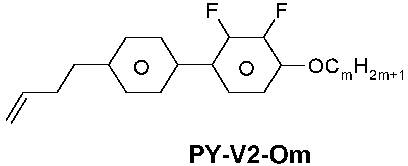 | 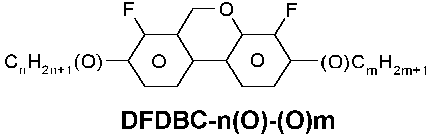 |
| 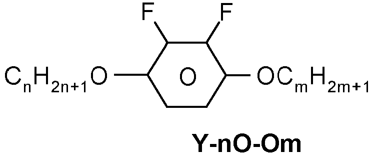 | 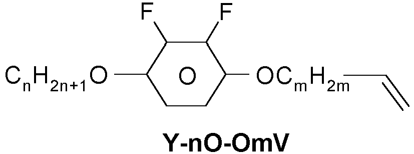 |
| 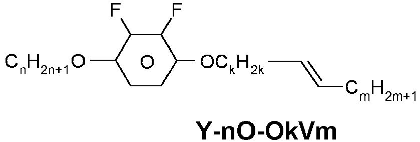 | 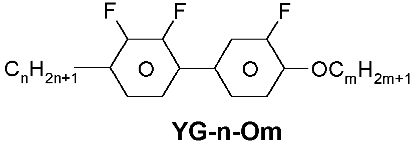 |
| 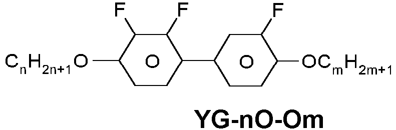 | 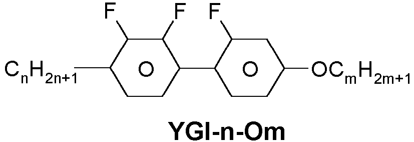 |
| 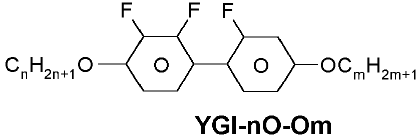 | 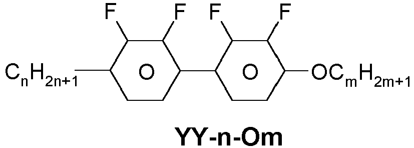 |
| 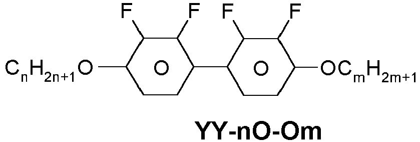 | 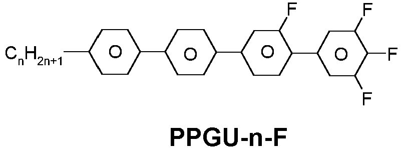 |
| 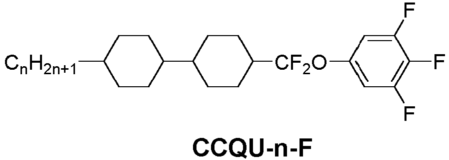 | |

In a preferred embodiment of the present invention, the LC media according to the invention comprise one or more compounds selected from the group consisting of compounds from Table B.

**Table C**

| Table C shows possible chiral dopants which can be added to the LC media according to the invention. | |
|---|---|
| 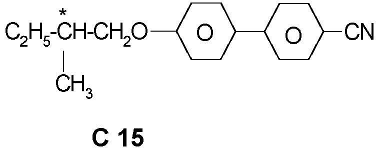 | 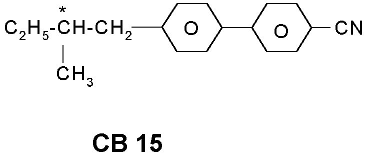 |
| 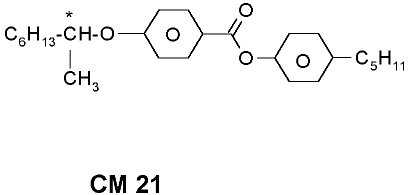 | 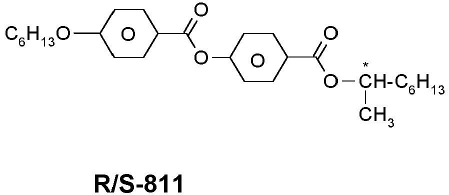 |
| 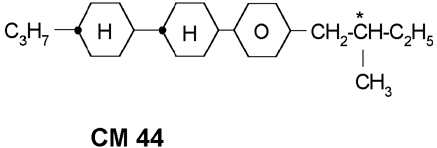 | 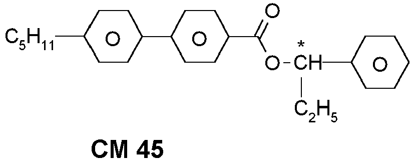 |
| 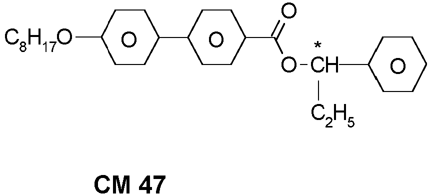 | 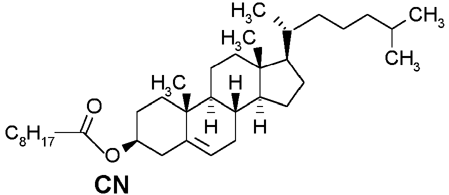 |
| 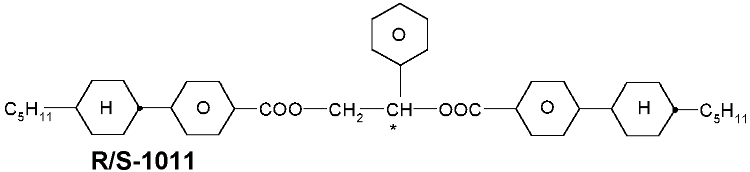 | |
| 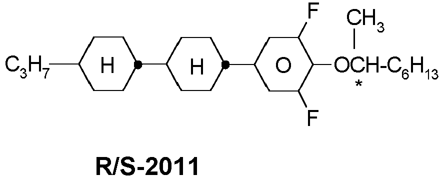 | 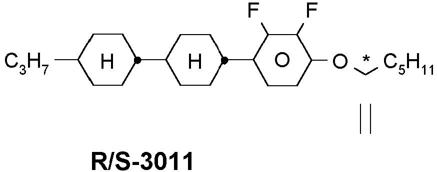 |
| 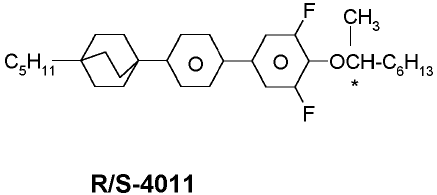 | 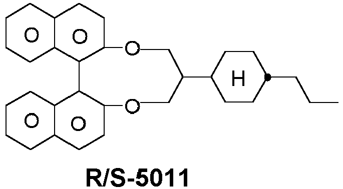 |

The LC media preferably comprise 0 to 10% by weight, in particular 0.01 to 5% by weight, particularly preferably 0.1 to 3% by weight, of dopants. The LC media preferably comprise one or more dopants selected from the group consisting of compounds from Table C.

**Table D**

| Table D shows possible stabilisers which can be added to the LC media according to the invention. Therein n denotes an integer from 1 to 12, preferably 1, 2, 3, 4, 5, 6, 7 or 8, and terminal methyl groups are not shown. | |
|---|---|
| 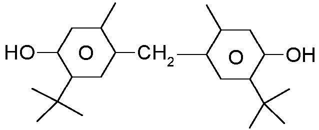 | 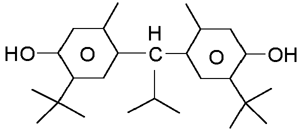 |
| 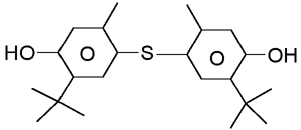 | 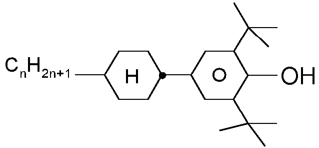 |
| 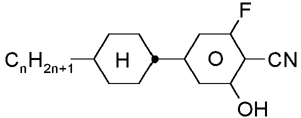 | 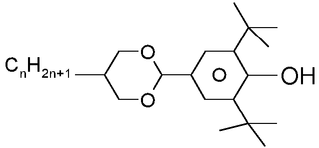 |
| 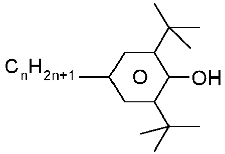 | 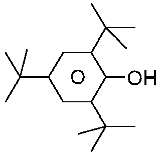 |
| 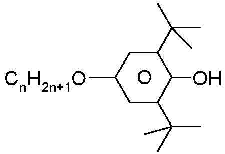 | 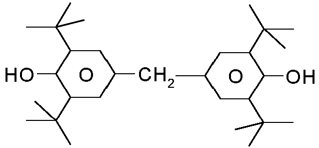 |
| 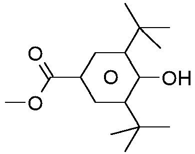 | 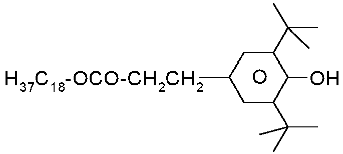 |
| 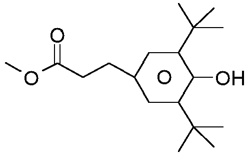 | 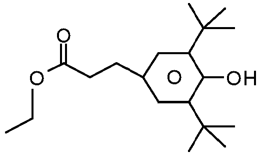 |
| 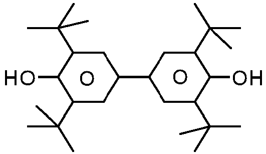 | 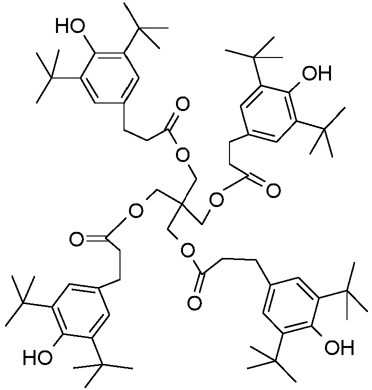 |
| 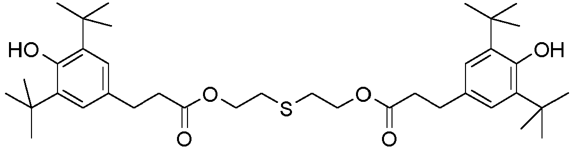 | |
| 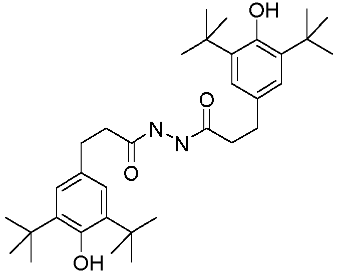 | 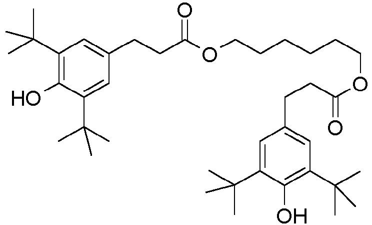 |
| 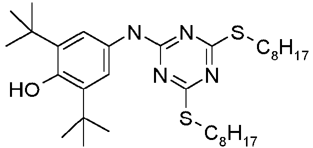 | 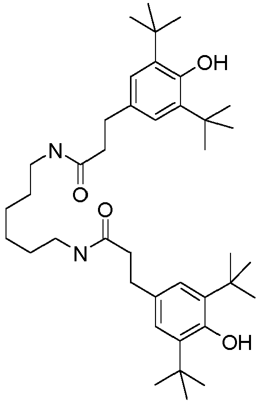 |
| 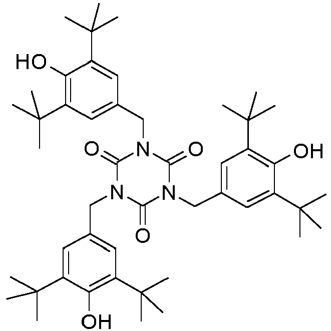 | 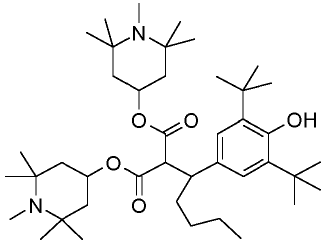 |
| 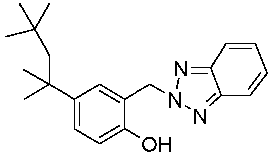 | 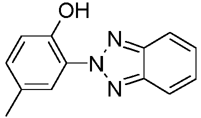 |
| 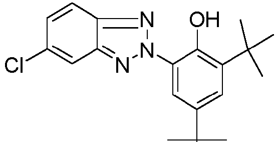 | 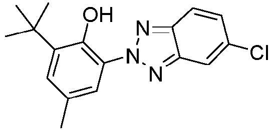 |
| 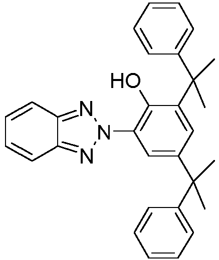 | 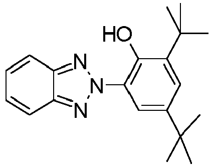 |
| 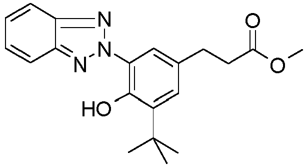 | 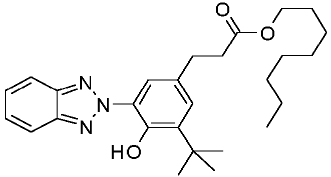 |
| 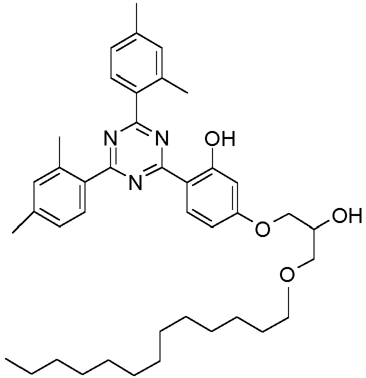 | 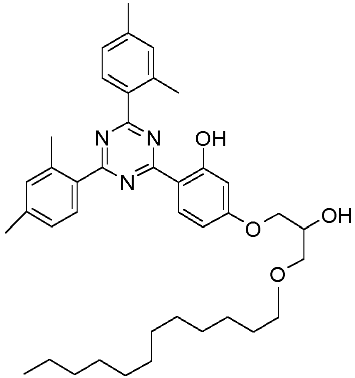 |
| 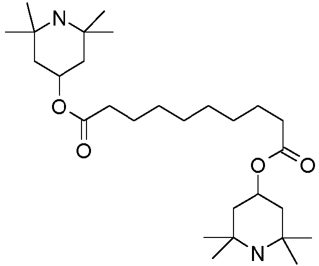 | 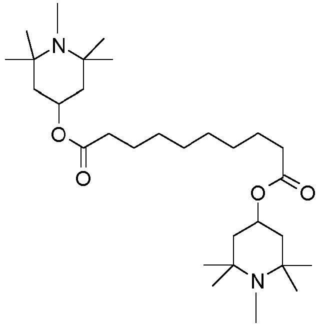 |
| 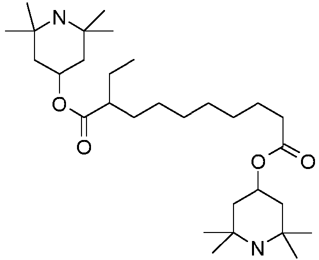 | 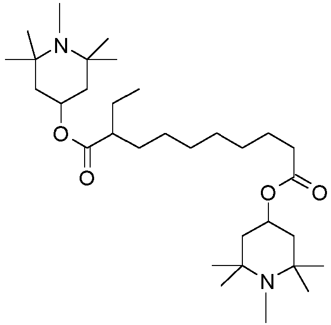 |
| 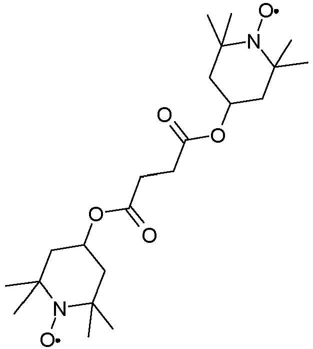 | 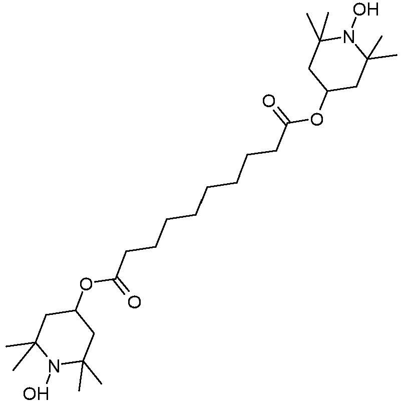 |
| 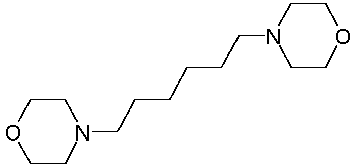 | |
| 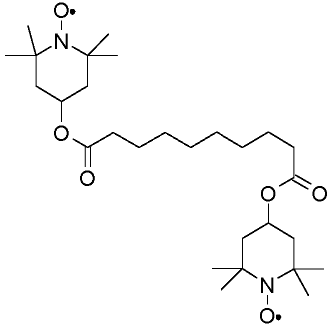 | 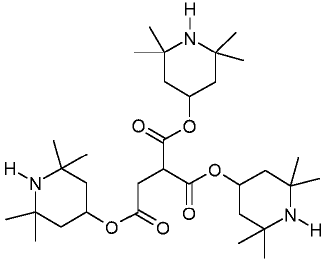 |
| 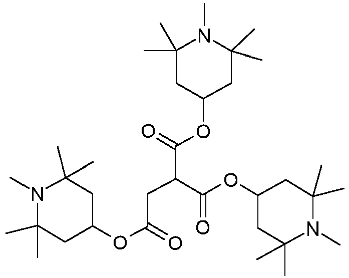 | 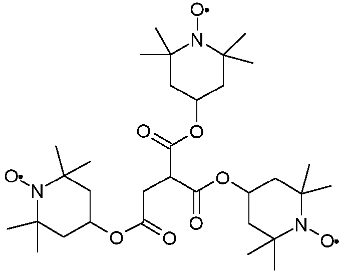 |
| 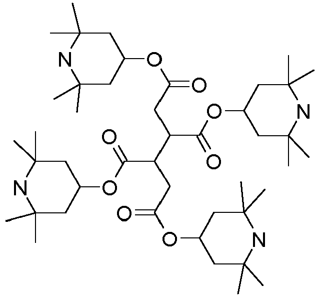 | 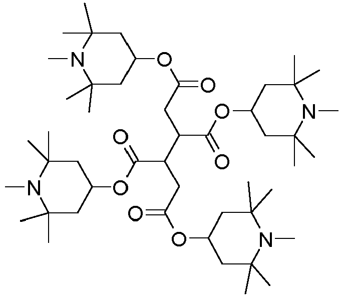 |
| 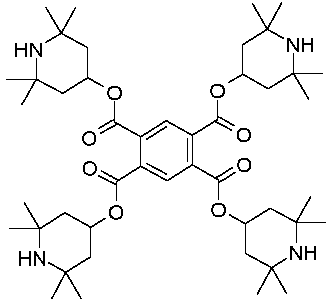 | 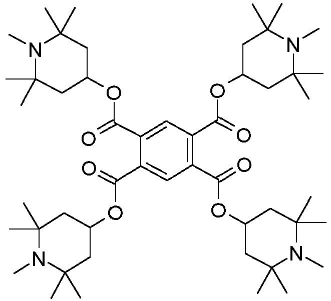 |
| 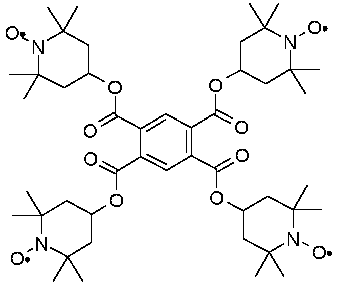 | 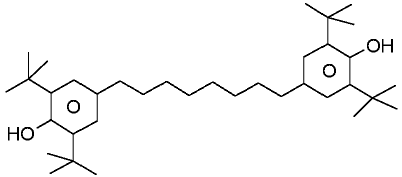 |
| | 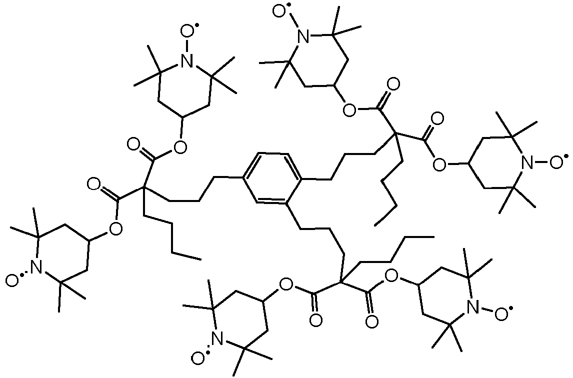 |

The LC media preferably comprise 0 to 10% by weight, in particular 1 ppm to 5% by weight, particularly preferably 1 ppm to 1% by weight, of stabilisers. The LC media preferably comprise one or more stabilisers selected from the group consisting of compounds from Table D.

**Table E**

| Table E shows illustrative reactive mesogenic compounds which can be used in the LC media in accordance with the present invention. | |
|---|---|
| 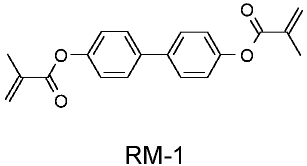 | 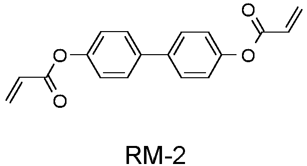 |
| 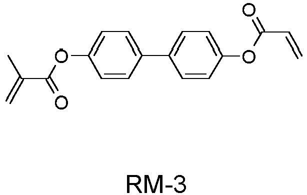 | 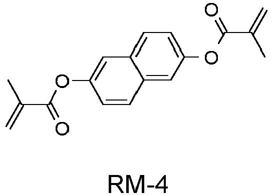 |
| 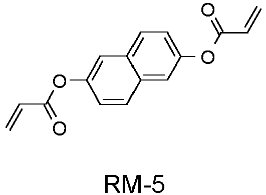 | 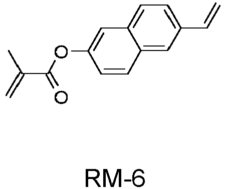 |
| 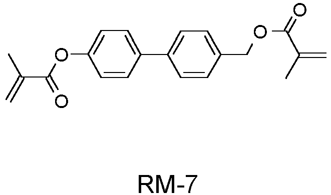 | 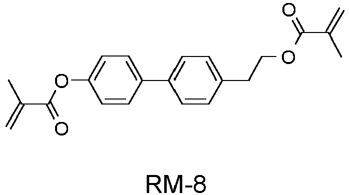 |
| 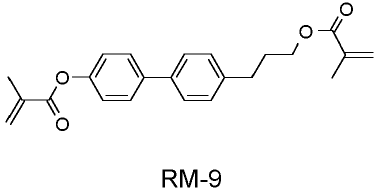 | 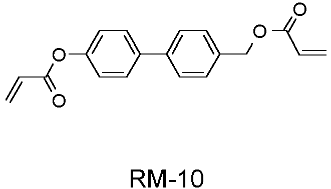 |
| 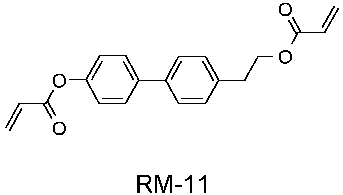 | 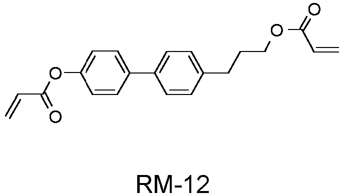 |
| 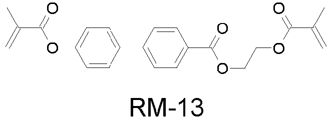 | 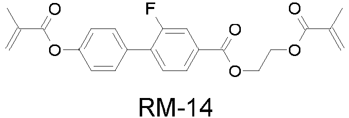 |
| 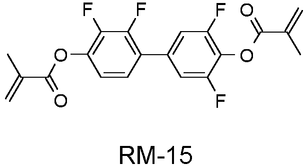 | 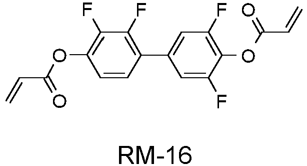 |
| 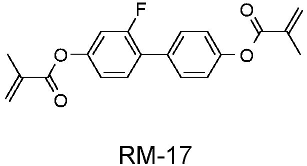 | 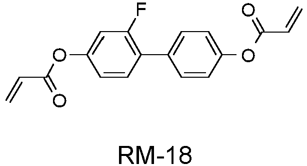 |
| 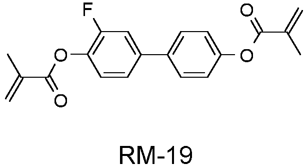 | 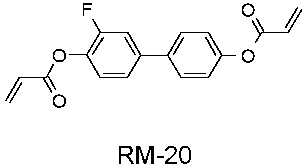 |
| 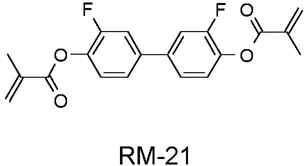 | 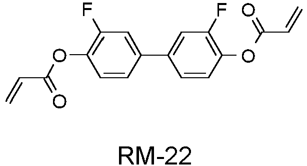 |
| 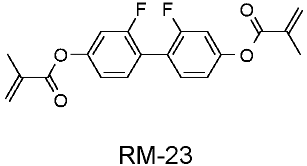 | 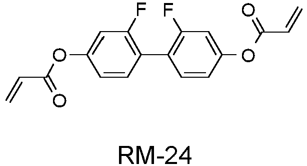 |
| 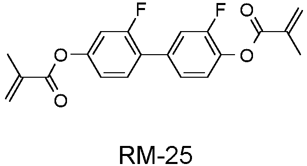 | 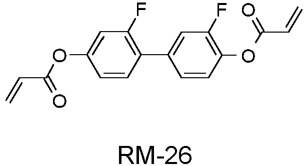 |
| 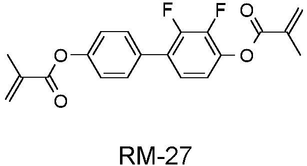 | 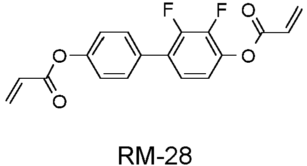 |
| 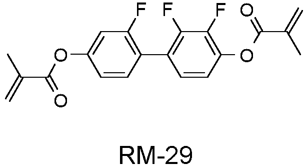 | 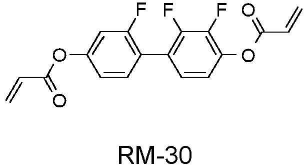 |
| 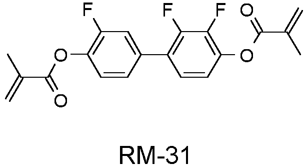 | 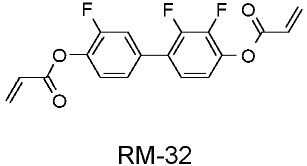 |
| 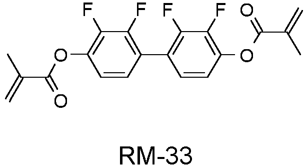 | 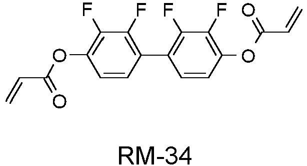 |
| 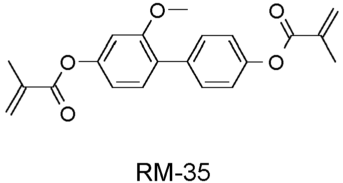 | 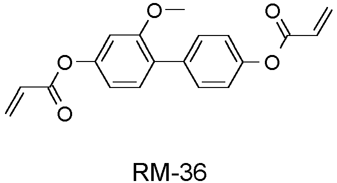 |
| 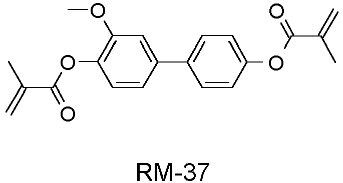 | 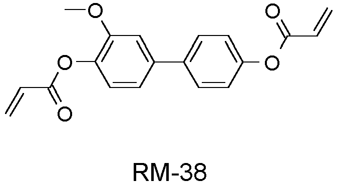 |
| 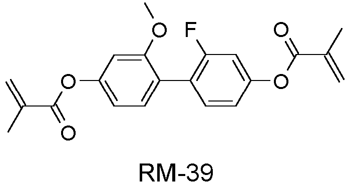 | 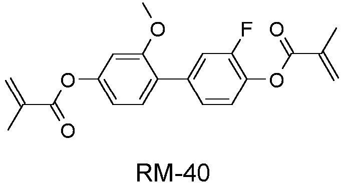 |
| 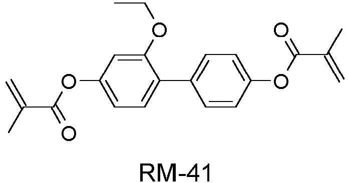 | 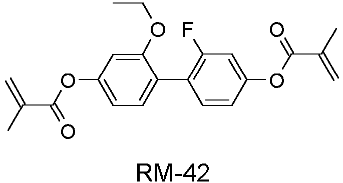 |
| 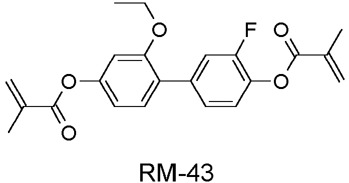 | 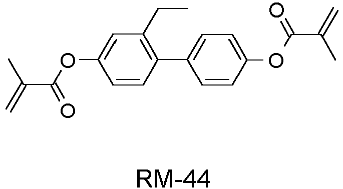 |
| 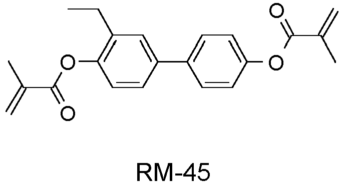 | 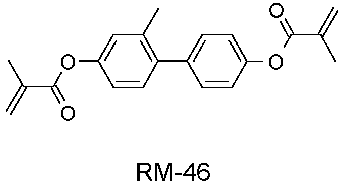 |
| 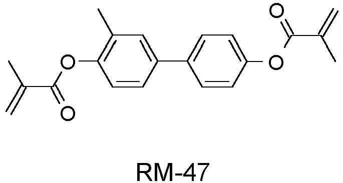 | 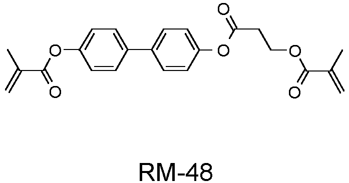 |
| 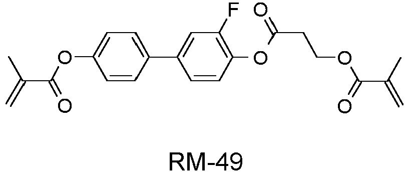 | |
| 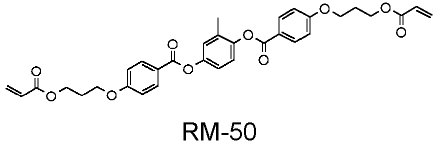 | |
| 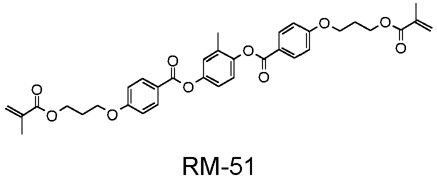 | |
| 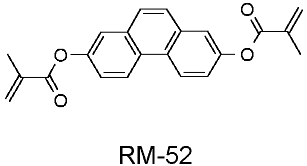 | 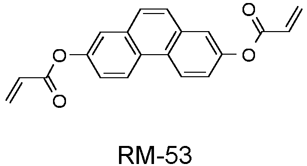 |
| 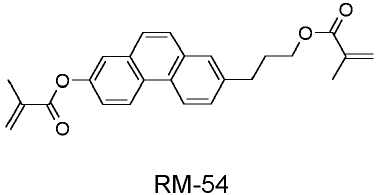 | 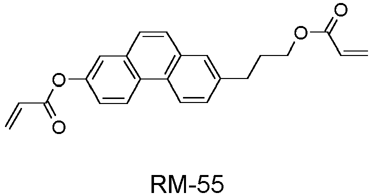 |
| 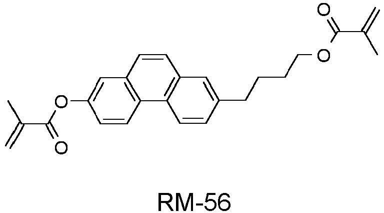 | 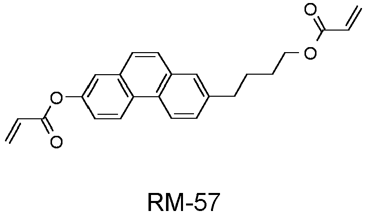 |
| 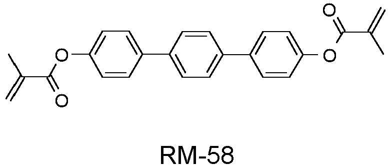 | 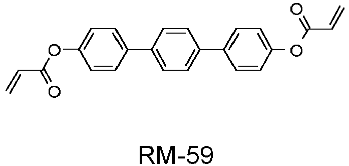 |
| 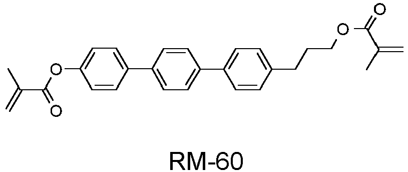 | 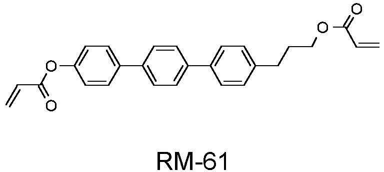 |
| 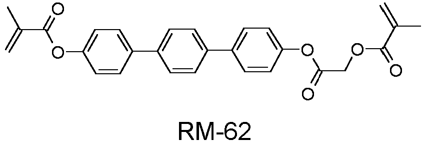 | 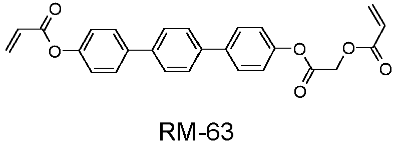 |
| 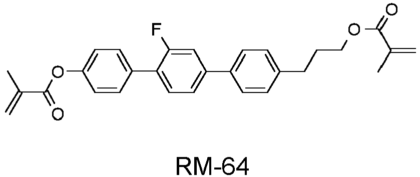 | 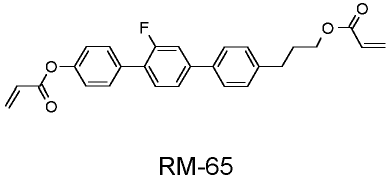 |
| 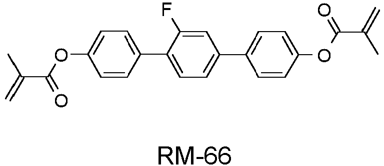 | 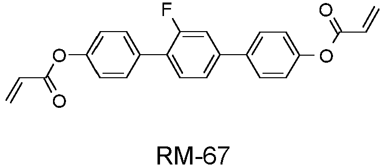 |
| 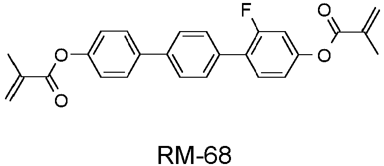 | 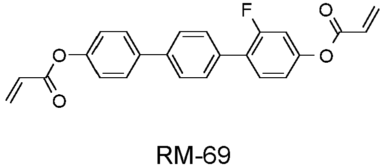 |
| 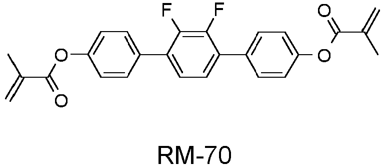 | 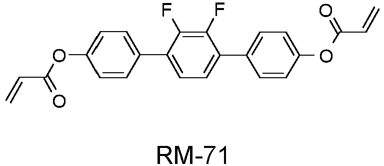 |
| 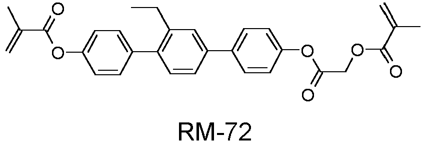 | 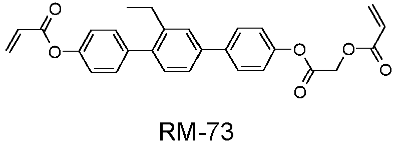 |
| 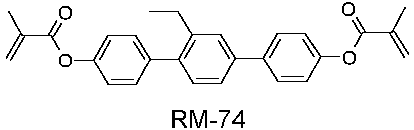 | 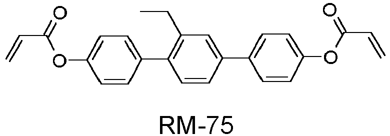 |
| 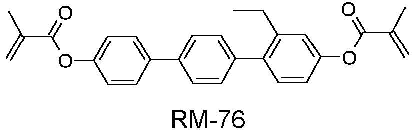 | 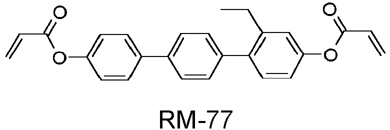 |
| 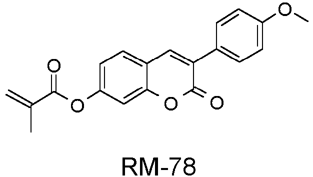 | 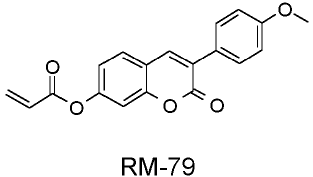 |
| 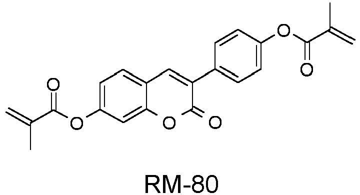 | 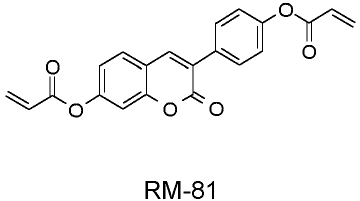 |
| 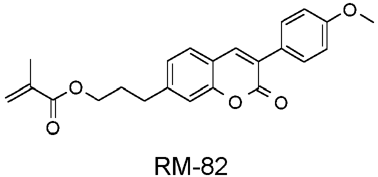 | 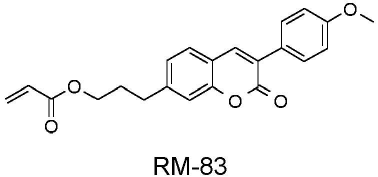 |
| 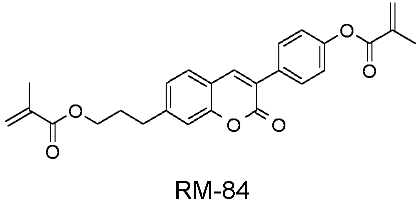 | 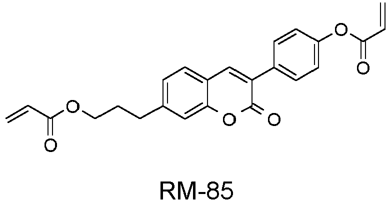 |
| 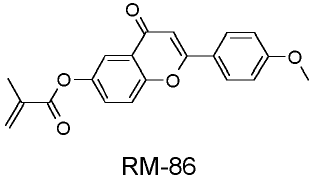 | 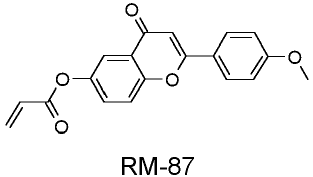 |
| 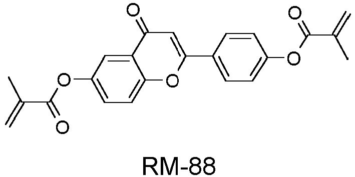 | 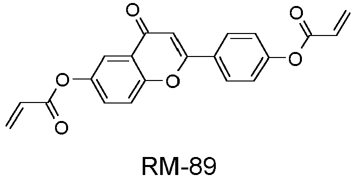 |
| 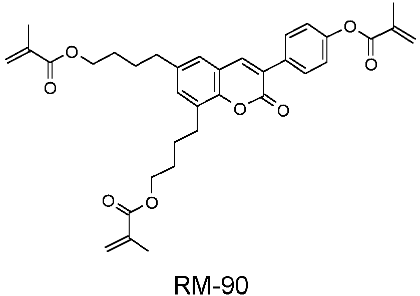 | 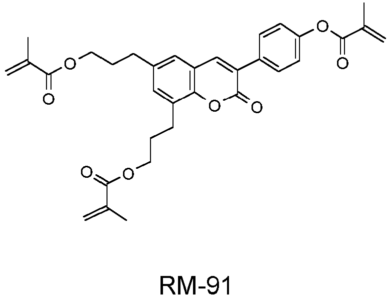 |
| 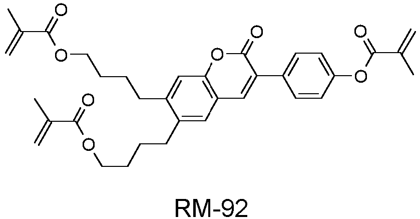 | 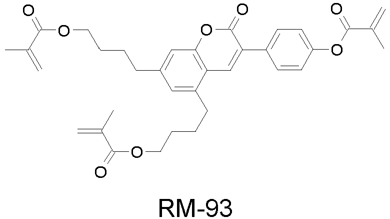 |
| 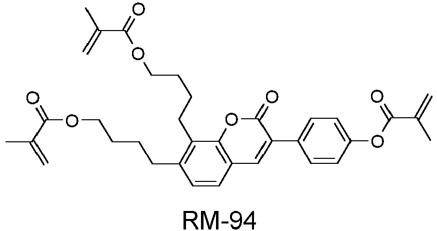 | 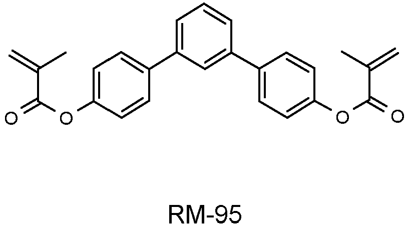 |
| 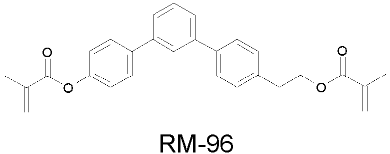 | 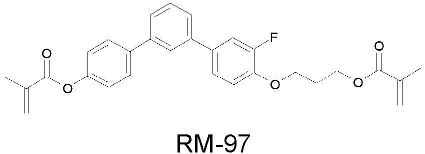 |
| 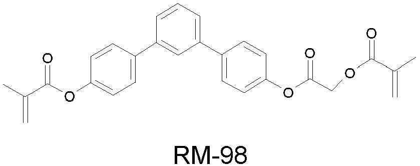 | 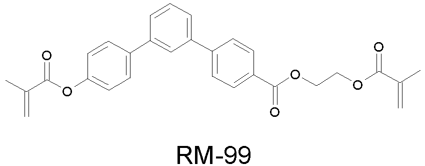 |
| 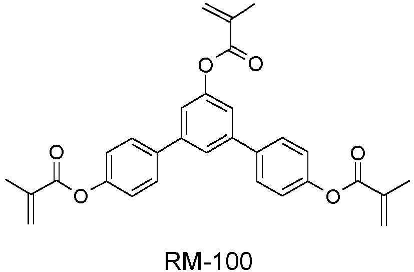 | |
| 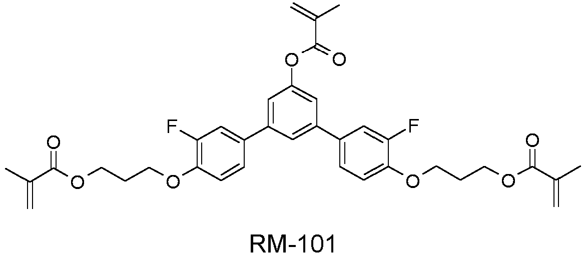 | |
| 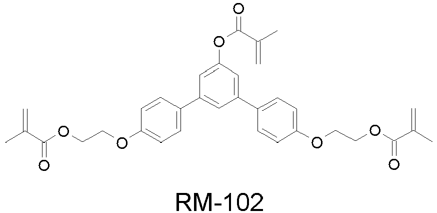 | |
| 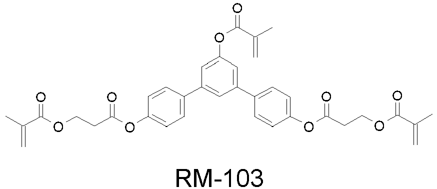 | |
| 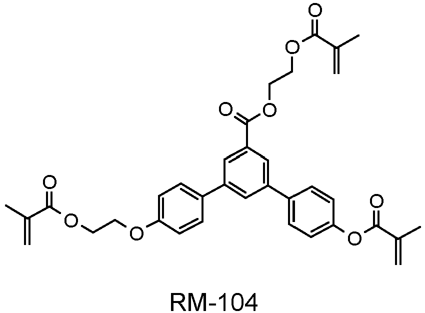 | |
| 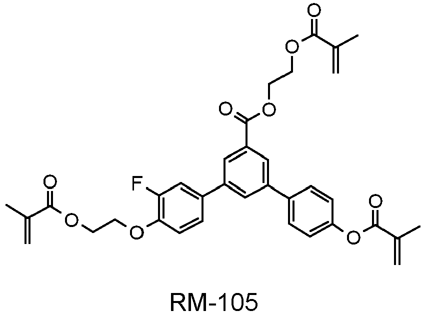 | 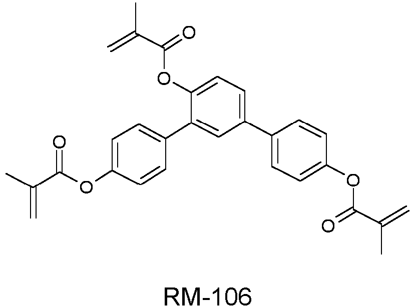 |
| 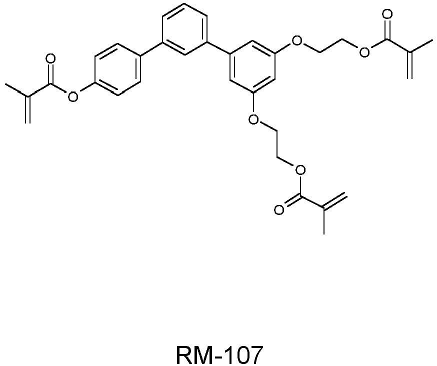 | 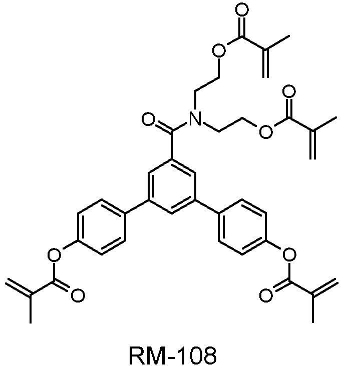 |
| 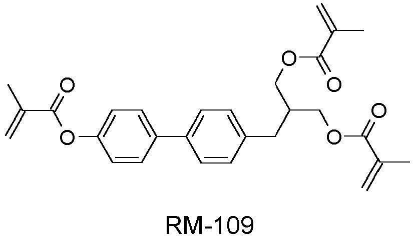 | 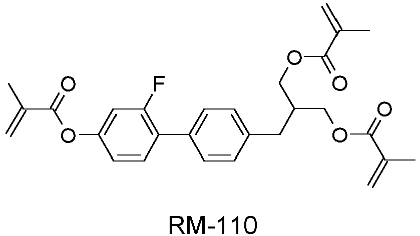 |
| 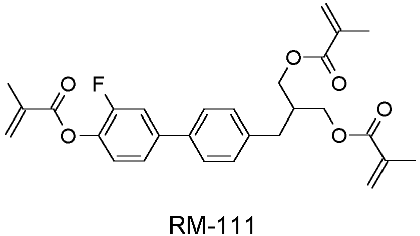 | 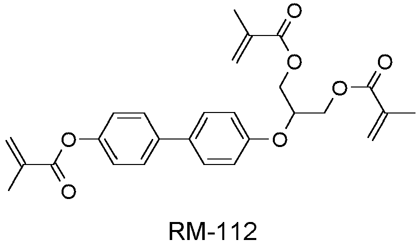 |
| 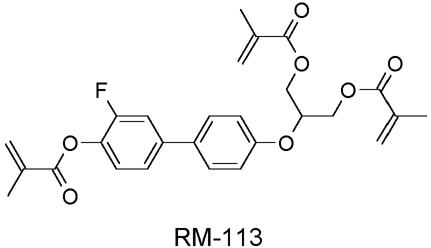 | 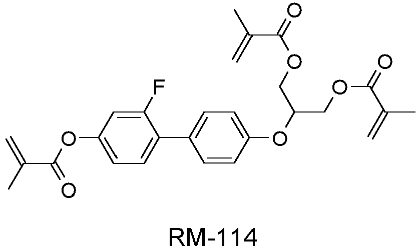 |
| 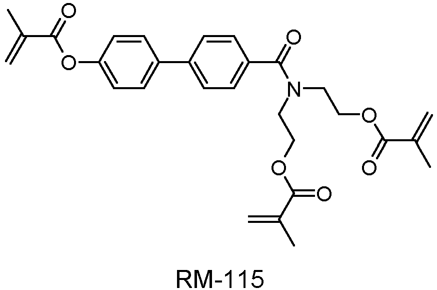 | 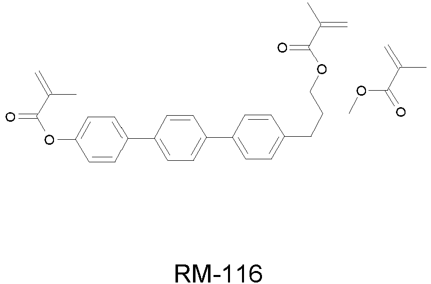 |
| 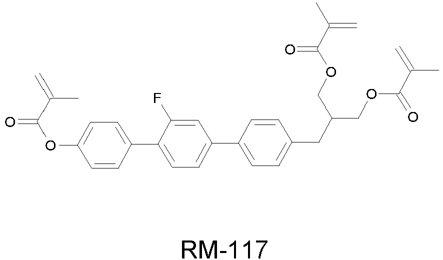 | 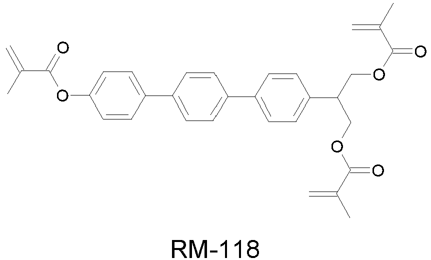 |
| 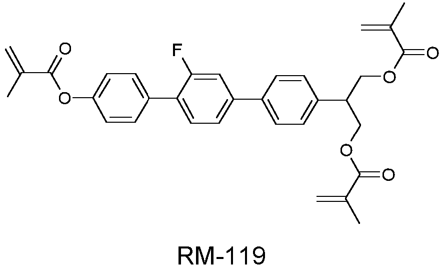 | 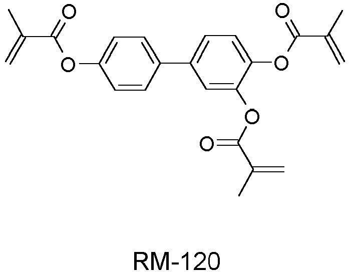 |
| 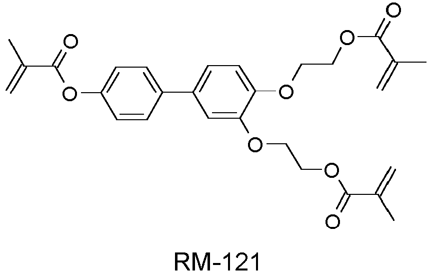 | 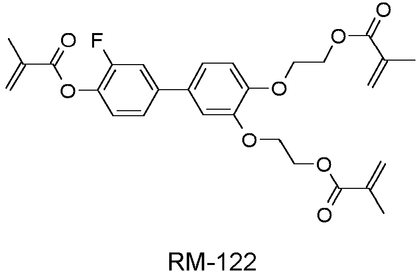 |
| 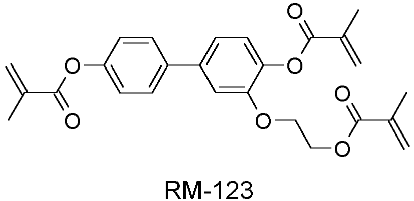 | 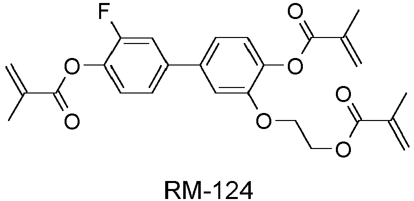 |
| 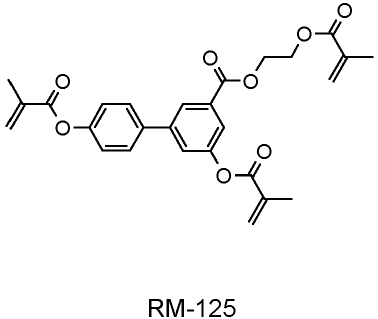 | 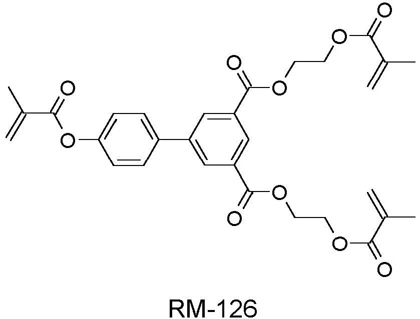 |
| 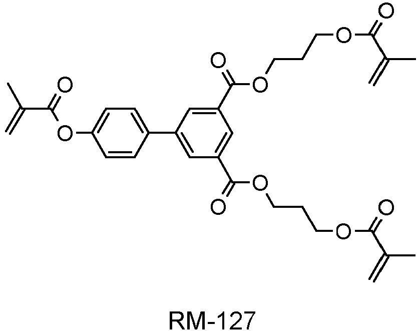 | 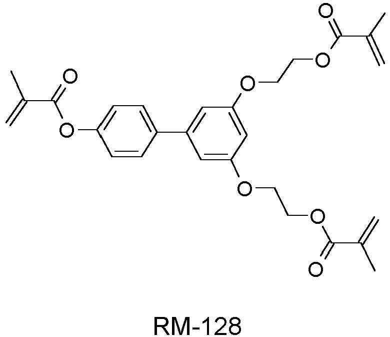 |
| 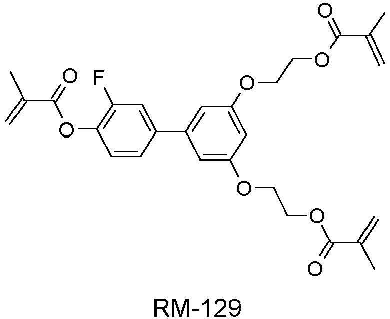 | 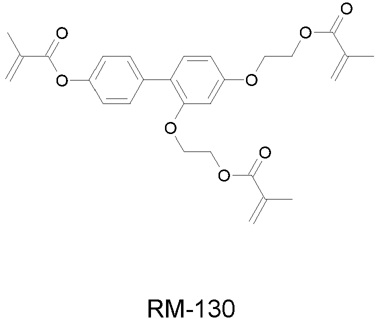 |
| 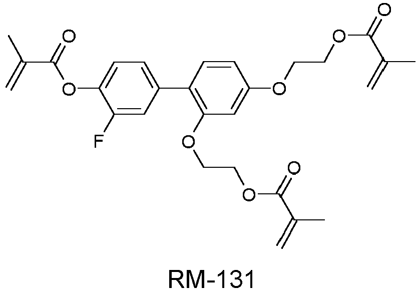 | 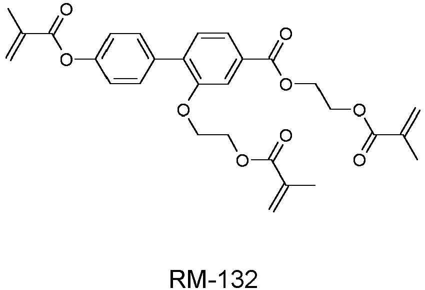 |
| 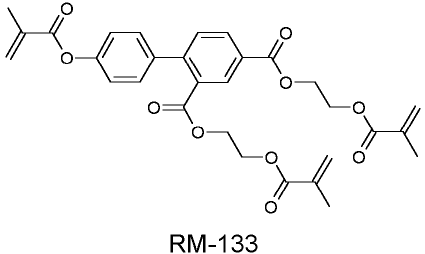 | 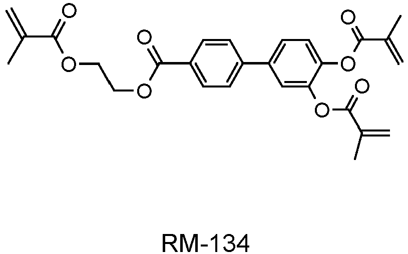 |
| 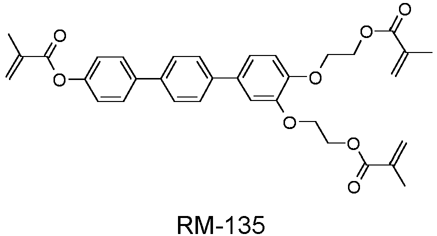 | 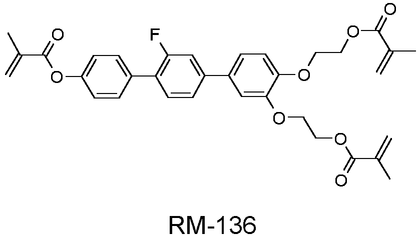 |
| 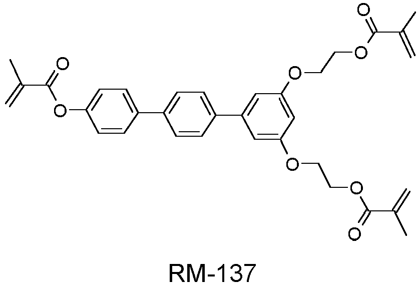 | 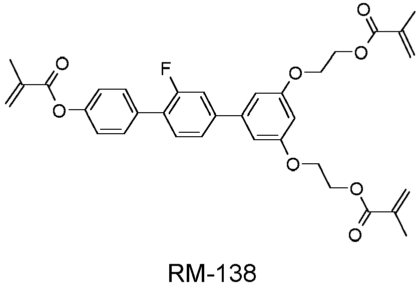 |
| 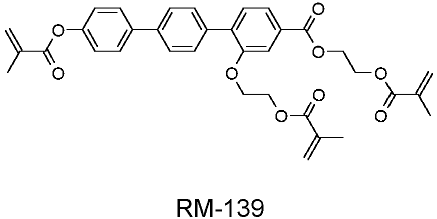 | 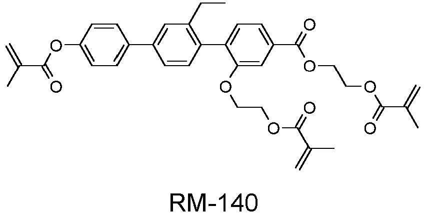 |
| 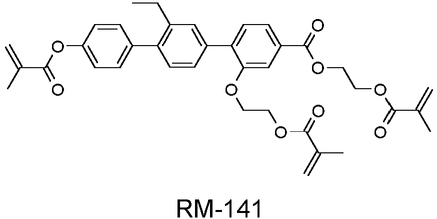 | 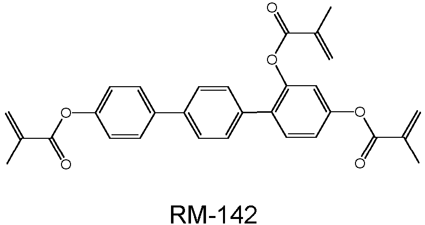 |
| 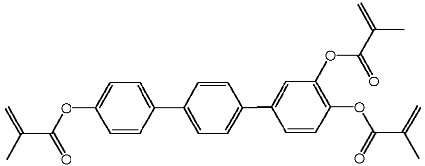 | 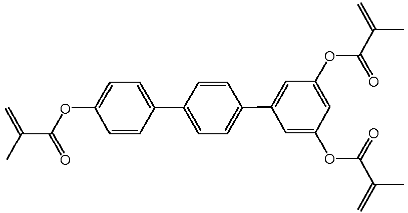 |
| 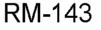 | 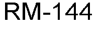 |
| 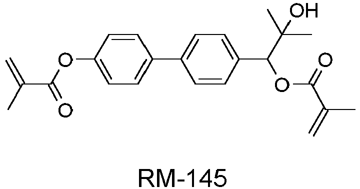 | 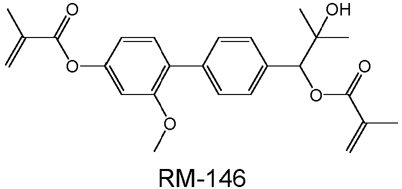 |
| 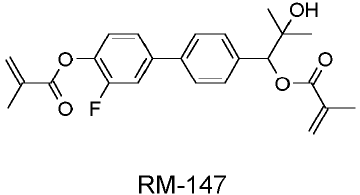 | 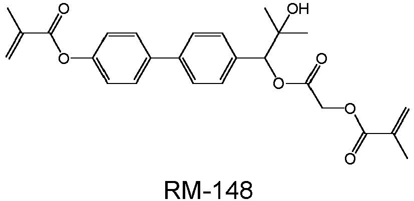 |
| 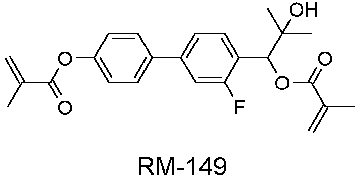 | 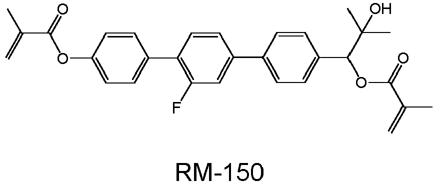 |
| 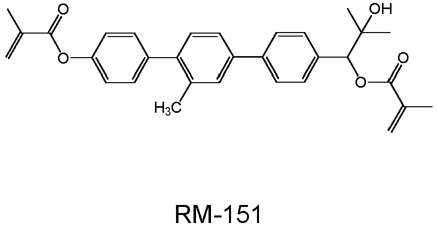 | 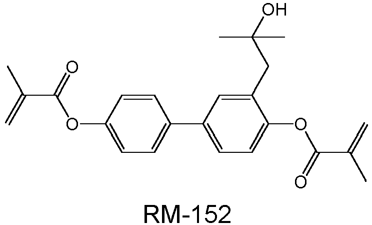 |
| 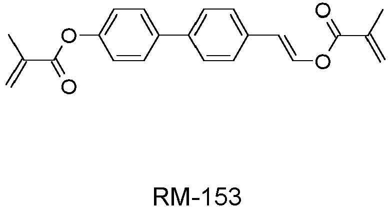 | 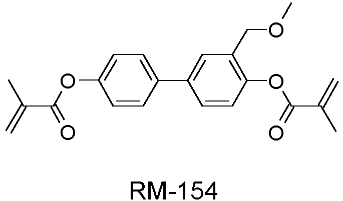 |
| 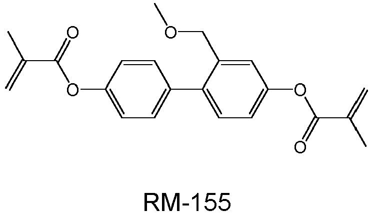 | 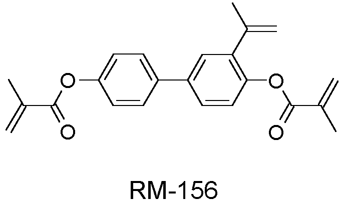 |
| 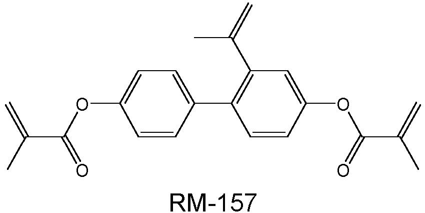 | 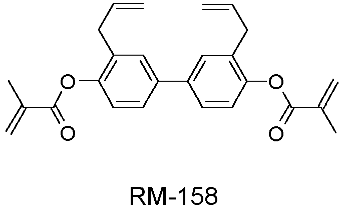 |
| 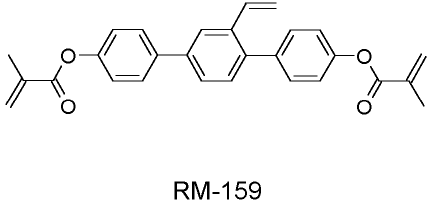 | 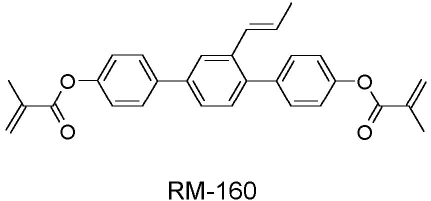 |
| 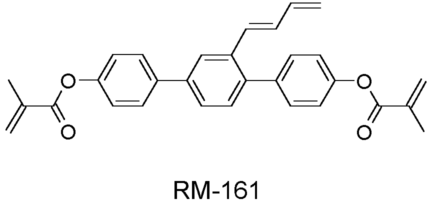 | 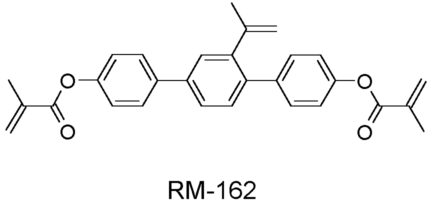 |
| 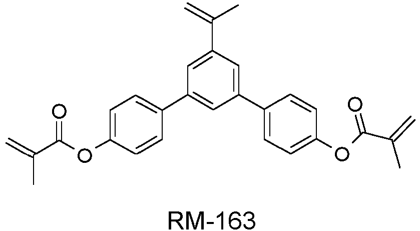 | 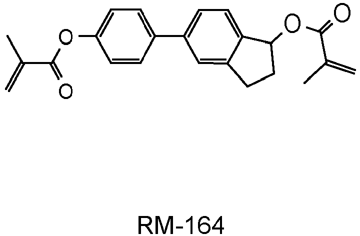 |
| 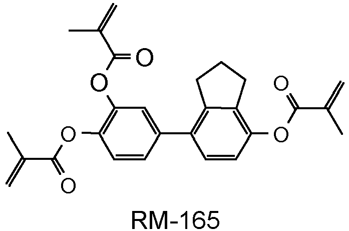 | 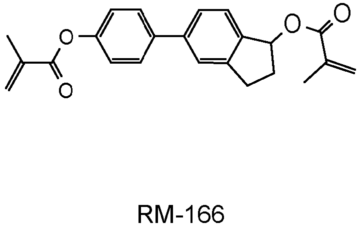 |
| 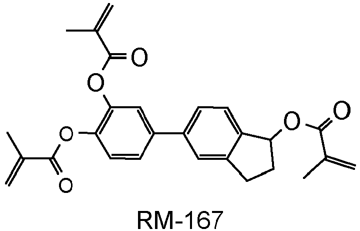 | 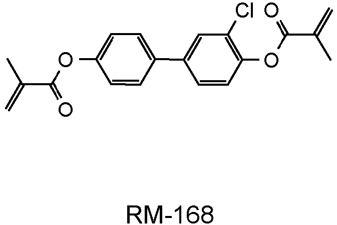 |
| 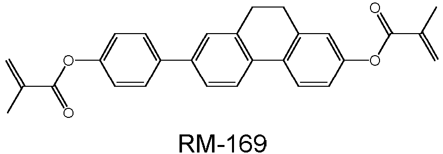 | 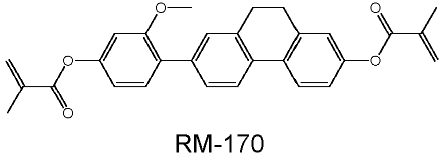 |
| 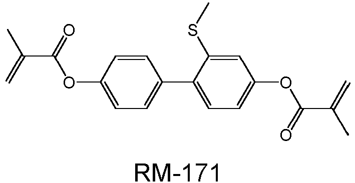 | 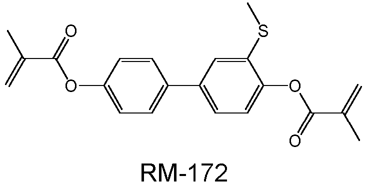 |
| 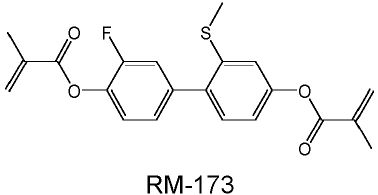 | 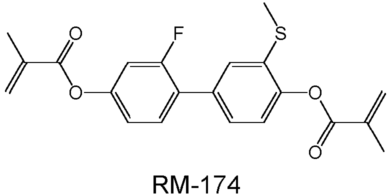 |
| 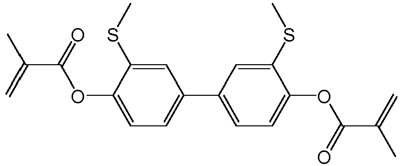 | 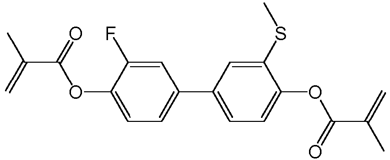 |
| 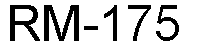 | 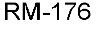 |
| 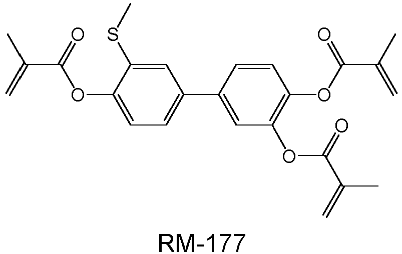 | 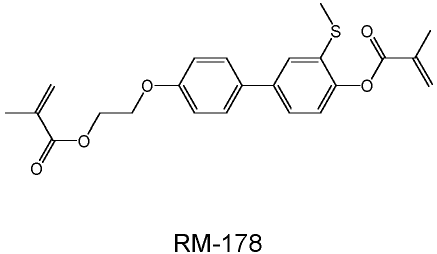 |
| 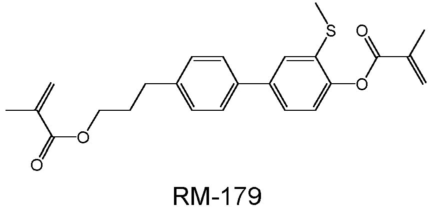 | 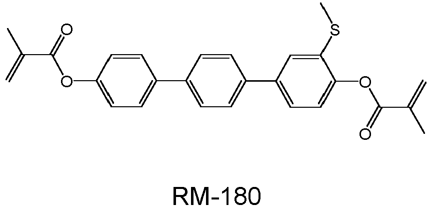 |
| 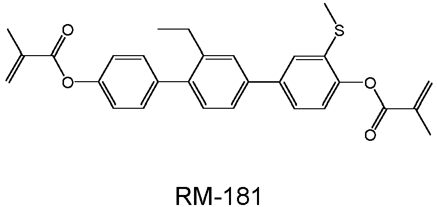 | 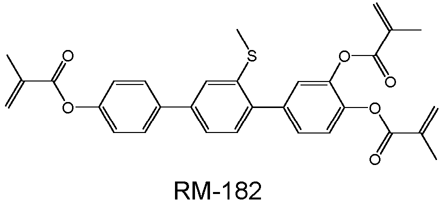 |
| 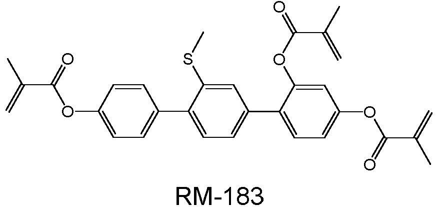 | |

In a preferred embodiment, the mixtures according to the invention comprise one or more polymerizable compounds, preferably selected from the polymerizable compounds of the formulae RM-1 to RM-182. Of these, compounds RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-183 are particularly preferred.

**Table F**

| Table F shows self-alignment additives for vertical alignment which can be used in LC media for SA-VA and SA-FFS displays according to the present invention together with the polymerizable compounds: |
|---|
| 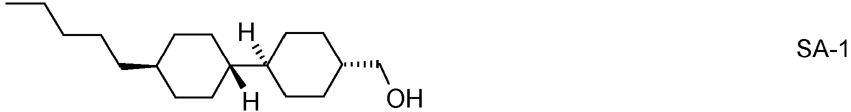 |
| 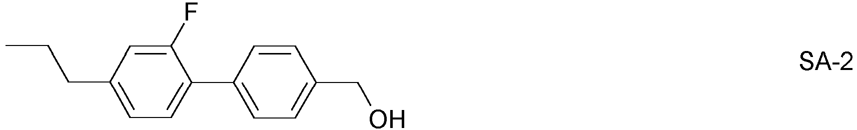 |
| 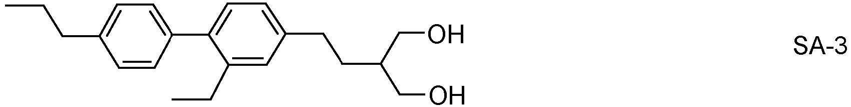 |
| 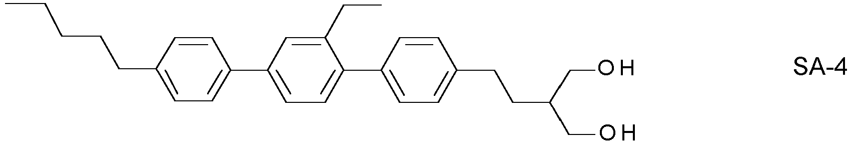 |
| 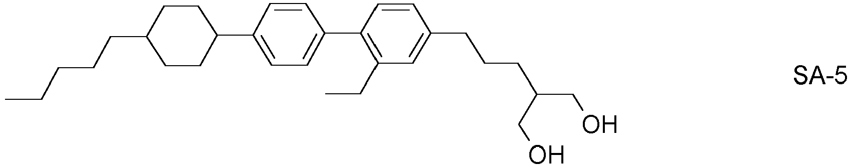 |
| 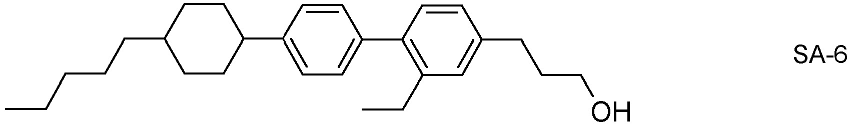 |
| 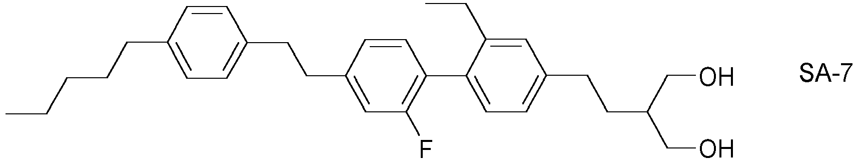 |
| 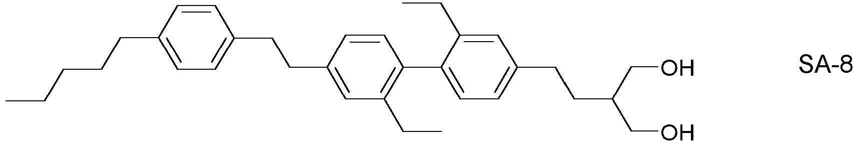 |
| 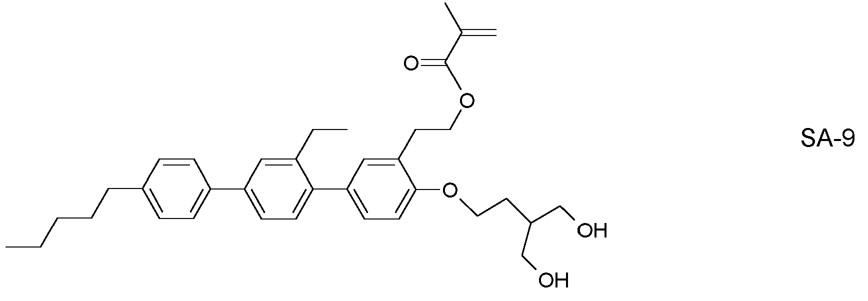 |
| 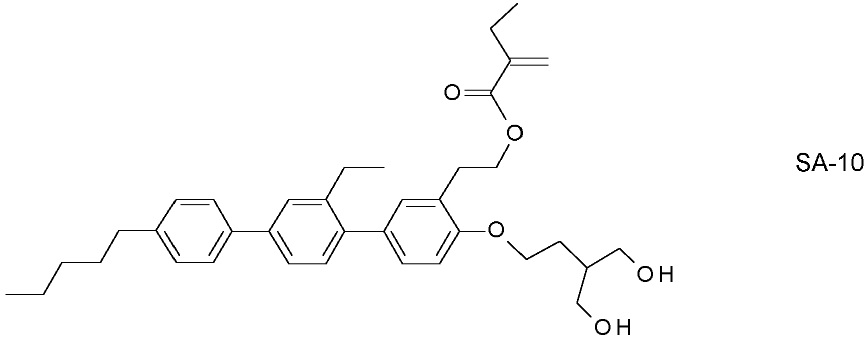 |
| 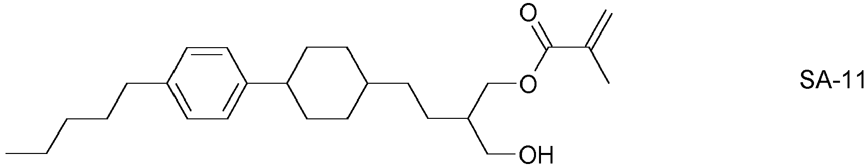 |
| 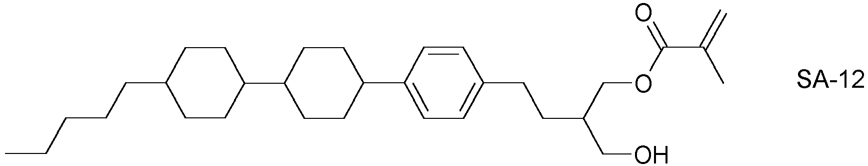 |
| 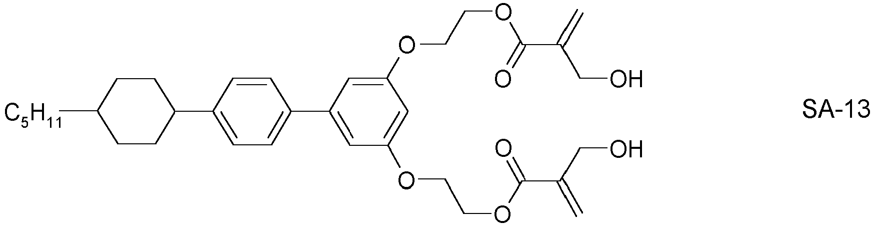 |
| 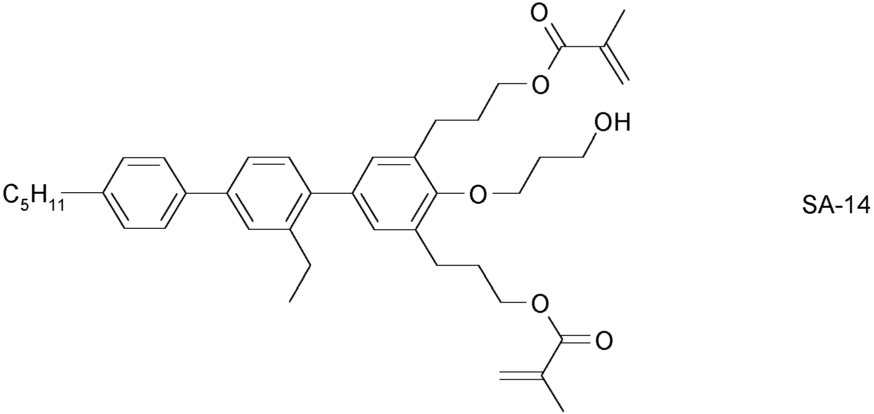 |
| 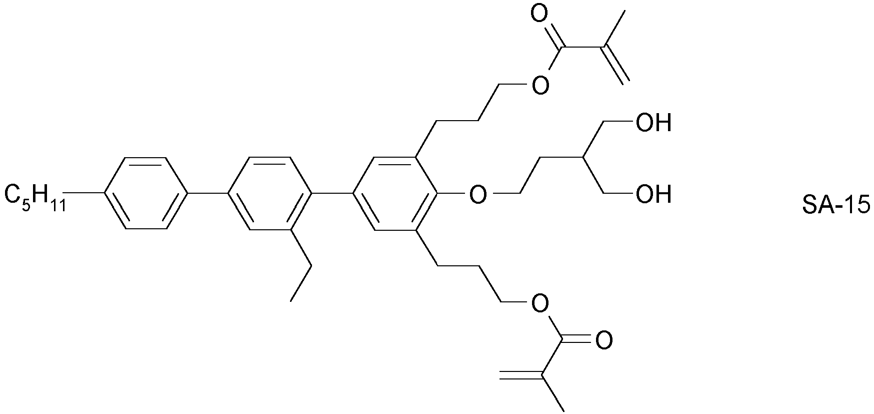 |
| 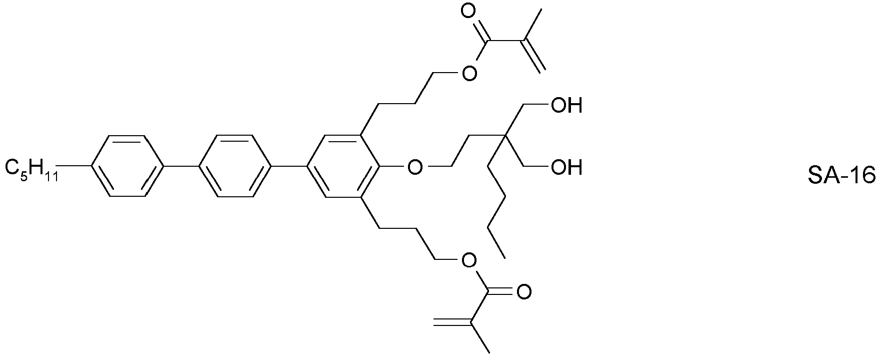 |
| 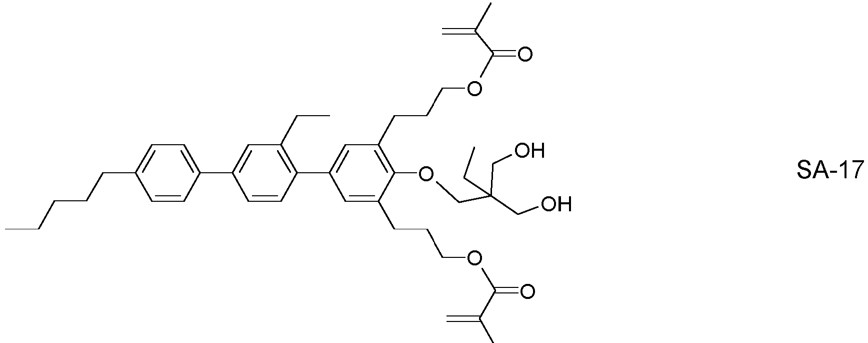 |
| 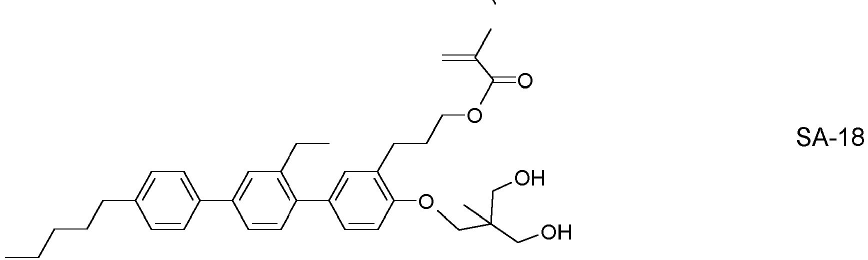 |
| 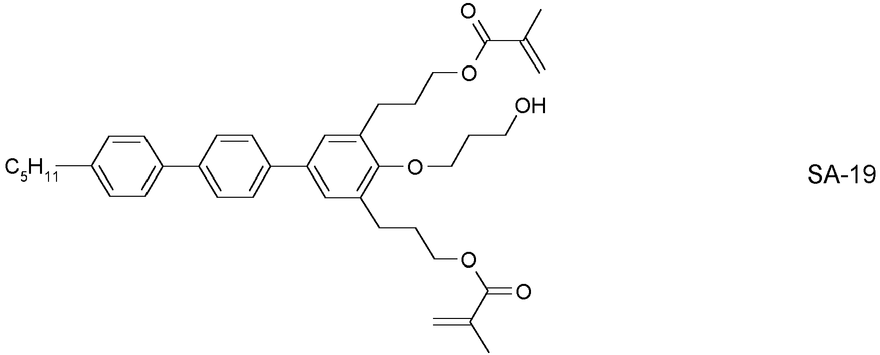 |
| 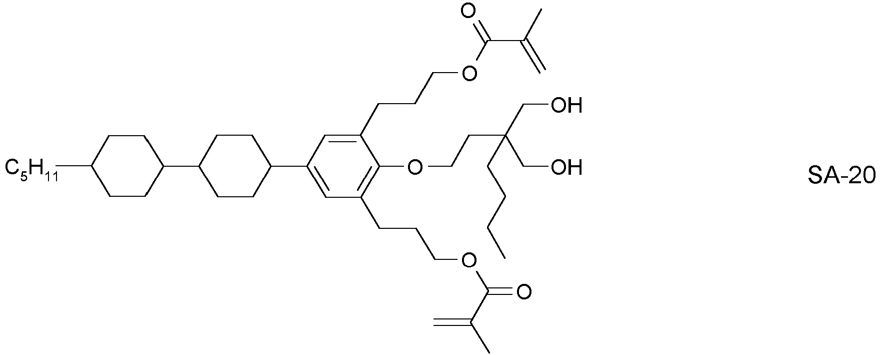 |
| 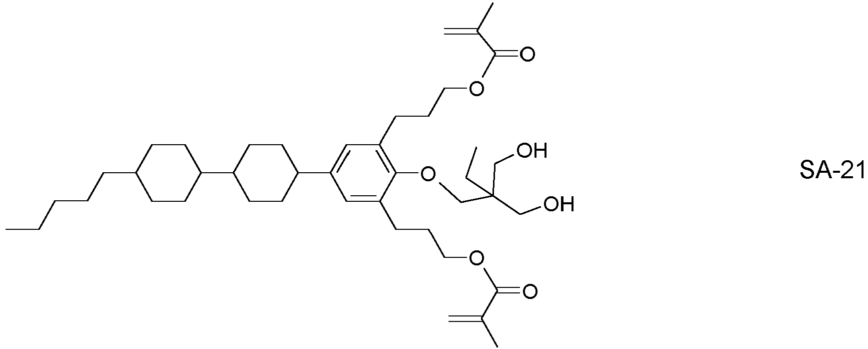 |
| 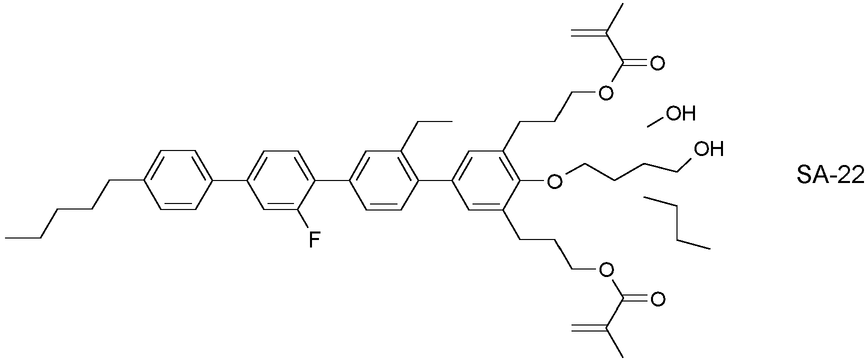 |
| 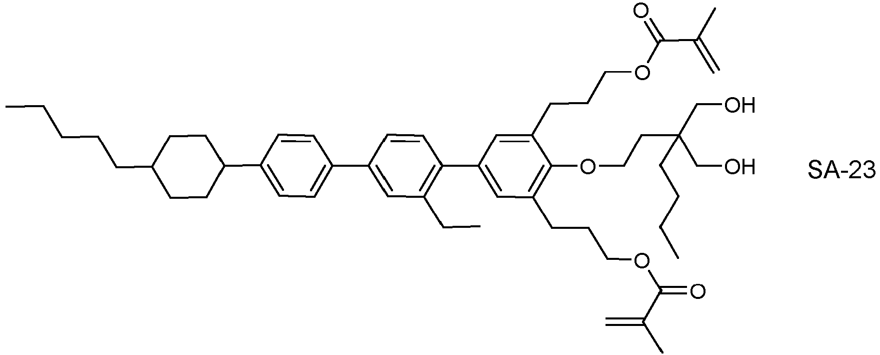 |
| 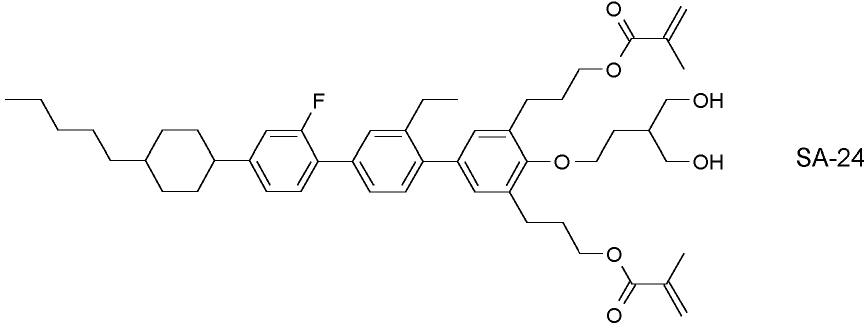 |
| 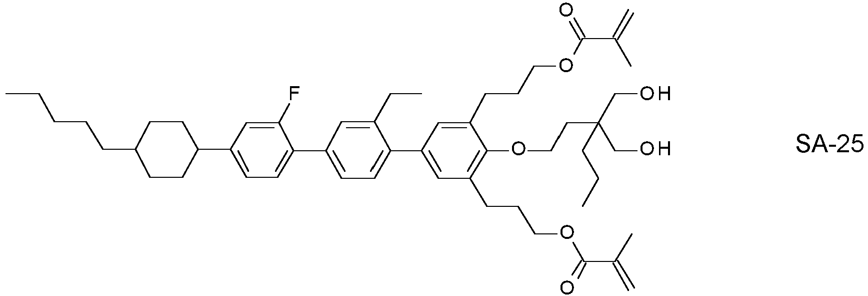 |
| 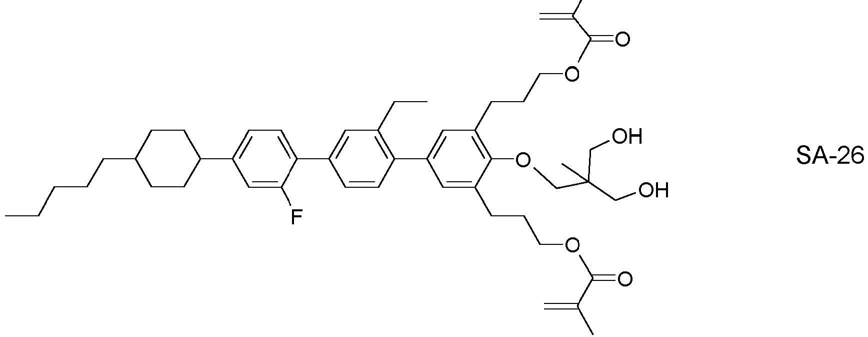 |
| 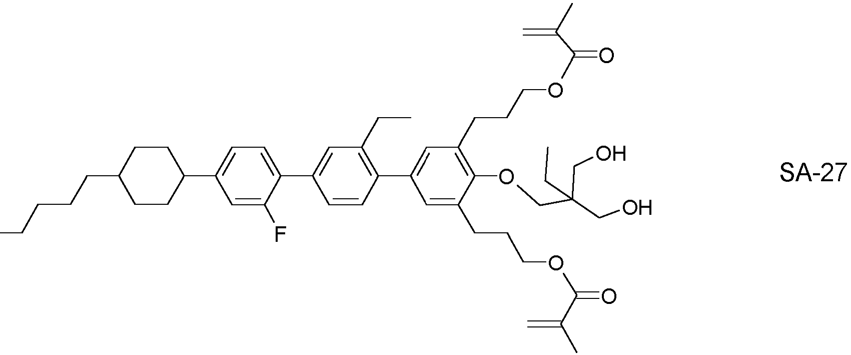 |
| 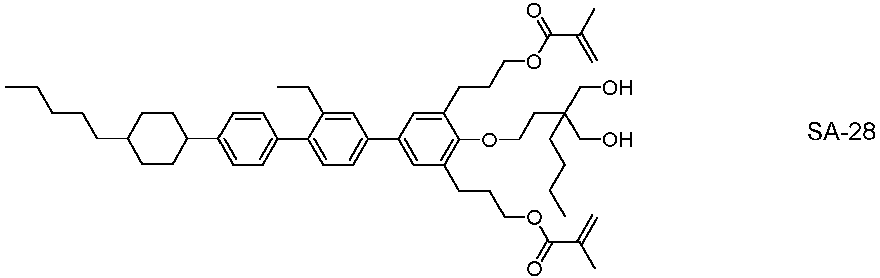 |
| 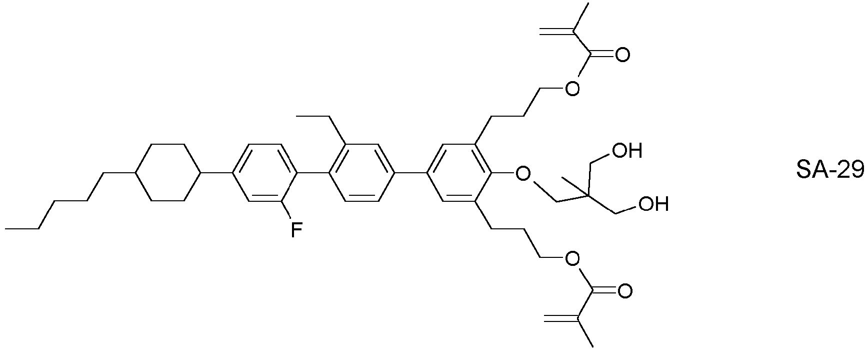 |
| 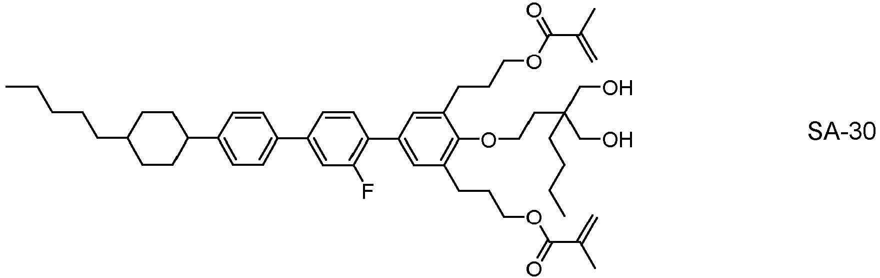 |
| 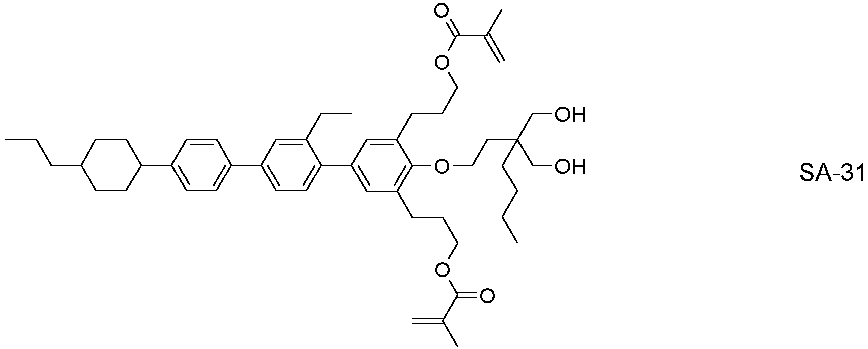 |
| 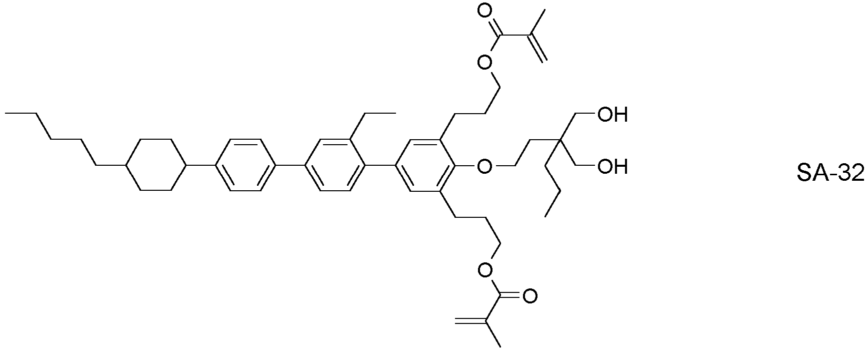 |
| 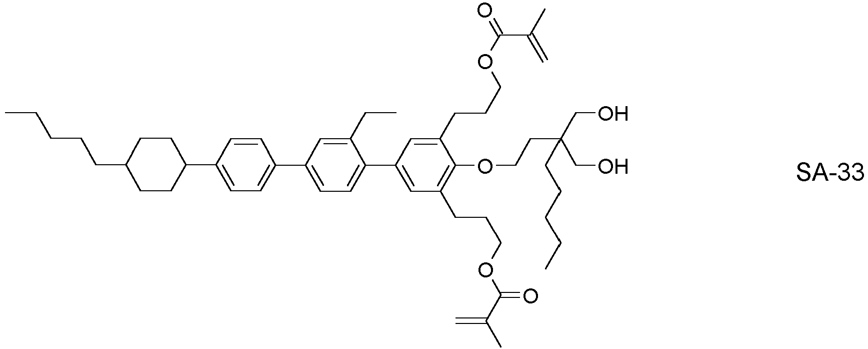 |
| 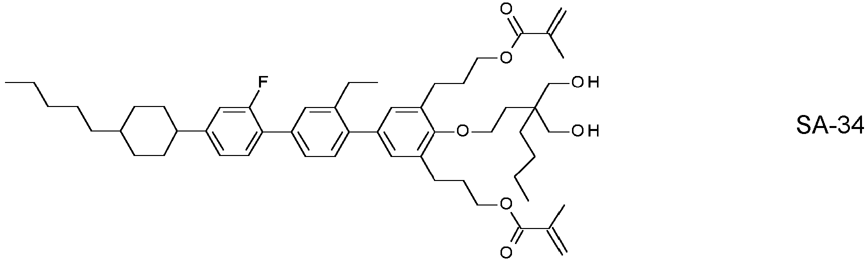 |
| 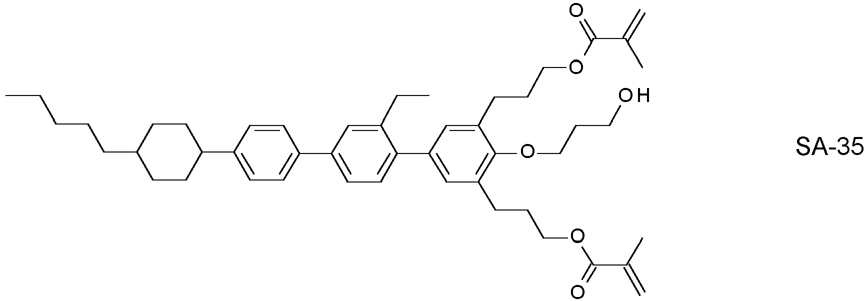 |
| 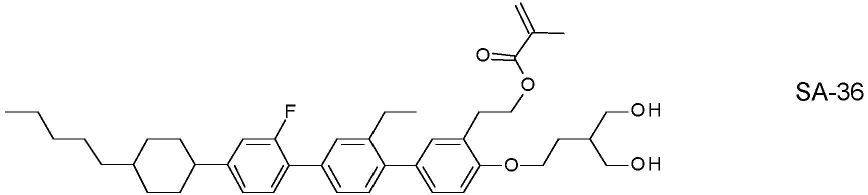 |
| 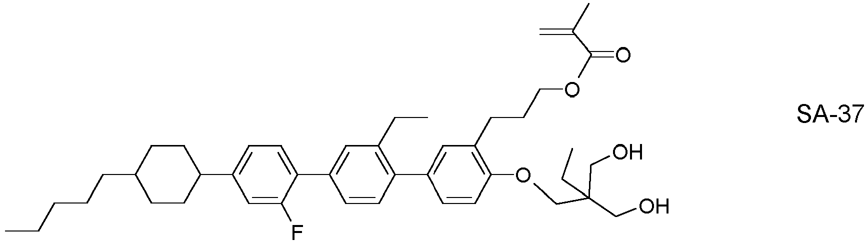 |
| 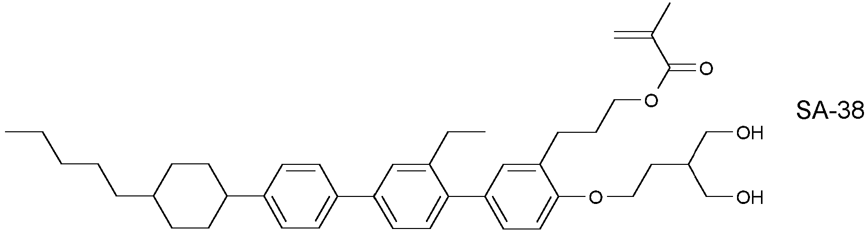 |
| 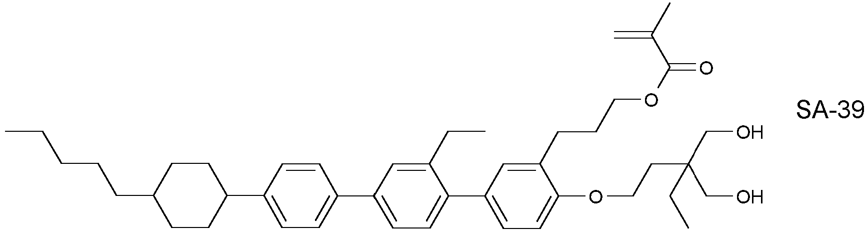 |
| 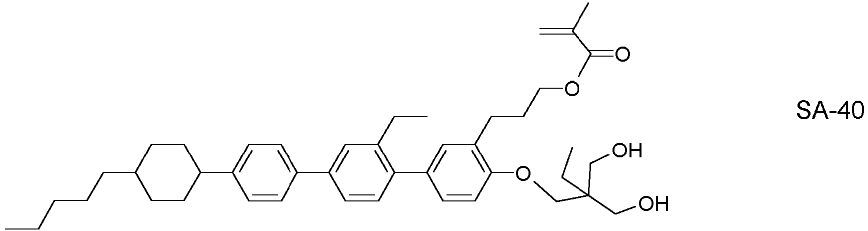 |
| 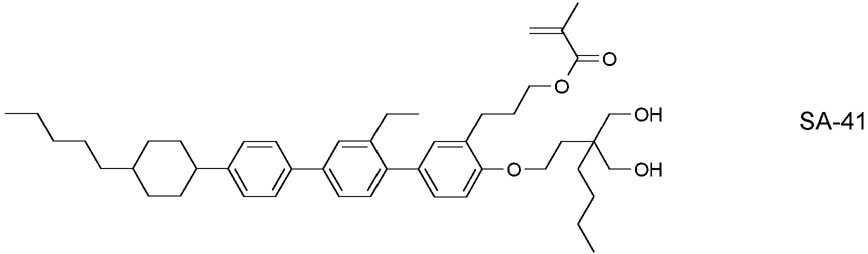 |
| 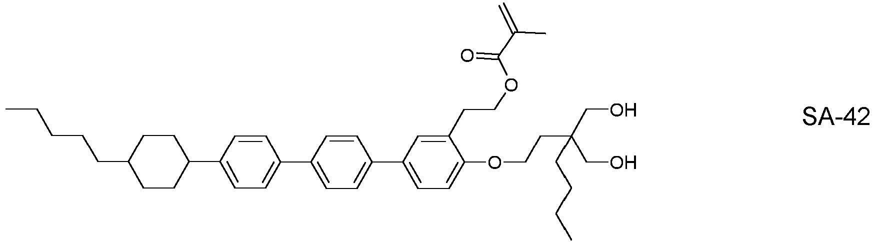 |
| 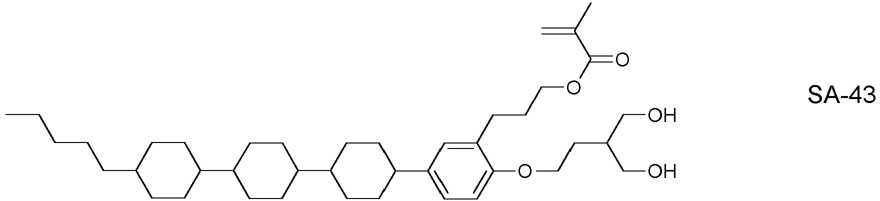 |
| 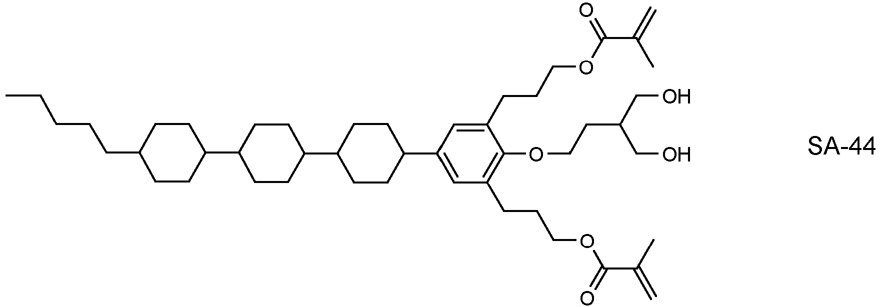 |
| 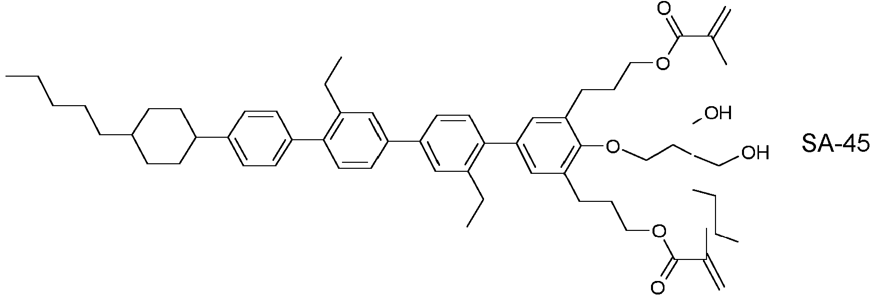 |
| 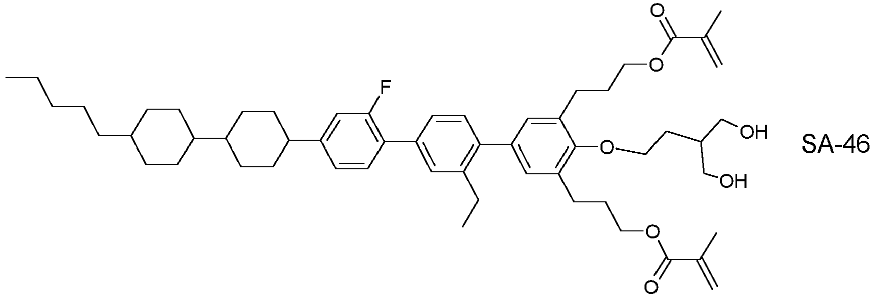 |
| 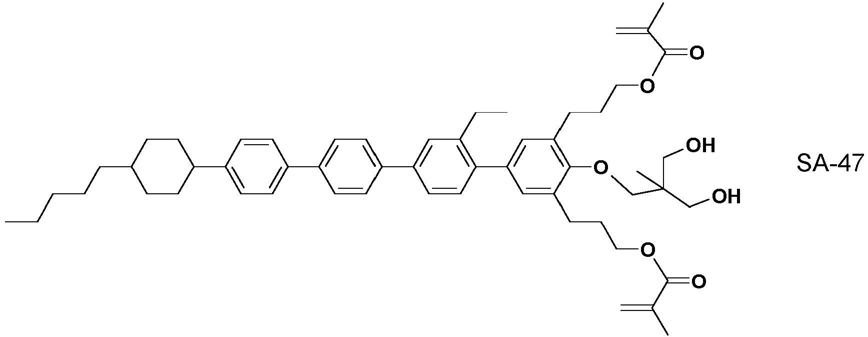 |
| 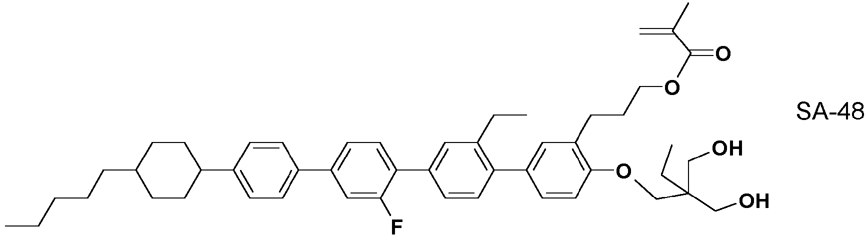 |

In a preferred embodiment, the LC media, SA-VA and SA-FFS displays according to the present invention comprise one or more SA additives selected from formulae SA-1 to SA-48, preferably from formulae SA-14 to SA-48, very preferably from formulae SA-20 to SA-34 and SA-44, in combination with one or more RMs.

### Examples

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

In addition, the following abbreviations and symbols are used:
- V₀: threshold voltage, capacitive [V] at 20°C,
- nₑ: extraordinary refractive index at 20°C and 589 nm,
- nₒ: ordinary refractive index at 20°C and 589 nm,
- Δn: optical anisotropy at 20°C and 589 nm,
- ε⊥: dielectric permittivity perpendicular to the director at 20°C and 1 kHz,
- ε∥: dielectric permittivity parallel to the director at 20°C and 1 kHz,
- Δε: dielectric anisotropy at 20°C and 1 kHz,
- cl.p., T(N,I): clearing point [°C],
- γ₁: rotational viscosity at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN]
- Kₐᵥ: average eleastic constant at 20°C [pN] defined here as ${K}_{av} . ≡ \left(\frac{3}{2} {K}_{1}+{K}_{3}\right) / 3 \approx \left({K}_{1}+{K}_{2}+{K}_{3}\right) / 3 ,$
- LTS: low-temperature stability of the phase, determined in test cells,
- VHR: voltage holding ratio.

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

Unless stated otherwise, the process of polymerizing the polymerizable compounds in the PSA displays as described above and below is carried out at a temperature where the LC medium exhibits a liquid crystal phase, preferably a nematic phase, and most preferably is carried out at room temperature.

Unless stated otherwise, methods of preparing test cells and measuring their electrooptical and other properties are carried out by the methods as described hereinafter or in analogy thereto.

The display used for measurement of the capacitive threshold voltage usually consists of two plane-parallel glass outer plates at a separation of 25 µm, each of which has on the inside an electrode layer and an unrubbed polyimide alignment layer on top, which effect a homeotropic edge alignment of the liquid-crystal molecules.

The PSVA display or PSVA test cell used for measurement of the tilt angles usually consists of two plane-parallel glass outer plates at a separation of ca. 4 µm unless stated otherwise, each of which has on the inside an electrode layer and a polyimide alignment layer on top, where the two polyimide layers are rubbed antiparallel to one another and effect a homeotropic edge alignment of the liquid-crystal molecules. The SAVA display or test cell has the same structure but wherein one or both polyimide layers are omitted.

The polymerizable compounds are usually polymerized in the display or test cell by irradiation with UV light of defined intensity for a prespecified time, with a voltage simultaneously being applied to the display (usually 10 V to 30 V alternating current, 1 kHz).

The intensity is measured using a standard meter (Hoenle UV-meter high end with UV sensor).

The tilt angle is usually determined using the Mueller Matrix Polarimeter "AxoScan" from Axometrics. A low value (i.e. a large deviation from the 90° angle) corresponds to a large tilt here.

Unless stated otherwise, the term "tilt angle" means the angle between the LC director and the substrate, and "LC director" means in a layer of LC molecules with uniform orientation the preferred orientation direction of the optical main axis of the LC molecules, which corresponds, in case of calamitic, uniaxially positive birefringent LC molecules, to their molecular long axis.

### Example 1

The nematic LC host mixture N1 is formulated as follows

| | | | |
|---|---|---|---|
| B(S)-2O-O4 | 4.50 % | cl.p. | 74°C |
| B(S)-2O-O5 | 5.00 % | Δn | 0.1120 |
| BCH-32 | 6.00 % | nₑ | 1.6002 |
| CC-3-V | 47.50 % | nₒ | 1.4882 |
| CLY-3-O2 | 6.00 % | Δε | -3.0 |
| CPY-2-O2 | 10.50 % | ε∥ | 3.5 |
| CPY-3-O2 | 10.50 % | ε_{⊥} | 6.6 |
| PY-1-O2 | 10.00 % | γ₁ | 74 mPa s |
| | | K₁ | 14.2 |
| | | K₃ | 14.5 |
| | | K₃/K₁ | 1.03 |
| | | V₀ | 2.31 V |

Polymerizable mixture P1 according to the present invention is prepared by adding both polymerizable compounds IA1 and IB1 to nematic LC host mixture N1.

For comparison purpose polymerizable reference mixtures C1A and C1B are prepared by adding only one of the polymerizable compounds IA1 and IB1 to nematic LC host mixture N1.

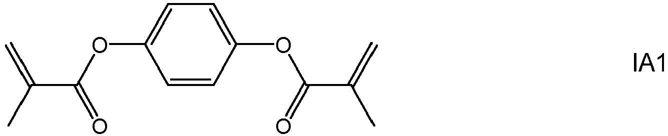

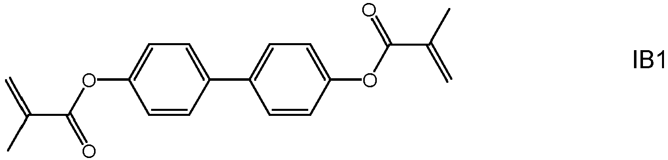

Compound IA1 has a wavelength λ of 300 nm at an extinction coefficient E=0.5 (measured in DCM at a concentration of 0.3 g/L).

Compound IB1 has a wavelength λ of 320 nm at an extinction coefficient E=0.5 (measured in DCM at a concentration of 0.3 g/L).

The compounds are therefore suitable for use in a PSA process using a UV C-type lamp both in the UV1 and UV2 step.

The polymerizable mixture compositions are shown in Table 1.1.

**Table 1.1 - Polymerizable mixture compositions**

| Conc. (wt. %) | Host N1 | Monomer | | Total Monomer Conc. (%) |
|---|---|---|---|---|
| | | IA1 | IB1 | |
| C1A | 99.5 | 0.5 | - | 0.5 |
| C1B | 99.7 | - | 0.3 | 0.3 |
| P1 | 99.2 | 0.5 | 0.3 | 0.8 |

### Tilt Angle Generation

Electrooptical VA test cells with AF glass substrates containing the polymerizable mixtures are exposed to UV light in a two step process, the first step (UV1) for generating a tilt angle and the second step (UV2) for polymerizing any residual monomer that was not polymerized in the first step. In UV1 step a voltage is applied (0.1V step and curing at DC 15V). In UV2 step no voltage is applied. As radiation source a fluorescent UV C-type lamp with a cut-off filter of 313 nm was used. The UV intensity is checked by UV detector with 313 nm. The other conditions are as follows, unless stated otherwise:
UV1 (C-type lamp): 5 mW/cm² at room temperature for 10-300s
UV2 (C-type lamp): 0.5 mW/cm² at RT, 120 min

The tilt angle generated in the test cells after the UV1 step above after varying irradiation times is measured using an Otsuka T_RETS-10 system.

The time necessary to achieve a tilt angle of 88° is shown in Table 1.2 below.

**Table 1.2 - Tilt angle**

| Mixture | C1B | P1 |
|---|---|---|
| Tilt angle (°) | 88 | |
| Time (s) | 147-153 | 113-118 |

It can be seen that the polymerizable mixture P1 according to the invention comprising both compound IA1 and compound IB1 shows significantly quicker tilt angle generation than reference mixture and C1B which does only contain the compound IB1.

### Tilt Stability

Tilt stability, i.e. the change of the tilt angle after repeated electric stress, is a criterion for evaluating the risk of image sticking. A low value for the change of the tilt angle indicates a good tilt stability and a low potential risk of image sticking.

For determining the tilt stabillity the test cells containing the mixtures are prepared and the monomers polymerized with two UV steps as described above to generate a tilt angle. The test cells are then electrically stressed with a square wave of 40 V_{PP} at 60 Hz for 168h on backlight unit. After a relaxation time of 5-10 min the tilt angles are measured using the Otsuka T_RETS-10 system.

The change of the tilt angle *Δtilt* is determined according to equation (1) ${tilt}_{after stress} - {tilt}_{after tilt generation} = Δtilt$

The lower the value of *Δtilt,* the higher is the tilt stability.

The results are shown in Table 1.3.

**Table 1.3 - Tilt Stability**

| Mixture | C1A | C1B | P1 |
|---|---|---|---|
| *Δ tilt* (°) | 0.66 | 0.53 | 0.42 |

It can be seen that the polymerizable mixture P1 according to the invention comprising both compound IA1 and compound IB1 shows better tilt stability than reference mixtures C1A and C1B which do only contain one of the compounds.

### Voltage Holding Ratio (VHR)

For the VHR measurement the polymerizable LC media are filled in in test cells with a fishbone pattern ITO electrode and the monomers are polymerized under the same conditions as described above for the tilt angle generation. The VHR is measured before and after exposure to a UV C-type lamp as used for the tilt angle generation, while applying a voltage of 1 V / 0.6 Hz at 60°C.

Light stress usually causes the decrease of VHR in LC mixtures, therefore the smaller the absolute decrease of VHR value after stress, the better performance for display applications.

The results are shown in Table 1.5.

**Table 1.5 - VHR**

| Mixture | C1A | C1B | P1 | P12 |
|---|---|---|---|---|
| VHR (%) initial | 97.1 | 98.3 | 95.8 | 95.2 |
| VHR (%) after 2h UV | 66.7 | 50.9 | 82.8 | 87.6 |

It can be seen that the polymerizable mixtures P1 and P12 according to the invention comprising both compound IA1 and compound IB1 show slightly lower initial VHR values than some of the reference mixtures C1A and C1B which do only contain one of the monomers. After UV stress, however, the mixtures P1 and P12 according to the invention shows a significantly smaller drop of the VHR, while in the reference mixtures C1A and C1B the VHR value is drastically reduced.

### Residual RM

The residual content of unpolymerized monomer (in ppm) in the mixture is determined after UV photopolymerization. The smaller the residual monomer content after a given time interval, the faster the polymerization. For this purpose the polymerizable mixtures are filled in test cells and polymerized by UV exposure for varying time intervals at RT using a fluorescent UV C-type lamp with an intensity of 5 mW/cm² The UV intensity is checked by UV detector with 313nm. After photopolymerization for a certain time interval the test cells are opened, and the mixture is dissolved and rinsed out of the test cell with methyl ethyl ketone and analyzed by Ultra Performance Liquid Chromatography (UPLC).

The results are shown in Table 1.4.

**Table 1.4 - Residual RM**

| Monomer conc. (%) | C1A | C1B | P1 | |
|---|---|---|---|---|
| Time (h) | IA1 | IB1 | IA1 | IB1 |
| 0 | 0.5000 | 0.3000 | 0.3000 | 0.5000 |
| 1 | - | 0.0145 | 0.0072 | 0.0124 |
| 2 | 0.0116 | 0.0031 | n.d. | n.d. |

| | | | | |
|---|---|---|---|---|
| n.d. = not detectable | | | | |

It can be seen that in the polymerizable mixture P1 according to the invention comprising both compound IA1 and compound IB1 the residual content of the monomers after polymerization is decreasing faster than in the polymerizable reference mixtures C1A and C1B which do only contain one of the compounds.

Overall, the above results demonstrate that the polymerizable mixtures according to the invention which contain both a polymerizable compound of formula IA-1 and of formula IB show significant improvements like faster tilt angle generation, better tilt stability, higher VHR after UV stress and lower amount of residual monomer.

The results do also demonstrate that an LC medium comprising a combination of the two polymerizable compounds is suitable for the PSA process using a UV C-type lamp for both the UV1 and UV2 step.

### Example 2

Polymerizable mixtures P21, P22 and P23 according to the present invention are prepared by adding polymerizable compounds IA1 and IB110 to nematic LC host mixture N1 in varying concentrations.

For comparison purpose polymerizable reference mixture C2 is prepared by adding only polymerizable compound IB110 to nematic LC host mixture N1.

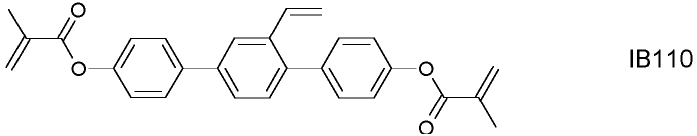

Compound IA1 has a wavelength λ of 334 nm at an extinction coefficient E=0.5 (measured in DCM at a concentration of 0.3 g/L).

The polymerizable mixture compositions are shown in Table 2.1.

**Table 2.1 - Polymerizable mixture compositions**

| Conc. (wt. %) | Host N1 | Monomer | | Total Monomer Conc. (%) |
|---|---|---|---|---|
| | | IA1 | IB110 | |
| C2 | 99.6 | - | 0.4 | 0.4 |
| C1A* | 99.5 | 0.5 | - | 0.5 |
| P21 | 99.35 | 0.1 | 0.4 | 0.65 |
| P22 | 99.1 | 0.25 | 0.4 | 0.9 |
| P23 | 99.5 | 0.5 | 0.4 | 0.5 |

| | | | | |
|---|---|---|---|---|
| *from Example 1 | | | | |

### Tilt Stability

The tilt stability is measured as described in Example 1. The results are shown in Table 2.2.

**Table 2.2 - Tilt Stability**

| Mixture | C1A* | C2 | P23 |
|---|---|---|---|
| *Δ tilt* (°) | 0.66 | 1.42 | 0.50 |

| | | | |
|---|---|---|---|
| *from Example 1 | | | |

It can be seen that the polymerizable mixture P23 according to the invention comprising both compound IA1 and compound IB110 shows better tilt stability than reference mixtures C1A and C2 which do only contain one of the compounds.

### Voltage Holding Ratio (VHR)

The VHR initially and after UV stress is measured as described in Example 1, except that a UV B-type lamp is used for UV stress, due to the higher absorption wavelength of compound B110.

The results are shown in Table 2.3.

For comparison purpose, Tale 2.3 also includes the data for mixture C1A with 0.5% monomer IA1 in LC host mixture N1 from Example 1, which were obtained using a UV C-type lamp, because compound IA1, due to its shorter absorption wavelength, is less compatibile with the longer emission wavelength of a UV B-type lamp than with the shorter emission wavelength of a UV C-type lamp.

**Table 2.3 - VHR**

| Mixture | C2 | P21 | P22 | P23 | C1A* |
|---|---|---|---|---|---|
| VHR (%) initial | 97.5 | 97.8 | 95.5 | 96.7 | 97.1 |
| VHR (%) after 2h UV | 73.5 | 80.1 | 86.9 | 89.3 | 66.7 |

| | | | | | |
|---|---|---|---|---|---|
| *from Example 1 | | | | | |

It can be seen that the polymerizable mixtures P21, P22 and P23 according to the invention comprising both compound IA1 and compound IB110 show similar initial VHR values as the reference mixtures C1A and C2 which do only contain one of the compounds. After UV stress, mixtures P21, P22 and P23 according to the invention show a significantly smaller drop of the VHR than the reference mixtures C1A and C2.

### Residual RM

The residual content of unpolymerized monomer (in ppm) in the mixture is determined as described in Example 1, except that a UV B-type lamp used for UV irradiation stress, due to the higher absorption wavelength of compound B110.

The results are shown in Table 2.4.

For comparison purpose, also included are the data for mixture C1A with 0.5% monomer IA1 in LC host mixture N1 from Example 1, which were obtained using a UV C-type lamp, because compound IA1, due to its shorter absorption wavelength, is less compatible with the longer emission wavelength of a UV B-type lamp than with the shorter emission wavelength of a UV C-type lamp.

**Table 2.4 - Residual RM**

| Monomer conc. (%) | C2 | P22 | | P23 | | C1A* |
|---|---|---|---|---|---|---|
| Time (h) | IB110 | IB110 | IA1 | IB110 | IA1 | IA1 |
| 0 | 0.4000 | 0.4000 | 0.2500 | 0.4000 | 0.5000 | 0.5000 |
| 1 | 0.0003 | - | - | 0.0003 | 0.0251 | - |
| 1.5 | - | n.d. | 0.0005 | - | - | - |
| 2 | n.d. | n.d. | 0.0003 | n.d. | 0.0007 | 0.0116 |

| | | | | | | |
|---|---|---|---|---|---|---|
| *from Example 1 n.d. = not detectable | | | | | | |

It can be seen that in the polymerizable mixtures P22 and P23 according to the invention comprising both compound IA1 and compound IB110 the residual content of the monomers after polymerization is decreasing as fast as, or even faster than, in the respective polymerizable reference mixtures C1A and C2 which do only contain one of the compounds.

It can also be seen that the compound IA1, when used in combination with compound IB1, does even show lower residual RM amount after UV polymerization with a B-type lamp, as compared to when used alone in LC host mixture N1 after UV polymerization with a C-type lamp. This is especially surprising as compound IA1 is expected to be less compatible with a B-type lamp than with a C-type lamp due to its shorter absorption wavelength. Therefore it can be concluded that the use of compound IA1 in combination with compound IB1 provides a synergistic effect, which makes the combination also compatible with a B-type lamp.

Overall, the above results demonstrate that the polymerizable mixtures according to the invention which contain both a polymerizable compound of formula IA-1 and of formula IB show significant improvements like faster tilt angle generation, better tilt stability, higher VHR after UV stress and lower amount of residual monomer, compared to polymerizable mixtures containing only one of the polymerizable compounds.

The results do also demonstrate that an LC medium comprising a combination of the two polymerizable compounds is suitable for a PSA process using a UV C-type lamp for the UV1 step and a UVB-type lamp for the UV2 step.

### Example 3

Polymerizable mixture P3 according to the present invention is prepared by adding polymerizable compounds IA1 and IB33 to nematic LC host mixture N1.

For comparison purpose polymerizable reference mixture C3 is prepared by adding only compound IB33 to nematic LC host mixture N1.

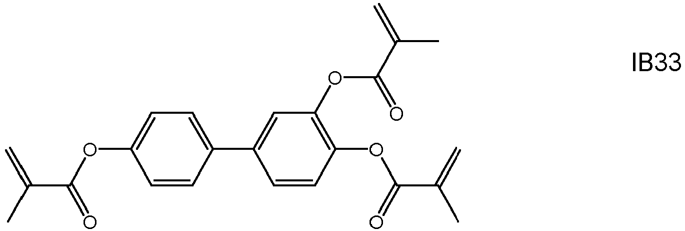

Compound IB33 has a wavelength λ of 320 nm at an extinction coefficient E=0.5 (measured in DCM at a concentration of 0.3 g/L).

The polymerizable mixture compositions are shown in Table 3.1.

**Table 3.1 - Polymerizable mixture compositions**

| Conc. (wt. %) | Host N1 | Monomer | | Total Monomer Conc. (wt. %) |
|---|---|---|---|---|
| | | IB33 | IA1 | |
| C3 | 99.6 | 0.4 | - | 0.4 |
| C1A* | 99.5 | - | 0.5 | 0.5 |
| P3 | 99.1 | 0.4 | 0.5 | 0.9 |

| | | | | |
|---|---|---|---|---|
| *from Example 1 | | | | |

### Tilt Stability

The tilt stability is measured as described in Example 1. The results are shown in Table 3.2.

**Table 3.2 - Tilt Stability**

| Mixture | C3 | C1A* | P3 |
|---|---|---|---|
| *Δ tilt* (°) | 0.67 | 0.66 | 0.49 |

| | | | |
|---|---|---|---|
| *from Example 1 | | | |

It can be seen that the polymerizable mixture P3 according to the invention comprising both compound IA1 and compound IB33 shows better tilt stability than reference mixtures C1A and C3 which do only contain one of the compounds.

### Voltage Holding Ratio (VHR)

The VHR initially and after UV stress is measured as described in Example 1.

The results are shown in Table 3.3.

**Table 3.3 - VHR**

| Mixture | C3 | C1A* | P3 |
|---|---|---|---|
| VHR (%) initial | 96.3 | 97.1 | 95.2 |
| VHR (%) after 2h UV | 79.9 | 66.7 | 87.6 |

| | | | |
|---|---|---|---|
| *from Example 1 | | | |

It can be seen that polymerizable mixture P3 according to the invention comprising both compound IA1 and compound IB33 shows similar initial VHR values as the reference mixtures C1A and C3 which do only contain one of the compounds. After UV stress, mixture P3 according to the invention shows a significantly smaller drop of the VHR than the reference mixtures C1A and C3.

### Residual RM

The residual content of unpolymerized monomer (in ppm) in the mixture is determined as described in Example 1.

The results are shown in Table 3.4.

**Table 3.4 - Residual RM**

| Monomer conc. (%) | C3 | C1A* | P3 | |
|---|---|---|---|---|
| Time (h) | IB33 | IA1 | IB33 | IA1 |
| 0 | 0.4000 | 0.5000 | 0.4000 | 0.5000 |
| 1 | 0.0322 | - | - | - |
| 2 | n.d. | 0.0116 | n.d. | 0.0052 |

| | | | | |
|---|---|---|---|---|
| *from Example 1 n.d. = not detectable | | | | |

It can be seen that in polymerizable mixture P3 according to the invention comprising both compound IA1 and compound IB3 the residual content of the monomers after polymerization is decreasing as fast as, or even faster than, in the respective polymerizable reference mixtures C1A and C3 which do only contain one of the compounds.

Overall, the above results demonstrate that the polymerizable mixtures according to the invention which contain both a polymerizable compound of formula IA-1 and of formula IB show significant improvements like faster tilt angle generation, better tilt stability, higher VHR after UV stress and lower amount of residual monomer, compared to polymerizable mixtures containing only one of the polymerizable compounds.

The results do also demonstrate that an LC medium comprising a combination of the two polymerizable compounds is suitable for the PSA process using a UV C-type lamp for both the UV1 and UV2 step.

### Example 4

Polymerizable mixture P4 is prepared by adding 0.5% of compound IA1 and 0.5% of compound IB3 to nematic LC host mixture N1.

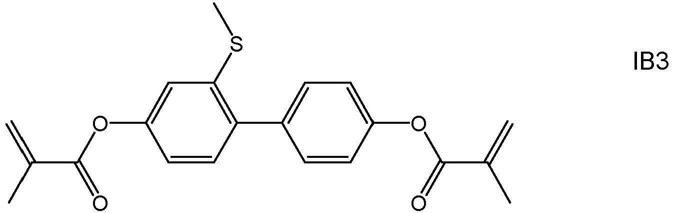

### Example 5

Polymerizable mixture P5 is prepared by adding 0.25% of compound IA1 and 0.5% of compound IB3 to nematic LC host mixture N1.

### Example 6

The nematic LC host mixture N2 is formulated as follows

| | | | |
|---|---|---|---|
| BCH-32 | 6.50 % | cl.p. | 74.7 °C |
| CC-3-V1 | 8.00 % | Δn | 0.1039 |
| CCH-23 | 17.00 % | Δε | -3.0 |
| CCH-34 | 6.50 % | ε⊥ | 3.4 |
| CCY-3-O1 | 3.50 % | K₃/K₁ | 1.07 |
| CCY-3-O2 | 12.50 % | γ₁ | 106 mPa s |
| CPY-2-O2 | 5.50 % | V₀ | 2.43 V |
| CPY-3-O2 | 10.00 % | | |
| CY-3-O2 | 15.50 % | | |
| PCH-3O1 | 4.50 % | | |
| PP-1-2V1 | 5.00 % | | |
| PY-3-O2 | 5.50 % | | |

Polymerizable mixture P6 is prepared by adding 0.5% of polymerizable compound IA1 and 0.3% of polymerizable compound IB1 to nematic LC host mixture N2.

### Example 7

The nematic LC host mixture N3 is formulated as follows

| | | | |
|---|---|---|---|
| B(S)-2O-O4 | 4.50 % | cl.p. | 75.7 |
| B(S)-2O-O5 | 5.00 % | Δn | 0.1232 |
| CC-3-V | 28.20 % | nₑ | 1.6169 |
| CC-3-V1 | 8.00 % | nₒ | 1.4937 |
| CCP-3-1 | 3.80 % | Δε | -2.8 |
| CCP-V-1 | 10.60 % | ε∥ | 3.5 |
| CPY-2-O2 | 7.80 % | ε_{⊥} | 6.3 |
| CPY-3-O2 | 12.00 % | γ₁ | 78 |
| PP-1-2V1 | 7.60 % | K₁ | 15.0 |
| PY-1-O2 | 10.00 % | K₃ | 16.1 |
| PY-3-O2 | 3.00 % | K₃/K₁ | 1.07 |
| | | V₀ | 2.55 V |

Polymerizable mixture P7 is prepared by adding 0.5% of compound IA1, 0.3% of compound IB1 and 100 ppm of the stabilizer ST-3a-1 to the nematic LC host mixture N3.

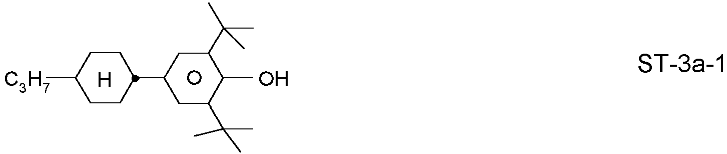

### Example 8

The nematic LC host mixture N4 is formulated as follows

| | | | |
|---|---|---|---|
| B(S)-2O-O4 | 5.00 % | cl.p. | 74.3 |
| B(S)-2O-O5 | 5.00 % | Δn | 0.1302 |
| BCH-32 | 9.00 % | nₑ | 1.625 |
| CC-3-V | 15.00 % | nₒ | 1.4948 |
| CC-3-V1 | 7.50 % | Δε | -2.9 |
| CC-4-V1 | 13.00 % | ε∥ | 3.6 |
| CCP-3-1 | 10.00 % | ε⊥ | 6.5 |
| CLY-3-O2 | 2.50 % | γ₁ | 89 |
| CPY-3-O2 | 2.00 % | K₁ | 15.1 |
| PY-1-O2 | 12.00 % | K₃ | 15 |
| PY-3-O2 | 10.00 % | K₃/K₁ | 0.99 |
| PYP-2-3 | 9.00 % | V₀ | 2.42 V |

Polymerizable mixture P8 is prepared by adding 0.4% of compound IA1 and 0.2% of compound IB1 to the nematic LC host mixture N4.

### Example 9

Polymerizable mixture P9 is prepared by adding 0.5% of compound IA1, 0.25% of compound IB1 and 150 ppm of stabilizer ST-3a-1 to the nematic LC host mixture N4.

### Example 10

The nematic LC host mixture N5 is formulated as follows

| | | | |
|---|---|---|---|
| CC-3-V1 | 9.00 % | cl.p. | 74.6°C |
| CCH-301 | 3.50 % | Δn | 0.0984 |
| CCH-34 | 8.00 % | nₑ | 1.5804 |
| CCH-35 | 8.00 % | nₒ | 1.4820 |
| CCP-3-1 | 6.00 % | Δε | -3.6 |
| CCY-3-O1 | 6.50 % | ε_{∥} | 3.6 |
| CCY-3-O2 | 12.50 % | ε_{⊥} | 7.1 |
| CPY-3-O2 | 10.00 % | γ₁ | 119 mPa·s |
| CY-3-O2 | 15.50 % | K₁ | 14.1 |
| PCH-301 | 8.50 % | K₃ | 17.0 |
| PY-3-O2 | 12.50 % | K₃/K₁ | 1.21 |
| V₀ | | | 2.31 V |

Polymerizable mixture P10 is prepared by adding 0.5% of compound IA1 and 0.3% of compound IB110 to the nematic LC host mixture N5.

### Example 11

Polymerizable mixture P11 is prepared by adding 0.5% of compound IA1, 0.3% of compound IB110 and 50ppm of the stabilizer ST-3a-1 to the nematic LC host mixture N2.

### Example 12

The nematic LC host mixture N6 is formulated as follows

| | | | |
|---|---|---|---|
| B(S)-2O-O4 | 3.5 % | cl.p. | 74.9°C |
| B(S)-2O-O5 | 5.00 % | Δn | 0.1154 |
| BCH-32 | 7.50 % | Δε | -2.6 |
| CC-3-V | 29.50 % | γ₁ | 74 mPa·s |
| CC-3-V1 | 5.50 % | K₁ | 14.5 |
| CCP-3-1 | 7.00 % | K₃ | 14.9 |
| CCP-V-1 | 11.50 % | γ₁/K₃ | 4.97 |
| CLY-3-O2 | 5.00 % | | |
| CPY-2-O2 | 4.00 % | | |
| CPY-3-O2 | 10.00 % | | |
| PY-1-O2 | 0.50 % | | |
| PY-2-O2 | 11.00 % | | |

Polymerizable mixture P12 is prepared by adding 0.5% of compound IA1 and 0.3% of compound IB1 to the nematic LC host mixture N6.

### Example 13

Polymerizable mixture P13 is prepared by adding 0.4% of compound IA1 and 0.2% of compound IB2 to the nematic LC host mixture N2.

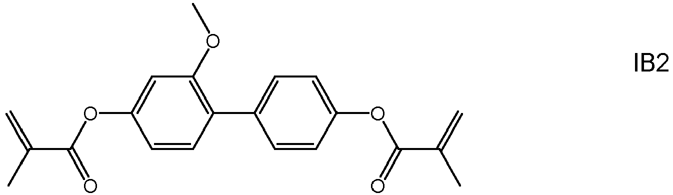

### Example 14

Polymerizable mixture P14 is prepared by adding 0.3% of compound IA1, 0.2% of compound IB2 and 150ppm of the stabilizer ST-3a-1 to the nematic LC host mixture N2.

### Example 15

Polymerizable mixture P15 is prepared by adding 0.4% of compound IA1, 0.2% of compound IB2 and 100ppm of the stabilizer ST-3a-1 to the nematic LC host mixture N3.

### Example 16

Polymerizable mixture P16 is prepared by adding 0.5% of compound IA1 and 0.4% of compound IB3 to the nematic LC host mixture N2.

### Example 17

Polymerizable mixture P17 is prepared by adding 0.4% of compound IA1, 0.3% of compound IB3 and 100ppm of the stabilizer ST-3a-1 to the nematic LC host mixture N3.

### Example 18

Polymerizable mixture P18 is prepared by adding 0.4% of compound IA1, 0.2% of compound IB133 and 150ppm of the stabilizer ST-3a-1 to the nematic LC host mixture N1.

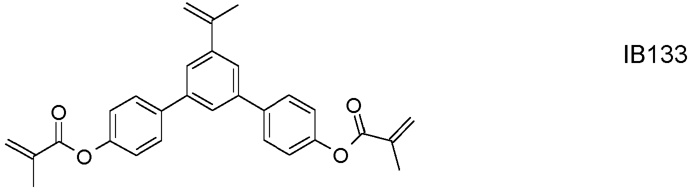

### Example 19

Polymerizable mixture P19 is prepared by adding 0.4% of compound IA1, 0.5% of compound IB133 and 100ppm of the stabilizer ST-3a-1 to the nematic LC host mixture N2.

### Example 20

Polymerizable mixture P20 is prepared by adding 0.5% of compound IA1, 0.5% of compound IB133 and 100ppm of the stabilizer ST-3a-1 to the nematic LC host mixture N3.

### Example 21

Polymerizable mixture P21 is prepared by adding 0.4% of compound IA1, 0.2% of compound IB135 and 100ppm of the stabilizer ST-3a-1 to the nematic LC host mixture N1.

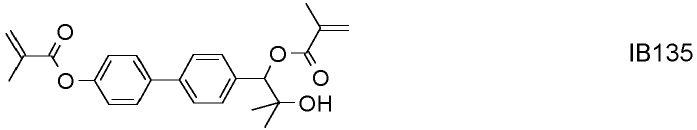

### Example 22

Polymerizable mixture P22 is prepared by adding 0.5% of compound IA1, 0.3% of compound IB135 and 100ppm of the stabilizer ST-3a-1 to the nematic LC host mixture N2.

### Example 23

Polymerizable mixture P23 is prepared by adding 0.4% of compound IA1, 0.2% of compound IB135, and 150ppm of the stabilizer ST-3a-1 to the nematic LC host mixture N3.

### Example 24

Polymerizable mixture P24 is prepared by adding 0.5% of compound IA1, 0.4% of the compound IB55 and 100ppm of the stabilizer ST-3a-1 to the nematic LC host mixture N1.

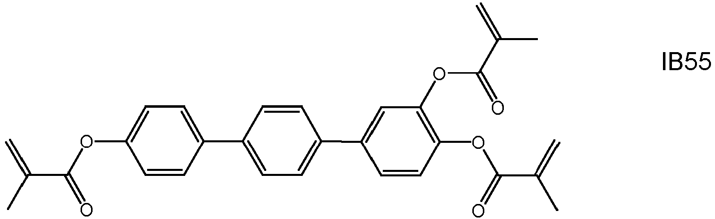

### Example 25

Polymerizable mixture P25 is prepared by adding 0.5% of compound IA1, 0.3% of compound IB55 and 100ppm of the stabilizer ST-3a-1 to the nematic LC host mixture N2.

### Example 26

Polymerizable mixture P26 is prepared by adding 0.4% of compound IA1, 0.4% of compound IB55 and 100ppm of the stabilizer ST-3a-1 to the nematic LC host mixture N3.

### Example 27

Polymerizable mixture P27 is prepared by adding 0.5% of compound IA1, 0.4% of compound IB70 and 100ppm of the stabilizer ST-3a-1 to the nematic LC host mixture N1.

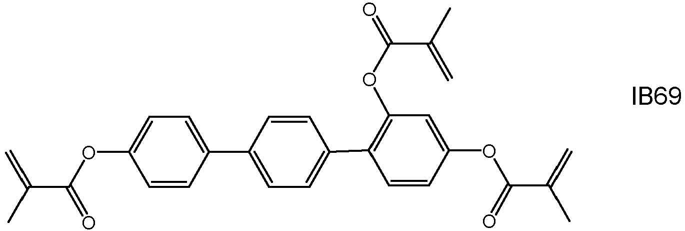

### Example 28

Polymerizable mixture P28 is prepared by adding 0.3% of compound IA1, 0.4% of compound IB69 and 100ppm of the stabilizer ST-3a-1 to the nematic LC host mixture N2.

### Example 29

Polymerizable mixture P29 is prepared by adding 0.4% of compound IA1, 0.4% of compound IB69 and 100ppm of the stabilizer ST-3a-1 to the nematic LC host mixture N3.

### Example 30

The nematic LC host mixture N7 is formulated as follows

| | | | |
|---|---|---|---|
| B(S)-2O-O4 | 4.50 % | cl.p. | 74.9°C |
| B(S)-2O-O5 | 5.00 % | Δn | 0.1122 |
| B(S)-2O-O6 | 2.00 % | nₑ | 1.5993 |
| CC-3-V | 30.00 % | nₒ | 1.4871 |
| CC-4-V1 | 17.50 % | Δε | -3.7 |
| CLY-3-O2 | 8.00 % | ε∥ | 3.7 |
| CPY-2-O2 | 10.00 % | ε⊥ | 7.4 |
| CPY-3-O2 | 10.00 % | γ₁ | 85 mPa·s |
| PY-1-O2 | 3.00 % | K₁ | 14.5 |
| PY-2-O2 | 10.00 % | K₃ | 14.2 |
| | | K₃/K₁ | 0.98 |
| | | V₀ | 2.07 V |

Polymerizable mixture P30 is prepared by adding 0.4% of compound IA1, 0.2% of compound IB1 and 50ppm of the stabilizer ST-3a-1 to the nematic LC host mixture N7.

### Example 31

The nematic LC host mixture N8 is formulated as follows

| | | | |
|---|---|---|---|
| B(S)-2O-O4 | 4.00 % | cl.p. | 74.7 |
| B(S)-2O-O5 | 5.00 % | Δn | 0.1122 |
| BCH-32 | 7.00 % | nₑ | 1.5977 |
| CC-3-V1 | 8.00 % | nₒ | 1.4855 |
| CC-4-V1 | 11.00 % | Δε | -3.8 |
| CCH-34 | 8.00 % | ε∥ | 3.9 |
| CCH-35 | 6.00 % | ε⊥ | 7.7 |
| CCY-3-O2 | 11.00 % | γ₁ | 109 mPa·s |
| CPY-2-O2 | 3.00 % | K₁ | 15.0 |
| CPY-3-O2 | 5.00 % | K₃ | 15.4 |
| CY-3-O2 | 15.00 % | K₃/K₁ | 0.97 |
| PCH-302 | 5.00 % | V₀ | 2.13 |
| PPGU-3-F | 1.00 % | | |
| PY-1-O2 | 4.00 % | | |
| PY-2-O2 | 7.00 % | | |

Polymerizable mixture P31 is prepared by adding 0.4% of compound IA1, 0.2% of compound IB1 and 50ppm of the stabilizer ST-3b-1 to the nematic LC host mixture N8.

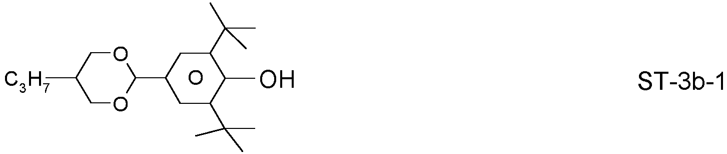

### Example 32

The nematic LC host mixture N9 is formulated as follows

| | | | |
|---|---|---|---|
| CC-3-V1 | 8.50 % | cl.p. | 75.1°C |
| CC-4-V1 | 19.00 % | Δn | 0.1123 |
| CCY-3-O1 | 6.00 % | nₑ | 1.5969 |
| CCY-3-O2 | 11.00 % | nₒ | 1.4846 |
| CLY-3-O2 | 5.00 % | Δε | -3.9 |
| CPY-3-O2 | 11.00 % | ε∥ | 3.7 |
| CY-3-O2 | 6.00 % | ε⊥ | 7.5 |
| PCH-302 | 13.50 % | γ₁ | 124 mPa·s |
| PY-1-O2 | 6.00 % | K₁ | 15.2 |
| PY-2-O2 | 6.00 % | K₃ | 18.3 |
| PY-3-O2 | 8.00 % | K₃/K₁ | 1.20 |
| | | V₀ | 2.29 V |

Polymerizable mixture P32 is prepared by adding 0.5% of compound IA1, 0.3% of compound IB1 and 150ppm of the stabilizer ST-3a-1 to the nematic LC host mixture N9.

### Example 33

The nematic LC host mixture N10 is formulated as follows

| | | | |
|---|---|---|---|
| B(S)-2O-O4 | 2.00 % | cl.p. | 73.9 |
| B(S)-2O-O5 | 2.50 % | Δn | 0.1165 |
| BCH-32 | 8.00 % | nₑ | 1.6084 |
| CC-3-V | 30.00 % | nₒ | 1.4919 |
| CC-4-V1 | 7.00 % | Δε | -2.7 |
| CCP-3-1 | 11.00 % | ε∥ | 3.6 |
| CLY-3-O2 | 3.00 % | ε⊥ | 6.3 |
| CPY-2-O2 | 2.00 % | γ₁ | 79 mPa·s |
| CPY-3-O2 | 12.00 % | K₁ | 14.1 |
| PY-1-O2 | 11.50 % | K₃ | 14.7 |
| PY-2-O2 | 11.00 % | K₃/K₁ | 1.04 |
| | | V₀ | 2.46 V |

Polymerizable mixture P33 is prepared by adding 0.5% of compound IA1, 0.4% of compound IB1 and 0.6% of the SA additive SA23 to the nematic LC host mixture N10.

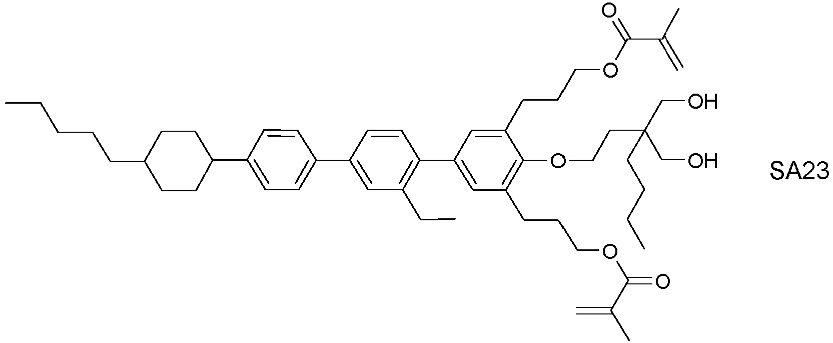

### Example 34

The nematic LC host mixture N11 is formulated as follows

| | | | |
|---|---|---|---|
| B(S)-2O-O4 | 4.50 % | cl.p. | 75.6°C |
| B(S)-2O-O5 | 3.00 % | Δn | 0.1049 |
| CC-3-V | 51.00 % | nₑ | 1.5904 |
| CCP-3-1 | 1.00 % | nₒ | 1.4855 |
| CLY-3-O2 | 9.00 % | Δε | -3.1 |
| CPY-2-O2 | 10.00 % | ε∥ | 3.5 |
| CPY-3-O2 | 12.00 % | ε⊥ | 6.6 |
| PY-1-O2 | 9.50 % | γ₁ | 72 mPa·s |
| | | K₁ | 14.1 |
| | | K₃ | 15.0 |
| | | K₃/K₁ | 1.06 |
| | | V₀ | 2.34 V |

Polymerizable mixture P34 is prepared by adding 0.4% of compound IA1, 0.3% of compound IB1 and 100ppm of the stabilizer ST-3a-1 to the nematic LC host mixture N11.

### Example 35

The nematic LC host mixture N12 is formulated as follows

| | | | |
|---|---|---|---|
| CC-3-V1 | 9.00 % | cl.p. | 75.4°C |
| CCH-23 | 14.00 % | Δn | 0.1055 |
| CCH-34 | 6.00 % | nₑ | 1.5907 |
| CCH-35 | 6.00 % | nₒ | 1.4852 |
| CCP-3-1 | 7.00 % | Δε | -2.8 |
| CCY-3-O1 | 5.00 % | ε∥ | 3.3 |
| CCY-3-O2 | 10.00 % | ε⊥ | 6.1 |
| CPY-3-O2 | 12.00 % | γ₁ | 102 mPa·s |
| CY-3-O2 | 9.50 % | K₁ | 16.2 |
| PP-1-2V1 | 8.50 % | K₃ | 17.3 |
| PY-3-O2 | 12.00 % | K₃/K₁ | 1.07 |
| PY-4-O2 | 1.00 % | V₀ | 2.67 V |

Polymerizable mixture P35 is prepared by adding 0.4% of compound IA1, 0.2% of compound IB1 and 150ppm of the stabilizer ST-3b-1 to the nematic LC host mixture N12.

### Example 36

The nematic LC host mixture N13 is formulated as follows

| | | | |
|---|---|---|---|
| CC-3-V1 | 9.00 % | cl.p. | 74.7°C |
| CCH-23 | 18.00 % | Δn | 0.0982 |
| CCH-34 | 3.00 % | nₑ | 1.5800 |
| CCH-35 | 7.00 % | nₒ | 1.4818 |
| CCP-3-1 | 5.50 % | Δε | -3.4 |
| CCY-3-O2 | 11.50 % | ε∥ | 3.5 |
| CPY-2-O2 | 8.00 % | ε⊥ | 6.9 |
| CPY-3-O2 | 11.00 % | γ₁ | 108 mPa·s |
| CY-3-O2 | 15.50 % | K₁ | 14.9 |
| PY-3-O2 | 11.50 % | K₃ | 15.9 |
| | | K₃/K₁ | 1.07 |
| V₀ | | | 2.28 V |

Polymerizable mixture P36 is prepared by adding 0.5% of compound IA1, 0.3% of compound IB1 and 100ppm of the stabilizer ST-3a-1 to the nematic LC host mixture N13.

### Example 37

The nematic LC host mixture N14 is formulated as follows

| | | | |
|---|---|---|---|
| BCH-32 | 10.00 % | cl.p. | 74.6°C |
| CC-3-V1 | 6.50 % | Δn | 0.1113 |
| CCH-34 | 8.00 % | nₑ | 1.5981 |
| CCH-35 | 8.00 % | nₒ | 1.4868 |
| CCY-3-O2 | 12.00 % | Δε | -3.3 |
| CPY-2-O2 | 6.50 % | ε∥ | 3.5 |
| CPY-3-O2 | 11.00 % | ε⊥ | 6.8 |
| CY-3-O2 | 15.00 % | γ₁ | 128 mPa·s |
| CY-5-O2 | 13.00 % | K₁ | 14.5 |
| PP-1-4 | 10.00 % | K₃ | 15.3 |
| | | K₃/K₁ | 1.06 |
| | | V₀ | 2.28 V |

Polymerizable mixture P37 is prepared by adding 0.5% of compound IA1, 0.3% of compound IB1 and 50ppm of the stabilizer ST-3a-1 to the nematic LC host mixture N14.

### Example 38

The nematic LC host mixture N15 is formulated as follows

| | | | |
|---|---|---|---|
| CC-3-V1 | 8.00 % | cl.p. | 74.6°C |
| CCH-23 | 15.0 % | Δn | 0.0899 |
| CCH-34 | 5.00 % | nₑ | 1.5694 |
| CCH-35 | 6.00 % | nₒ | 1.4795 |
| CCP-3-1 | 3.00 % | Δε | -3.3 |
| CCY-3-O1 | 8.00 % | ε_{∥} | 3.5 |
| CCY-3-O2 | 10.00 % | ε_{⊥} | 6.8 |
| CCY-3-O3 | 6.00 % | γ₁ | 114 mPa·s |
| CCY-4-O2 | 6.00 % | K₁ | 13.9 |
| CY-3-O2 | 12.0 % | K₃ | 14.6 |
| CY-3-O4 | 3.75 % | K₃/K₁ | 1.05 |
| PCH-301 | 3.00 % | V₀ | 2.22 V |
| PY-3-O2 | 2.75 % | | |
| PY-4-O2 | 6.50 % | | |
| PYP-2-3 | 5.00 % | | |

Polymerizable mixture P38 is prepared by adding 0.4% of compound IA1, 0.3% of compound IB1 and 50ppm of the stabilizer ST-3b-1 to the nematic LC host mixture N15.

### Example 39

The nematic LC host mixture N16 is formulated as follows

| | | | |
|---|---|---|---|
| B(S)-2O-O4 | 0.25 % | cl.p. | 74.6°C |
| BCH-32 | 4.50 % | Δn | 0.1034 |
| CC-3-V1 | 13.00 % | nₑ | 1.5883 |
| CCH-23 | 15.00 % | nₒ | 1.4849 |
| CCH-301 | 1.00 % | Δε | -2.9 |
| CCH-34 | 2.00 % | ε_{∥} | 3.4 |
| CCH-35 | 0.50 % | ε_{⊥} | 6.3 |
| CCY-3-O2 | 6.50 % | γ₁ | 103 mPa·s |
| CPY-2-O2 | 12.00 % | K₁ | 13.0 |
| CPY-3-O2 | 15.00 % | K₃ | 15.3 |
| CY-3-O2 | 15.50 % | K₃/K₁ | 1.18 |
| CY-3-O4 | 0.25 % | V₀ | 2.44 V |
| PCH-301 | 13.00 % | | |
| PP-1-2V1 | 0.50 % | | |
| PYP-2-3 | 1.00 % | | |

Polymerizable mixture P39 is prepared by adding 0.5% of compound IA1, 0.4% of compound IB1 and 150ppm of the stabilizer ST-8-1 to the nematic LC host mixture N16.

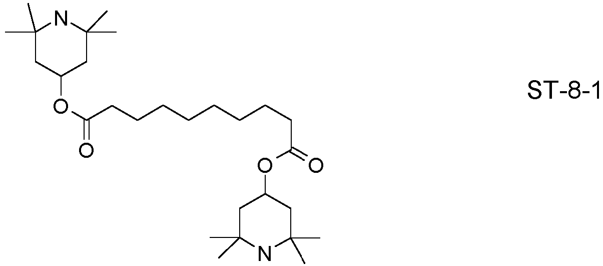

### Example 40

The nematic LC host mixture N17 is formulated as follows

| | | | |
|---|---|---|---|
| CCH-301 | 6.00 % | cl.p. | 109.9°C |
| CCH-303 | 10.00 % | Δn | 0.0976 |
| CCH-501 | 4.00 % | nₑ | 1.5806 |
| CCP-3-1 | 7.00 % | nₒ | 1.4830 |
| CCPC-33 | 3.00 % | Δε | -3.6 |
| CCPC-34 | 3.00 % | ε_{∥} | 3.4 |
| CCY-3-O1 | 5.50 % | ε_{⊥} | 7.0 |
| CCY-3-O2 | 9.50 % | γ₁ | 233 mPa·s |
| CCY-3-O3 | 7.00 % | K₁ | 16.9 |
| CCY-4-O2 | 8.50 % | K₃ | 19.6 |
| CPY-2-O2 | 3.00 % | K₃/K₁ | 1.16 |
| CPY-3-O2 | 12.50 % | V₀ | 2.47 V |
| CY-3-O4 | 9.50 % | | |
| PCH-301 | 11.50 % | | |

Polymerizable mixture P40 is prepared by adding 0.5% of compound IA1, 0.3% of compound IB1 and 150ppm of the stabilizer ST-3a-1 to the nematic LC host mixture N17.

### Example 41

The nematic LC host mixture N18 is formulated as follows

| | | | |
|---|---|---|---|
| BCH-32 | 8.00 % | cl.p. | 74.6°C |
| CC-3-V1 | 13.00 % | Δn | 0.1042 |
| CC-4-V1 | 2.50 % | nₑ | 1.5897 |
| CCH-301 | 10.00 % | nₒ | 1.4855 |
| CCH-34 | 5.00 % | Δε | -3.1 |
| CCH-35 | 5.00 % | ε_{∥} | 3.5 |
| CLY-3-O2 | 12.50 % | ε_{⊥} | 6.6 |
| CPY-2-O2 | 11.50 % | γ₁ | 104 mPa·s |
| CPY-3-O2 | 4.00 % | K₁ | 13.7 |
| CY-3-O2 | 15.00 % | K₃ | 15.4 |
| PCH-301 | 6.50 % | K₃/K₁ | 1.12 |
| PY-1-O2 | 7.00 % | V₀ | 2.37 V |

Polymerizable mixture P41 is prepared by adding 0.5% of compound IA1, 0.5% of compound IB3 and 100ppm of the stabilizer ST-12 to the nematic LC host mixture N18.

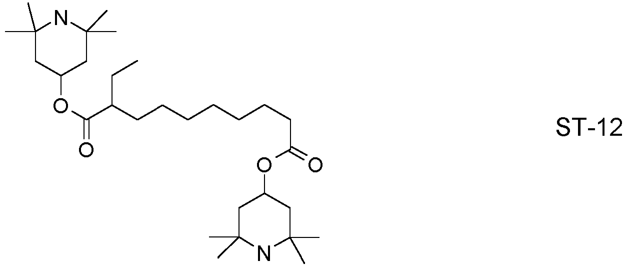

### Example 42

The nematic LC host mixture N19 is formulated as follows

| | | | |
|---|---|---|---|
| B(S)-2O-O5 | 0.25 % | cl.p. | 74.5°C |
| BCH-32 | 5.50 % | Δn | 0.1028 |
| CC-3-V | 10.00 % | nₑ | 1.5880 |
| CC-3-V1 | 7.50 % | nₒ | 1.4852 |
| CC-4-V1 | 16.50 % | Δε | -3.1 |
| CCH-35 | 0.25 % | ε | 3.6 |
| CCP-3-1 | 7.50 % | ε_{⊥} | 6.7 |
| CCY-3-O2 | 11.00 % | γ₁ | 96 mPa·s |
| CCY-3-O3 | 1.00 % | K₁ | 13.8 |
| CCY-4-O2 | 7.00 % | K₃ | 15.5 |
| CCY-5-O2 | 2.00 % | K₃/K₁ | 1.12 |
| CY-3-O2 | 9.00 % | V₀ | 2.37 V |
| PY-1-O2 | 9.00 % | | |
| PY-2-O2 | 9.00 % | | |
| PY-3-O2 | 4.50 % | | |

Polymerizable mixture P42 is prepared by adding 0.5% of compound IA1, 0.4% of compound IB3 and 100ppm of the stabilizer ST-3a-1 to the nematic LC host mixture N19.

### Example 43

The nematic LC host mixture N20 is formulated as follows

| | | | |
|---|---|---|---|
| BCH-32 | 4.50 % | cl.p. | 74.8°C |
| CC-3-V | 15.00 % | Δn | 0.1030 |
| CC-3-V1 | 7.50 % | nₑ | 1.5889 |
| CC-4-V1 | 12.50 % | nₒ | 1.4859 |
| CCP-3-1 | 7.00 % | Δε | -3.1 |
| CCY-3-O1 | 7.00 % | ε_{∥} | 3.6 |
| CCY-3-O2 | 10.50 % | ε_{⊥} | 6.8 |
| CCY-4-O2 | 6.50 % | γ₁ | 94 mPa·s |
| CY-3-O2 | 4.50 % | K₁ | 13.8 |
| PY-1-O2 | 9.50 % | K₃ | 15.4 |
| PY-2-O2 | 9.00 % | K₃/K₁ | 1.12 |
| PY-3-O2 | 6.50 % | V₀ | 2.35 V |

Polymerizable mixture P43 is prepared by adding 0.4% of compound IA1, 0.3% of compound IB1 and 100ppm of the stabilizer ST-3a-1 to the nematic LC host mixture N20.

### Example 44

The nematic LC host mixture N21 is formulated as follows

| | | | |
|---|---|---|---|
| CC-3-V | 10.50 % | cl.p. | 74.5°C |
| CC-3-V1 | 5.50 % | Δn | 0.1033 |
| CC-4-V1 | 20.00 % | nₑ | 1.5875 |
| CCH-34 | 2.00 % | nₒ | 1.4842 |
| CCH-35 | 1.50 % | Δε | -3.3 |
| CCY-3-1 | 2.00 % | ε_{∥} | 3.6 |
| CCY-3-O1 | 7.50 % | ε_{⊥} | 6.9 |
| CCY-3-O2 | 11.00 % | γ₁ | 96 mPa·s |
| CCY-4-O2 | 8.50 % | K₁ | 14.4 |
| CLY-2-O4 | 1.00 % | K₃ | 15.1 |
| CLY-3-O2 | 2.00 % | K₃/K₁ | 1.05 |
| PP-1-2V1 | 3.50 % | V₀ | 2.29 V |
| PY-1-O2 | 9.50 % | | |
| PY-2-O2 | 9.50 % | | |
| PY-3-O2 | 6.00 % | | |

Polymerizable mixture P44 is prepared by adding 0.5% of compound IA1, 0.3% of compound IB1 and 150ppm of the stabilizer ST-9-1 to the nematic LC host mixture N21.

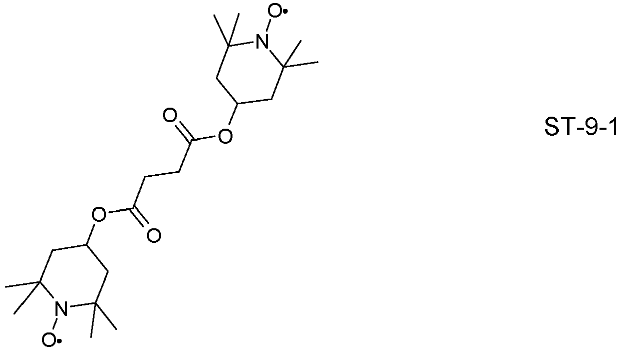

### Example 45

The nematic LC host mixture N22 is formulated as follows

| | | | |
|---|---|---|---|
| CC-3-V1 | 7.50 % | cl.p. | 74.5°C |
| CC-4-V1 | 20.00 % | Δn | 0.1030 |
| CCH-34 | 5.00 % | nₑ | 1.5861 |
| CCH-35 | 7.50 % | nₒ | 1.4831 |
| CCP-3-1 | 2.00 % | Δε | -3.5 |
| CCY-3-O1 | 8.00 % | ε_{∥} | 3.6 |
| CCY-3-O2 | 12.00 % | ε_{⊥} | 7.1 |
| CCY-4-O2 | 3.00 % | γ₁ | 103 mPa·s |
| CLY-3-O2 | 4.00 % | K₁ | 15.1 |
| CY-3-O2 | 1.50 % | K₃ | 15.4 |
| PY-1-O2 | 9.50 % | K₃/K₁ | 1.02 |
| PY-2-O2 | 9.50 % | V₀ | 2.23 V |
| PY-3-O2 | 10.50 % | | |

Polymerizable mixture P45 is prepared by adding 0.5% of compound 1A1, 0.3% of compound IB1 and 50ppm of the stabilizer ST-3a-1 to the nematic LC host mixture N22.

### Example 46

The nematic LC host mixture N23 is formulated as follows

| | | | |
|---|---|---|---|
| CC-3-V1 | 7.50 % | cl.p. | 75°C |
| CC-4-V1 | 19.50 % | Δn | 0.1041 |
| CCH-301 | 5.50 % | nₑ | 1.5884 |
| CCH-34 | 5.00 % | nₒ | 1.4843 |
| CCP-3-1 | 11.00 % | Δε | -3.1 |
| CLY-3-O2 | 5.00 % | ε_{∥} | 3.6 |
| CPY-2-O2 | 6.00 % | ε_{⊥} | 6.7 |
| CPY-3-O2 | 11.50 % | γ₁ | 101 mPa·s |
| CY-3-O2 | 15.00 % | K₁ | 14.0 |
| PY-1-O2 | 6.50 % | K₃ | 15.7 |
| PY-2-O2 | 7.50 % | K₃/K₁ | 1.12 |
| | | V₀ | 2.37 V |

Polymerizable mixture P46 is prepared by adding 0.5% of compound IA1, 0.3% of compound IB1 and 0.6% of the SA additive SA32 to the nematic LC host mixture N23.

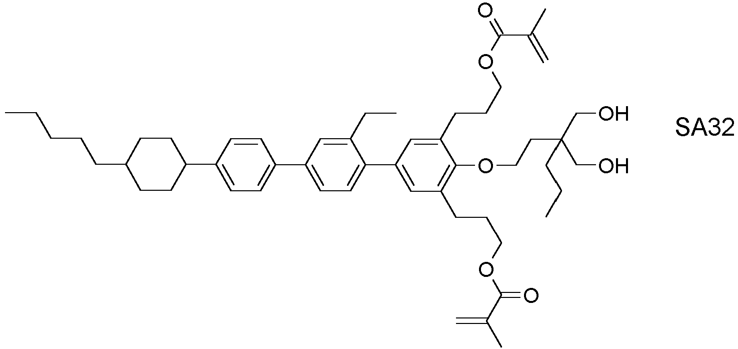

### Example 47

The nematic LC host mixture N24 is formulated as follows

| | | | |
|---|---|---|---|
| CC-3-V1 | 2.50 % | cl.p. | 105.9°C |
| CC-4-V1 | 10.00 % | Δε | -3.6 |
| CCH-301 | 3.00 % | ε_{∥} | 3.4 |
| CCH-34 | 4.00 % | ε_{⊥} | 7.0 |
| CCH-35 | 4.00 % | | |
| CCP-3-1 | 6.00 % | | |
| CCP-3-3 | 6.00 % | | |
| CCY-3-O1 | 4.00 % | | |
| CCY-3-O2 | 4.00 % | | |
| CCY-3-O3 | 4.00 % | | |
| CCY-4-O2 | 4.00 % | | |
| CCY-5-O2 | 4.00 % | | |
| CPY-2-O2 | 10.00 % | | |
| CPY-3-O2 | 10.00 % | | |
| CY-3-O2 | 6.50 % | | |
| CY-3-O4 | 10.00 % | | |
| PYP-2-3 | 5.00 % | | |
| PYP-2-4 | 3.00 % | | |

Polymerizable mixture P47 is prepared by adding 0.5% of compound IA1, 0.3% of compound IB3 and 150ppm of the stabilizer ST-3a-1 to the nematic LC host mixture N24.

### Example 48

The nematic LC host mixture N25 is formulated as follows

| | | | |
|---|---|---|---|
| BCH-52 | 9.00 % | cl.p. | 105°C |
| CC-3-V1 | 2.00 % | Δε | -3.6 |
| CC-4-V1 | 12.50 % | ε_{∥} | 3.4 |
| CCH-301 | 2.00 % | ε_{⊥} | 7.0 |
| CCH-34 | 3.50 % | | |
| CCH-35 | 4.00 % | | |
| CCP-3-1 | 7.50 % | | |
| CCY-3-O1 | 4.00 % | | |
| CCY-3-O2 | 4.00 % | | |
| CCY-3-O3 | 4.00 % | | |
| CCY-4-O2 | 4.00 % | | |
| CCY-5-O2 | 4.00 % | | |
| CPY-2-O2 | 10.00 % | | |
| CPY-3-O2 | 10.00 % | | |
| CY-3-O4 | 12.50 % | | |
| PY-1-O2 | 7.00 % | | |

Polymerizable mixture P48 is prepared by adding 0.5% of compound IA1, 0.3% of compound IB1 and 100ppm of the stabilizer ST-3b-1 to the nematic LC host mixture N25.

### Example 49

The nematic LC host mixture N26 is formulated as follows

| | | | |
|---|---|---|---|
| B(S)-2O-O5 | 0.25 % | cl.p. | 75.1°C |
| BCH-32 | 1.50 % | Δn | 0.1038 |
| CC-3-V1 | 8.00 % | nₑ | 1.5864 |
| CC-4-V1 | 20.00 % | nₒ | 1.4826 |
| CCH-303 | 1.50 % | Δε | -3.0 |
| CCH-34 | 6.00 % | ε_{∥} | 3.4 |
| CCH-35 | 8.00 % | ε_{⊥} | 6.5 |
| CCY-3-O2 | 9.50 % | γ₁ | 99 mPa·s |
| CPY-2-O2 | 6.00 % | K₁ | 15.6 |
| CPY-3-O2 | 11.00 % | K₃ | 16.0 |
| CY-3-O2 | 12.50 % | K₃/K₁ | 1.03 |
| PP-1-2V1 | 2.75 % | V₀ | 2.44 V |
| PY-1-O2 | 5.50 % | | |
| PY-2-O2 | 4.50 % | | |
| PY-3-O2 | 3.00 % | | |

Polymerizable mixture P49 is prepared by adding 0.4% of compound IA1, 0.2% of compond IB2 and 150ppm of the stabilizer ST-3a-1 to the nematic LC host mixture N26.

### Example 50

The nematic LC host mixture N27 is formulated as follows

| | | | |
|---|---|---|---|
| BCH-32 | 0.50 % | cl.p. | 74.8°C |
| CC-3-V1 | 7.00 % | Δn | 0.1036 |
| CC-4-V1 | 19.50 % | nₑ | 1.5884 |
| CCH-301 | 12.00 % | nₒ | 1.4848 |
| CCH-34 | 1.50 % | Δε | -3.1 |
| CCP-3-1 | 9.00 % | ε_{∥} | 3.6 |
| CCY-3-O1 | 1.50 % | ε_{⊥} | 6.7 |
| CCY-3-O2 | 9.50 % | γ₁ | 102 mPa·s |
| CPY-2-O2 | 3.00 % | K₁ | 13.8 |
| CPY-3-O2 | 11.00 % | K₃ | 15.6 |
| CY-3-O2 | 6.50 % | K₃/K₁ | 1.13 |
| PY-1-O2 | 9.00 % | V₀ | 2.39 V |
| PY-2-O2 | 9.00 % | | |
| PY-3-O2 | 1.00 % | | |

Polymerizable mixture P50 is prepared by adding 0.5% of compound IA1, 0.3% of compound IB1 and 50ppm of the stabilizer ST-8-1 to the nematic LC host mixture N27.

### Example 51

The nematic LC host mixture N28 is formulated as follows

| | | | |
|---|---|---|---|
| B-2O-O5 | 4.00 % | cl.p. | 74.2°C |
| BCH-32 | 8.00 % | Δn | 0.1091 |
| CC-3-V1 | 9.00 % | nₑ | 74.2 |
| CCH-301 | 2.00 % | nₒ | 1.4862 |
| CCH-34 | 8.00 % | Δε | -3.1 |
| CCH-35 | 7.00 % | ε_{∥} | 3.6 |
| CCP-3-1 | 8.00 % | ε_{⊥} | 6.7 |
| CCP-V2-1 | 5.00 % | γ₁ | 108 mPa·s |
| CCY-3-O2 | 10.50 % | K₁ | 14.5 |
| CLY-3-O2 | 1.00 % | K₃ | 16.5 |
| CPY-3-O2 | 2.50 % | K₃/K₁ | 1.14 |
| CY-3-O2 | 11.50 % | V₀ | 2.41 V |
| PCH-301 | 5.50 % | | |
| PY-3-O2 | 18.00 % | | |

Polymerizable mixture P51 is prepared by adding 0.5% of compound IA1, 0.3% of compound IB2 and 50ppm of the stabilizer ST-9-1 to the nematic LC host mixture N28.

### Example 52

The nematic LC host mixture N29 is formulated as follows

| | | | |
|---|---|---|---|
| CC-3-V1 | 3.00 % | cl.p. | 74.8°C |
| CCH-301 | 9.00 % | Δn | 0.0891 |
| CCH-303 | 5.00 % | nₑ | 1.5681 |
| CCH-34 | 9.00 % | nₒ | 1.4790 |
| CCH-35 | 9.00 % | Δε | -3.2 |
| CCP-3-1 | 8.00 % | ε_{∥} | 3.5 |
| CCY-3-O2 | 11.50 % | ε_{⊥} | 6.7 |
| CCY-5-O2 | 9.00 % | γ₁ | 115 mPa·s |
| CPY-3-O2 | 6.00 % | K₁ | 14.2 |
| CY-3-O2 | 15.00 % | K₃ | 16.3 |
| PCH-301 | 4.50 % | K₃/K₁ | 1.15 |
| PY-3-O2 | 11.00 % | V₀ | 2.38 V |

Polymerizable mixture P52 is prepared by adding 0.5% of compound IA1, 0.4% of compound IB3 and 150ppm of the stabilizer ST-3b-1 to the nematic LC host mixture N29.

### Example 53

The nematic LC host mixture N30 is formulated as follows

| | | | |
|---|---|---|---|
| BCH-32 | 10.50 % | cl.p. | 74.5°C |
| CCH-34 | 9.00 % | Δn | 0.1090 |
| CCH-35 | 9.00 % | nₑ | 1.5953 |
| CCP-3-1 | 8.00 % | nₒ | 1.4863 |
| CCY-3-O2 | 9.50 % | Δε | -3.4 |
| CCY-4-O2 | 5.50 % | ε_{∥} | 3.7 |
| CPY-3-O2 | 5.50 % | ε_{⊥} | 7.0 |
| CY-3-O2 | 15.00 % | γ₁ | 128 mPa·s |
| CY-5-O2 | 5.00 % | K₁ | 14.0 |
| PCH-301 | 7.00 % | K₃ | 15.7 |
| PY-3-O2 | 16.00 % | K₃/K₁ | 1.12 |
| | | V₀ | 2.25 V |

Polymerizable mixture P53 is prepared by adding 0.4% of compound IA1, 0.2% of compound IB1 and 150ppm of the stabilizer ST-3a-1 to the nematic LC host mixture N30.

### Example 54

The nematic LC host mixture N31 is formulated as follows

| | | | |
|---|---|---|---|
| B(S)-2O-O5 | 4.00 % | cl.p. | 74.7°C |
| BCH-32 | 5.00 % | Δn | 0.1024 |
| CC-3-V1 | 6.00 % | nₑ | 1.5885 |
| CCH-34 | 9.00 % | nₒ | 1.4861 |
| CCH-35 | 9.00 % | Δε | -3.2 |
| CCP-3-1 | 8.00 % | ε_{∥} | 3.6 |
| CCY-3-O1 | 6.50 % | ε_{⊥} | 6.7 |
| CCY-3-O2 | 9.00 % | γ₁ | 109 mPa·s |
| CLY-3-O2 | 1.00 % | K₁ | 13.5 |
| CPY-3-O2 | 4.50 % | K₃ | 16.5 |
| CY-3-O2 | 13.00 % | K₃/K₁ | 1.22 |
| PCH-301 | 15.00 % | V₀ | 2.39 V |
| PY-1-O2 | 8.00 % | | |
| PY-2-O2 | 2.00 % | | |

Polymerizable mixture P54 is prepared by adding 0.3% of compound IA1, 0.4% of compound IB133 and 150ppm of the stabilizer ST-3a-1 to the nematic LC host mixture N31.

### Example 55

The nematic LC host mixture N32 is formulated as follows

| | | | |
|---|---|---|---|
| CCH-301 | 9.00 % | cl.p. | 110.9°C |
| CCH-34 | 9.00 % | Δn | 0.1022 |
| CCH-35 | 8.00 % | nₑ | 1.5867 |
| CCOC-4-3 | 3.00 % | nₒ | 1.4845 |
| CCP-3-1 | 6.00 % | Δε | -3.0 |
| CCP-3-3 | 6.00 % | ε_{∥} | 3.3 |
| CCPC-33 | 3.00 % | ε_{⊥} | 6.3 |
| CCY-3-1 | 3.50 % | γ₁ | 199 mPa·s |
| CCY-3-O2 | 4.50 % | K₁ | 18.8 |
| CCY-3-O3 | 6.00 % | K₃ | 19.6 |
| CCY-4-O2 | 6.00 % | K₃/K₁ | 1.04 |
| CCY-5-O2 | 5.00 % | V₀ | 2.69 V |
| CPY-2-O2 | 10.50 % | | |
| CPY-3-O2 | 6.50 % | | |
| CY-3-O2 | 1.00 % | | |
| PCH-302 | 4.00 % | | |
| PY-2-O2 | 9.00 % | | |

Polymerizable mixture P55 is prepared by adding 0.3% of compound IA1, 0.4% of compound IB110 and 0.6% of the SA additive SA23 to the nematic LC host mixture N32.

### Example 56

The nematic LC host mixture N33 is formulated as follows

| | | | |
|---|---|---|---|
| BCH-32 | 3.00 % | cl.p. | 109.8°C |
| CCH-301 | 9.00 % | Δn | 0.1020 |
| CCH-34 | 9.00 % | nₑ | 1.5867 |
| CCH-35 | 2.50 % | nₒ | 1.4847 |
| CCOC-4-3 | 3.00 % | Δε | -3.0 |
| CCP-3-1 | 6.00 % | ε_{∥} | 3.3 |
| CCP-3-3 | 5.00 % | ε_{⊥} | 6.2 |
| CCY-3-1 | 3.00 % | γ₁ | 204 mPa·s |
| CCY-3-O2 | 6.00 % | K₁ | 18.4 |
| CCY-3-O3 | 6.00 % | K₃ | 20.3 |
| CCY-4-O2 | 6.00 % | K₃/K₁ | 1.10 |
| CCY-5-O2 | 6.00 % | V₀ | 2.75 V |
| CPY-2-O2 | 10.00 % | | |
| CPY-3-O2 | 8.50 % | | |
| CY-3-O2 | 6.00 % | | |
| PCH-302 | 11.00 % | | |

Polymerizable mixture P56 is prepared by adding 0.5% of compound IA1, 0.4% of compound IB33, 0.6% of the SA additive SA23 and 50ppm of the stabilizer ST-9-1 to the nematic LC host mixture N33.

### Example 57

The nematic LC host mixture N34 is formulated as follows

| | | | |
|---|---|---|---|
| B(S)-2O-O5 | 2.00 % | cl.p. | 74.3°C |
| BCH-32 | 9.50 % | Δn | 0.1080 |
| CC-3-V1 | 6.50 % | nₑ | 1.5962 |
| CCH-301 | 8.50 % | nₒ | 1.4882 |
| CCH-34 | 3.00 % | Δε | -3.3 |
| CCP-3-1 | 9.50 % | ε_{∥} | 3.7 |
| CCY-3-O1 | 6.50 % | ε_{⊥} | 7.0 |
| CCY-5-O2 | 9.50 % | γ₁ | 121 mPa·s |
| CLY-3-O2 | 1.00 % | K₁ | 12.9 |
| CPY-3-O2 | 5.50 % | K₃ | 15.9 |
| CY-3-O2 | 15.50 % | K₃/K₁ | 1.23 |
| PCH-301 | 5.00 % | V₀ | 2.31 V |
| PCH-302 | 6.50 % | | |
| PY-2-O2 | 11.50 % | | |

Polymerizable mixture P57 is prepared by adding 0.4% of compound IA1, 0.3% of compound IB1, 0.6% of the SA additive SA32 and 50ppm of the stabilizer ST-8-1 to the nematic LC host mixture N34.

### Example 58

The nematic LC host mixture N35 is formulated as follows

| | | | |
|---|---|---|---|
| B(S)-2O-O4 | 3.00 % | cl.p. | 74.9°C |
| B(S)-2O-O5 | 5.00 % | Δn | 0.1154 |
| BCH-32 | 7.00 % | Δε | -2.7 |
| CC-3-V | 29.50 % | γ₁ | 77 mPa·s |
| CC-3-V1 | 9.00 % | K₁ | 14.3 |
| CCP-3-1 | 11.00 % | K₃ | 14.9 |
| CCP-3-3 | 2.00 % | γ₁/K₃ | 5.17 |
| CLY-3-O2 | 2.00 % | | |
| CPY-2-O2 | 6.50 % | | |
| CPY-3-O2 | 5.50 % | | |
| PY-1-O2 | 10.50 % | | |
| PY-2-O2 | 9.00 % | | |

Polymerizable mixture P58 is prepared by adding 0.5% of compound IA1, 0.4% of compound IB33 and 150ppm of the stabilizer ST-12 to the nematic LC host mixture N35.

### Example 59

The nematic LC host mixture N36 is formulated as follows

| | | | |
|---|---|---|---|
| BCH-32 | 2.00 % | cl.p. | 74.7 °C |
| CC-3-V | 22.50 % | Δn | 0.1039 |
| CC-3-V1 | 9.50 % | Δε | -3.0 |
| CCP-3-1 | 3.00 % | ε_{∥} | 3.5 |
| CCY-3-O2 | 3.50 % | K₃/K₁ | 1.17 |
| CCY-4-O2 | 4.00 % | γ₁ | 99 mPa s |
| CPY-2-O2 | 12.00 % | V₀ | 2.39 |
| CPY-3-O2 | 12.50 % | | |
| CY-3-O2 | 15.50 % | | |
| CY-3-O4 | 4.00 % | | |
| PCH-3O1 | 7.00 % | | |
| PP-1-2V1 | 1.50 % | | |
| PYP-2-3 | 3.00 % | | |

Polymerizable mixture P59 is prepared by adding 0.4% of compound IA1, 0.2% of compound IB2 and 150ppm of the stabilizer ST-9-1 to the nematic LC host mixture N36.

### Example 60

The nematic LC host mixture N37 is formulated as follows

| | | | |
|---|---|---|---|
| CY-3-O4 | 12.00 % | cl.p. | 77°C |
| PY-3-O2 | 9.00 % | Δn | 0.088 |
| CPY-3-O2 | 12.00 % | Δε | -3.1 |
| CCOY-2-O2 | 8.00 % | | |
| CCY-5-O2 | 10.00 % | | |
| CC-3-V | 20.00 % | | |
| CCH-32 | 30.00 % | | |

Polymerizable mixture P60 is prepared by adding 0.5% of compound IA1, 0.3% of compound IB1, 0.6% of the SA additive SA23 and 50ppm of the stabilizer ST-3a-1 to the nematic LC host mixture N37.

### Example 61

The nematic LC host mixture N38 is formulated as follows

| | | | |
|---|---|---|---|
| CY-3-O4 | 12.00 % | cl.p. | 77°C |
| PY-3-O2 | 9.00 % | Δn | 0.088 |
| CPY-3-O2 | 12.00 % | Δε | -3.1 |
| CCOY-2-O2 | 8.00 % | | |
| CCY-5-O2 | 10.00 % | | |
| CC-3-V | 20.00 % | | |
| CCH-32 | 30.00 % | | |

Polymerizable mixture P61 is prepared by adding 0.4% of compound IA1, 0.3% of compound IB1 and 150ppm of the stabilizer ST-3a-1 to the nematic LC host mixture N38.

### Example 62

The nematic LC host mixture N39 is formulated as follows

| | | | |
|---|---|---|---|
| CCH-32 | 10.00 % | cl.p. | 86°C |
| COY-3-O2 | 10.00 % | Δn | 0.105 |
| COY-3-O1 | 10.00 % | Δε | -5.9 |
| CCOY-2-O2 | 9.00 % | | |
| CCY-3-O1 | 7.00 % | | |
| CCY-3-O2 | 6.00 % | | |
| CCY-4-O2 | 6.00 % | | |
| CPY-5-O2 | 8.00 % | | |
| CPY-3-O1(c3) | 10.00 % | | |
| CPY-2-O2 | 10.00 % | | |
| CY-3-O2 | 7.00 % | | |
| CY-3-O4 | 7.00 % | | |

Polymerizable mixture P62 is prepared by adding 0.5% of compound IA1, 0.4% of compound IB3 and 150ppm of the stabilizer ST-9-1 to the nematic LC host mixture N39.

### Example 63

The nematic LC host mixture N40 is formulated as follows

| | | | |
|---|---|---|---|
| CCH-32 | 11.00 % | cl.p. | 79°C |
| CC-3-V | 10.00 % | Δn | 0.112 |
| PP-5-O2 | 5.00 % | Δε | -4.3 |
| COY-3-O2 | 8.00 % | | |
| COY-3-O1 | 7.00 % | | |
| CCOY-2-O2 | 13.00 % | | |
| CPY-(c5)-O2 | 7.00 % | | |
| CPY-3-O2 | 10.00 % | | |
| CPY-2-O2 | 10.00 % | | |
| PY-3-O2 | 10.00 % | | |
| CCP-3-1 | 2.00 % | | |
| CCP-V-1 | 4.00 % | | |
| CCP-V2-1 | 4.00 % | | |

Polymerizable mixture P63 is prepared by adding 0.4% of compound IA1, 0.3% of compound IB1 and 150ppm of the stabilizer ST-12 to the nematic LC host mixture N40.

### Example 64

The nematic LC host mixture N41 is formulated as follows

| | | | |
|---|---|---|---|
| CY-5-O2 | 11.00 % | cl.p. | 60°C |
| PY-3-O2 | 9.00 % | Δn | 0.097 |
| COY-3-O2 | 17.00 % | Δε | -2.8 |
| B(S)-(c5)1O-O4 | 4.00 % | | |
| PP-1-5 | 10.00 % | | |
| CC-3-V1 | 26.00 % | | |
| CCH-32 | 5.00 % | | |
| CCP-3-1 | 12.00 % | | |
| BCH-32 | 6.00 % | | |

Polymerizable mixture P64 is prepared by adding 0.4% of compound IA1, 0.3% of compound IB1 and 150ppm of the stabilizer ST-9-1 to the nematic LC host mixture N41.

### Example 65

The nematic LC host mixture N42 is formulated as follows

| | | | |
|---|---|---|---|
| CCH-23 | 16.50 % | cl.p. | 75°C |
| CCH-34 | 3.00 % | Δn | 0.112 |
| PCH-3O1 | 15.00 % | Δε | -3.0 |
| PP-1-3 | 9.00 % | | |
| BCH-32 | 8.00 % | | |
| COY-3-O1 | 8.50 % | | |
| CCOY-3-O2 | 17.00 % | | |
| CPY-2-O2 | 6.50 % | | |
| CPY-3-O2 | 8.00 % | | |
| CPY-3-O4 | 8.50 % | | |

Polymerizable mixture P65 is prepared by adding 0.5% of compound IA1, 0.5% of compound IB3 and 150ppm of the stabilizer ST-3a-1 to the nematic LC host mixture N42.

### Example 66

The nematic LC host mixture N43 is formulated as follows

| | | | |
|---|---|---|---|
| CCH-23 | 12.00 % | cl.p. | 111°C |
| CCH-34 | 8.00 % | Δn | 0.097 |
| CCH-35 | 7.00 % | Δε | -3.1 |
| PCH-3O1 | 8.00 % | | |
| CCP-3-1 | 7.00 % | | |
| CCP-3-3 | 4.00 % | | |
| BCH-32 | 5.00 % | | |
| CCOY-2-O2 | 15.00 % | | |
| CCOY-3-O2 | 15.00 % | | |
| CPY-2-O2 | 5.00 % | | |
| CPY-3-O2 | 5.00 % | | |
| CPY-3-O3 | 5.00 % | | |
| CPY-3-O4 | 4.00 % | | |

Polymerizable mixture P66 is prepared by adding 0.4% of compound IA1, 0.3% of compound IB1 and 150ppm of the stabilizer ST-3b-1 to the nematic LC host mixture N43.

### Example 67

The nematic LC host mixture N44 is formulated as follows

| | | | |
|---|---|---|---|
| CC-3-V | 32.00 % | cl.p. | 74°C |
| PP-1-3 | 11.00 % | Δn | 0.104 |
| CCP-3-1 | 8.00 % | Δε | -2.9 |
| CY-5-O2 | 2.00 % | | |
| COY-3-O1 | 11.50 % | | |
| CCY-3-O2 | 11.50 % | | |
| CPY-2-O2 | 7.00 % | | |
| CPY-3-O2 | 8.00 % | | |
| CPY-3-O4 | 9.00 % | | |

Polymerizable mixture P67 is prepared by adding 0.5% of compound IA1, 0.3% of compound IB1 and 150ppm of the stabilizer ST-12 to the nematic LC host mixture N44.

### Example 68

The nematic LC host mixture N45 is formulated as follows

| | | | |
|---|---|---|---|
| CCH-23 | 21.50 % | cl.p. | 75°C |
| CCH-34 | 9.50 % | Δn | 0.103 |
| PP-1-3 | 13.50 % | Δε | -2.8 |
| CCP-3-1 | 6.00 % | | |
| COY-3-O1 | 11.50 % | | |
| CCOY-3-O2 | 14.00 % | | |
| CPY-2-O2 | 7.00 % | | |
| CPY-3-O2 | 8.00 % | | |
| CPY-3-O4 | 9.00 % | | |

Polymerizable mixture P68 is prepared by adding 0.5% of compound IA1, 0.3% of compound IB1 and 150ppm of the stabilizer ST-9-1 to the nematic LC host mixture N45.

### Example 69

The nematic LC host mixture N46 is formulated as follows

| | | | |
|---|---|---|---|
| CEY-3-O2 | 7.00 % | cl.p. | 89°C |
| CCY-3-O2 | 8.00 % | Δn | 0.115 |
| CCOY-3-O2 | 5.00 % | Δε | -1.9 |
| CLY-2-O2 | 8.00 % | | |
| CAIY-3-O2 | 3.00 % | | |
| CAIY-5-O2 | 4.00 % | | |
| PYP-2-3 | 7.00 % | | |
| PYP-2-4 | 7.00 % | | |
| CC-4-V | 15.00 % | | |
| CC-3-V1 | 6.00 % | | |
| CC-1-2V1 | 6.00 % | | |
| CC-3-2V1 | 4.00 % | | |
| PP-1-2V | 5.00 % | | |
| PP-1-2V1 | 5.00 % | | |
| CCP-3-1 | 6.00 % | | |
| CBC-33F | 4.00 % | | |

Polymerizable mixture P69 is prepared by adding 0.5% of compound IA1, 0.3% of compound IB1, 0.6% of the SA additive SA32 and 150ppm of the stabilizer ST-8-1 to the nematic LC host mixture N46.

### Example 70

The nematic LC host mixture N47 is formulated as follows

| | | | |
|---|---|---|---|
| B(S)-2O-O5 | 2.00 % | cl.p. | 74°C |
| BCH-32 | 9.50 % | Δn | 0.108 |
| CCP-3-1 | 9.50 % | Δε | -3.6 |
| CCY-3-O1 | 6.50 % | | |
| CCY-5-O2 | 9.50 % | | |
| CLY-3-O2 | 1.00 % | | |
| CPY-3-O2 | 5.50 % | | |
| CC-3-V1 | 6.50 % | | |
| CCH-301 | 8.50 % | | |
| CCH-34 | 3.00 % | | |
| COY-3-O2 | 15.50 % | | |
| PCH-3O1 | 5.00 % | | |
| PCH-3O2 | 6.50 % | | |
| PY-2-O2 | 11.50 % | | |

Polymerizable mixture P70 is prepared by adding 0.5% of compound IA1, 0.3% of compound IB1, 0.6% of the SA additive SA32 and 100ppm of the stabilizer ST-3b-1 to the nematic LC host mixture N47.

### Example 71

The nematic LC host mixture N48 is formulated as follows

| | | | |
|---|---|---|---|
| B(S)-2O-O4 | 4.0 % | cl.p. | 75°C |
| B(S)-2O-O4 | 4.0 % | Δn | 0.114 |
| BCH-32 | 7.5 % | nₑ | 1.606 |
| CC-3-V | 25.75 % | nₒ | 1.492 |
| CC-3-V1 | 10.0 % | Δε | -2.6 |
| CCP-3-1 | 13.0 % | ε_{∥} | 3.6 |
| CCP-3-3 | 3.25 % | ε_{⊥} | 6.1 |
| CLY-3-O2 | 2.0 % | K₁ | 13.7 |
| CPY-2-O2 | 9.5 % | K₃ | 14.2 |
| PY-2-O2 | 11.0 % | | |
| PY-2-O1 | 10.0 % | | |

Polymerizable mixture P71 is prepared by adding 0.4% of compound IA1, 0.2% of compound IB1, 0.6% of the SA additive SA32 and 150ppm of the stabilizer ST-9-1 to the nematic LC host mixture N48.

### Example 72

The nematic LC host mixture N49 is formulated as follows

| | | | |
|---|---|---|---|
| BCH-32 | 7.50 % | cl.p. | 75.5°C |
| CC-3-V1 | 6.50 % | Δn | 0.1105 |
| CCH-34 | 8.00 % | nₑ | 1.5970 |
| CCH-35 | 8.00 % | nₒ | 1.4865 |
| CCY-3-O2 | 12.00 % | Δε | -3.3 |
| CPY-2-O2 | 9.50 % | ε_{∥} | 3.5 |
| CPY-3-O2 | 11.00 % | ε_{⊥} | 6.8 |
| CY-3-O2 | 12.00 % | γ₁ | 130 mPa·s |
| CY-5-O2 | 13.00 % | K₁ | 14.2 |
| PCH-301 | 4.00 % | K₃ | 15.4 |
| PP-1-4 | 8.50 % | K₃/K₁ | 1.08 |
| | | V₀ | 2.28 V |

Polymerizable mixture P72 is prepared by adding 0.5% of compound IA1 and 0.3% of compound IB1 to the nematic LC host mixture N49.

### Example 73

The nematic LC host mixture N50 is formulated as follows

| | | | |
|---|---|---|---|
| B(S)-2O-O4 | 4.50 % | cl.p. | 75.5°C |
| B(S)-2O-O5 | 5.00 % | Δn | 0.1120 |
| BCH-32 | 6.00 % | nₑ | 1.6001 |
| CC-3-V | 30.00 % | nₒ | 1.4881 |
| CC-3-V1 | 8.00 % | Δε | -4.1 |
| CCY-3-O1 | 7.50 % | ε_{∥} | 3.8 |
| CCY-3-O2 | 11.00 % | ε_{⊥} | 8.0 |
| CLY-3-O2 | 8.00 % | γ₁ | 92 mPa·s |
| PY-1-O2 | 10.50 % | K₁ | 14.8 |
| PY-2-O2 | 9.50 % | K₃ | 15.7 |
| | | K₃/K₁ | 1.06 |
| | | V₀ | 2.06 V |

Polymerizable mixture P73 is prepared by adding 0.5% of compound IA1, 0.3% of compound IB89 and 150ppm of the stabilizer ST-3a-1 to the nematic LC host mixture N50.

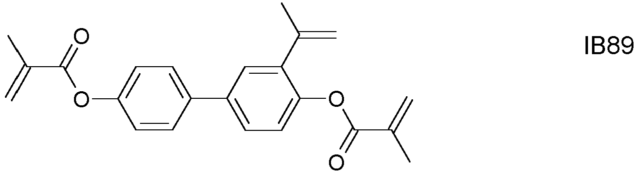

### Example 74

The nematic LC host mixture N51 is formulated as follows

| | | | |
|---|---|---|---|
| B(S)-(c5)1O-O4 | 4.50 % | cl.p. | 74.7°C |
| B(S)-2O-O5 | 5.00 % | Δn | 0.1120 |
| B(S)-2O-O6 | 2.00 % | Δε | -3.6 |
| CC-3-V | 30.00 % | ε_{∥} | 3.7 |
| CC-4-V1 | 17.50 % | ε_{⊥} | 7.3 |
| CLY-3-O2 | 8.00 % | γ₁ | 88 mPa·s |
| CPY-2-O2 | 10.00 % | K₁ | 14.2 |
| CPY-3-O2 | 10.00 % | K₃ | 14.0 |
| PY-1-O2 | 3.00 % | V₀ | 2.09 V |
| PY-2-O2 | 10.00 % | | |

Polymerizable mixture P74 is prepared by adding 0.5% of compound IA1, 0.3% of compound IB3 and 100ppm of the stabilizer ST-3a-1 to the nematic LC host mixture N51.

### Example 75

The nematic LC host mixture N52 is formulated as follows

| | | | |
|---|---|---|---|
| B(S)-(c3)1O-O4 | 4.50 % | cl.p. | 75.4°C |
| B(S)-2O-O5 | 3.00 % | Δn | 0.1046 |
| CC-3-V | 51.00 % | Δε | -3.0 |
| CCP-3-1 | 1.00 % | ε_{∥} | 3.5 |
| CLY-3-O2 | 9.00 % | ε_{⊥} | 6.5 |
| CPY-2-O2 | 10.00 % | γ₁ | 74 mPa·s |
| CPY-3-O2 | 12.00 % | K₁ | 14.0 |
| PY-1-O2 | 9.50 % | K₃ | 15.0 |
| | | V₀ | 2.36 V |

Polymerizable mixture P75 is prepared by adding 0.4% of compound IA1, 0.2% of compound IB1 and 100ppm of the stabilizer ST-3a-1 to the nematic LC host mixture N52.

### Example 76

Polymerizable mixture P76 is prepared by adding 0.5% of compound IA1, 0.4% of compound IB6 and 150ppm of the stabilizer ST-3a-1 to the nematic LC host mixture N3.

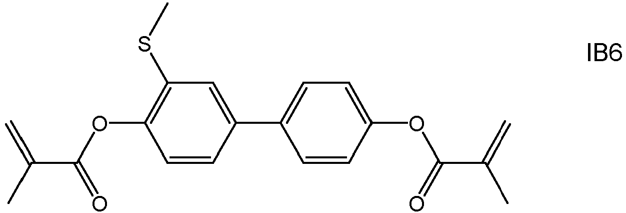

### Example 77

Polymerizable mixture P77 is prepared by adding 0.4% of compound IA1, 0.4% of compound IB6 and 100ppm of the stabilizer ST-3a-1 to the nematic LC host mixture N2.

### Example 78

Polymerizable mixture P76 is prepared by adding 0.5% of compound IA1, 0.4% of compound IB25 and 100ppm of the stabilizer ST-3a-1 to the nematic LC host mixture N3.

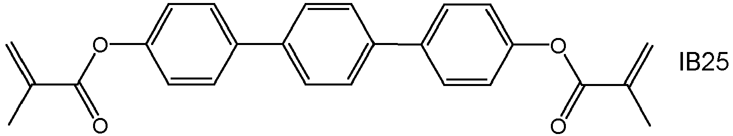

### Example 79

Polymerizable mixture P79 is prepared by adding 0.5% of compound IA1, 0.4% of compound IB25 and 100ppm of the stabilizer ST-3a-1 to the nematic LC host mixture N2.

### Example 80

Polymerizable mixture P80 is prepared by adding 0.5% of compound IA1, 0.4% of compound IB111 and 150ppm of the stabilizer ST-3a-1 to the nematic LC host mixture N1.

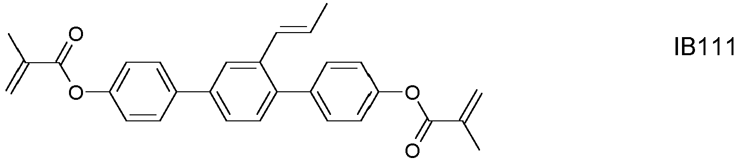

### Example 81

Polymerizable mixture P81 is prepared by adding 0.5% of compound IA1, 0.4% of compound IB111 and 100ppm of the stabilizer ST-3a-1 to the nematic LC host mixture N2.

### Example 82

Polymerizable mixture P82 is prepared by adding 0.5% of compound IA1, 0.4% of compound IB113 and 100ppm of the stabilizer ST-3a-1 to the nematic LC host mixture N3.

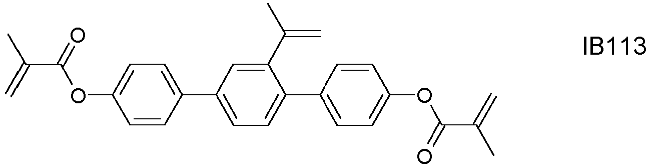

### Example 83

Polymerizable mixture P83 is prepared by adding 0.5% of compound IA1, 0.4% of compound IB113 and 150ppm of the stabilizer ST-3a-1 to the nematic LC host mixture N2

### Example 84

Polymerizable mixture P84 is prepared by adding 0.5% of compound IA1, 0.4% of compound IB90 and 100ppm of the stabilizer ST-3a-1 to the nematic LC host mixture N1.

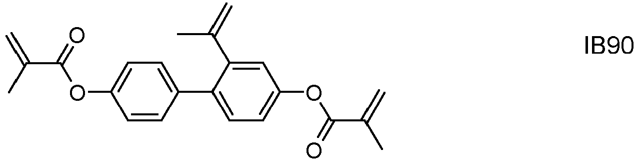

### Example 85

Polymerizable mixture P85 is prepared by adding 0.5% of compound IA1, 0.3% of compound IB90 and 150ppm of the stabilizer ST-3a-1 to the nematic LC host mixture N2.

### Example 86

Polymerizable mixture P86 is prepared by adding 0.45% of compound IA5 and 0.05% of compound IB133 to the nematic LC host mixture N1.

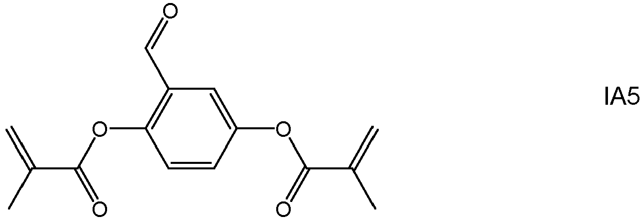

The VHR value before and after UV exposure for mixture P86 is measured as described in Example 1. The results are shown in Table 4.1.

**Table 4.1 - VHR**

| Mixture | P86 |
|---|---|
| VHR (%) initial | 96.1 |
| VHR (%) after 0.5h UV | 90.2 |

It can be seen that the polymerizable mixture P86 shows only small drop of the VHR after UV stress, compared to reference mixtures C1A and C1B from Example 1.

The residual content of unpolymerized monomers (in ppm) in mixture P86 is measured as described in Example 1. The results are shown in Table 4.2.

**Table 4.2 - Residual RM**

| Monomer conc. (%) | P86 | |
|---|---|---|
| Time (h) | IA5 | IB133 |
| 0 | 0.4500 | 0.05 |
| 0.5 | 0.0068 | <0.003 |
| 1 | n.d. | n.d. |
| 1.5 | n.d. | n.d. |

| | | |
|---|---|---|
| n.d. = not detectable | | |

It can be seen that in the polymerizable mixture P86 the residual content of both monomers IA5 and IB133 after polymerization is decreasing rapidly.

### Example 87

Polymerizable mixture P87 is prepared by adding 0.5% of compound IA5, 0.1 % of compound IB133 and 100ppm of the stabilizer ST-3a-1 to the nematic LC host mixture N2.

### Example 88

Polymerizable mixture P88 is prepared by adding 0.4% of compound IA5, 0.25% of compound IB1 and 100ppm of the stabilizer ST-8-1 to the nematic LC host mixture N2.

### Example 89

Polymerizable mixture P89 is prepared by adding 0.45% of compound IA5, 0.1% of compound IB3 and 100ppm of the stabilizer ST-8-1 to the nematic LC host mixture N2.

### Example 90

Polymerizable mixture P89 is prepared by adding 0.35% of compound IA5, 0.25% of compound IB2 and 100ppm of the stabilizer ST-3a-1 to the nematic LC host mixture N2.

### Example 91

Polymerizable mixture P91 is prepared by adding 0.4% of compound IA5, 0.2% of compound IB135 and 100ppm of the stabilizer ST-3a-1 to the nematic LC host mixture N74.

### Example 92

Polymerizable mixture P92 is prepared by adding 0.3% of compound IA5, 0.2% of compound IB6 and 100ppm of the stabilizer ST-3a-1 to the nematic LC host mixture N2.

### Example 93

Polymerizable mixture P93 is prepared by adding 0.4% of compound IA5, 0.2% of compound IB69 and 100ppm of the stabilizer ST-3a-1 to the nematic LC host mixture N2.

### Example 94

Polymerizable mixture P94 is prepared by adding 0.5% of compound IA5, 0.1% of compound IB33 and 100ppm of the stabilizer ST-3a-1 to the nematic LC host mixture N62.

### Example 95

Polymerizable mixture P95 is prepared by adding 0.5% of compound IA6, 0.4% of compound IB1 and 100ppm of the stabilizer ST-3a-1 to the nematic LC host mixture N1.

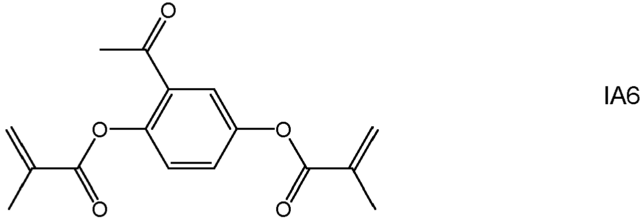

### Example 96

Polymerizable mixture P96 is prepared by adding 0.4% of compound IA6, 0.25% of compound IB1 and 100ppm of the stabilizer ST-8-1 to the nematic LC host mixture N2.

### Example 97

Polymerizable mixture P97 is prepared by adding 0.45% of compound IA6, 0.05% of compound IB133 and 100ppm of the stabilizer ST-12-1 to the nematic LC host mixture N62.

## Claims

1. An LC medium comprising one or more polymerizable compounds of formula IA-1 and one or more polymerizable compounds of formula IB 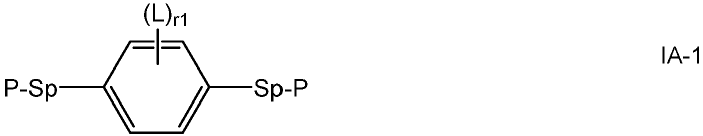
P-Sp-M²-Sp-P IB
wherein the individual radicals, independently of each other and on each occurrence identically or differently, have the following meanings
P a methacrylate group,
Sp a spacer group or a single bond,
M² a group selected from formulae 1 to 3 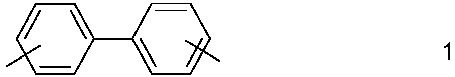 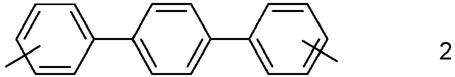 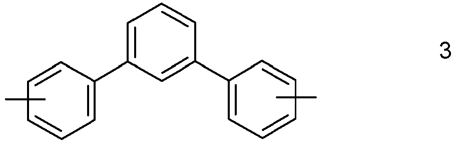
wherein the benzene rings are optionally substituted by one or more groups L or P-Sp-,
L F, Cl, -CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F or Cl.

2. The LC medium according to Claim 1, **characterized in that**, if Sp is different from a single bond, it is selected from -(CH₂)ₚ₁-, -(CH₂)ₚ₂-CH=CH-(CH₂)ₚ₃-, -O-(CH₂)ₚ₁-, -O-CO-(CH₂)ₚ₁, or -CO-O-(CH₂)ₚ₁, wherein p1 is 2, 3, 4, 5 or 6, p2 and p3 are independently of each other 0, 1, 2 or 3 and, if Sp is -O-(CH₂)ₚ₁-, -O-CO-(CH₂)ₚ₁ or -CO-O-(CH₂)ₚ₁ the O-atom or CO-group, respectively, is linked to the benzene ring.

3. The LC medium according to Claim 1 or 2, **characterized in that** the total proportion of the polymerizable compounds of formulae IA-1 and IB in the LC medium is from 0.1 to 2.5%.

4. The LC medium according to one or more of Claims 1 to 3, **characterized in that** the compounds of formula IA are selected from the following subformulae: 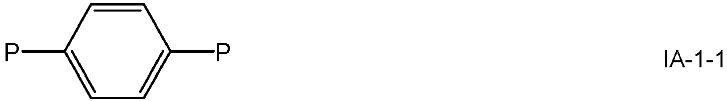 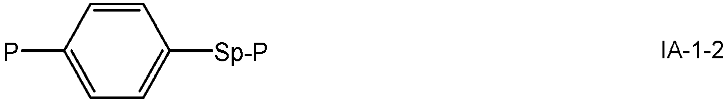 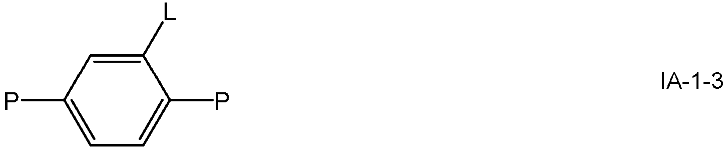 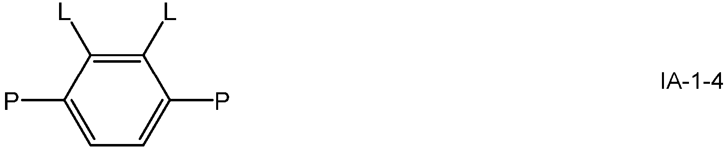 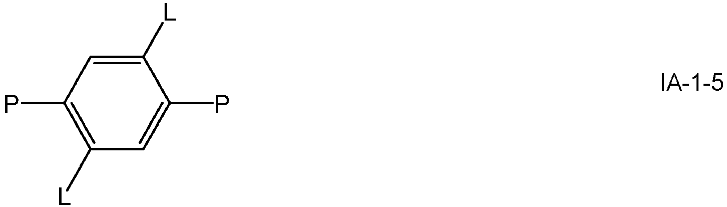 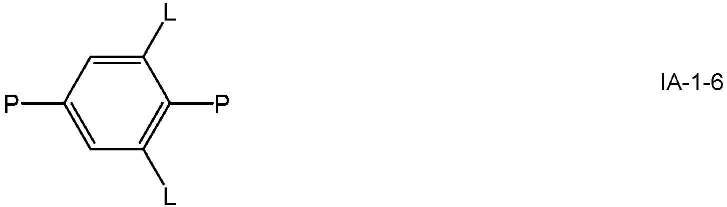 wherein P, Sp and L have the meanings given in claim 1 and Sp is different from a single bond.

5. The LC medium according to one or more of Claims 1 to 4, **characterized in that** that the compounds of formula IA are selected from the following subformulae:

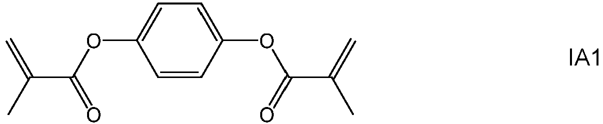

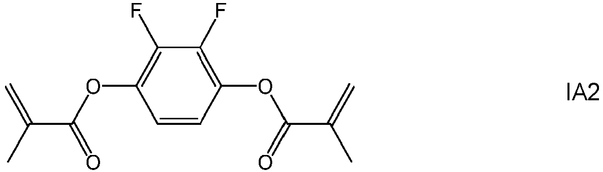

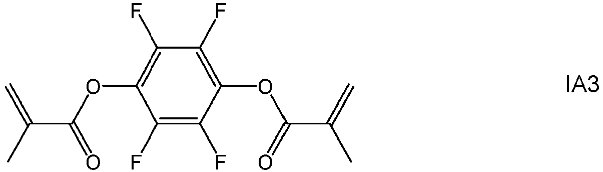

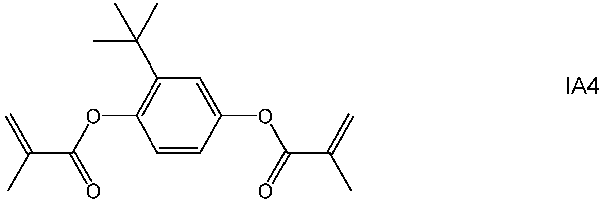

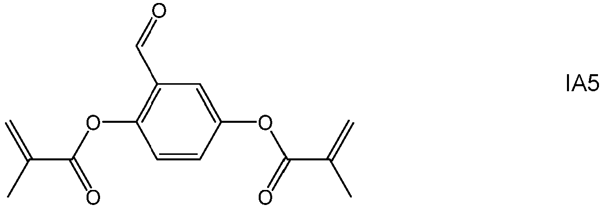

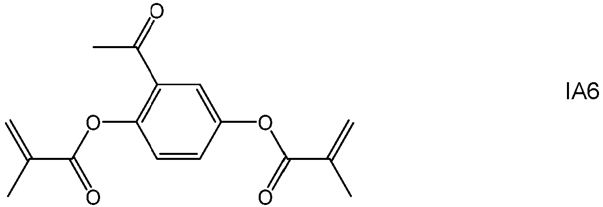

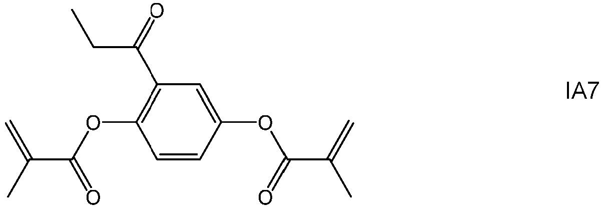

6. The LC medium according to one or more of Claims 1 to 5, **characterized in that** the compounds of formula IB are selected from the following subformulae: 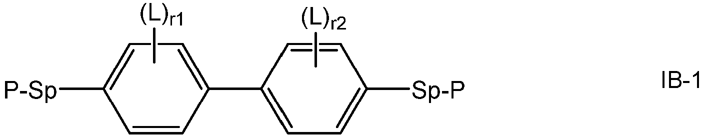 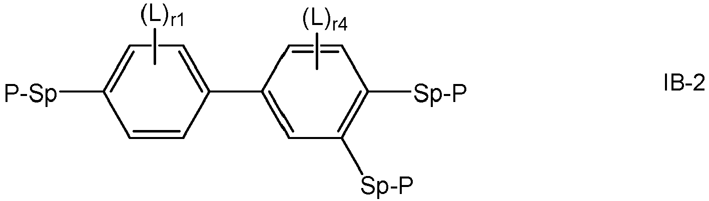 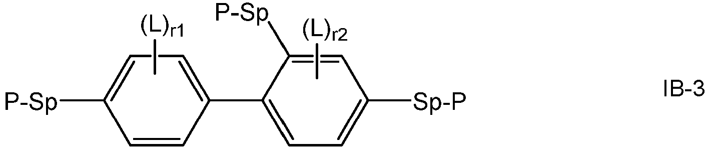 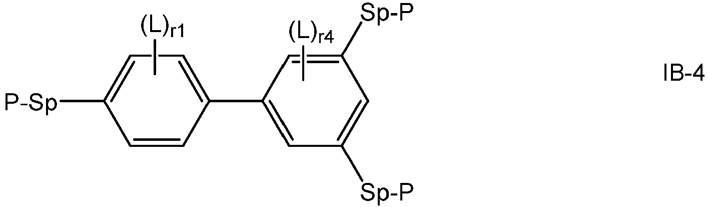 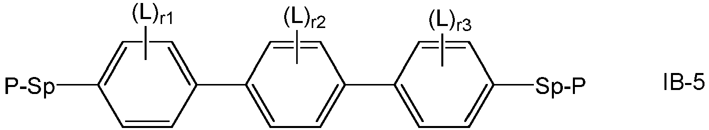 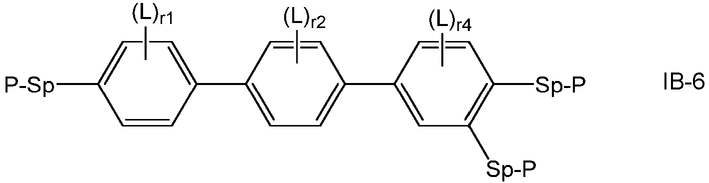 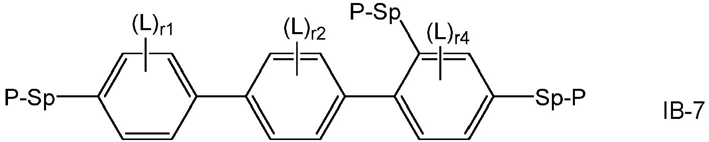 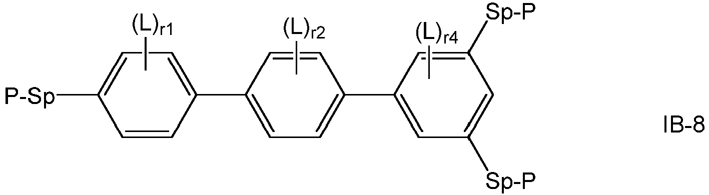 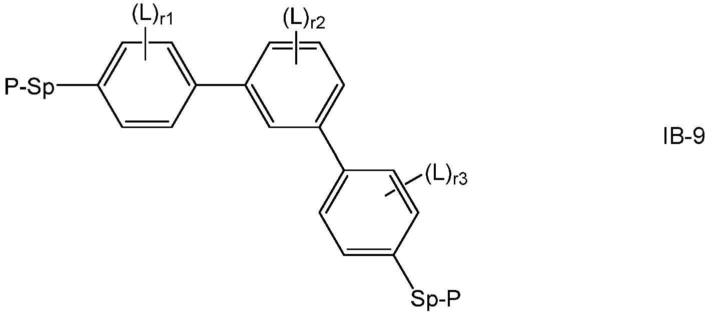 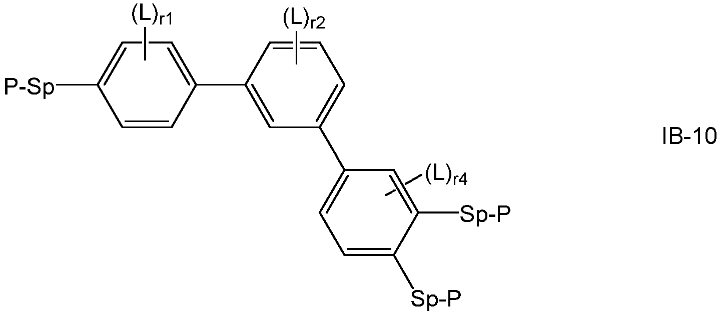 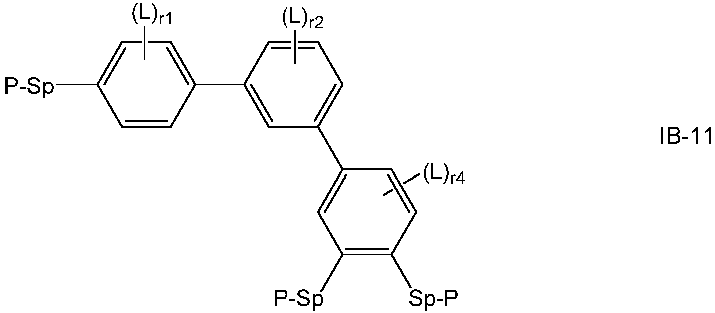 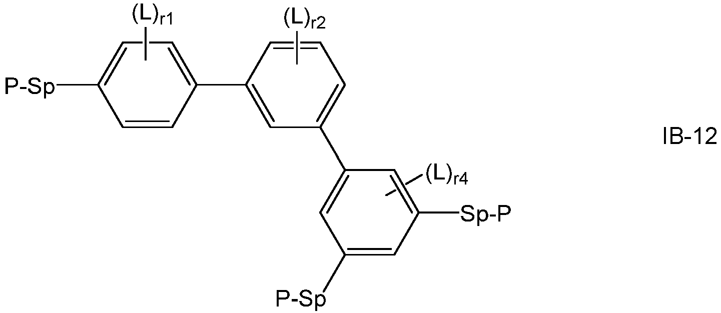 wherein P, Sp and L have the meanings given in claim 1 or 2,
r1, r2, r3 are independently of each other 0, 1, 2, 3 or 4, and
r4 is 0, 1, 2 or 3.

7. The LC medium according to one or more of Claims 1 to 6, **characterized in that** it comprises one or more compounds of formula II: 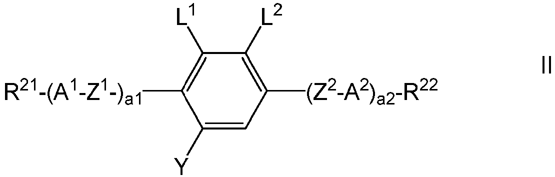 wherein the individual radicals, independently of each other and on each occurrence identically or differently, have the following meanings
R²¹, R²² H, straight chain, branched or cyclic alkyl or alkoxy having 1 to 20 C atoms, wherein one or more non-adjacent CH₂-groups are optionally replaced by -O-, -S-, -CO-, -CO-O-, -O-CO-, -O-CO-O-, CR⁰=CR⁰⁰-, -C≡C-, 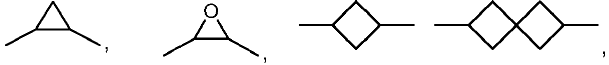 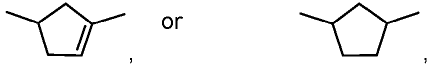 in such a manner that O- and/or S-atoms are not directly connected with each other, and wherein one or more H atoms are each optionally replaced by F, Cl, CN or CF₃,
R⁰, R⁰⁰ H or alkyl having 1 to 12 C atoms,
A¹, A² a group selected from the following formulae 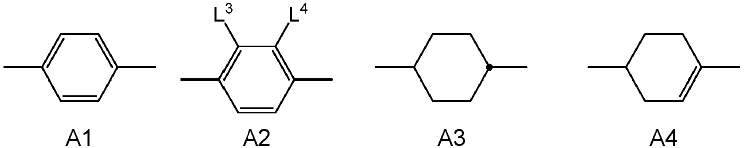 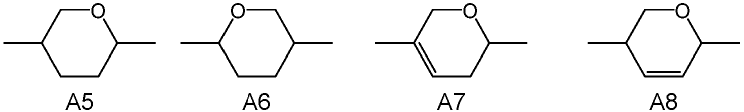 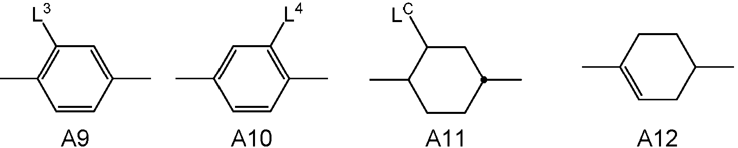 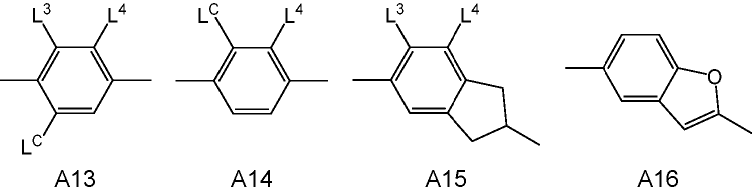
Z¹ and Z² -CH₂CH₂-, -CH=CH-, -CF₂O-, -OCF₂-, -CH₂O-, -OCH₂-, -COO-, -O-CO-, -C₂F₄-, -CF=CF-, -CH=CH-CH₂O- or a single bond,
L¹, L², L³, L⁴ F, Cl, OCF₃, CF₃, CH₃, CH₂F or CHF₂,
Y H, F, Cl, CF₃, CHF₂ or CH₃,
L^{C} CH₃ or OCH₃,
a1 0, 1 or 2,
a2 0 or 1.

8. The LC medium according to any one of Claims 1 to 7, **characterized in that** it further comprises one or more compounds selected from the group consisting of compounds of the formulae IIA, IIB, IIC and IID 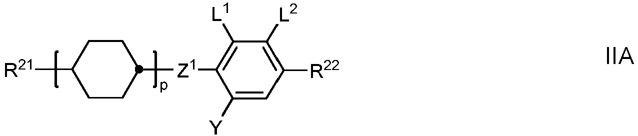 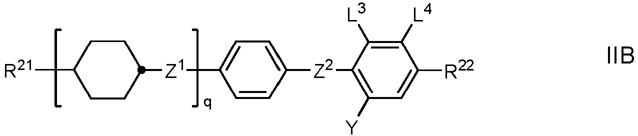 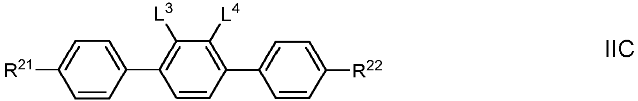 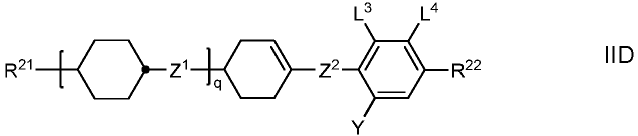 in which the individual radicals, on each occurrence identically or differently, and each, independently of one another, have the following meaning:
R²¹, R²² H, an alkyl, alkoxy or alkenyl radical having up to 15 C atoms which is unsubstituted or monosubstituted by F, Cl, CN or CF₃ and where, in addition, one or more CH₂ groups in these radicals may be replaced by -O-, -S-,-C≡C-, -CF₂O-, -OCF₂-, -OC-O-, -O-CO- 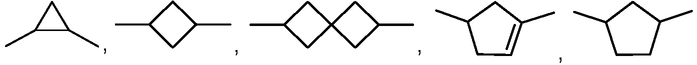 in such a way that O- and/or S-atoms are not linked directly to one another,
L¹ to L⁴ F, Cl, CF₃ or CHF₂,
Y H, F, Cl, CF₃, CHF₂ or CH₃,
Z¹, Z² a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O,
p 0, 1 or 2, and
q 0 or 1.

9. The LC medium according to one or more of Claims 1 to 8, **characterized in that** it comprises one or more compounds of formula III: 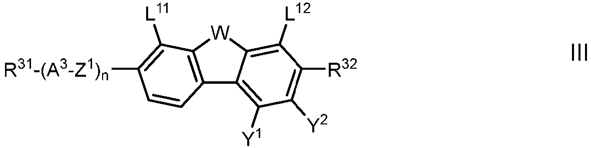 wherein the individual radicals, independently of each other and on each occurrence identically or differently, have the following meanings
R³¹, R³² H, an alkyl, alkoxy or alkenyl radical having up to 15 C atoms which is unsubstituted or monosubstituted by F, Cl, CN or CF₃ and where, in addition, one or more CH₂ groups in these radicals may be replaced by -O-, -S-,-C≡C-, -CF₂O-, -OCF₂-, -OC-O-, -O-CO- in such a way that O- and/or S-atoms are not linked directly to one another,
A³
a) a 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N, or
c) a radical selected from the group consisting of spiro[3.3]heptane-2,6-diyl, 1,4-bicyclo[2.2.2]octylene, naphthalene-2,6-diyl, decahydronaphthalene-2,6-diyl, 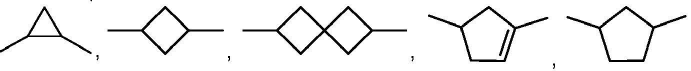 1,2,3,4-tetrahydronaphthalene-2,6-diyl, phenanthrene-2,7-diyl and fluorene-2,7-diyl,
wherein the radicals a), b) and c) may be mono- or polysubstituted by halogen atoms,
n 0, 1 or 2,
Z¹ -CO-O-, -O-CO-, -CF₂O- , -OCF₂-, -CH₂O-, -OCH₂-, -CH₂-, - CH₂CH₂-, -(CH₂)₄-, -CH=CH-CH₂O-, -C₂F₄-, -CH₂CF₂-, - CF₂CH₂ -, -CF=CF-, -CH=CF-, -CF=CH-, -CH=CH-, -C≡C- or a single bond,
L¹¹, L¹² F, Cl, CF₃ or CHF₂,
W O or S,
Y¹, Y² H, F, Cl, CF₃, CHF₂, CH₃ or OCH₃.

10. The LC medium according to to one or more of Claims 1 to 9, **characterized in that** it comprises one or more compounds of formula IV: 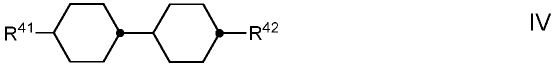 in which
R⁴¹ denotes an unsubstituted alkyl radical having 1 to 7 C atoms where, in addition, one or more CH₂ groups may be replaced by 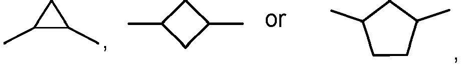 or an unsubstituted alkenyl radical having 2 to 7 C atoms, and
R⁴² denotes an unsubstituted alkyl radical having 1 to 7 C atoms or an unsubstituted alkoxy radical having 1 to 6 C atoms,.

11. The LC medium according to one or more of Claims 1 to 10, **characterized in that** it comprises one or more compounds of formula V: 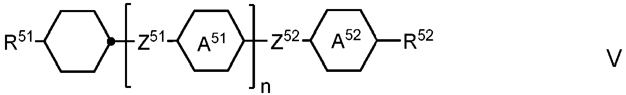 in which
R⁵¹, R⁵² independently of one another denote H, an alkyl, alkoxy or alkenyl radical having up to 15 C atoms which is unsubstituted, monosubstituted by F, Cl, CN or CF₃ or at least monosubstituted by halogen, where, in addition, one or more CH₂ groups in these radicals may be replaced by -O-, -S-,-C≡C-, -CF₂O-, -OCF₂-, -OC-O-, -O-CO- 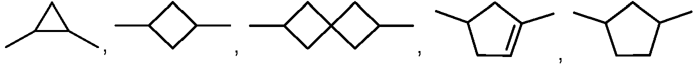 in such a way that O atoms are not linked directly to one another, identically or differently, denote 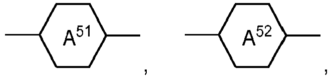 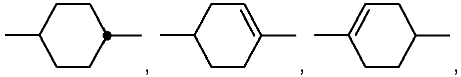 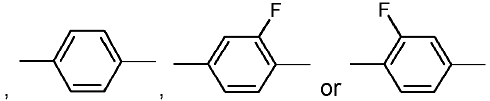
Z⁵¹, Z⁵² each, independently of one another, denote -CH₂-CH₂- , -CH₂-O-,-CH=CH-, -C=C-, -COO- or a single bond, and
n is 1 or 2.

12. The LC medium according to one or more of Claims 1 to 11, **characterized in that** it additionally comprises one or more additives selected from the group consisting of chiral dopants, stabilisers, polymerization initiators and self alignment additives.

13. A process of preparing an LC medium according to one or more of Claims 1 to 12, comprising the steps of mixing one or more one or more polymerizable compounds as defined in one or more of Claims 1 to 6 with one or more compounds of formula II, III, IV and/or V as defined in one or more of Claims 7 to 11, and optionally with further liquid-crystalline compounds and/or additives, and optionally polymerizing the polymerizable compounds.

14. An LC display comprising an LC medium as defined in one or more of Claims 1 to 12.

15. The LC display according to Claim 14, which is a PS-VA, PS-IPS, PS-FFS or SA-VA display.

16. The LC display according to Claim 14 or 15, **characterized in that** it comprises two substrates, at least one of which is transparent to light, an electrode provided on each substrate or two electrodes provided on only one of the substrates, and located between the substrates a layer of an LC medium according to one or more of Claims 1 to 12, wherein the polymerizable compounds are polymerized between the substrates of the display by UV photopolymerization.

17. A process for the production of an LC display according to Claim 16, comprising the steps of providing an LC medium according to one or more of Claims 1 to 12 between the substrates of the display, and polymerizing the polymerizable compounds by irradiation with UV light,

18. The process of Claim 18,wherein a voltage is applied to the electrodes of the display during polymerization of the polymerizable compounds.

19. The process according to claim 17 or 18, **characterized in that** irradiation is carried out using a UV C-type lamp or UV B-type lamp.

20. Use of an LC medium according to one or more of Claims 1 to 12 or of an LC display according to one or more of Claims 14 to 16 or of a process according to one or more of Claims 17 to 19 for an energy-saving LC display or an energy-saving LC display production process.

21. A compound selected from the following formulae:

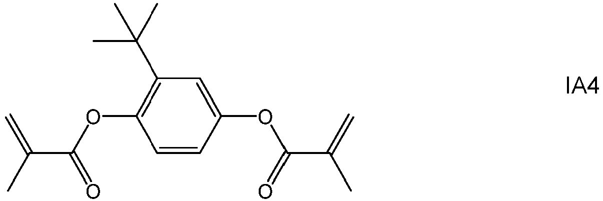

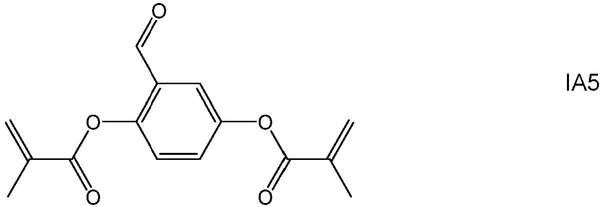

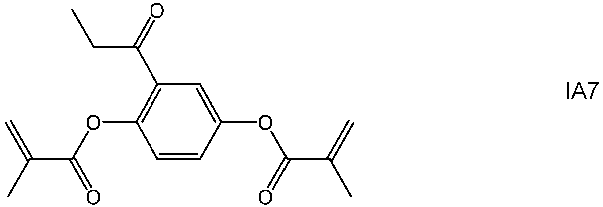

## Patentansprüche

1. FK-Medium enthaltend eine oder mehrere polymerisierbare Verbindungen der Formel IA-1 und eine oder mehrere polymerisierbare Verbindungen der Formel IB, 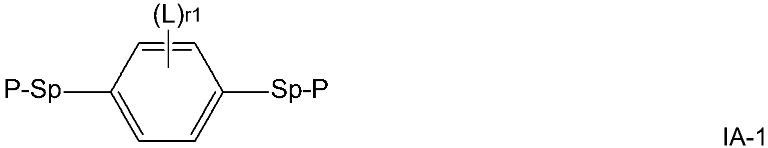
P-Sp-M²-Sp-P IB
bei denen die einzelnen Reste, unabhängig voneinander und bei jedem Auftreten gleich oder verschieden, die folgenden Bedeutungen besitzen
P eine Methacrylatgruppe,
Sp eine Spacergruppe oder eine Einfachbindung,
M² eine Gruppe, die ausgewählt ist aus den Formeln 1 bis 3 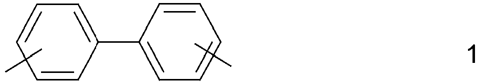 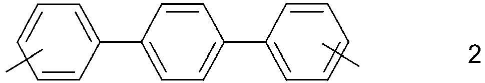 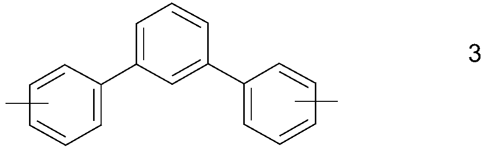 bei denen die Benzolringe gegebenenfalls durch eine oder mehrere Gruppen L oder P-Sp- substituiert sind,
L F, Cl, -CN oder geradkettiges, verzweigtes oder cyclisches Alkyl mit 1 bis 25 C-Atomen, bei dem eine oder mehrere nicht benachbarte CH₂-Gruppen gegebenenfalls so durch -O-, -S-, -CO-, -CO-O-, -O-CO-, -O-CO-O- ersetzt sind, dass O- und/oder S-Atome nicht direkt miteinander verbunden sind, und bei dem gegebenenfalls ein oder mehrere H-Atome jeweils durch F oder Cl ersetzt sind.

2. FK-Medium nach Anspruch 1, **dadurch gekennzeichnet, dass**, wenn Sp von einer Einfachbindung verschieden ist, es ausgewählt ist aus -(CH₂)ₚ₁-, -(CH₂)ₚ₂-CH=CH-(CH₂)ₚ₃-, -O-(CH₂)ₚ₁-, -O-CO-(CH₂)ₚ₁ oder -CO-O-(CH₂)ₚ₁, bei denen p1 2, 3, 4, 5 oder 6 ist, p2 und p3 unabhängig voneinander 0, 1, 2 oder 3 sind und, wenn Sp -O-(CH₂)ₚ₁-, -O-CO-(CH₂)ₚ₁ oder -CO-O-(CH₂)ₚ₁ ist, das O-Atom bzw. die CO-Gruppe mit dem Benzolring verknüpft ist.

3. FK-Medium nach Anspruch 1 oder 2, **dadurch gekennzeichnet, dass** der Gesamtanteil der polymerisierbaren Verbindungen der Formeln IA-1 und IB in dem FK-Medium 0,1 bis 2,5 % beträgt.

4. FK-Medium nach einem oder mehreren der Ansprüche 1 bis 3, **dadurch gekennzeichnet, dass** die Verbindungen der Formel IA ausgewählt sind aus den folgenden Unterformeln: 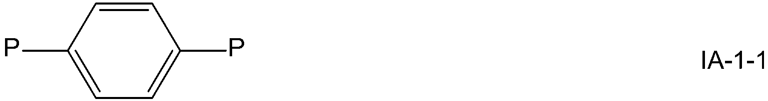 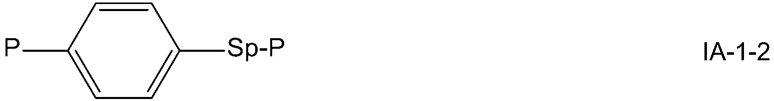 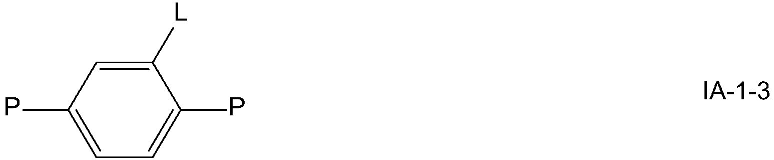 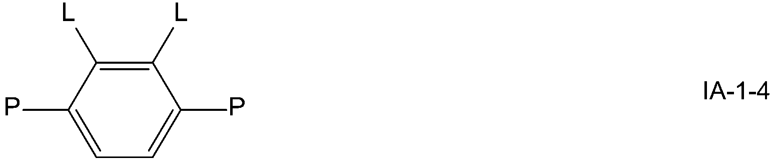 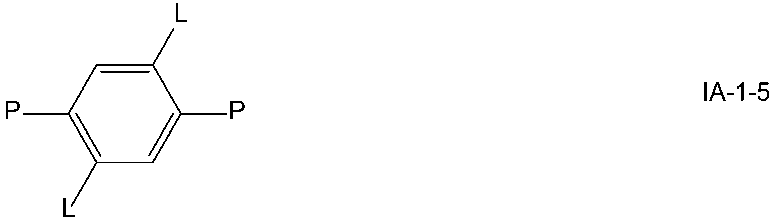 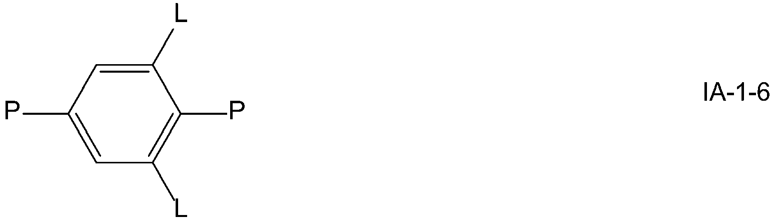 bei denen P, Sp und L die in Anspruch 1 genannten Bedeutungen besitzen und Sp von einer Einfachbindung verschieden ist.

5. FK-Medium nach einem oder mehreren der Ansprüche 1 bis 4, **dadurch gekennzeichnet, dass** die Verbindungen der Formel IA ausgewählt sind aus den folgenden Unterformeln:

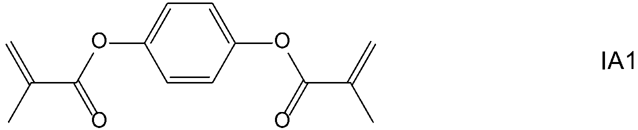

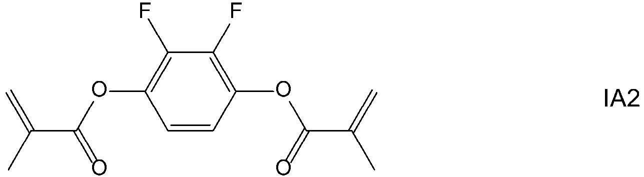

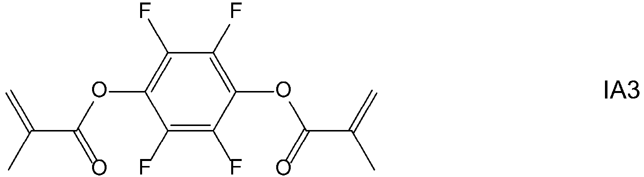

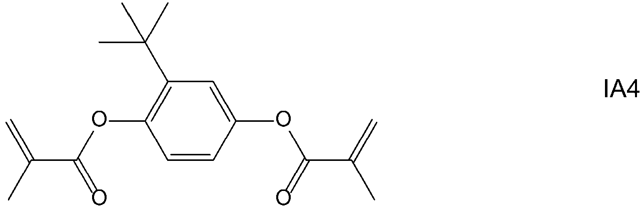

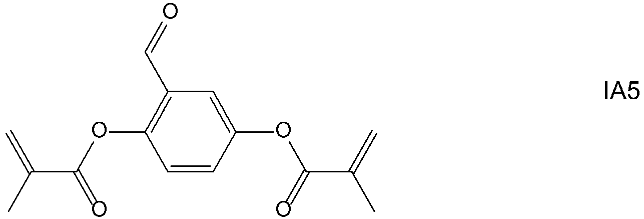

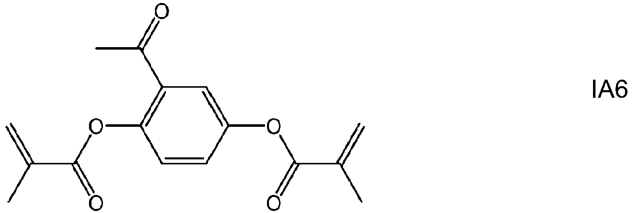

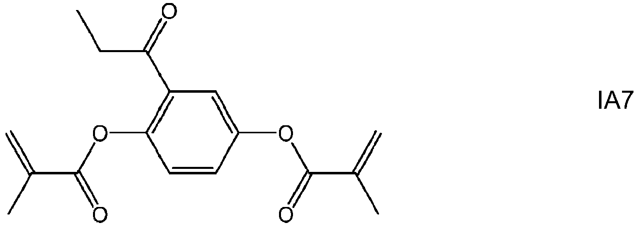

6. FK-Medium nach einem oder mehreren der Ansprüche 1 bis 5, **dadurch gekennzeichnet, dass** die Verbindungen der Formel IB ausgewählt sind aus den folgenden Unterformeln: 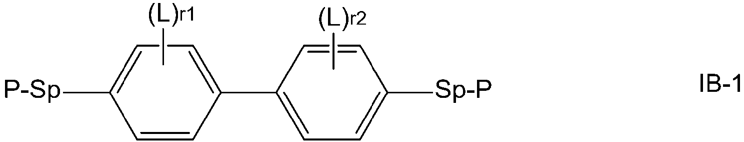 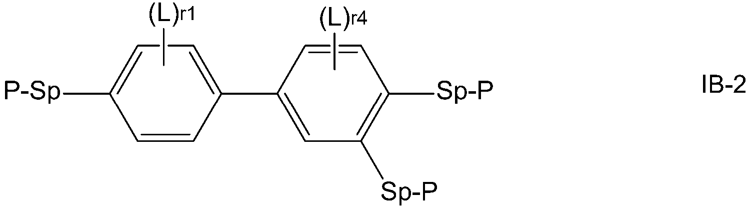 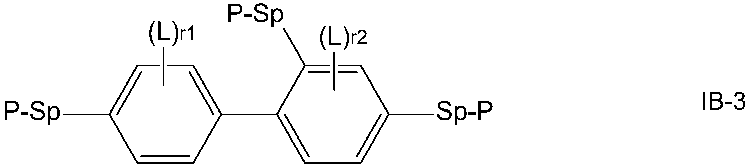 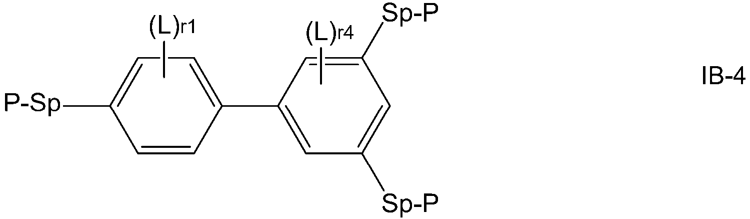 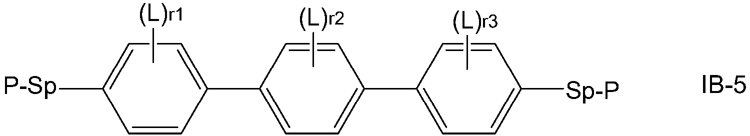 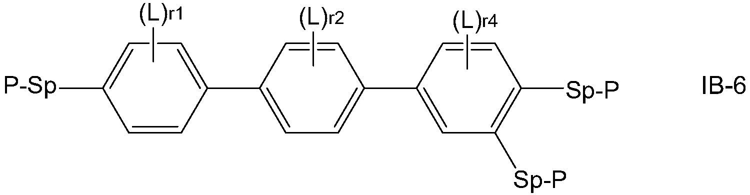 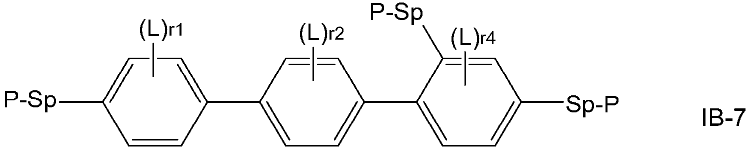 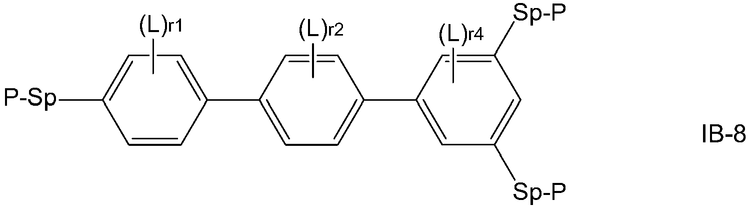 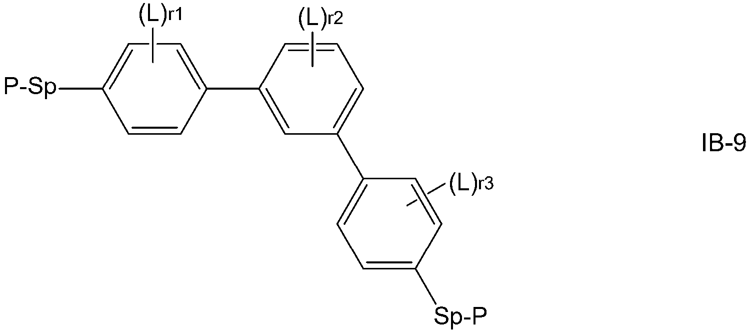 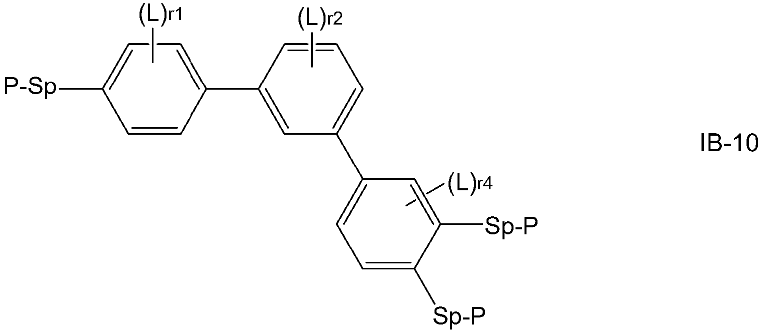 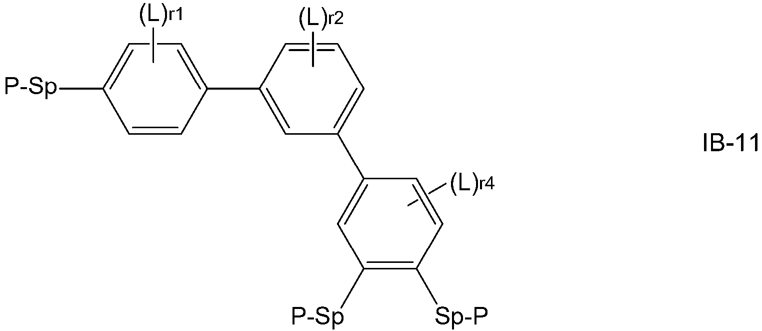 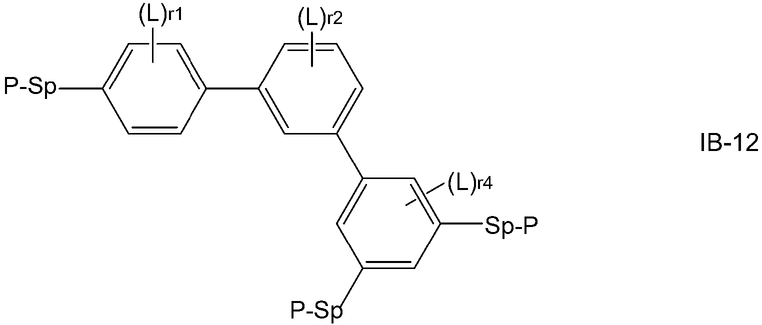 bei denen P, Sp und L die in Anspruch 1 oder 2 genannten Bedeutungen besitzen,
r1, r2, r3 unabhängig voneinander 0, 1, 2, 3 oder 4 sind, und
r4 0, 1, 2 oder 3 ist.

7. FK-Medium nach einem oder mehreren der Ansprüche 1 bis 6, **dadurch gekennzeichnet, dass** es eine oder mehrere Verbindungen der Formel II enthält: 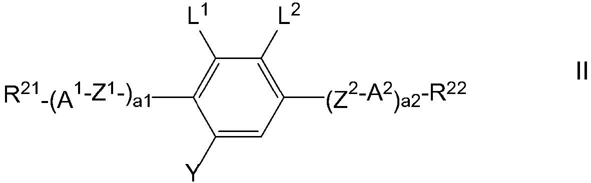 bei der die einzelnen Reste, unabhängig voneinander und bei jedem Auftreten gleich oder verschieden, die folgenden Bedeutungen besitzen
R²¹, R²² H, geradkettiges, verzweigtes oder cyclisches Alkyl oder Alkoxy mit 1 bis 20 C-Atomen, bei dem gegebenenfalls eine oder mehrere nicht benachbarte CH₂-Gruppen so durch -O-, -S-, -CO-, -CO-O-, -O-CO-, -O-CO-O-, -CR⁰=CR⁰⁰-, -C≡C-, 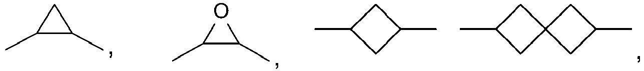 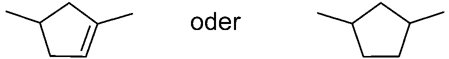 ersetzt sind, dass O- und/oder S-Atome nicht direkt miteinander verbunden sind, und bei dem gegebenenfalls ein oder mehrere H-Atome jeweils durch F, Cl, CN oder CF₃ ersetzt sind,
R⁰, R⁰⁰ H oder Alkyl mit 1 bis 12 C-Atomen,
A¹, A² eine Gruppe, die ausgewählt ist aus den folgenden Formeln 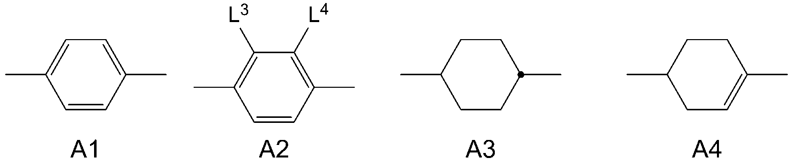 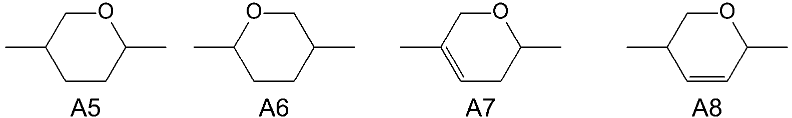 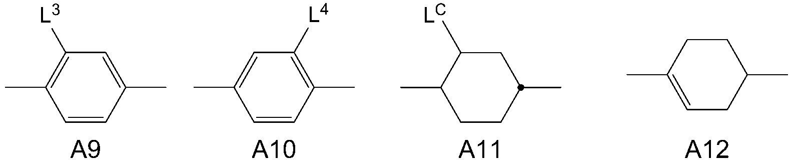 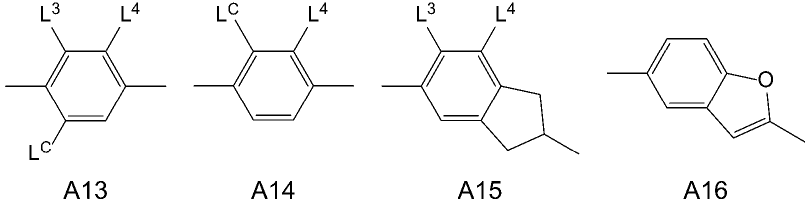
Z¹ und Z² -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung,
L¹, L², L³, L⁴ F, Cl, OCF₃, CF₃, CH₃, CH₂F oder CHF₂,
Y H, F, Cl, CF₃, CHF₂ oder CH₃,
L^{C} CH₃ oder OCH₃,
a1 0, 1 oder 2,
a2 0 oder 1.

8. FK-Medium nach irgendeinem der Ansprüche 1 bis 7, **dadurch gekennzeichnet, dass** es ferner eine oder mehrere Verbindungen enthält, die ausgewählt sind aus der Gruppe bestehend aus Verbindungen der Formeln IIA, IIB, IIC und IID 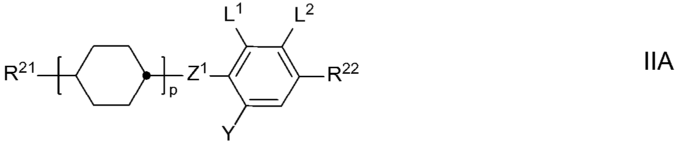 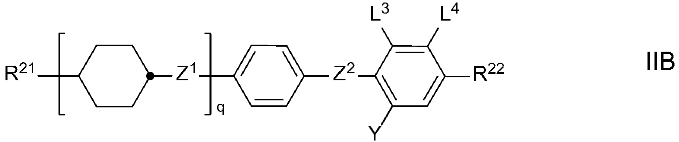 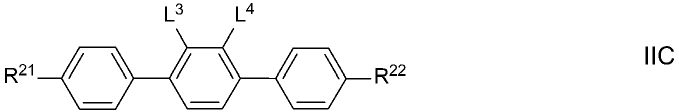 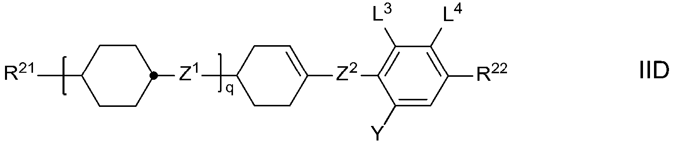 worin die einzelnen Reste, bei jedem Auftreten gleich oder verschieden und jeweils unabhängig voneinander, die folgende Bedeutung besitzen:
R²¹, R²² H, einen Alkyl-, Alkoxy- oder Alkenylrest mit bis zu 15 C-Atomen, der unsubstituiert oder einfach durch F, Cl, CN oder CF₃ substituiert ist und wobei in diesen Resten zusätzlich eine oder mehrere CH₂-Gruppen so durch -O-, -S-, -C≡C-, -CF₂O-, -OCF₂-, -OC-O-, -O-CO-, 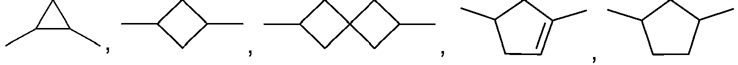 ersetzt sein können, dass O- und/oder S-Atome nicht direkt miteinander verknüpft sind,
L¹ bis L⁴ F, Cl, CF₃ oder CHF₂,
Y H, F, Cl, CF₃, CHF₂ oder CH₃,
Z¹, Z² eine Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O,
p 0, 1 oder 2, und
q 0 oder 1.

9. FK-Medium nach einem oder mehreren der Ansprüche 1 bis 8, **dadurch gekennzeichnet, dass** es eine oder mehrere Verbindungen der Formel III enthält: 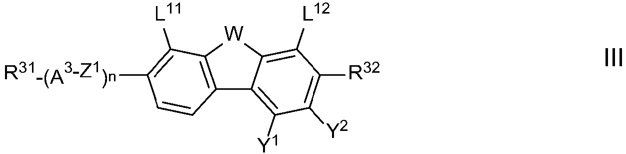 bei denen die einzelnen Reste, unabhängig voneinander und bei jedem Auftreten gleich oder verschieden, die folgenden Bedeutungen besitzen
R³¹, R³² H, einen Alkyl-, Alkoxy- oder Alkenylrest mit bis zu 15 C-Atomen, der unsubstituiert oder einfach durch F, Cl, CN oder CF₃ substituiert ist und wobei in diesen Resten zusätzlich eine oder mehrere CH₂-Gruppen so durch -O-, -S-, -C≡C-, -CF₂O-, -OCF₂-, -OC-O-, -O-CO-, 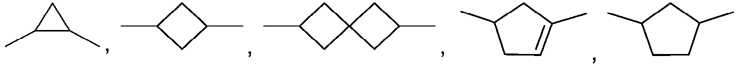 ersetzt sein können, dass O- und/oder S-Atome nicht direkt miteinander verknüpft sind,
A³
a) einen 1,4-Cyclohexenylen- oder 1,4-Cyclohexylenrest, worin eine oder zwei nicht benachbarte CH₂-Gruppen durch -O- oder -S- ersetzt sein können,
b) einen 1,4-Phenylenrest, worin eine oder zwei CH-Gruppen durch N ersetzt sein können, oder
c) einen Rest, der aus der Gruppe bestehend aus Spiro[3.3]-heptan-2,6-diyl, 1,4-Bicyclo[2.2.2]octylen, Naphthalin-2,6-diyl, Decahydronaphthalin-2,6-diyl, 1,2,3,4-Tetrahydronaphthalin-2,6-diyl, Phenanthren-2,7-diyl und Fluoren-2,7-diyl ausgewählt ist,
bei denen die Reste a), b) und c) ein- oder mehrfach durch Halogenatome substituiert sein können,
n 0, 1 oder 2,
Z¹ -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂ -, -CF=CF-, -CH=CF-, -CF=CH-, -CH=CH-, -C≡C- oder eine Einfachbindung,
L¹¹, L¹² F, Cl, CF₃ oder CHF₂,
W O oder S,
Y¹, Y² H, F, Cl, CF₃, CHF₂, CH₃ oder OCH₃.

10. FK-Medium nach einem oder mehreren der Ansprüche 1 bis 9, **dadurch gekennzeichnet, dass** es eine oder mehrere Verbindungen der Formel IV enthält: 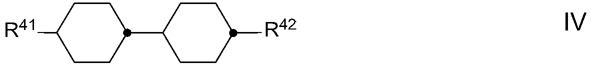 worin
R⁴¹ einen unsubstituierten Alkylrest mit 1 bis 7 C-Atomen, wobei zusätzlich eine oder mehrere CH₂-Gruppen durch ersetzt sein können, 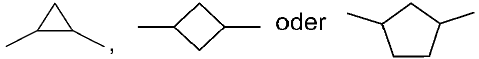 oder einen unsubstituierten Alkenylrest mit 2 bis 7 C-Atomen bedeutet, und
R⁴² einen unsubstituierten Alkylrest mit 1 bis 7 C-Atomen oder einen unsubstituierten Alkoxyrest mit 1 bis 6 C-Atomen bedeutet.

11. FK-Medium nach einem oder mehreren der Ansprüche 1 bis 10, **dadurch gekennzeichnet, dass** es eine oder mehrere Verbindungen der Formel V enthält: 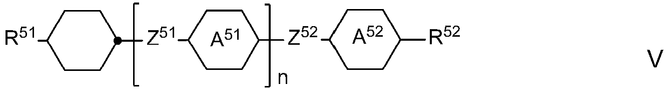 worin
R⁵¹, R⁵² unabhängig voneinander H, einen Alkyl-, Alkoxy- oder Alkenylrest mit bis zu 15 C-Atomen bedeuten, der unsubstituiert, einfach durch F, Cl, CN oder CF₃ substituiert oder mindestens einfach durch Halogen substituiert ist, wobei in diesen Resten zusätzlich eine oder mehrere CH₂-Gruppen so durch -O-, -S-, -C≡C-, -CF₂O-, -OCF₂-, -OC-O-, -O-CO-, 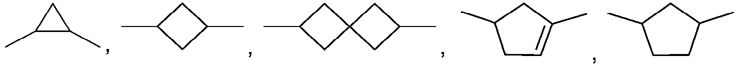 ersetzt sein können, dass O-Atome nicht direkt miteinander verknüpft sind, gleich oder verschieden 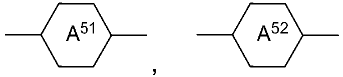 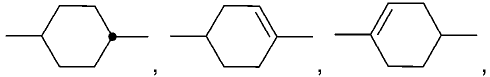 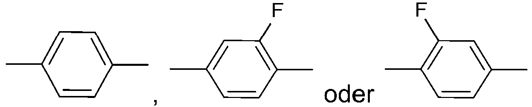 bedeuten,
Z⁵¹, Z⁵² jeweils unabhängig voneinander -CH₂-CH₂-, -CH₂-O-, -CH=CH-, -C≡C-, -COO- oder eine Einfachbindung bedeuten, und
n 1 oder 2 ist.

12. FK-Medium nach einem oder mehreren der Ansprüche 1 bis 11, **dadurch gekennzeichnet, dass** es zusätzlich einen oder mehrere Zusatzstoffe enthält, die aus der Gruppe bestehend aus chiralen Dotanden, Stabilisatoren, Polymerisationsinitiatoren und Selbstorientierungsadditiven ausgewählt sind.

13. Verfahren zur Herstellung eines FK-Mediums nach einem oder mehreren der Ansprüche 1 bis 12, umfassend die Schritte Mischen einer oder mehrerer polymerisierbarer Verbindungen wie in einem oder mehreren der Ansprüche 1 bis 6 definiert mit einer oder mehreren Verbindungen der Formel II, III, IV und/oder V wie in einem oder mehreren der Ansprüche 7 bis 11 definiert und gegebenenfalls mit weiteren flüssigkristallinen Verbindungen und/oder Zusatzstoffen, und gegebenenfalls Polymerisieren der polymerisierbaren Verbindungen.

14. FK-Anzeige enthaltend ein FK-Medium wie in einem oder mehreren der Ansprüche 1 bis 12 definiert.

15. FK-Anzeige nach Anspruch 14, bei der es sich um eine PS-VA-, PS-IPS-, PS-FFS- oder SA-VA-Anzeige handelt.

16. FK-Anzeige nach Anspruch 14 oder 15, **dadurch gekennzeichnet, dass** sie zwei Substrate, von denen mindestens eines lichtdurchlässig ist, eine auf jedem Substrat vorgesehene Elektrode oder zwei auf nur einem der Substrate vorgesehene Elektroden und zwischen den Substraten angeordnet eine Schicht eines FK-Mediums nach einem oder mehreren der Ansprüche 1 bis 12 enthält, bei dem die polymerisierbaren Verbindungen zwischen den Substraten der Anzeige durch UV-Photopolymerisation polymerisiert werden.

17. Verfahren zur Herstellung einer FK-Anzeige nach Anspruch 16, umfassend die Schritte Bereitstellen eines FK-Mediums nach einem oder mehreren der Ansprüche 1 bis 12 zwischen den Substraten der Anzeige und Polymerisieren der polymerisierbaren Verbindungen durch Bestrahlung mit UV-Licht.

18. Verfahren des Anspruchs 17, bei dem während der Polymerisierung der polymerisierbaren Verbindungen eine Spannung an die Elektroden der Anzeige angelegt wird.

19. Verfahren nach Anspruch 17 oder 18, **dadurch gekennzeichnet, dass** die Bestrahlung unter Verwendung einer Leuchte des UV-C-Typs oder einer Leuchte des UV-B-Typs durchgeführt wird.

20. Verwendung eines FK-Mediums nach einem oder mehreren der Ansprüche 1 bis 12 oder einer FK-Anzeige nach einem oder mehreren der Ansprüche 14 bis 16 oder eines Verfahrens nach einem oder mehreren der Ansprüche 17 bis 19 für eine energiesparende FK-Anzeige oder ein energiesparendes FK-Anzeigen-Herstellungsverfahren.

21. Verbindung, die ausgewählt ist aus den folgenden Formeln:

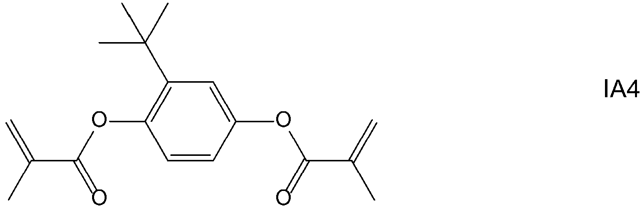

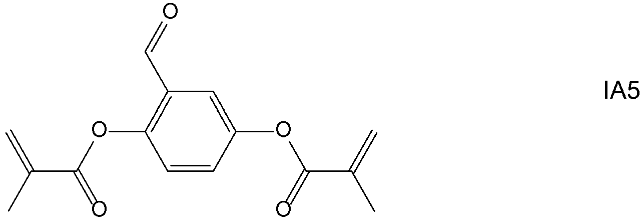

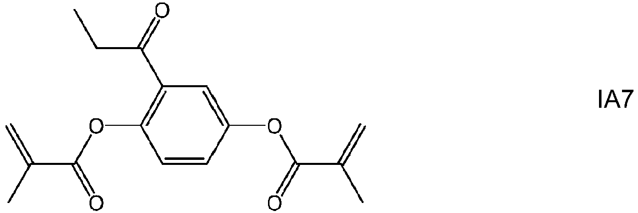

## Revendications

1. Milieu LC comprenant un ou plusieurs composés polymérisables de formule IA-1 et un ou plusieurs composés polymérisables de formule IB 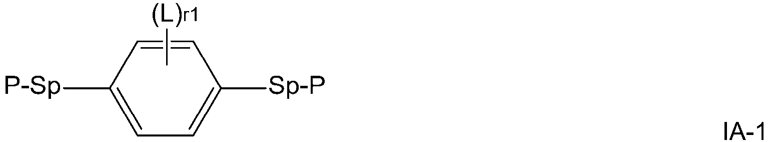
P-Sp-M²-Sp-P IB
dans lesquelles les radicaux individuels, indépendamment les uns des autres et à chaque occurrence de manière identique ou différente, revêtent les significations suivantes
P un groupement méthacrylate,
Sp un groupement espaceur ou une liaison simple,
M² un groupement choisi parmi les formules 1 à 3 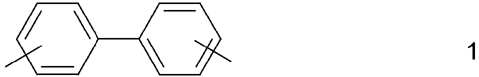 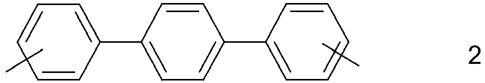 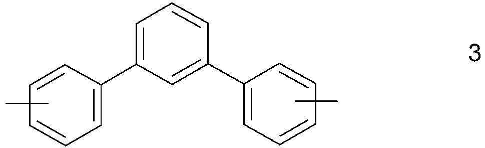 dans lesquelles les cycles benzéniques sont éventuellement substitués par un ou plusieurs groupements L ou P-Sp-,
L F, CI, -CN, ou alkyle à chaîne linéaire, ramifiée ou cyclique ayant de 1 à 25 atomes de C, où un ou plusieurs groupements CH₂ non adjacents sont éventuellement remplacés par -O-, -S-, -CO-, -CO-O-, -O-CO-, -O-CO-O- de telle sorte que les atomes de O et/ou S ne soient pas liés directement les uns aux autres, et où un ou plusieurs atomes de H sont chacun éventuellement remplacés par F ou CI.

2. Milieu LC selon la revendication 1, **caractérisé en ce que**, si Sp est autre qu'une liaison simple, il est choisi parmi -(CH₂)ₚ₁-, -(CH₂)ₚ₂-CH=CH-(CH₂)ₚ₃-, -O-(CH₂)ₚ₁-, -O-CO-(CH₂)ₚ₁, ou -CO-O-(CH₂)ₚ₁, où p1 vaut 2, 3, 4, 5 ou 6, p2 et p3 valent indépendamment l'un de l'autre 0, 1, 2 ou 3 et, si Sp est -O-(CH₂)ₚ₁-, -O-CO-(CH₂)ₚ₁ ou -CO-O-(CH₂)ₚ₁, l'atome de O ou le groupement CO, respectivement, est lié au cycle benzénique.

3. Milieu LC selon la revendication 1 ou 2, **caractérisé en ce que** la proportion totale des composés polymérisables de formules IA-1 et IB dans le milieu LC va de 0,1 à 2,5%.

4. Milieu LC selon l'une ou plusieurs parmi les revendications 1 à 3, **caractérisé en ce que** les composés de formule IA sont choisis parmi les sous-formules suivantes : 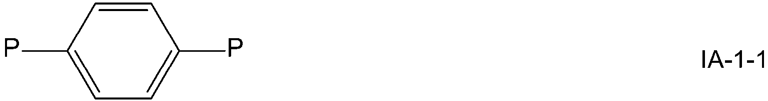 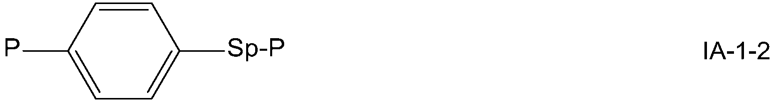 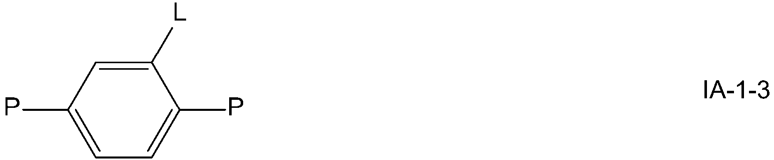 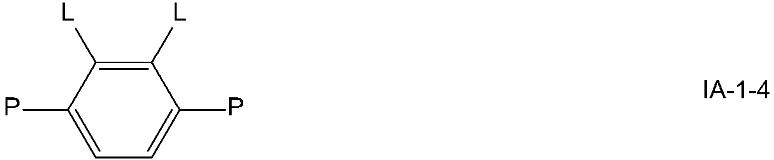 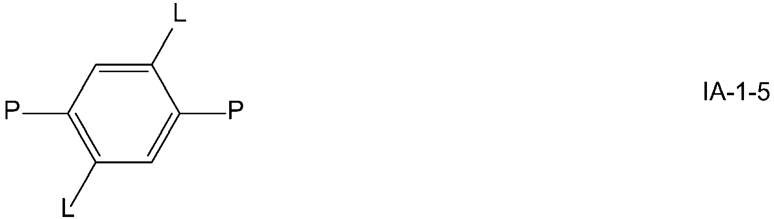 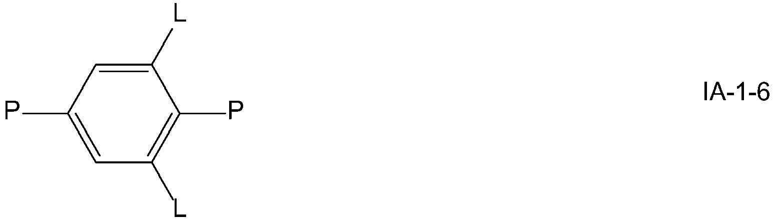 dans lesquelles P, Sp et L revêtent les significations données selon la revendication 1 et Sp est autre qu'une liaison simple.

5. Milieu LC selon l'une ou plusieurs parmi les revendications 1 à 4, **caractérisé en ce que** les composés de formule IA sont choisis parmi les sous-formules suivantes :

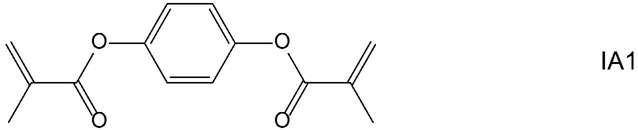

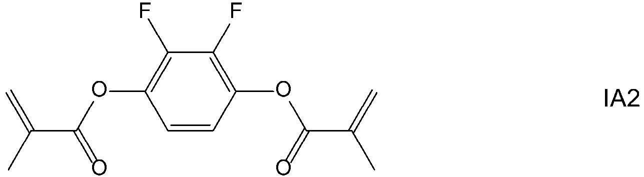

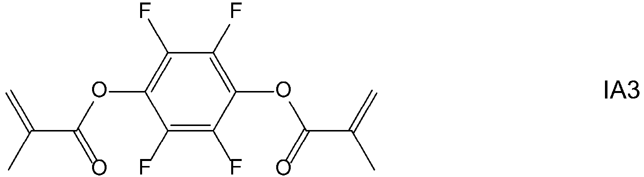

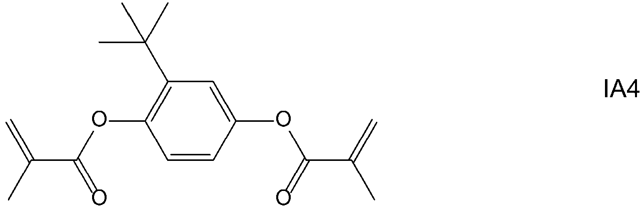

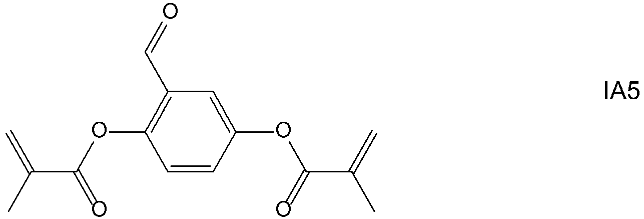

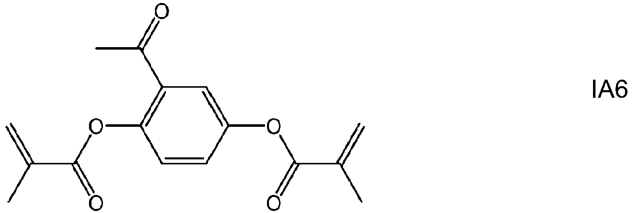

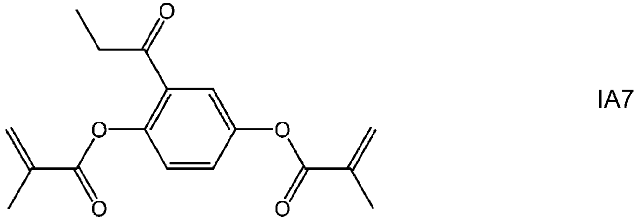

6. Milieu LC selon l'une ou plusieurs parmi les revendications 1 à 5, **caractérisé en ce que** les composés de formule IB sont choisis parmi les sous-formules suivantes : 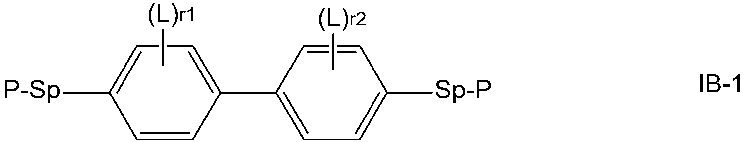 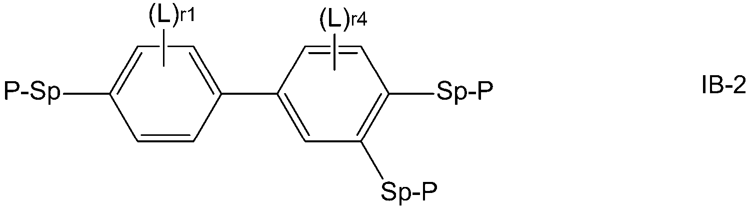 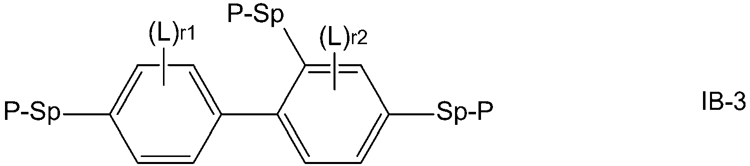 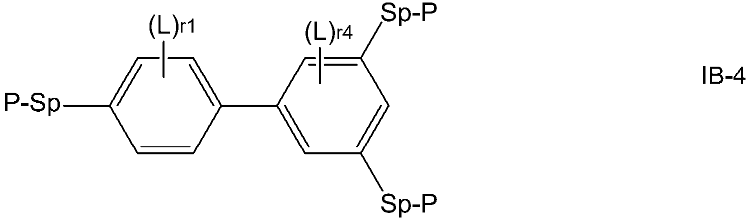 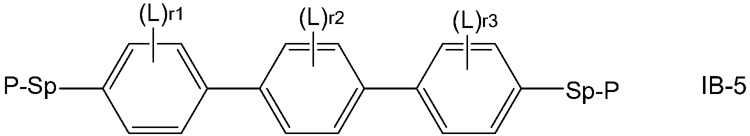 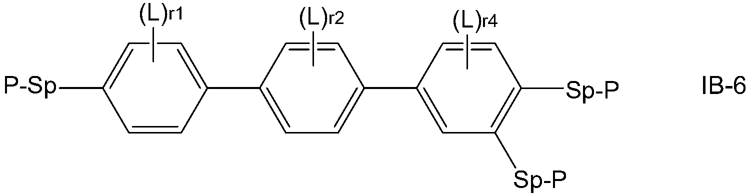 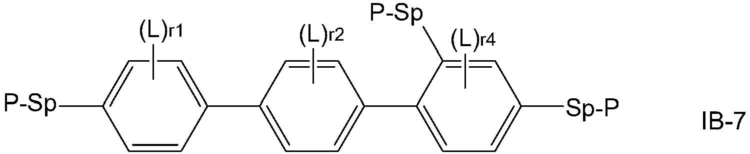 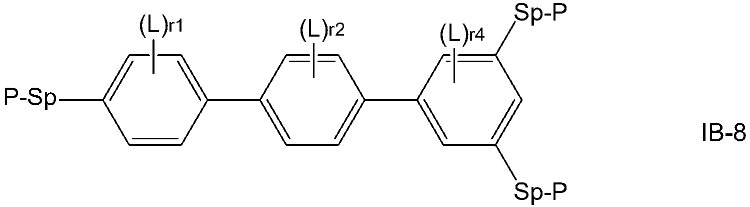 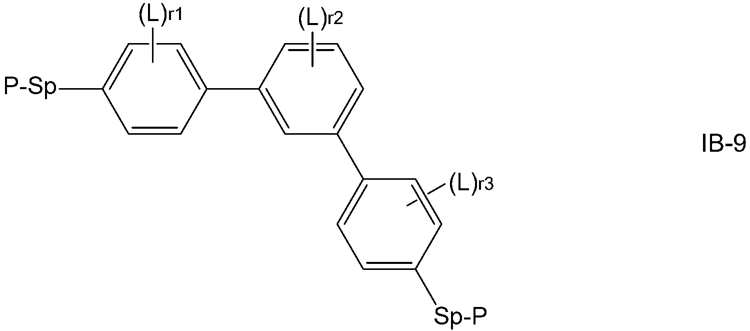 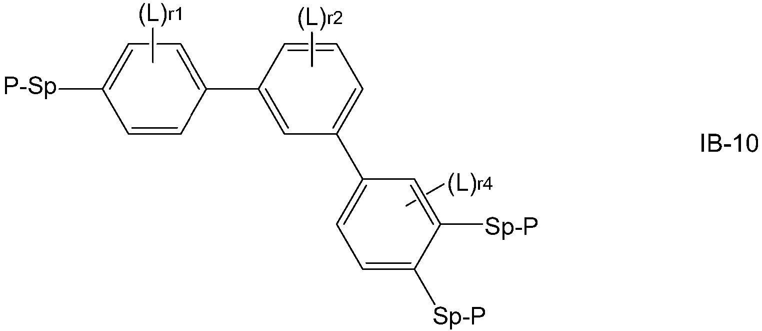 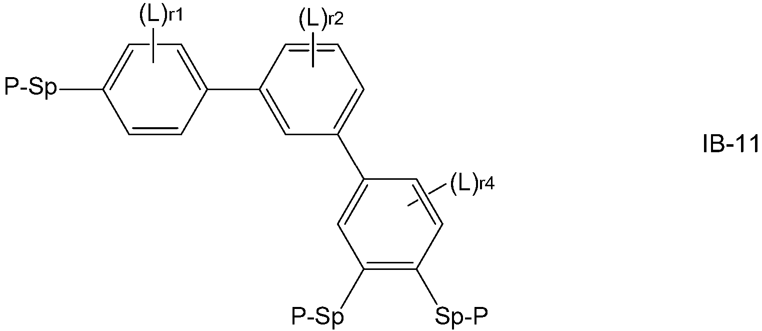 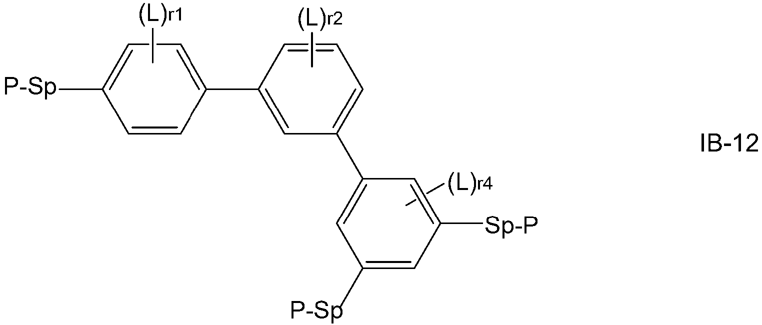 dans lesquelles P, Sp et L revêtent les significations données selon la revendication 1 ou 2,
r1, r2, r3 valent indépendamment les uns des autres 0, 1, 2, 3 ou 4, et
r4 vaut 0, 1, 2 ou 3.

7. Milieu LC selon l'une ou plusieurs parmi les revendications 1 à 6, **caractérisé en ce qu'**il comprend un ou plusieurs composés de formule II : 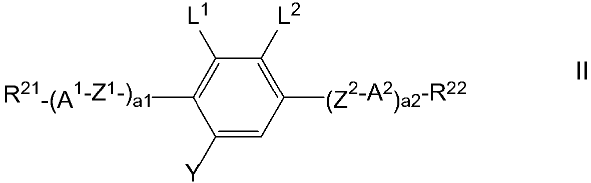 dans laquelle les radicaux individuels, indépendamment les uns des autres et à chaque occurrence de manière identique ou différente, revêtent les significations suivantes
R²¹, R²² H, alkyle ou alcoxy à chaîne linéaire, ramifiée ou cyclique ayant de 1 à 20 atomes de C, où un ou plusieurs groupements CH₂ non adjacents sont éventuellement remplacés par -O-, -S-, -CO-, -CO-O-, -O-CO-, -O-CO-O-, -CR⁰=CR⁰⁰-, -C≡C-, 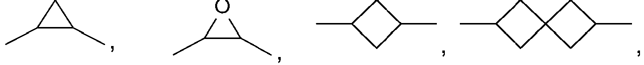 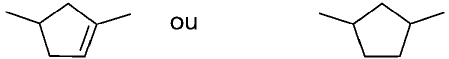 de telle sorte que les atomes de O et/ou S ne soient pas liés directement les uns aux autres, et où un ou plusieurs atomes de H sont chacun éventuellement remplacés par F, CI, CN ou CF₃,
R⁰, R⁰⁰ H ou alkyle ayant de 1 à 12 atomes de C,
A¹, A² un groupement choisi parmi les formules suivantes 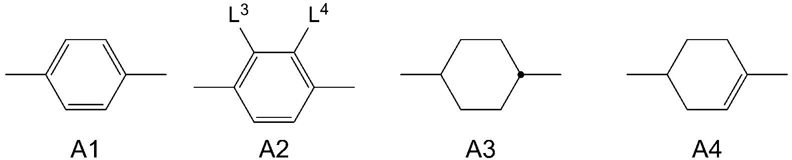 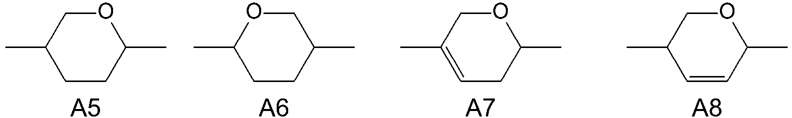 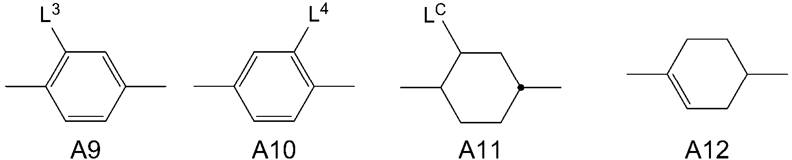 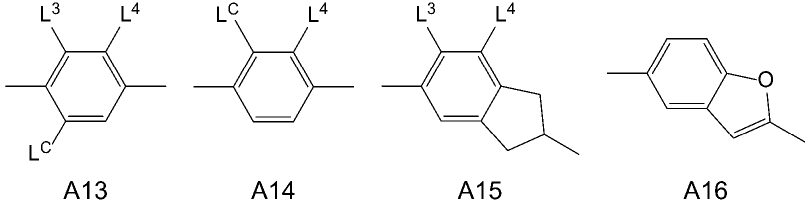
Z¹ et Z² -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- ou une liaison simple,
L¹, L², L³, L⁴ F, Cl, OCF₃, CF₃, CH₃, CH₂F ou CHF₂,
Y H, F, Cl, CF₃, CHF₂ ou CH₃,
L^{C} CH₃ ou OCH₃,
a1 0, 1 ou 2,
a2 0 ou 1.

8. Milieu LC selon l'une quelconque des revendications 1 à 7, **caractérisé en ce qu'**il comprend en outre un ou plusieurs composés choisis dans le groupe constitué par les composés de formules IIA, IIB, IIC et IID 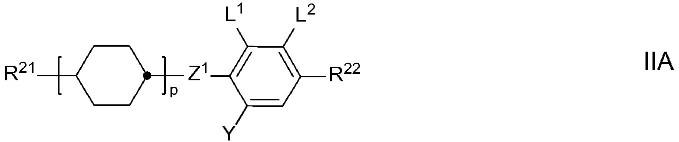 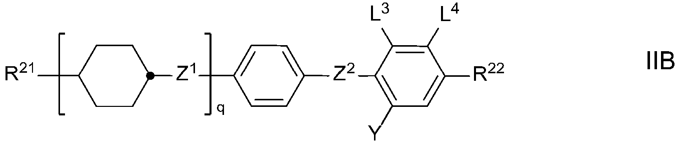 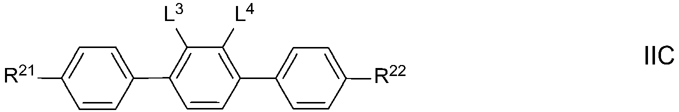 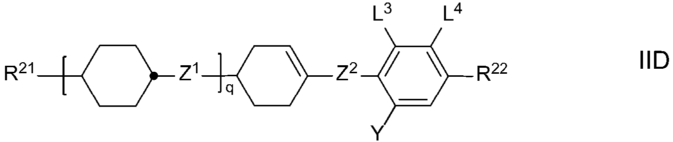 dans lesquelles les radicaux individuels, à chaque occurrence de manière identique ou différente, et chacun, indépendamment les uns des autres, revêtent la signification suivante :
R²¹, R²² H, un radical alkyle, alcoxy ou alcényle ayant jusqu'à 15 atomes de C qui est non substitué ou monosubstitué par F, CI, CN ou CF₃ et où, de plus, un ou plusieurs groupements CH₂ dans ces radicaux peuvent être remplacés par -O-, -S-, -C=C-, -CF₂O-, -OCF₂-, -OC-O-, -O-CO- 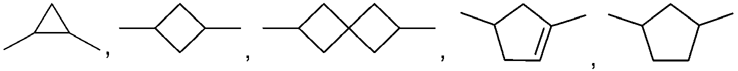 de telle sorte que les atomes de O et/ou S ne soient pas liés directement les uns aux autres,
L¹ à L⁴ F, CI, CF₃ ou CHF₂,
Y H, F, CI, CF₃, CHF₂ ou CH₃,
Z¹, Z² une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O,
p 0, 1 ou 2, et
q 0 ou 1.

9. Milieu LC selon l'une ou plusieurs parmi les revendications 1 à 8, **caractérisé en ce qu'**il comprend un ou plusieurs composés de formule III : 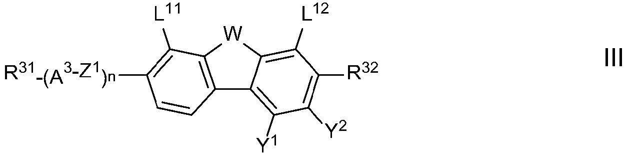 dans laquelle les radicaux individuels, indépendamment les uns des autres et à chaque occurrence de manière identique ou différente, revêtent les significations suivantes
R³¹, R³² H, un radical alkyle, alcoxy ou alcényle ayant jusqu'à 15 atomes de C qui est non substitué ou monosubstitué par F, Cl, CN ou CF₃ et où, de plus, un ou plusieurs groupements CH₂ dans ces radicaux peuvent être remplacés par -O-, -S-, -C≡C-, -CF₂O-, -OCF₂-, -OC-O-, -O-CO- 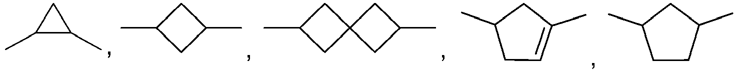 de telle sorte que les atomes de O et/ou S ne soient pas liés directement les uns aux autres,
A³
a) un radical 1,4-cyclohexénylène ou 1,4-cyclohexylène, où un ou deux groupements CH₂ non adjacents peuvent être remplacés par -O- ou -S-,
b) un radical 1,4-phénylène, où un ou deux groupements CH peuvent être remplacés par N, ou
c) un radical choisi dans le groupe constitué par spiro[3.3]-heptane-2,6-diyle, 1,4-bicyclo[2.2.2]octylène, naphtalène-2,6-diyle, décahydronaphtalène-2,6-diyle, 1,2,3,4-tétra-hydronaphtalène-2,6-diyle, phénanthrène-2,7-diyle et fluorène-2,7-diyle,
où les radicaux a), b) et c) peuvent être mono- ou polysubstitués par des atomes d'halogène,
n 0, 1 ou 2,
Z¹ -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂ -, -CF=CF-, -CH=CF-, -CF=CH-, -CH=CH-, -C≡C- ou une liaison simple,
L¹¹, L¹² F, Cl, CF₃ ou CHF₂,
W O ou S,
Y¹, Y² H, F, CI, CF₃, CHF₂, CH₃ ou OCH₃.

10. Milieu LC selon l'une ou plusieurs parmi les revendications 1 à 9, **caractérisé en ce qu'**il comprend un ou plusieurs composés de formule IV : 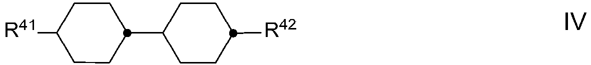 dans laquelle
R⁴¹ désigne un radical alkyle non substitué ayant de 1 à 7 atomes de C où, de plus, un ou plusieurs groupements CH₂ peuvent être remplacés par 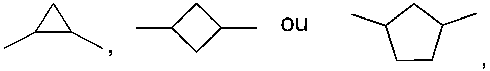 ou un radical alcényle non substitué ayant de 2 à 7 atomes de C, et
R⁴² désigne un radical alkyle non substitué ayant de 1 à 7 atomes de C ou un radical alcoxy non substitué ayant de 1 à 6 atomes de C.

11. Milieu LC selon l'une ou plusieurs parmi les revendications 1 à 10, **caractérisé en ce qu'**il comprend un ou plusieurs composés de formule V : 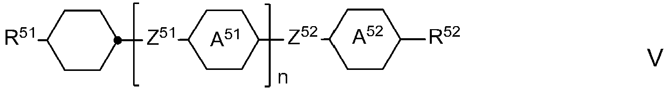 dans laquelle
R⁵¹, R⁵² désignent indépendamment l'un de l'autre H, un radical alkyle, alcoxy ou alcényle ayant jusqu'à 15 atomes de C qui est non substitué, monosubstitué par F, CI, CN ou CF₃ ou au moins monosubstitué par halogène, où, de plus, un ou plusieurs groupements CH₂ dans ces radicaux peuvent être remplacés par -O-, -S-, -C≡C-, -CF₂O-, -OCF₂-, -OC-O-, -O-CO- 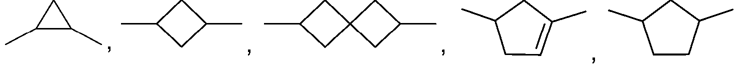 de telle sorte que les atomes de O ne soient pas liés directement les uns aux autres, de manière identique ou différente, 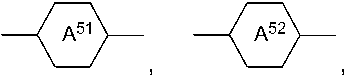 désignent 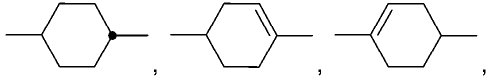 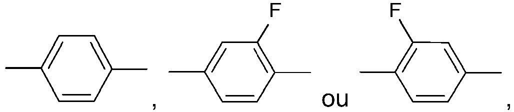
Z⁵¹, Z⁵² désignent chacun, indépendamment l'un de l'autre, -CH₂-CH₂-, -CH₂-O-, -CH=CH-, -C=C-, -COO- ou une liaison simple, et
n vaut 1 ou 2.

12. Milieu LC selon l'une ou plusieurs parmi les revendications 1 à 11, **caractérisé en ce qu'**il comprend de plus un ou plusieurs additifs choisis dans le groupe constitué par les dopants chiraux, les stabilisants, les initiateurs de polymérisation et les additifs d'auto-alignement.

13. Procédé de préparation d'un milieu LC selon l'une ou plusieurs parmi les revendications 1 à 12, comprenant les étapes de mélange d'un ou plusieurs composés polymérisables tels que définis selon l'une ou plusieurs parmi les revendications 1 à 6 avec un ou plusieurs composés de formule II, III, IV et/ou V tels que définis selon l'une ou plusieurs parmi les revendications 7 à 11, et éventuellement avec d'autres composés cristallins liquides et/ou additifs, et éventuellement de polymérisation des composés polymérisables.

14. Affichage LC comprenant un milieu LC tel que défini selon l'une ou plusieurs parmi les revendications 1 à 12.

15. Affichage LC selon la revendication 14, qui est un affichage PS-VA, PS-IPS, PS-FFS ou SA-VA.

16. Affichage LC selon la revendication 14 ou 15, **caractérisé en ce qu'**il comprend deux substrats, au moins l'un d'entre eux étant transparent à la lumière, une électrode fournie sur chaque substrat ou deux électrodes fournies sur seulement l'un des substrats, et, située entre les substrats, une couche d'un milieu LC selon l'une ou plusieurs parmi les revendications 1 à 12, où les composés polymérisables sont polymérisés entre les substrats de l'affichage par photo polymérisation UV.

17. Procédé de production d'un affichage LC selon la revendication 16, comprenant les étapes de mise à disposition d'un milieu LC selon l'une ou plusieurs parmi les revendications 1 à 12 entre les substrats de l'affichage, et de polymérisation des composés polymérisables par irradiation par de la lumière UV.

18. Procédé selon la revendication 17, dans lequel une tension est appliquée aux électrodes de l'affichage lors de la polymérisation des composés polymérisables.

19. Procédé selon la revendication 17 ou 18, **caractérisé en ce que** l'irradiation est effectuée à l'aide d'une lampe de type UV C ou d'une lampe de type UV B.

20. Utilisation d'un milieu LC selon l'une ou plusieurs parmi les revendications 1 à 12 ou d'un affichage LC selon l'une ou plusieurs parmi les revendications 14 à 16 ou d'un procédé selon l'une ou plusieurs parmi les revendications 17 à 19 pour un affichage LC à économie d'énergie ou un procédé de production d'un affichage LC à économie d'énergie.

21. Composé choisi parmi les formules suivantes :
